(19) Europäisches Patentamt
European Patent Office
Office européen des brevets

(11) EP 2 361 893 A1

(12) **EUROPEAN PATENT APPLICATION**
published in accordance with Art. 153(4) EPC

(43) Date of publication:
**31.08.2011 Bulletin 2011/35**

(21) Application number: **09822088.2**

(22) Date of filing: **23.10.2009**

(51) Int Cl.:
***C03C 17/06*** *(2006.01)* ***B32B 7/02*** *(2006.01)*
***B60J 1/00*** *(2006.01)* ***C03C 17/38*** *(2006.01)*
***C09D 5/33*** *(2006.01)* ***C23C 26/00*** *(2006.01)*

(86) International application number:
**PCT/JP2009/068277**

(87) International publication number:
**WO 2010/047391 (29.04.2010 Gazette 2010/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:
**23.10.2008 JP 2008272826**
**23.10.2008 JP 2008272827**
**23.10.2008 JP 2008272825**
**11.05.2009 JP 2009114453**
**12.05.2009 JP 2009115297**
**14.05.2009 JP 2009117267**
**24.06.2009 JP 2009150064**
**07.07.2009 JP 2009160338**

(71) Applicant: **Mitsubishi Chemical Corporation**
**Tokyo 108-0014 (JP)**

(72) Inventors:
- **ISOJIMA, Tatsushi**
  **Yokohama-shi**
  **Kanagawa 227-8502 (JP)**
- **YAMAKAWA, Tomoko**
  **Yokohama-shi**
  **Kanagawa 227-8502 (JP)**
- **MARU, Naoto**
  **Yokohama-shi**
  **Kanagawa 227-8502 (JP)**
- **AIKYOU, Hiroyuki**
  **Yokohama-shi**
  **Kanagawa 227-8502 (JP)**
- **TAKEUCHI, Hisao**
  **Yokohama-shi**
  **Kanagawa 227-8502 (JP)**
- **FUNAYAMA, Katsuya**
  **Yokohama-shi**
  **Kanagawa 227-8502 (JP)**
- **KUSAKA, Hisashi**
  **Yokkaichi-shi**
  **Mie 510-8530 (JP)**

(74) Representative: **TER MEER - STEINMEISTER & PARTNER GbR**
**Mauerkircherstraße 45**
**DE-81679 München (DE)**

# (54) HEAT RAY REFLECTIVE FILM AND LAMINATED PRODUCT THEREOF, AND COATING SOLUTION FOR FORMING HEAT RAY REFLECTIVE LAYER

(57) Disclosed is a heat ray reflective film having a single layer structure, which has high heat ray reflectivity, can relatively control visible light absorption and visible light reflection and has excellent heat stability. Also disclosed is a heat ray reflective laminate which has high environmental durability and is suitable as a window material for buildings or automobiles.

A heat ray reflective laminate which is a laminate comprising a transparent substrate and a heat ray reflective layer and which has a solar reflectance of at least 15% as measured from the side containing the heat ray reflective layer, wherein the heat ray reflective layer comprises a binder resin containing a hydrophilic group other than an N-pyrrolidonyl group, and a metal, and the heat ray reflective layer has a layer thickness of at most 100 nm.

Fig. 1

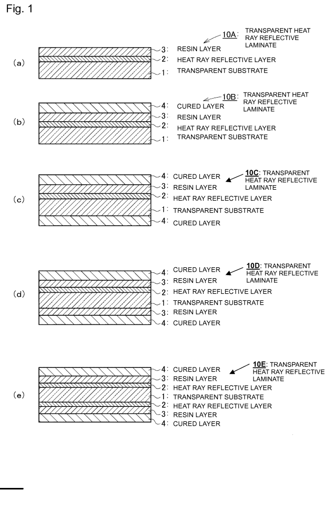




Printed by Jouve, 75001 PARIS (FR)

## Description

TECHNICAL FIELD

The present invention relates to a heat ray reflective film to shield heat rays (infrared rays) and a laminate thereof. Particularly, it relates to a heat ray reflective film containing a metal, which has a performance to reflect heat rays while having a performance to let visible light pass therethrough, and a heat ray reflective laminate having such a heat ray reflective layer formed on a transparent substrate.

The present invention also relates to a window material for an automobile, which contains such a heat ray reflective film or a laminate thereof, and an automobile. Further, it relates to a coating fluid for forming a heat ray reflective layer, in order to produce such a heat ray reflective laminate.

BACKGROUND ART

In recent years, a heat ray shielding technique is widely desired for a window material for automobiles or buildings with a view to reducing $CO_2$ or improving the occupant comfort. That is, about one half of the energy contained in sunlight has wavelengths in a (near) infrared region invisible to eyes and is called heat rays. By shielding such heat rays to improve the occupant comfort in a vehicle or in a room, or to increase the efficiency for air-conditioning in summer, it is possible to contribute to energy saving or to an improvement of gasoline mileage for automobiles.

Techniques for such heat ray shielding are classified into two categories i.e. a technique to absorb heat rays in a (near) infrared region and a technique to reflect them.

In a case where heat rays are to be absorbed, so-called green glass (to absorb heat rays) i.e. glass doped with metal ions such as iron ions, is most inexpensive and has been widely used in recent years for e.g. public transportation. As an absorbing agent other than metal ions, a metal oxide such as ITO, or an organic dye having an absorption wavelength in a near infrared region such as diimonium, is, for example, employed.

However, in the case of absorbing heat rays, the absorbed wavelength light changes to heat, which, as a radiation heat, warms up the inside of car or room, whereby the heat ray shielding ability is poor. Further, as the absorbed light changes to heat, deterioration of the transparent component is likely to be accelerated. Further, in a case where an organic dye is employed, the durability of the dye itself is likely to be questionable. In addition, such an organic dye has an absorption wavelength also in a visible light region, whereby coloring becomes problematic from the viewpoint of the appearance.

On the other hand, in a case where heat rays are to be reflected, it is common to employ a method of using an ultrathin metal film. A metal usually undergoes a physical phenomenon so-called plasma oscillation, accompanying reflection in a wide wavelength range including visible light, whereby metallic luster is brought about. An ultrathin metal film having a thickness of about 10 nm, permits light in a visible light region to pass therethrough, although it reflects heat rays in an infrared region. By this special property, an ultrathin metal film has been used as a heat ray reflective film.

However, an ultrathin metal film has a problem with respect to the durability, and an ultrafine film formed by a vapor deposition method or a sputtering method has a high activity at its metallic interface and is likely to undergo aggregation or oxidation. Therefore, Patent Document 1 proposes to increase the durability by covering both sides of a silver layer being a heat ray reflective film with two types of protective layers i.e. a zinc oxide layer and a zinc/aluminum alloy layer. Further, Patent Document 2 proposes to increase the durability by forming a protective layer made of a metal composed mainly of aluminum, or an oxynitride of a metal composed mainly of aluminum and silicon, on a thin metal film being a heat ray reflective film. However, such methods have a problem such that an interference occurs against light with a specific wavelength by the covering with the protective layer, and depending upon the film thickness or the viewing angle, the film looks as if it is colored to have a specific color. Further, the film-forming is an operation to be carried out all in a vacuum environment, such being problematic from the viewpoint of the productivity or costs.

On the other hand, Patent Documents 3 and 4 may be mentioned as techniques to protect a heat ray reflective layer by a resin. In these techniques, a synthetic resin having a fluorescent whitener and an ultraviolet absorber added and dissolved therein is applied as a protective layer. However, in such a method, it is possible that the fluorescent whitener and the ultraviolet absorber are likely to bleed out during the use for a long period of time.

Further, in a different technical field, for durability of electromagnetic wave shielding for PDP, Patent Document 5 proposes to form a low moisture permeable thin film of silicon oxide on the electromagnetic wave shielding layer by electron beam vapor deposition or to form a protective film having a thickness of 1 $\mu$m by applying a thermosetting varnish, in order to protect silver in the electromagnetic wave shielding layer made of an alternatively sputtered film of ITO thin film/silver thin film/ITO thin film. However, the protective film to be formed by electron beam vapor deposition has a problem from the viewpoint of costs, and further, in a case where an overcoating is further applied thereon, a problem remains from the viewpoint of the adhesion. On the other hand, in the case of employing a thermosetting varnish, due to shrinkage upon curing, a strain is likely to result between it and the electromagnetic wave shielding layer,

and in a case where an overcoating is further applied thereon, a problem remains again from the viewpoint of the adhesion. These problems may not be substantial problems in an application to displays, but become serious in an application to a window material where higher durability is required.

Further, in Patent Document 6, a heat ray reflective layer is prepared by using fine metal particles, and a protective layer composed mainly of a silicate is formed thereon. However, such a method has a problem of peeling of the protective layer caused by an internal strain formed at an interface between the heat ray reflective layer and the protective layer due to shrinkage upon curing of the silicate, a problem of brittleness of the silicate, and further a problem of deterioration of the heat ray reflective layer due to a hydrophilic action inherent to the silicate. Further, in order to form a dense silicate film, treatment at a high temperature is required, and in such a forming process, the heat ray reflective layer may be destroyed. Such a problem relating to deterioration of the heat ray reflective layer has been solved by coating silver nanoparticles with gold, but such brings about a new problem of cost up, and further, the above-mentioned peeling problem has not yet been solved.

Under these circumstances, it has been considered difficult to obtain a transparent heat ray reflective laminate excellent in durability.

Meantime, such a heat ray reflective layer is employed mainly as a window material for buildings or automobiles. In a case where it is used as a window material, if coating defects such as aggregates are present in the heat ray reflective layer formed by coating, they may impair the appearance. For example, in a case where the binder resin to be used for a heat ray reflective layer has a too strong interaction with metal particles constituting the heat ray reflective layer, aggregates will be formed, and coating defects may result in the coating step. Further, in the film-forming process for the heat ray reflective layer, fusion of metal particles to one another is likely to be prevented, whereby no adequate heat ray reflective performance may be obtainable.

Further, as described later, in a coating fluid for forming a heat ray reflective layer, it is common to employ fine silver particles using a polybasic carboxylic acid, particularly citric acid, as a dispersant and to use only water as a solvent in order to impart the dispersion stability. However, due to deterioration of such a dispersant or growth of fine silver particles, the storage stability of the coating fluid is likely to be deteriorated.

Further, in a case where electrical conductivity or heat ray reflectivity is to be secured by applying a liquid containing fine metal particles, silver is mainly employed as a metal species, in many cases, but silver has a serious problem from the viewpoint of the durability. For example, with an electrical conductive paste containing fine silver particles, silver is likely to undergo migration in the presence of moisture, whereby an increase in the electrical resistance is observed. Further, with a thin film of silver, an environmental load such as salt water is likely to bring about deterioration of the appearance or performance.

To solve such a problem, it has been attempted to incorporate to the coating fluid a compound to suppress corrosion of a metal. For example, in a case where a fluid containing fine metal particles is used as an electroconductive paste, it is possible to obtain an effect to prevent oxidation by adding imidazole (Patent Document 7). Further in a coating fluid for a transparent electroconductive film, an alkanethiol is added to let it be bonded to the surface of fine metal particles to improve the stability of a thin metal film (Patent Document 8).

However, a heat ray shielding film is mainly used for an application as a window material for buildings or automobiles and thus is exposed to a corrosive environment severer than a transparent electroconductive film, and therefore, higher deterioration durability capable of being durable against it, is required. In order to impart such durability, it becomes necessary to minimize coating defects at the time of applying a coating fluid to a substrate. Here, the coating defects may be a "missing" resulting when the coating fluid is repelled from the substrate, or aggregates resulting from aggregation of a component contained in the coating fluid such as fine metal particles. Around such coating defects, smoothness or uniformity of the thin metal film is substantially deteriorated, and therefore, even if a protective layer is formed by a transparent resin on the thin metal film, the coating defects are likely to be starting points for deterioration of the film under a severe corrosion environment. Further, such coating defects are desired to be suppressed to the minimum also from such a viewpoint that they substantially impair the appearance of the heat ray shielding film to be used at a place where it is exposed to the public eye.

In spite of such requirements for a heat ray shielding film, the technique in the Patent Document 7 is not applicable to the formation of a thin film because of the form being a paste, although it is possible to obtain an effect to prevent corrosion of fine metal particles, and it is not possible to solve the deterioration starting from the coating defects in the thin metal film. Whereas, by the technique of the Patent Document 8, a highly hydrophobic compound such as an alkanethiol is added to a coating fluid, whereby dispersion stability of the fine metal particles tends to deteriorate, and aggregates are likely to be formed in the thin metal film to be formed, or an alkanethiol is bonded to fine metal particles, whereby the surface of fine metal particles is covered with long chain alkyl groups, whereby fusion of fine metal particles in the firing process is likely to be impaired, and it is not possible to obtain a thin metal film having a sufficient heat ray shielding ability.

Further, in order to facilitate formation of a coating film, it is common to employ a method of incorporating a surfactant to a coating fluid. However, a surfactant has a nature to be strongly adsorbed to fine metal particles, and if

the amount of a surfactant to be incorporated is large, the major portion of the surface of the fine metal particles will be covered by the surfactant, whereby fusion of the fine metal particles during firing treatment tends to be impaired. Further, a surfactant has a hydrophilic moiety in its molecular structure and is capable of holding moisture, whereby when incorporated in a thin metal film, it is likely to induce deterioration by moisture, or it is likely to deteriorate the adhesion when a laminate is prepared. Thus, it is not advisable to add a surfactant to a coating fluid for a heat ray shielding film.

PRIOR ART DOCUMENTS

PATENT DOCUMENTS

Patent Document 1: Japanese Patent No. 3,724,936
Patent Document 2: Japanese Patent No. 2,696,877
Patent Document 3: JP-A-6-316443
Patent Document 4: JP-A-6-316444
Patent Document 5: JP-A-10-217380
Patent Document 6: JP-A-2002-131531
Patent Document 7: JP-A-10-162646
Patent Document 8: JP-A-2001-64540

DISCLOSURE OF INVENTION

TECHNICAL PROBLEM

The present invention is to provide a heat ray reflective film having a single layer structure, which has high heat ray reflectivity, can relatively control visible light absorption and visible light reflection and has excellent heat stability; a heat ray reflective laminate which has high environmental durability and is suitable as a window material for buildings or automobiles; a window material for an automobile using such a heat ray reflective film or a laminate having such a heat ray reflective film; and an automobile.

Further, the present invention is to provide a process for producing such a heat ray reflective layer; and further a coating fluid for forming a heat ray reflective layer to form such a heat ray reflective layer by a wet film-forming method.

SOLUTION TO PROBLEM

The present inventors have conducted an extensive research to solve the above problem and as a result, have found that a heat ray reflective film under specific conditions comprising a binder resin and a metal, a laminate having such a heat ray reflective film formed on a substrate, and a coating fluid having a specific composition can solve the above problem.

The present invention has been made based on such finding and provides the following.

[1] A heat ray reflective laminate which is a laminate comprising a transparent substrate and a heat ray reflective layer and which has a solar reflectance of at least 15% as measured from the side containing the heat ray reflective layer, wherein the heat ray reflective layer comprises a binder resin containing a hydrophilic group other than an N-pyrrolidonyl group, and a metal, and the heat ray reflective layer has a layer thickness of at most 100 nm.

[2] The heat ray reflective laminate according to [1], wherein the hydrophilic group has a peak of desorption temperature of at most 290˚C, as determined under the following measurement conditions:

(Measurement conditions)

Hydrophilic group-$CH_3$ (a compound having the hydrophilic group and a methyl group bonded to each other) and silver particles having a particle size of from 1 to 5 μm are mixed, and the peak of desorption temperature of the hydrophilic group-$CH_3$ from silver is measured by TPD-MS.

[3] The heat ray reflective laminate according to [1] or [2], wherein the hydrophilic group is selected from the group consisting of a hydroxy group, a carboxy group, and an oxyethylene group.

[4] The heat ray reflective laminate according to any one of [1] to [3], wherein the binder resin contains a hydrophobic group.

[5] The heat ray reflective laminate according to [4], wherein the hydrophobic group is selected from an alkyl group, an acetyl group, and a phenyl group which may have a substituent.

[6] The heat ray reflective laminate according to any one of [1] to [5], wherein the binder resin is a curable resin.

[7] The heat ray reflective laminate according to any one of [1] to [6], wherein the heat ray reflective layer contains a heterocyclic compound capable of forming a coordination bond to the metal.

[8] The heat ray reflective laminate according to any one of [1] to [7], which is a heat ray reflective laminate having a resin layer laminated on the heat ray reflective layer, wherein the resin layer contains a polymer having an alkyl group having at least 8 carbon atoms in its side chain.

[9] The heat ray reflective laminate according to [8], wherein the polymer having an alkyl group having at least 8 carbon atoms in its side chain contains an ultraviolet absorbing group.

[10] The heat ray reflective laminate according to [8] or[9], wherein the resin layer contains a polymer having an ultraviolet absorbing group, other than the polymer having an alkyl group having at least 8 carbon atoms.

[11] The heat ray reflective laminate according to any one of [1] to [10], wherein in the heat ray reflective layer, the area-weighted average area of pores as observed from the layer surface is from 20 to 5,000 $nm^2$, and the proportion of the total pore area to the area of the layer surface of the heat ray reflective layer is from 3 to 40%.

[12] A heat ray reflective laminate which is a laminate comprising a transparent substrate and a heat ray reflective layer and which has a solar reflectance of at least 15% as measured from the side containing the heat ray reflective layer to the transparent substrate, wherein the heat ray reflective layer comprises a binder resin containing a hydrophilic group and a hydrophobic group, and a metal, and the heat ray reflective layer has a layer thickness of at most 100 nm.

[13] A metal film for heat ray reflection, which is a metal film for heat ray reflection made of a porous metal film containing a non-metal binder and having a film thickness of from 12 to 80 nm, and which has a visible light reflectance of at least 10%, as calculated in accordance with the method disclosed in JIS R3106 by taking, as a spectral reflectance, a diffuse reflectance with reference to barium sulfate or aluminum oxide, a visible light absorptance of at most 45%, and a surface resistivity of at most 80 Ω/□ as measured by a four probe method.

[14] The metal film for heat ray reflection according to [13], wherein in the porous metal film, the area-weighted average area of pores as observed from the film surface is from 20 to 5,000 $nm^2$, and the proportion of the total pore area to the area of the surface of the metal film is from 3 to 40%.

[15] A heat ray reflective laminate having a heat ray reflective layer and a resin layer laminated sequentially and directly on at least one side of a transparent substrate, wherein the heat ray reflective layer is made of the metal film for heat ray reflection as defined in [14].

[16] A heat ray reflective laminate having a heat ray reflective layer and a resin layer laminated sequentially and directly on at least one side of a transparent substrate, wherein the solar radiation-receiving side of the heat ray reflective laminate has a visible light reflectance of from10 to 50%, as calculated in accordance with the method disclosed in JIS R3106 by taking, as a spectral reflectance, a diffuse reflectance with reference to barium sulfate or aluminum oxide, and the heat ray reflective layer is made of a porous metal film containing a non-metal binder and having a film thickness of from 12 to 80 nm.

[17] A heat ray reflective film which contains a binder resin and has a film thickness of at least 15 nm and which has a visible light absorptance of at most 45%, as defined by the following formula, and a visible light reflectance of at least 10%, as calculated in accordance with the method disclosed in JIS R3106 by taking, as a spectral reflectance, a diffuse reflectance with reference to barium sulfate or aluminum oxide:

$$\text{Visible light absorptance (\%)} = 100 - \text{visible light transmittance (\%)} - \text{visible light reflectance (\%)}$$

(wherein the visible light transmittance is a visible light transmittance of a laminate having the heat ray reflective film formed on a glass substrate having the lowest transmittance of at least 87% at a wavelength of from 380 to 2,500 nm, as calculated in accordance with the method as disclosed in JIS R3106, and the visible light reflectance is calculated in accordance with the method disclosed in JIS R3106 by taking, as a spectral reflectance, a diffuse reflectance with reference to barium sulfate or aluminum oxide.)

[18] A heat ray reflective film which contains a binder resin and has a film thickness of at least 15 nm and which has a visible light absorptance of at most 45%, as defined by the following formula, and a visible light reflectance of at least 10%, as calculated in accordance with the method disclosed in JIS R3106 by taking, as a spectral reflectance, a diffuse reflectance with reference to barium sulfate or aluminum oxide:

$$\text{Visible light absorptance (\%)} = 100 - \text{visible light transmittance (\%)} - \text{visible light reflectance (\%)}$$

(wherein the visible light transmittance is a value obtained by dividing the spectral transmittance of a laminate having the heat ray reflective film formed on a substrate by the spectral transmittance of the substrate, as calculated in accordance with the method as disclosed in JIS R3106, and the visible light reflectance is calculated in accordance with the method disclosed in JIS R3106 by taking, as a spectral reflectance, a diffuse reflectance with reference to barium sulfate or aluminum oxide.)
[19] The heat ray reflective film according to [17] or [18], wherein the heat ray reflective film contains a metal.
[20] The heat ray reflective film according to any one of [17] to [19], which has a selective reflectivity for infrared ray of at least 1.05, as calculated by the following formula:

Selective reflectivity for infrared ray = infrared reflectance/visible light reflectance (wherein the infrared reflectance is calculated by taking, as a spectral reflectance, a diffuse reflectance with reference to barium sulfate or aluminum oxide and setting the wavelength range at the time of calculating a solar reflectance of JIS R3106 to be from 780 to 1,300 nm, and the visible light reflectance is calculated in accordance with the method disclosed in JIS R3106 by taking, as a spectral reflectance, a diffuse reflectance with reference to barium sulfate or aluminum oxide.)

[21] A laminate comprising a heat ray reflective film as defined in any one of [17] to [20] and a transparent substrate.
[22] The laminate according to [21], which has a solar reflectance of at least 15%, as calculated in accordance with the method disclosed in JIS R3106 by taking, as a spectral reflectance, a diffuse reflectance with reference to barium sulfate or aluminum oxide, a visible light reflectance of at least 10%, as calculated in accordance with the method disclosed in JIS R3106 by taking, as a spectral reflectance, a diffuse reflectance with reference to barium sulfate or aluminum oxide, and a selective reflectivity for infrared ray of at least 1.05, as calculated by the following formula:

Selective reflectivity for infrared ray = infrared reflectance/visible light reflectance (wherein the infrared reflectance is calculated by taking, as a spectral reflectance, a diffuse reflectance with reference to barium sulfate or aluminum oxide and setting the wavelength range at the time of calculating a solar reflectance of JIS R3106 to be from 780 to 1,300 nm, and the visible light reflectance is calculated in accordance with the method disclosed in JIS R3106 by taking, as a spectral reflectance, a diffuse reflectance with reference to barium sulfate or aluminum oxide.)

[23] A transparent heat ray reflective laminate having a heat ray reflective layer containing a metal, and a resin layer laminated sequentially on a transparent substrate, wherein the resin layer contains a polymer having an alkyl group having at least 8 carbon atoms in its side chain.
[24] The transparent heat ray reflective laminate according to [23], wherein the polymer having an alkyl group having at least 8 carbon atoms in its side chain contains an ultraviolet absorbing group.
[25] A window material for an automobile, which contains the laminate as defined in any one of [1] to [12], [15], [16] and [21] to [24], or the metal film as defined in [13] or [14], or the heat ray reflective film as defined in any one of [17] to [20].
[26] An automobile having the window material as defined in [25].
[27] A process for producing a heat ray reflective layer, which comprises a film-forming step of subjecting a composition comprising metal particles, a non-metal compound and a solvent, wherein the proportion of the non-metal compound to the solid content is from 0.1 to 40 wt%, to wet film-forming on a substrate to form a precursor layer, and a conversion step of heat-treating the precursor layer, wherein in the conversion step, the precursor layer is converted to a heat ray reflective layer having a surface resistivity of at most 100 Ω/□, and the heat ray reflective layer has a layer thickness of at most 80 nm.
[28] A coating fluid for forming a heat ray reflective layer, which comprises fine metal particles having an average particle size of at most 100 nm, a binder resin containing a hydrophilic group other than an N-pyrrolidonyl group, and a polar solvent.
[29] The coating fluid for forming a heat ray reflective layer according to [28], wherein the hydrophilic group has a peak of desorption temperature of at most 290˚C, as determined under the following measurement conditions:

(Measurement conditions)

Hydrophilic group-$CH_3$ (a compound having the hydrophilic group and a methyl group bonded to each other) and silver particles having a particle size of from 1 to 5 μm are mixed, and the peak of desorption temperature of the hydrophilic group-$CH_3$ from silver is measured by TPD-MS.

[30] The coating fluid for forming a heat ray reflective layer according to [28] or [29], wherein the hydrophilic group is selected from the group consisting of a hydroxy group, a carboxy group, and an oxyethylene group.
[31] The coating fluid for forming a heat ray reflective layer according to any one of [28] to [30], wherein the binder resin contains a hydrophobic group.
[32] The coating fluid for forming a heat ray reflective layer according to [31], wherein the hydrophobic group is selected from an alkyl group, an acetyl group, and a phenyl group which may have a substituent.
[33] The coating fluid for forming a heat ray reflective layer according to any one of [28] to [32], wherein the binder resin is a curable resin.
[34] The coating fluid for forming a heat ray reflective layer according to any one of [28] to [33], which contains a heterocyclic compound capable of forming a coordination bond to the metal.
[35] The coating fluid for forming a heat ray reflective layer according to any one of [28] to [34], wherein the polar solvent is a mixed solvent of water and a polar solvent other than water, wherein the polar solvent other than water has a boiling point of from 60 to 170˚C.
[36] A coating fluid for a heat ray reflective film, which comprises fine metal particles having an average particle size of at most 100 nm, a polar solvent, a heterocyclic compound capable of forming a coordination bond to the metal, and a binder.

ADVANTAGEOUS EFFECTS OF INVENTION

By the heat ray reflective laminate of the present invention, it is possible to provide a transparent shielding component which has a high heat ray reflectivity and which has high environmental durability and is excellent in the cost performance. Further, by carrying out formation of the respective layers by a wet film-forming method, it is possible to impart a heat-shielding performance even to a transparent component having a large size and a curved surface, and particularly, by applying it to a window material, it is possible to improve the comfort in a room or vehicle and to accomplish energy saving by reducing the load on an air conditioner.
Particularly when as a transparent substrate, a transparent resin substrate is employed and applied to a grazing component for an automobile, it is possible to accomplish a substantial improvement of the gasoline mileage due to weight reduction of an automobile and reduction of the load for an air conditioner.
Further, when it is used as such a window material, by incorporating a component having an ultraviolet absorbing group to a laminate-constituting layer, it is possible to prevent the deterioration by ultraviolet rays.
Further, by the heat ray reflectivity, it is possible to prevent the deterioration by a heat formed by the heat ray absorption of the transparent substrate.
Whereas, the metal film for heat ray reflection of the present invention has a high heat ray reflectivity, and it is thereby possible to relatively control the visible light absorption and the visible light reflection and to realize a heat ray reflecting film excellent in heat stability in a single layer structure. By using such as a metal film for heat ray reflection, it is possible to provide a heat ray reflective laminate which is free from an adverse effect of non-uniformity of the film thickness over the appearance. It is thereby possible to easily impart a heat ray shielding function even to a transparent substrate having a large size and a curved surface, without impairing the appearance. Further, by forming such a heat ray reflective layer by a wet film-forming method, reduction of the cost becomes possible.
Further, the present invention provides a heat ray reflective film which has a high heat resistance and a low solar absorbance and which selectively reflects infrared ray as compared with visible light and is excellent in moist heat resistance, and a laminate having such a heat ray reflective film formed on a transparent substrate.
Further, the heat ray reflective film of the present invention can be formed by a wet method, and therefore, it can be easily formed on a substrate having a large size and a non-flat surface, and since the film-forming property is good, it is possible to obtain a heat ray reflective film having a high uniformity of the thickness, and a large surface may be obtained at a relatively low production cost.
Further, since film-forming can be carried out at a relatively low temperature, and it becomes possible to apply it to a material or plastic substrate having a low heat resistance without a restriction of a substrate to be combined.
By virtue of these effects, the heat ray reflective laminate of the present invention is particularly useful for a window material or roof material for buildings or vehicles such as automobiles, or for a sunscreen material (sun visor) for windows.
Further, the heat ray reflective laminate of the present invention has a neutral color tone, and by introducing

it to the body of a car, it is possible to shield heat rays thereby to improve the comfort in the car without substantially impairing the color tone, and further, by providing a cured layer, it is possible to prevent scratches on the body of the car.

Further, the heat ray reflective laminate of the present invention has a neutral color tone and permits a visible light to pass therethrough while reflecting heat rays. Accordingly, it can suitably be used also for e.g. a refrigerator required to display commercial products, which may be used in e.g. convenience stores, and it is possible to improve the refrigerating effect thereby to contribute to energy saving.

Further, the heat ray reflective laminate of the present invention is useful also as a covering material for frames for the purpose of preventing posters, photographs, etc. from deterioration by heat rays or ultraviolet rays.

According to the process for producing a heat ray reflective layer of the present invention, the precursor layer formed in the film-forming step is subjected to the conversion step under a specific heat treating condition, whereby it is possible to substantially reduce the maximum reflectance of the precursor layer to light having a wavelength of from 500 to 600 nm thereby to suppress glaring which becomes problematic on appearance and to increase the transparence to visible light. Further, by increasing the maximum reflectance of the precursor layer to light having a wavelength of from 1,500 to 2,000 nm by at least 10%, it is possible to impart a high heat ray reflectivity, and it is thereby possible to constantly produce a heat ray reflective layer having a high transparency and being excellent in the heat ray reflectivity.

By the coating fluid for forming a heat ray reflective layer of the present invention, it is possible to improve the stability of a coating film or the coating fluid at the time of applying it on a substrate, and it is possible to suppress formation of aggregates or "missing" formed as the coating fluid is repelled from the substrate, in the heat ray reflective layer to be prepared. Such a heat ray reflective layer has little defects which become starting points for deterioration, and its appearance is also good. Further, as a heterocyclic compound is incorporated, the durability against a corrosive environment of the heat ray reflective layer will be remarkably improved.

BRIEF DESCRIPTION OF DRAWINGS

Fig. 1 shows schematic cross-sectional views illustrating practical embodiments of the transparent heat ray reflective laminate of the present invention.
Fig. 2 is a SEM photograph of heat ray shielding metal film I-A in Example I-1.
Fig. 3 is a SEM photograph of heat ray shielding metal film I-B in Example I-2.
Fig. 4 is a SEM photograph of heat ray shielding metal film I-C in Example I-3.
Fig. 5 is a SEM photograph of heat ray shielding metal film I-D in Example I-4.
Fig. 6 is a SEM photograph of heat ray shielding metal film I-E in Example I-5.
Fig. 7 is a SEM photograph of heat ray shielding metal film I-F in Example I-6.
Fig. 8 is a SEM photograph of heat ray shielding metal film I-G in Comparative Example I-1.
Fig. 9 is a SEM photograph of heat ray shielding metal film I-H in Comparative Example I-2.
Fig. 10 is a SEM photograph of heat ray shielding metal film I-J in Comparative Example I-4.
Fig. 11 is a SEM photograph of heat ray shielding metal film I-K in Comparative Example I-5.
Fig. 12 is a SEM photograph of heat ray shielding metal film I-L in Comparative Example I-6.
Fig. 13 is a SEM photograph of heat ray shielding metal film I-M in Comparative Example I-7.
Fig. 14 is a SEM photograph of heat ray shielding metal film I-O in Comparative Example I-9.
Fig. 15 is a SEM photograph of heat ray shielding metal film I-P in Comparative Example I-10.
Fig. 16 is a SEM photograph of heat ray reflective film II-A1 in Example II-1.
Fig. 17 is a SEM photograph of heat ray reflective film II-A2 in Example II-1.
Fig. 18 is a SEM photograph of heat ray reflective film II-B in Example II-2.
Fig. 19 is a SEM photograph of heat ray reflective film II-C in Example II-3.
Fig. 20 is a SEM photograph of heat ray reflective film II-D in Example II-4.
Fig. 21 is a SEM photograph of heat ray reflective film II-E in Example II-5.
Fig. 22 is a SEM photograph of heat ray reflective film II-F in Example II-6.
Fig. 23 is a SEM photograph of heat ray reflective film II-G in Comparative Example II-1.
Fig. 24 is a SEM photograph of heat ray reflective film II-H in Comparative Example II-2.
Fig. 25 is a SEM photograph of heat ray reflective film II-I in Comparative Example II-3.
Fig. 26 is a SEM photograph of heat ray reflective film II-J in Comparative Example II-4.
Fig. 27 is a SEM photograph of a heat ray shielding layer in Example III-1.
Fig. 28 is a SEM photograph of a heat ray shielding layer in Example III-2.
Fig. 29 is a SEM photograph of a heat ray shielding layer in Example III-4.
Fig. 30 is a SEM photograph of a heat ray shielding layer in Example III-5.
Fig. 31 is a SEM photograph of a heat ray shielding layer in Example III-6.

Fig. 32 is a SEM photograph of a heat ray shielding layer in Example III-7.
Fig. 33 is a SEM photograph of a heat ray shielding layer in Example III-8A.
Fig. 34 is a SEM photograph of a heat ray shielding layer in Example III-9.
Fig. 35 is a SEM photograph of a heat ray shielding layer in Comparative Example III-1.
Fig. 36 is a SEM photograph of a heat ray shielding layer in Comparative Example III-2.
Fig. 37 is a SEM photograph of a heat ray shielding layer in Comparative Example III-3.

DESCRIPTION OF EMBODIMENTS

Now, the present invention will be described in detail with reference to practical embodiments, but it should be understood that the following description of the constituting elements is exemplary (typical examples) for the practical embodiments of the present invention, and the present invention is by no means thereby restricted.

[TRANSPARENT HEAT RAY REFLECTIVE LAMINATE]

The heat ray reflective laminate of the present invention is usually a transparent heat ray reflective laminate having a heat ray reflective layer containing a metal (hereinafter sometimes referred to simply as a "heat ray reflective layer" or "heat ray shielding layer") and a resin layer sequentially laminated on a transparent substrate. This heat ray reflective layer containing a metal corresponds to the metal film for heat ray reflection or the heat ray reflective film of the present invention.

{TRANSPARENT SUBSTRATE}

<CONSTITUTING MATERIAL>

Various resins, glass, etc. may be used as the material for a transparent substrate which may be used for the transparent heat ray reflective laminate of the present invention. As an example for the material useful for the transparent substrate, an inorganic glass such as soda glass or reinforced glass is preferred for a window material from the viewpoint of the transparency, processability, chemical resistance and abrasion resistance. As other materials, a polycarbonate resin, a polysulfone resin, an acrylic resin, a polyolefin resin, a polyether resin, a polyester resin, a polyamide resin, a polysulfide resin, an unsaturated polyester resin, an epoxy resin, a melamine resin, a phenol resin, a diallyl phthalate resin, a polyimide resin, an urethane resin, a polyvinyl acetate resin, a polyvinyl alcohol resin, a styrene resin, a vinyl chloride resin, a cellulosic resin, a ceramic, etc. may be mentioned. The type of the resin may be a thermoplastic resin or a thermosetting resin.

Among them, the transparent substrate is preferably made of a transparent resin from the viewpoint of weight reduction and processability and particularly preferably made of a thermoplastic resin. Further, the transparent substrate is preferably made of a transparent resin having a carbonyl group from the viewpoint of the adhesion to a metal contained in the heat ray reflective layer and from the viewpoint of the adhesion to a resin layer via a porous film of the heat ray reflective layer described hereinafter, which is formed on the resin layer. With a view to preferably satisfying such properties, the constituting material for the transparent substrate is preferably a polyester resin, a polyallylate resin, a polycarbonate resin or an acetylcellulose resin, and particularly preferred is a polycarbonate resin, since it has high impact resistance and transparency.

(RAW MATERIAL MONOMER)

As a raw material monomer for forming a resin having a carbonyl group, suitable for the transparent resin substrate, any monomer which is commonly known, may be used, but it is preferred to use a dihydric alcohol which is commonly used as a raw material for a polyester resin, a polyallylate resin or a polycarbonate resin.

Here, "raw material monomer" means a monomer component for producing a resin by polymerization or copolymerization, and it may hereinafter sometimes be referred to simply as a "monomer".

As such a dihydric alcohol, the following ones may, for example, be specifically mentioned.

A bi-functional phenol compound such as hydroquinone, resorcinol, 1,3-dihydroxynaphthalene, 1,4-dihydroxynaphthalene, 1,5-dihydroxynaphthalene, 1,8-dihydroxynaphthalene, 2,3-dihydroxynaphthalene, 2,6-dihydroxynaphthalene or 2,7-dihydroxynaphthalene;

a biphenol compound such as 4,4'-biphenol, 3,3'-dimethyl-4,4'-dihydroxy-1,1'-biphenyl, 3,3'-di(t-butyl)-4,4'-dihydroxy-1,1'-biphenyl, 3,3',5,5'-tetramethyl-4,4'-dihydroxy-1,1'-biphenyl, 3,3',5,5'-tetra(t-butyl)-4,4'-dihydroxy-1,1'-biphenyl, 2,2',3,3',5,5'hexamethyl-4,4'-dihydroxy-1,1'-biphenyl, 2,4'-biphenol, 3,3'-dimethyl-2,4'-dihydroxy-1,1'-biphenyl, 3,3'-di (t-butyl)-2,4'-dihydroxy-1,1'-biphenyl, 2,2'-biphenol, 3,3'-dimethyl-2,2'-dihydroxy-1,1'-biphenyl or 3,3'-di(t-butyl)-2,2'-dihydroxy-1,1'-biphenyl;
a bisphenol compound having no substituent on the aromatic ring, such as bis(4-hydroxyphenyl)methane, 1,1-bis(4-hydroxyphenyl)ethane, 1,1-bis(4-hydroxyphenyl)propane, 2,2-bis(4-hydroxyphenyl)propane, 1,1-bis(4-hydroxyphenyl) butane, 2,2-bis(4-hydroxyphenyl)butane, 1,1-bis(4-hydroxyphenyl)pentane, 2,2-bis(4-hydroxyphenyl)pentane, 3,3-bis (4-hydroxyphenyl)pentane, 2,2-bis(4-hydroxyphenyl)-3-methylbutane, 1,1-bis(4-hydroxyphenyl)hexane, 2,2-bis(4-hydroxyphenyl)hexane, 3,3-bis(4-hydroxyphenyl)hexane, 2,2-bis(4-hydroxyphenyl)-4-methylpentane, 1,1-bis(4-hydroxyphenyl)cyclopentane or 1,1-bis(4-hydroxyphenyl)cyclohexane;
a bisphenol compound having an aryl group as a substituent on an aromatic ring, such as bis(3-phenyl-4-hydroxyphenyl) methane, 1,1-bis(3-phenyl-4-hydroxyphenyl)ethane, 1,1-bis(3-phenyl-4-hydroxyphenyl)propane or 2,2-bis(3-phenyl-4-hydroxyphenyl)propane;
a bisphenol compound having an alkyl group as a substituent on an aromatic ring, such as bis(4-hydroxy-3-methylphenyl) methane, 1,1-bis(4-hydroxy-3-methylphenyl)ethane, 1,1-bis(4-hydroxy-3-methylphenyl)propane, 2,2-bis(4-hydroxy-3-methylphenyl)propane, 1,1-bis(4-hydroxy-3-methylphenyl)cyclohexane, bis(4-hydroxy-3-ethylphenyl)methane, 1,1-bis (4-hydroxy-3-ethylphenyl)ethane, 1,1-bis(4-hydroxy-3-ethylphenyl)propane, 2,2-bis(4-hydroxy-3-ethylphenyl)propane, 1,1-bis(4-hydroxy-3-ethylphenyl)cyclohexane, 2,2-bis(4-hydroxy-3-isopropylphenyl)propane, 2,2-bis(4-hydroxy-3-(sec-butyl)phenyl)propane, bis(4-hydroxy-3,5-dimethylphenyl)methane, 1,1-bis(4-hydroxy-3,5-dimethylphenyl)ethane, 2,2-bis(4-hydroxy-3,5-dimethylphenyl)propane, 1,1-bis(4-hydroxy-3,5-dimethylphenyl)cyclohexane, bis(4-hydroxy-3,6-dimethylphenyl)methane, 1,1-bis(4-hydroxy-3,6-dimethylphenyl)ethane, 2,2-bis(4-hydroxy-3,6-dimethylphenyl)propane, bis(4-hydroxy-2,3,5-trimethylphenyl)methane, 1,1-bis(4-hydroxy-2,3,5-trimethylphenyl)ethane, 2,2-bis(4-hydroxy-2,3,5-trimethylphenyl)propane, bis(4-hydroxy-2,3,5-trimethylphenyl)phenylmethane, 1,1-bis(4-hydroxy-2,3,5-trimethylphenyl)phenylethane or 1,1-bis(4-hydroxy-2,3,5-trimethylphenyl)cyclohexane;
a bisphenol compound wherein a bivalent group connecting the aromatic rings has an aryl group as a substituent, such as bis(4-hydroxyphenyl)(phenyl)methane, 1,1-bis(4-hydroxyphenyl)-1-phenylethane, 1,1-bis(4-hydroxyphenyl)-1-phenylpropane, bis(4-hydroxyphenyl)(diphenyl)methane or bis(4-hydroxyphenyl)(dibenzyl)methane;
a bisphenol compound wherein aromatic rings are connected by an ether bond, such as 4,4'-dihydroxydiphenyl ether or 3,3,',5,5'-tetramethyl-4,4'-dihydroxydiphenyl ether;
a bisphenol compound wherein aromatic rings are connected by a sulfone bond, such as 4,4'-dihydroxydiphenylsulfone or 3,3',5,5'-tetramethyl-4,4'-dihydroxydiphenylsulfone;
a bisphenol compound wherein aromatic rings are connected by a sulfide bond, such as 4,4'-dihydroxydiphenylsulfide or 3,3',5,5'-tetramethyl-4,4'-dihydroxydiphenylsulfide; and
bis(4-hydroxyphenyl)ketone, bis(4-hydroxyphenyl)ether, bis(4-hydroxy-3-methylphenyl)ether, phenolphthalein, etc.

One of these compounds may be used alone, or two or more of them may be used as mixed.

(MOLECULAR WEIGHT)

The molecular weight of the resin constituting the transparent resin substrate is not particularly limited. Usually, however, one having a number average molecular weight of from about 5,000 to 1,000,000 is preferred, and one having a number average molecular weight of from about 10,000 to 500,000, is more preferred. Especially when a polycarbonate resin is used for the transparent resin substrate, one having a number average molecular weight of from about 15,000 to 50,000 is preferred.

(OTHER ADDITIVES)

To the above constituting material to constitute the transparent substrate, various additives may be added for the purpose of lasting the effects of the heat ray reflective layer, such as a heat stabilizer, an ultraviolet absorber, an antioxidant, an antiseptic, a fungicide, etc. Further, various additives may be added for the purpose of imparting further functions, such as a colorant, such as a dye or pigment, or fine particles of an inorganic oxide, etc. to absorb visible light, near infrared ray or infrared ray having a specific wavelength.

(GLASS TRANSITION TEMPERATURE)

In a case where a resin is used as the transparent substrate, the glass transition temperature (Tg) of such a resin is preferably from 60 to 500˚C, more preferably from 80 to 300˚C, further preferably from 100 to 200˚C. Here, if Tg is too low, the laminate is likely to be deformed during its use for a long period of time. If Tg is too high, the resin tends to be susceptible to cracking against a strain or formation of an internal stress.

The glass transition temperature of the transparent resin substrate may be measured by a differential scanning calorimeter (DSC), a dynamic mechanical analyzer (DMA) or a thermomechanical analyzer (TMA).

(LINEAR EXPANSION COEFFICIENT)

In a case where a resin is used as the transparent substrate, the linear expansion coefficient of such a transparent resin substrate is preferably at most $3.0\times10^{-4}$/K. If the linear expansion coefficient is larger than this, the deformation degree at a high temperature becomes large, and a strain of the substrate itself or the interlaminar peeling of the obtainable laminate is likely to occur.

The linear expansion coefficient of the transparent resin substrate may be measured by a thermomechanical analyzer (TMA) or a dilatometer measuring apparatus.

<FORM>

The form of the transparent substrate is not particularly limited and is optional, such as a plate form, a sheet form or a film form, and it may be a flat form (a flat plate form) or may have a curved surface.

<THICKNESS>

The thickness of the transparent substrate is suitably selected depending upon the form. In the case of a plate-form or sheet-form, the thickness of the transparent substrate is usually from 0.1 mm to 10 cm. If the transparent substrate is too thin, the mechanical strength of the obtainable laminate tends to be low. On the other hand, if the transparent substrate is too thick, the transparency tends to be low, and when it is used for e.g. a window, the visibility is likely to be poor. Further, in the case of a film-form, the thickness of the transparent substrate is usually from 10 μm to 0.5 mm. If the thickness is less than 10 μm, the handling efficiency tends to be poor, and if it exceeds 0.5 mm, flexibility as a film is likely to be poor.

<SIZE>

The size of the transparent substrate is not particularly limited and may suitably be selected to meet the size depending upon the particular application of the transparent heat ray reflective laminate of the present invention, which will be described hereinafter.

<PRODUCTION METHOD>

The transparent substrate may be produced by a known method such as extrusion, calendering, injection, hollow molding or compression molding.

<SURFACE ROUGHNESS>

The arithmetic average surface roughness (Ra) of the transparent substrate is usually from 0.01 nm to 10 μm, preferably from 0.1 to 1 μm, more preferably from 0.1 to 100 nm. If Ra of the transparent substrate is too large, scattering of light at the substrate surface increases, and the transparency of the obtainable laminate is likely to be deteriorated. On the other hand, if Ra is too small, the adhesion of the transparent substrate to the heat ray reflective layer is likely to be deteriorated.

<WATER ABSORPTION>

The water absorption of the transparent substrate is preferably at most 2.0 wt%, more preferably at most 1.0 wt%, particularly preferably at most 0.5 wt%. If the water absorption of the transparent substrate is high, the heat ray reflective layer containing a metal is likely to be oxidized or deteriorated, or water is retained at the boundary between the transparent substrate and the heat ray reflective layer containing a metal, and water bubbles are likely to be formed. Such water absorption may be measured by the following method.

A test specimen measuring 50 mm square and 1 mm thick is press-molded at a mold temperature of 280˚C, dried in a 50˚C constant temperature chamber for 24 hours and then left to cool in a desiccator containing a silica gel as a drying agent. The test specimen is immersed in pure water at 50˚C for 24 hours and then taken out, whereupon the weight of the test specimen before the immersion in pure water and the weight after the immersion are compared, and the water absorption can be obtained as the percentage of the proportion of the increase in weight after the immersion to the weight before the immersion in pure water.

<CONTACT ANGLE>

The contact angle (static contact angle) of the coating fluid for forming a heat ray reflective layer to the transparent substrate in the wet film-forming method which will be described hereinafter, is preferably at most 90˚, more preferably at most 80˚, further preferably at most 70˚, particularly preferably at most 60˚, especially preferably at most 50˚ and preferably at least 1˚, more preferably at least 5˚, further preferably at least 10˚, particularly preferably at least 20˚, in a case where the substrate is glass. In a case where the transparent substrate is a resin, the contact angle (static contact angle) of the coating fluid to the substrate is preferably at most 90˚, more preferably at most 85˚, further preferably at most 70˚, particularly preferably at most 60˚, and preferably at least 1˚, more preferably at least 5˚, further preferably at least 10˚, particularly preferably at least 20˚.

If the contact angle of the coating fluid to the transparent substrate is too large, the wettability of the coating fluid to the transparent substrate tends to be poor, and the film-forming is likely to be difficult. Further, the surface smoothness of the heat ray reflective layer to be formed is likely to be poor, and the transmittance is likely to decrease. If the contact angle of the coating fluid to the transparent substrate is too small, it is likely that it becomes difficult to form a heat ray reflective layer having a desired thickness.

The contact angle of the coating fluid to the transparent substrate may be measured by a contact angle meter.

In order to reduce the contact angle of the coating fluid to the transparent substrate, surface modification may be applied to the transparent substrate. In such a case, the surface modification method may, for example, be a physical method such as plasma discharge treatment, corona discharge treatment, ozone treatment or flame treatment, or a chemical method by means of e.g. a silane coupling agent, or under coating with a resin.

<SOLAR ABSORPTANCE>

The solar absorptance of the transparent substrate is usually at most 80%. If the solar absorptance of the transparent substrate is larger than this, the temperature of the obtainable laminate itself tends to be high, and deterioration of the substrate itself, the heat ray reflective layer, other laminate-constituting layers, etc. is likely to be accelerated, and the durability is likely to be deteriorated.

{HEAT RAY REFLECTIVE LAYER CONTAINING METAL}

The heat ray reflective layer containing a metal, which constitutes the transparent heat ray reflective laminate of the present invention, is preferably a porous metal film having a thickness of at most 100 nm, e.g. from 5 nm to 100 nm.

<TYPE OF METAL>

The metal species to constitute the heat ray reflective layer may, for example, be Au, Ag, Pd, Pt, Rh, Ru, Cu, Fe, Ni, Co, Sn, Ti, In, Al, Ta or Sb. It is preferably Au, Ag, Pd or Cu, more preferably Ag and/or Pd, further preferably Ag (silver). These metals may be used alone or in combination of two or more of them. Further, it may be an alloy containing these metals.

The heat ray reflective layer of the present invention particularly preferably contains silver as the metal, and it is preferred that the proportion of silver contained in all metals constituting the heat ray reflective layer is preferably at least 30 wt%, more preferably at least 50 wt%, further preferably at least 70 wt%, particularly preferably at least 80 wt%, especially preferably at least 85 wt%. If the content of silver is too small, the solar reflectance tends to be low, and the heat ray shielding property is likely to be inadequate. Further, there is a possible danger that the transmitted light in a visible region is excessively colored (i.e. an increase of the visible light absorptance). Further, in order to increase the infrared reflectance, it is preferred that the content of silver in all metals constituting the heat ray reflective layer is 100 wt%, but with a view to increasing the light resistance, the content of silver contained in all metals constituting the heat ray reflective layer is preferably at most 95 wt%, more preferably at most 90 wt%. At that time, the metal species contained other than silver is preferably Pd (palladium).

<THICKNESS>

The thickness of the heat ray reflective layer is preferably at least 5 nm, more preferably at least 10 nm, more preferably at least 12 nm, further preferably at least 15 nm, particularly preferably at least 20 nm, especially preferably at least 25 nm, and preferably at most 100 nm, more preferably at most 80 nm, further preferably at most 70 nm, particularly preferably at most 60 nm, especially preferably at most 50 nm. If the thickness of the heat ray reflective layer is too thin, not only a sufficient heat ray shielding property will not be obtained, but film defects are likely to be formed, whereby the environmental durability is likely to be poor. On the other hand, if the thickness of the heat ray reflective

layer is too thick, a problem of an increase in the metal gloss (so-called glaring) caused by a decrease in transparency and/or an increase in the visible light reflectance is likely to result.

The thickness of the heat ray reflective layer may be measured by a step/surface roughness/fine shape-measuring apparatus, an ellipsometer or a reflection spectroscopic film thickness meter or by electromicroscopic observation of the cross section obtained by cutting the heat ray reflective layer.

<POROUS STRUCTURE>

The heat ray reflective layer of the present invention has a reflection mechanism based on a physical phenomenon so-called plasma oscillation. Therefore, the heat ray reflective layer of the present invention is preferably a porous metal film having a porous structure to reflect light by plasma oscillation, by forming an electroconductive path by bonding fine particulate or island-shaped metal clusters to one another, irrespective of the film-forming method. Such a porous structure is considered to suppress the plasma oscillation by suppressing movement of free electrons by suitably controlling the electroconductive path and thus has a characteristic such that it permits light in a visible light region to pass therethrough and strongly reflects light in a (near) infrared region.

In a case where bonding of fine particulate or island-shaped metal clusters to constitute the heat ray reflective layer is further dense and the entire film is densely packed with the metal phase i.e. in a case where the surface resistance is small, the electroconductivity increases, and the reflectance becomes high over the visible to infrared region, so that glaring increases and the transparency tends to decrease.

In the present invention, it is preferred that the area-weighted average area of pores as observed from the layer surface of the heat ray reflective layer is from 20 to 5,000 $nm^2$, and the proportion of the total pore area to the area of the surface of the heat ray reflective layer (hereinafter sometimes referred to as the "pore area ratio") is at least 3%, preferably at least 5%, more preferably at least 10% and at most 40%, preferably at most 30%, more preferably at most 25%. It is thereby possible that in a heat ray reflective layer for which a surface resistivity lower than the transparent electroconductive film is required, both a good heat ray reflectivity and a relatively low visible light reflectivity (accordingly a good visible light transmittance and a low visible light absorptivity) are satisfied, such being desirable.

If the area-weighted average area of pores is too large, an influence of scattering appears in the visible light, whereby the good appearance tends to be impaired, or the heat stability is likely to be deteriorated. From such a viewpoint, the upper limit for the area-weighted average area of pores is usually 5,000 $nm^2$, preferably 4,000 $nm^2$, more preferably 2,500 $nm^2$, further preferably 2,000 $nm^2$. On the other hand, if the area-weighted average area of pores is too small, the influence of the pores to the spectroscopic properties is little, and the effect to improve the spectroscopic properties of the heat ray reflective layer tends to be small, and the desired spectroscopic properties may not be obtainable. From such a viewpoint, the lower limit for the area-weighted average area of pores is usually 20 $nm^2$, preferably 30 $nm^2$, further preferably 50 $nm^2$.

Further, the planar view shape of pores is optional and may take an irregular form, a circular form, a rectangular form or the like. Further, their distribution is optional within the range of the above-mentioned area.

If the pore area ratio is too small, the effect of introducing pores may not sufficiently be obtainable. On the other hand, if the pore area ratio is too large, formation of the electroconductive path is likely to be inadequate, or the heat stability of the film is likely to be deteriorated. The distribution of pores within the heat ray reflective layer may be irregular or periodical (regular). However, if the distribution has a periodical nature, an influence may appear to light having a restricted wavelength derived from the period, and therefore, the distribution is preferably nonperiodical.

The above-mentioned pores are a dielectric phase contained in the heat ray reflective layer having a structure wherein fine particulate or island-shaped metal particles are linked, and a part or whole thereof may be filled with a non-metallic component or may be voids. The thickness of the heat ray reflective layer of the present invention is sufficiently thin, whereby the size of such pores is defined on the surface, and is obtained by image processing of an image obtained by the observation of the surface by means of morphological observation such as a scanning electron microscope (SEM) or a scanning prove microscope (SPM). In this image processing, by taking a concentration average value of the observed image as a threshold value, the image is binarized to calculate the area of the pore portion. Such pores may pass through in the thickness direction, and in such a case, the effect for introducing pores are more readily obtainable. In the observed image on the layer surface, individual pores take closed shapes, but they usually have a distribution, and their average size is represented by the area-weighted average area. Further, the pore area ratio is defined by percentage of a value obtained by dividing the total area of pores in the observed image on the layer surface by the area of the entire observed image. The area for such observation is at least 1,500 nm $\times$ 1,500 nm in order to obtain statistical accuracy relating to the pores.

Further, such a porous structure of the heat ray reflective layer is preferred also from such a viewpoint that the after-mentioned resin layer to be formed on such a heat ray reflective layer will be bonded to the transparent substrate through such pores thereby to contribute to a further improvement of the adhesion.

<SURFACE RESISTIVITY>

As a direct index for the above electroconductive path, the surface resistivity is mentioned. The surface resistivity of the heat ray reflective layer of the present invention is preferably at most 100 Ω/□, more preferably at most 80 Ω/□, further preferably at most 50 Ω/□, particularly preferably at most 30 Ω/□, especially preferably at most 20 Ω/□ and preferably at least 0.1 Ω/□, more preferably at least 0.5 Ω/□, further preferably at least 1 Ω/□, particularly preferably at least 2 Ω/□. If the surface resistivity of the heat ray reflective layer is too small, the electroconductivity becomes large, and the reflectance becomes high over the visible to infrared region, whereby the appearance is likely to be impaired by an increase of glaring and a decrease of the transparency. On the other hand, if the surface resistivity is too large, the heat ray reflectivity is likely to be poor.

The method for measuring the surface resistivity of the heat ray reflective layer may be any measuring method so long as the surface resistivity can be measured. However, a van der pauw method or a four probe method may, for example, be mentioned, and preferred is a four probe method.

<SURFACE ROUGHNESS>

The heat ray reflective layer in the present invention may have nonperiodical irregularities, and the arithmetic average surface roughness (Ra) is usually at least 0.01 nm, preferably at least 0.1 nm, more preferably at least 0.5 nm and usually at most 80 nm, preferably at most 50 nm, further preferably at most 30 nm, particularly preferably at most 10 nm. Here, if Ra is too small, the adhesion to the resin layer to be formed as laminated on the heat ray reflective layer is likely to be low. On the other hand, if Ra is too large, scattering of light tends to increase, and the transparency of the film tends to be deteriorated. Further, periodical irregularities tend to present an influence to light having a restricted wavelength derived from the period, and accordingly, nonperiodical irregularities are preferred.

Further, in a case where Ra of the transparent substrate is larger than 80 nm, Ra of the heat ray reflective layer may be measured to be larger than 80 nm.

The surface roughness of the heat ray reflective layer may be measured by a contact type surface roughness meter or an atomic force microscope.

<NON-METAL BINDER>

The heat ray reflective layer in the present invention preferably contains a binder resin (organic polymer binder) as a non-metal binder from the viewpoint of improvement of the durability/adhesion and from the viewpoint of the coating performance in the after-described wet film-forming method.

(BINDER RESIN)

As the non-metal binder in the heat ray reflective film of the present invention, a thermoplastic resin may be used.

The binder resin is preferably one having a nature having no substantial absorption in the wavelength region of visible light. For example, polystyrene, polyacrylate, polyester, polyether, polyamide, polyvinyl alcohol, hydroxyethylcellulose, hydroxypropylcellulose, polyvinylpyrrolidone, polyacrylic acid or polyalkylene glycol may be mentioned, and a polymer or copolymer of the following monomer may also be used. Hereinafter, an acrylate and a methacrylate may be represented by a (meth)acrylate.

Specific examples of the monomer include methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, cyclohexyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, glycidyl (meth)acrylate, N-acryloylmorpholine, vinyl pyrrolidone and styrene. These monomers may be used alone, or a plurality of monomers may be used as mixed.

The weight average molecular weight of the thermoplastic resin as the binder resin is usually at least 2,000, preferably at least 5,000, or the polymerization degree is at least 20, preferably at least 50. If it is lower than the above range, the film defects are likely to be formed, whereby the durability of the heat ray reflective layer tends to be low, or the heat stability is likely to be remarkably poor. The upper limit for the weight average molecular weight is usually at most 1,000,000, or the polymerization degree is usually at most 10,000. If it exceeds such an upper limit, the film structure is likely to be non-uniform.

As the binder resin, a curable resin such as a thermosetting resin or an ionization radiation-curable resin may also be used other than the thermoplastic resin.

Here, the ionization radiation-curable resin is a resin which may be cured by electron rays or ultraviolet rays. As such an ionization radiation-curable resin, a polymerizable monomer containing a polymerizable unsaturated group in its molecule may be mentioned. For example, the above-mentioned monomer may be used as the ionization radiation-curable resin.

As the ionization radiation-curable resin, other than such a monomer, it is possible to employ a polyfunctional monomer having a plurality of polymerizable unsaturated groups contained in a monomer. Such a polyfunctional monomer may, for example, be ethylene glycol di(meth)acrylate, diethylene glycol di(meth)acrylate, triethylene glycol di(meth) acrylate, tetraethylene glycol di(meth)acrylate, nonaethylene glycol di(meth)acrylate, 1,3-butylene glycol di(meth)acrylate, 1,4-butanediol di(meth)acrylate, trimethylolpropane tri(meth)acrylate, neopentyl glycol di(meth)acrylate, 1,6-hexamethylene di(meth)acrylate, pentaerythritol tri(meth)acrylate, pentaerythritol tetra(meth)acrylate, dipentaerythritol hexa (meth)acrylate, tripropylene di(meth)acrylate or bisphenol A diglycidyl ether di(meth)acrylate. These monomers may be used alone or a plurality of monomers may be used as mixed.

Other than those mentioned above, as the ionization radiation-curable resin, it is possible to employ a polymer having a polymerizable unsaturated group in its side chain. As such an example, an ionization radiation-curable resin having a polymerizable unsaturated group introduced to its side chain by reacting a functional group such as a carboxy group or a hydroxy group of the above-mentioned thermoplastic resin with a monomer containing a polymerizable unsaturated group is exemplified. Further, from the viewpoint of high affinity to a metal and preparing a heat ray reflective layer having a high uniformity, the polymer constituting the main chain preferably contains a hydroxy group. Such a polymer may, for example, be polyhydroxyethyl (meth)acrylate, polyhydroxypropyl (meth)acrylate, polyhydroxybutyl (meth)acrylate, poly-1,4-cyclohexane dimethanol monoacrylate, polyvinyl alcohol or cellulose.

The thermosetting resin may, for example, be a phenol resin, a urea resin, a melamine resin, an epoxy resin, an unsaturated polyester resin, a polyimide, a polyurethane or a silicone resin. Further, an alkoxysilane, or its hydrolyzate or partial condensate may be mentioned. The alkoxysilane may, for example, be a tetraalkoxysilane (such as tetramethoxysilane or tetraethoxysilane), an alkyltrialkoxysilane (such as methyltrimethoxysilane or ethyltrimethoxysilane), an aryl trialkoxysilane such as phenyltrimethoxysilane), a dialkyl dialkoxysilane or a diaryl dialkoxysilane.

As the binder resin, each of the thermoplastic resin, the thermosetting resin and the ionization radiation-curable resin may be used alone, or they may be used as mixed.

The binder resin is preferably crosslinked in order to realize high heat resistance and wet heat resistance. Here, "crosslinked" means physical crosslinking, utilizing an interaction by hydrogen bonding, a dipole-dipole interaction, a hydrophobic interaction or ionic interaction, or chemical crosslinking by covalent bonding. A crosslinkable binder resin may, for example, be a polyvinyl alcohol capable of forming hydrogen bonding, a copolymer containing a monomer having a reactive functional group such as a polymerizable unsaturated group, an epoxy group, a carboxy group, an amino group, an isocyanate group, an aldehyde group, a hydroxy group, a carbodiimide group, an oxazoline group, a methylol group, a hydrazide group, a silanol group or an alkoxysilyl group, a thermosetting resin or an ionization radiation-curable resin.

In order to crosslink such a binder resin, a crosslinking agent reactive with a functional group of the binder resin may be added. Such a crosslinking agent may be a crosslinking agent having a functional group such as an oxazoline group, a carbodiimide group, a block isocyanate group, an epoxy group, a carbonyl group, a carboxy group, an amino group, a methylol group, an isocyanate group, an aldehyde group, a hydroxy group, a hydrazide group, a silanol group or an alkoxysilyl group.

With a view to increasing a heat resistance and the wet heat resistance of the heat ray reflective layer, it is preferred that chemical crosslinking by covalent bonding is formed.

In the case of such chemical crosslinking, the proportion of repeating units having a functional group for crosslinking (crosslinkable group) contained in the binder resin (crosslinkable group content) is usually from 1 mol% to 90 mol%, preferably from 2 mol% to 80 mol%, particularly preferably from 3 mol% to 70 mol%. If the crosslinkable group content is too small, crosslinking may not be carried out, and if it is too large, intramolecular crosslinking is likely to take place, and effective crosslinking of the heat ray reflective layer may not be formed.

With a view to producing the heat ray reflective layer in a short time, suppressing inclusion of a dust and preparing a uniform film, an ionization radiation-curable resin is preferred as the binder resin.

Further, with a view to increasing the heat ray shielding property, the binder resin is preferably a thermosetting resin or an ionization radiation-curable resin of a type which is cured after film-forming by using a monomer or oligomer during the film-forming.

With a view to making the heat ray reflective layer hardly soluble at the time of applying the after-described coating fluid for forming a resin layer on the heat ray reflective layer, the thermoplastic resin to be used as the binder resin, or the monomer or oligomer before polymerization to constitute the thermoplastic resin, the monomer or oligomer before curing in the case of the ionization radiation-curable resin, or the monomer or oligomer before curing in the case of the thermosetting resin, is preferably soluble in water or a water-soluble organic solvent such as an alcohol or an ether, or in a mixed solvent thereof. Such a thermoplastic resin may, for example, be a polyvinyl alcohol, a modified polyvinyl alcohol such as a partially benzyl-modified polyvinyl alcohol or an alkylacetal-modified polyvinyl alcohol, a polyhydroxyethyl (meth)acrylate, a polyvinylpyrrolidone, a (meth)acrylic acid/methyl (meth)acrylate copolymer or a (meth) acrylic acid/ethyl (meth)acrylate copolymer. Further, such a monomer may, for example, be hydroxyethyl (meth)acrylate,

hydroxypropyl (meth)acrylate, hydroxybutyl (meth)acrylate, 1,4-cyclohexane dimethanol monoacrylate, propylene glycol diglycidyl ether diacrylate, bisphenol A epoxy acrylate, 1,4-butanediol diglycidyl ether diacrylate, 1,6-hexanediol diglycidyl ether diacrylate, polyethylene glycol diglycidyl ether diacrylate, polypropylene glycol diglycidyl ether diacrylate, an aliphatic epoxy acrylate, ethylene glycol di(meth)acrylate, trimethylolpropane tri(meth)acrylate, pentaerythritol tri(meth)acrylate, pentaerythritol tetra(meth)acrylate, 1,6-hexanediol diacrylate or ethoxylated bisphenol A diacrylate.

<HYDROPHILIC GROUP OF BINDER RESIN>

The binder resin in the present invention (hereinafter sometimes referred to as the "organic polymer binder") usually has a hydrophilic group.

In the after-described coating fluid for forming a heat ray reflective layer of the present invention, fine metal particles can preferably be dispersed in a polar solvent, particularly in a polar solvent containing water. For such a purpose, it is preferred that the binder resin also has a hydrophilic group from the viewpoint of the solubility. Further, in the heat ray reflective layer, such a hydrophilic group is preferred since it presents an interaction to the metal to improve the mechanical strength and environmental durability of the heat ray reflective layer.

Such a hydrophilic group is preferably not an N-pyrrolidonyl group. An N-pyrrolidonyl group tends to be strongly bonded to the crystal structure of a metal, and a homopolymer having an N-pyrrolidonyl group acts as an aggregating agent to aggregate metal colloid particles to one another in the coating fluid for forming a heat ray reflective layer. If the aggregates are present in the coating fluid, coating defects are likely to form in the heat ray reflective layer, whereby the heat ray reflective layer may become not acceptable as a window material as the main application of the present invention. Further, since an N-pyrrolidonyl group has a strong bonding strength to a specific crystal face of a metal, anisotropic growth of fine metal particles is accelerated during the storage of the coating fluid, whereby the shape and particle size of the fine metal particles are likely to be changed, and the storage stability of the coating fluid is likely to be deteriorated.

Further, in the heat treatment step in the process for producing the heat ray reflective layer, the strong bond between the N-pyrrolidonyl group and the metal particles is hardly broken, and such an N-pyrrolidonyl group is likely to prevent fusion of fine metal particles to one another.

Even in the case of a binder resin having an N-pyrrolidonyl group, if the binder resin contains a hydrophilic group and/or a hydrophobic group other than the N-pyrrolidonyl group, such a hydrophilic group and/or a hydrophobic group may prevent bonding of the N-pyrrolidonyl group and the metal or the specific bonding of the N-pyrrolidonyl group and the metal. Therefore, even the binder resin containing an N-pyrrolidonyl group may be used for the heat ray reflective layer of the present invention, provided that such a binder resin contains a hydrophilic group and/or a hydrophobic group other than the N-pyrrolidonyl group.

The above hydrophilic group is preferably one having a peak of desorption temperature of at most 290˚C, as determined under the following measurement conditions.

(MEASUREMENT CONDITIONS)

Hydrophilic group-$CH_3$ (a compound having the hydrophilic group and a methyl group bonded to each other) and silver particles having a particle size of from 1 to 5 μm are mixed, and the peak of desorption temperature of the hydrophilic group-$CH_3$ from silver is measured by TPD-MS (Temperature Programmed Desorption (or Dicomposition)-MassSpectrometry).

The above desorption temperature shows the strength of the bonding force between the metal and the hydrophilic group. The stronger the bonding force, the higher the desorption temperature. If the bonding force to the metal is strong, aggregates may be formed in the coating fluid, which may cause coating defects, as mentioned above.

The hydrophilic group-$CH_3$ is a compound having a hydrophilic group and a methyl group bonded to each other. In such a state that a hydrophilic group is bonded to a polymer, the bonding force between the hydrophilic group and the metal cannot be measured. Therefore, for the convenience sake, the measurement of the bonding force is carried out by using such a compound as the hydrophilic group-$CH_3$. For example, in a case where the hydrophilic group is an N-pyrrolidonyl group, N-methyl-2-pyrrolidone is mixed with silver particles having a particle size of from 1 to 5 μm, and the mixture is measured by TPD-MS to measure the peak of the temperature for desorption of N-methyl-pyrrolidone from silver. In a case where the hydrophilic group is a bivalent group (such as an oxyethylene group ($-O-CH_2-CH_2-$), a compound having a methyl group bonded to each of the two bonding positions (e.g. $CH_3-O-C_2H_4-CH_3$) is prepared, and the desorption temperature peak is measured. In a case where the hydrophilic group is a trivalent group, a compound having a methyl group bonded to each of the three bonding positions, is prepared, and the desorption temperature peak is measured.

The peak of desorption temperature of the hydrophilic group thus measured, is preferably at most 285˚C, further preferably at most 280˚C and usually at least 20˚C, preferably at least 30˚C, further preferably at least 40˚C.

The hydrophilic group contained in the organic polymer binder to be used in the present invention may be any hydrophilic group of nonionic, anionic or cationic type, and the following ones may be mentioned as its examples.

A hydroxy group, an amino group, an amide group, a $-NO_2$ group, a -CN group, a morpholinyl group, an epoxy group, a -SH group, an oxyalkylene group such as an oxyethylene group, or a polyoxyalkylene group, a carboxy group, a sulfonic acid group, a phospholic acid group, and a tetraalkylammonium group.

Among them, a nonionic or anionic hydrophilic group is preferred, and particularly preferred is a hydroxy group, a carboxy group or an oxyethylene group. Such a group has a proper interaction which is not too strong, to the metal, and thus is suitably used as the hydrophilic group for the organic polymer binder to be used in the present invention.

The hydrophilic group is preferably a group other than a SH group and an $NH_2$ group, since a SH group which is likely to form a covalent bond with many metals and an $NH_2$ group which may form a coordination bond, are likely to aggregate the metal particles.

Such an organic polymer binder may be a synthesized one or a natural polymer. However, from the viewpoint of the design of the heat ray reflective layer, a synthesized polymer is preferred. For the synthesis of the polymer, specific examples of a preferred hydrophilic monomer include (meth)acrylic acid, itaconic acid, 2-hydroxyethyl (meth)acrylate, 2-hydroxypropyl (meth)acrylate, maleic acid, sulfonic acid, sodium sulfonate, (meth)acrylamide, N,N-dimethyl (meth) acrylamide, N-isopropylacrylamide, N-vinylformaldehyde, (meth)acrylonitrile, N-(meth)acryloylmorphaline, N-vinylpyrrolidone, N-vinylacetamide, N-vinyl-N-acetamide, polyethylene glycol mono-(meth)acrylate, glycidyl (meth)acrylate, 2-methacryloyloxyethylphosphorylcholine, etc.

Further, using vinyl acetate, an acetyl group may be introduced to the organic polymer binder, followed by deprotection to introduce a hydroxy group.

<HYDROXY GROUP OF BINDER RESIN>

With a view to preparing a uniform film having a high affinity for a metal, a thermoplastic resin to be used as the binder resin, or a monomer or oligomer before curing to constitute the thermoplastic resin, a monomer or oligomer before curing, or a polymer, in the case of the ionization radiation-curable resin, or a monomer or oligomer before curing, or a polymer, in the case of the thermosetting resin, preferably contains a hydroxy group.

Such a thermoplastic resin may, for example, be preferably a polyvinyl alcohol, a modified polyvinyl alcohol such as a partially benzyl-modified polyvinyl alcohol or an alkylacetal-modified polyvinyl alcohol, or a polyhydroxyethyl (meth)acrylate, and among them, particularly preferred is a modified polyvinyl alcohol. Further, such a monomer may, for example, be hydroxyethyl (meth)acrylate, hydroxypropyl (meth)acrylate, hydroxybutyl (meth)acrylate, 1,4-cyclohexanedimethanol monoacrylate, polypropylene glycol diglycidyl ether diacrylate, bisphenol A epoxy acrylate, 1,4-butandiol diglycidyl ether diacrylate, 1,6-hexandiol diglycidyl ether diacrylate, polyethylene glycol diglycidyl ether diacrylate, polypropylene glycol diglycidyl ether diacrylate or an aliphatic epoxy acrylate. Further, such a polymer before curing of the ionization radiation-curable resin or a polymer before curing of the thermosetting resin may, for example, be a modified polyvinyl alcohol having an unsaturated double bond in its side chain or a modified cellulose having an unsaturated double bond in its side chain.

The content of a hydroxy group contained in the binder resin is such that in the case of a thermoplastic resin, a monomer containing at least one hydroxy group is usually at least 30 mol%, preferably at least 50 mol%, more preferably at least 70 mol%, further preferably at least 80 mol%, in the polymer being the thermoplastic resin. If the content of the monomer containing at least one hydroxy group is smaller than the above lower limit, the affinity for the metal is likely to be low, the uniformity of the film is likely to be low, and the adhesion between the transparent substrate and the heat ray reflective layer is likely to be low. Further, in a case where the binder resin is a thermosetting resin, a monomer containing at least one hydroxy group is usually at least 30 wt%, preferably at least 50 wt%, more preferably at least 70 wt%, further preferably at least 80 wt%, or usually at least 30 mol%, preferably at least 50 mol%, more preferably at least 70 mol%, in the binder resin. If the content of the monomer containing at least one hydroxy group is too small, the affinity for the metal is likely to be low, the uniformity of the film is likely to be low, and further, the adhesion between the transparent substrate and the heat ray reflective layer is likely to be low.

<HYDROPHOBIC GROUP OF BINDER RESIN>

The binder resin preferably has a hydrophobic group. The hydrophobic group improves the durability of the heat ray reflective film.

The hydrophobic group may, for example, be an alkyl group, an acetyl group, a perfluoroalkyl group, or a phenyl group which may have a substituent. The alkyl group usually has from 1 to 5 carbon atoms. The substituent which the phenyl group may have, may be any substituent so long as it does not impair the hydrophobicity of the entirety when it is introduced into the phenyl group, but it may, for example, be an alkyl group such as a methyl group or an ethyl group, or its derivative group, an acyl group such as an acetyl group, or its derivative group, an alkoxy group such as a methoxy

group or an ethoxy group, or its derivative group, an aromatic substituent such as a phenyl group, or a halogen atom such as fluorine or chlorine.

Among them, the hydrophobic group in the binder resin is preferably an alkyl group, an acetyl group, or a phenyl group which may have a substituent, particularly preferably, a methyl group, an ethyl group, a butyl group, a propyl group, an isopropyl group, an acetyl group or a phenyl group,

A monomer having such a hydrophobic group may, for example, be methyl (meth)acrylate, allyl (meth)acrylate, isobutyl (meth)acrylate, cyclohexyl (meth)acrylate, octyl (meth)acrylate, lauryl (meth)acrylate, oleyl (meth)acrylate, oleyl (meth)acrylate, behenyl (meth)acrylate, butoxyethyl (meth)acrylate, benzyl (meth)acrylate, tetrahydrofurfuryl (meth)acrylate, ethylene glycol di(meth)acrylate, 1,3-butylene glycol (meth)acrylate, diacetone acrylamide, styrene, chlorostyrene, vinyltoluene or vinyl acetate.

Among the above monomers having hydroxy groups, a monomer having a hydrophobic group like a methacrylate type may also be suitably used. By having both a hydrophilic group and a hydrophobic group in combination, one monomer may able to perform two roles.

<LINKER>

The above-described hydrophilic or hydrophobic group may be bonded directly to the polymer main chain of the binder resin, but may be bonded to the main chain via a linker.

As such a linker, ones exemplified in the following Table 1 may be mentioned. Such linkers may be used alone or in combination.

TABLE 1

| Name | Structure | Name | Structure |
|---|---|---|---|
| Ester | –C–O–<br>‖<br>O | Urethane | –N–C–O–<br>H ‖<br>O |
| Amide | –C–N–<br>‖ H<br>O | Siloxane | \| \|<br>–Si–O–Si–<br>\| \| |
| Ether | -O- | Azo | -N=N- |
| Sulfide | -S- | Secondary amino | H<br>-N- |
| Disulfide | -S-S- | Tertiary amine | –N–<br>\| |
| Imine | –N=C–<br>H | Phosphoric acid diester | 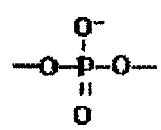 |
| Double bond | –=– | | |
| Triple bond | –≡– | | |
| Acetal | 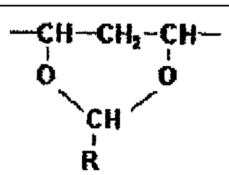 | Linkage of maleimide and thiol | 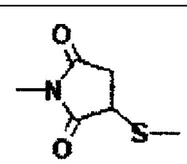 |

<CHAIN UNITS>

| Name | Structure |
|---|---|
| Polyalkylene | $-C_nH_{2n}-$ |
| Polyethylene glycol | $-(CH_2CH_2O)_n$ |
| Polyethyleneimine | $-(CH_2CH_2N)_n$ |

Here, R is an alkyl group. The number of carbon atoms in the alkyl group for R is usually from 1 to 5, and n is preferably from about 1 to 5.

Among the above linkers, preferred is an ester, amide or acetal.

<MAIN CHAIN OF BINDER RESIN>

The main chain (skeleton) of the organic polymer to be used as the binder resin is not particularly limited, and usually, it may, for example, be a hydrocarbon chain, a perfluoroalkyl chain, an oxyethylene chain, an oxypropylene chain, or one wherein repeating units of an amide bond and an urethane bond constitute the main chain, like nylon. Preferred is a hydrocarbon chain.

<AMOUNT OF HYDROPHILIC AND HYDROPHOBIC GROUPS INTRODUCED>

(PROPORTION OF HYDROPHILIC GROUP)

The proportion of constituting units of a monomer having a hydrophilic group among the total constituting units of monomers constituting the binder resin (hereinafter referred to as the "hydrophilic group content") is usually from 10 mol% to 100 mol%, preferably from 15 mol% to 90 mol%, particularly preferably from 20 mol% to 85 mol%.

(PROPORTION OF HYDROPHOBIC GROUP)

The proportion of constituting units of a monomer having a hydrophobic group among the total constituting units of monomers constituting the binder resin (hereinafter referred to as the "hydrophobic group content") is from 10 mol% to 100 mol%, preferably from 15 mol% to 90 mol%, particularly preferably from 20 mol% to 85 mol%.

(RATIO OF HYDROPHILIC GROUP TO HYDROPHOBIC GROUP)

The hydrophilic/hydrophobic group ratio (number of hydrophilic groups:number of hydrophobic groups) in the binder resin is usually from 95:5 to 30:70, preferably from 90:10 to 40:60, more preferably from 85:15 to 50:50.

(LINEAR EXPANSION COEFFICIENT OF BINDER RESIN)

In a case where a thermoplastic resin is used as the binder resin, its linear expansion coefficient is preferably at most $3\times10^{-4}$/K. If the linear expansion coefficient of the binder resin is higher than this upper limit, peeling is likely to take place at the interface between the metal and the binder resin, and the resulting voids are likely to cause white turbidity. Here, the lower limit of the linear expansion coefficient of the binder resin is not particularly limited, but it is usually at least $1\times10^{-6}$/K.

The linear expansion coefficient may be measured by a thermomechanical analyzer or a dilatometer measuring apparatus.

(GLASS TRANSITION TEMPERATURE OF BINDER RESIN)

In a case where a thermoplastic resin is used as the binder resin, the glass transition temperature (Tg) is preferably from 40 to 300˚C, more preferably from 50 to 200˚C, further preferably from 70 to 150˚C. If Tg is lower than this lower limit, the stability during the use for a long term tends to be low. If Tg is higher than this upper limit, the heat ray reflective layer is likely to peel at the interface with the after-described resin layer or transparent substrate.

The glass transition temperature of the binder resin may be measured by a differential scanning calorimeter (DSC), a dynamic mechanical analyzer (DMA) or a thermomechanical analyzer (TMA).

(POLYMER STRUCTURE OF BINDER RESIN)

The polymer structure of the binder resin may be linear or branched. It may further be a crosslinked structure thereof. Further, the shape may be particulate.

<HETEROCYCLIC COMPOUND WHICH CAN BE COORDINATED WITH METAL>

For the purpose of preventing deterioration of the metal in the heat ray reflective layer in the present invention, various additives such as an ultraviolet absorber, an antioxidant, a surface-treating agent and an infrared absorber, may be contained in the heat ray reflective layer, but from the viewpoint of the durability, it is particularly preferred that a heterocyclic compound which can be coordinated with the metal, is contained.

The heterocyclic compound capable of forming a coordination bond to the metal is a compound which contains a heterocyclic moiety as a part of its molecular structure and which does not have a structure to hinder the linkage of the heterocyclic moiety and the metal. As such a heterocyclic compound capable of forming a coordination bond, preferred is, for example, one whereby when a heterocyclic compound and the metal are mixed, and the mixture is measured by e.g. FT-IR, Raman spectrum, TOF-SIMS or XPS, a peak can be ascertained which shows a coordination bond of the heterocyclic moiety and the metal. Particularly preferred is one whereby as a result of measuring by TOF-SIMS or XPS, a peak can be ascertained which shows the coordination bond of the heterocyclic moiety and the metal. The hetero atom in the heterocyclic moiety may be a nitrogen atom, an oxygen atom or a sulfur atom, and the heterocyclic moiety may contain one or more such hetero atoms. Further, two or more types of hetero atoms may be contained. Such a heterocyclic compound is capable of forming a coordination bond with the metal by utilizing an unshared electron pair which such hetero atoms have. Further, such a heterocyclic compound has a relatively large polarization attributable to hetero atoms at the heterocyclic moiety and has a large affinity with the transparent substrate. When a coating fluid containing such a compound is applied to a substrate, the metal and the substrate are indirectly bonded via such a heterocyclic compound, whereby it is possible to prevent the coating fluid from being repelled from the substrate, and formation of coating defects can be suppressed. In addition, such a heterocyclic compound will cover the surface of the metal through the bonding to the metal, in a thin film after the firing, whereby it is possible to inhibit deteriorating factors such as oxygen molecules or water molecules from approaching to the surface of the metal thereby to simultaneously obtain an effect to improve the durability of the heat ray reflective layer.

Among heterocyclic compounds, an aromatic heterocyclic compound is preferred as the heterocyclic compound to be contained in the coating fluid, since it has particularly large tendency for the above effects, and in addition, an effect to protect the coating fluid by an ultraviolet absorbing ability derived from its aromatic ring, is also expected.

Such a heterocyclic compound may, for example, be a compound containing a nitrogen atom in the heterocyclic moiety as exemplified below, or others such as furan and its derivatives, or thiophene and its derivatives.

Such a heterocyclic compound is preferably a compound containing at least a nitrogen atom as a hetero atom in the heterocyclic moiety. When a nitrogen atom is contained in the heterocyclic moiety, the tendency to form a coordination bond with the metal is large, and the stability of the bond is not too high, so that at the time of firing the coating film, such a heterocyclic compound can be removed from the contact surface of the fine metal particles one another, and fusion of fine metal particles will not be hindered. Such a compound may, for example, be pyrrole or its derivative, indole or its derivative, isoindole or its derivative, imidazole or its derivative, benzimidazole or its derivative, purine or its derivative, pyrazole or its derivative, indazole or its derivative, oxazole or its derivative, benzoxazole or its derivative, isoxazole or its derivative, benzisoxazole or its derivative, thiazole or its derivative, benzothiazole or its derivative, triazole or its derivative, tetrazole or its derivative, phenanthroline or its derivative, pyridine or its derivative, quinoline or its derivative, isoquinoline or its derivative, pyrazine or its derivative, quinoxaline or its derivative, pyrimidine or its derivative, quinazoline or its derivative, pyridazine or its derivative, cinnoline or its derivative, or triazine or its derivative. More preferably, 2-alkylimidazole or its derivative, benzimidazole or its derivative, 1,2,3-benzotriazole or its derivative, 1,10-phenanthroline or its derivative, 1,7-phenanthroline or its derivative, 2,2'-bipyridine or its derivative, 3,3'-bipyridine or its derivative, 4,4'-bipyridine or its derivative, 2,3'-bipyridine or its derivative, 2,4'-bipyridine or its derivative, methyl viologen or its derivative, benzothiazole or its derivative or 2-mercaptobenzothiazole or its derivative may, for example, be mentioned. Preferred is 1,2,3-benzotriazole, 1,10-phenanthroline or 2-mercaptobenzothiazole.

These heterocyclic compounds may be used alone or in combination as a mixture of two or more of them.

<COMPOSITION OF HEAT RAY REFLECTIVE LAYER>

The composition of the respective components of the heat ray reflective layer in the present invention is shown below.

(METAL CONTENT)

The amount of the metal contained in the heat ray reflective layer in the present invention is usually from 70.0 to 99.95 wt%, preferably from 80.0 to 99.0 wt%, more preferably from 90.0 to 98.0 wt%, further preferably from 90.0 to 97.0 wt%. If the amount of the metal is too small, the electroconductive path tends to be hardly formed, whereby the infrared reflectance and the solar reflectance tend to be low, and the solar absorptance tends to be high, and the heat ray shielding property tends to be inadequate. On the other hand, if the amount of the metal is too much, the thickness of the heat ray reflective layer is required to be thin in order to increase the transparency of the layer, and consequently, the required porous structure tends to be hardly formed, or the uniformity of the heat ray reflective layer is likely to be impaired, whereby the good appearance is likely to be impaired. Further, at the time of forming the layer on a substrate having a large area and a curved surface, the transmittance is likely to be non-uniform, and the heat resistance is likely to decrease.

(NON-METAL BINDER CONTENT)

The amount of a non-metal binder contained in the heat ray reflective layer in the present invention is usually from 0.05 to 30.0 wt%, preferably from 0.1 to 20.0 wt%, more preferably from 0.2 to 10.0 wt%, further preferably from 0.3 to 5.0 wt%. If the amount of the non-metal binder is larger than the above upper limit, the electroconductive path tends to be hardly formed, whereby the infrared reflectance and the solar reflectance tend to be low, the solar absorptance tends to be high, and the heat ray shielding property tends to be inadequate. However, if the amount of the non-metal binder becomes too small, the thickness of the heat ray reflective layer is required to be thin (e.g. at most 15 nm) in order to increase the transparency of the heat ray reflective layer. As a result, the required porous structure tends to be hardly formed, the uniformity of the heat ray reflective layer tends to be impaired, and the good appearance is likely to be impaired. Further, at the time of forming the layer on a substrate having a large area and a curved surface, the transparency is likely to be non-uniform, and further, the heat resistance is likely to be low.

(HETEROCYCLIC COMPOUND CONTENT)

The content of the heterocyclic compound which can be coordinated to the metal contained in the heat ray reflective layer in the present invention is from 0.01 to 10 parts by weight, preferably from 0.02 to 8 parts by weight, more preferably from 0.05 to 5 parts by weight, per 100 parts by weight of the metal. If the content of the heterocyclic compound is too small, the effect to prevent the coated film defects tends to be hardly obtainable, and if it is too much, fusion of the metal tends to hardly proceed in the firing step after applying the coating fluid on the transparent substrate, and an adequate infrared reflective ability tends to be hardly obtainable.

Further, the heat ray reflective layer in the present invention may contain components other than the above-described components within a range not to impair the effect of the present invention.

<PATTERNING OF HEAT RAY REFLECTIVE LAYER>

The heat ray reflective layer in the present invention may be formed on the entire surface of the transparent substrate surface continuously in a sheet-form, or may be formed to have a pattern of e.g. line-form, strip-form, circular-form or polygonal-form. In a case where it is formed to have a pattern, the size of the pattern is not particularly limited and may depends on the application, but it is usually within a range of from sub μm substantially equal to the wavelength of visible light, to m. As an effect of the case where it is formed to have a pattern, an improvement of the visible light transmittance or an improvement of the radiowave transmittance may be mentioned.

[METHOD FOR PRODUCING HEAT RAY REFLECTIVE LAYER]

The method for producing the heat ray reflective layer in the present invention is not particularly limited, and it may be film formation by a dry process, or by a wet film-forming method such as applying a coating fluid. A porous metal film suitable for the heat ray reflective layer in the present invention may be autonomously formed in such a film-forming step, or may be formed by separately using a material which serves as a template for pores.

{DRY PROCESS METHOD}

In the case of the production of the heat ray reflective layer by a dry process, a metal film formed by e.g. a vacuum vapor deposition method or a sputtering method, is thermally destabilized to form desired pores in the film, and such a film is coated with a coating fluid containing a binder, whereby the heat ray reflective layer in the present invention

can be prepared. Otherwise, a thin film may be formed by two types of metals which are non-miscible to each other, and metal portions to form pores are extracted with a selective solvent, whereupon such a film is coated with a coating fluid containing a binder, whereby the heat ray reflective layer can be prepared.

{WET FILM-FORMING METHOD}

As the method for forming the heat ray reflective layer in the present invention, a wet film-forming method is particularly preferred from such a viewpoint that preferred pores can easily be formed, and various additives including a binder can be added and further from such a viewpoint that the film-forming can be carried out simply without requiring an expensive apparatus, and the heat ray reflective property can be imparted to a substrate having a large size or a curved surface.

In the wet film-forming method, the heat ray reflective layer is formed by coating the substrate with a coating fluid comprising fine metal particles, the above-described non-metal binder and/or its precursor, and a solvent (dispersant) as the basic constituents. In such a coating fluid, the binder is essential to obtain a suitable film structure and spectroscopic properties. To such a coating fluid, colloid particles, micelle, emulsion or the like serving as a template to form pores may positively be added thereby to form pores. Otherwise, without adding such a template, pores may be formed by heat treatment after coating and drying.

In the formation of the heat ray reflective layer by the wet film-forming method, a thin metal film may be prepared, for example, by a so-called non-electrolytic plating method wherein on a substrate, silver is precipitated from a solution of silver nitrate or a metal halide such as silver chloride, by a reducing agent solution, but from the viewpoint of easiness in control of the film thickness, uniformity of the size of the metal particles, etc., a method of employing fine metal particles preliminarily prepared in a particulate form, is preferred.

{SUITABLE PROCESS FOR PRODUCING HEAT RAY REFLECTIVE LAYER}

As a suitable process for producing the heat ray reflective layer in the present invention, a process may be mentioned which comprises a film-forming step of forming a precursor layer by wet-film-forming by e.g. coating a substrate with a composition comprising metal particles, a non-metal compound and a solvent, wherein the proportion of the non-metal compound in the solid content is from 0.1 to 40 wt%, and a conversion step of heat-treating this precursor layer to form a heat ray reflective layer having a surface resistivity of at most 100 Ω/□.

In such a process, the above composition is employed, and the prescribed film-forming step and conversion step are carried out, whereby it is possible to produce a heat ray reflective layer having a high heat ray-shielding property constantly.

As the above composition, the after-described coating fluid for forming a heat ray reflective layer may be mentioned.

Now, this production process will be described in detail.

<FILM-FORMING STEP>

(WET FILM-FORMING METHOD)

As a method for forming the precursor layer by wet film-forming of the above composition on a substrate, various coating methods may be employed, and the coating method is not particularly limited. For example, a flow coating method, a spin coating method, a spray coating method, a dip coating method, a blade coating method, a gravure roll coating method, a curtain roll coating method, a reverse roll coating method, an air knife coating method, a rod coating method, a lip dye coating method or an offset printing method may, for example, be mentioned. Among them, from the viewpoint of the uniformity of the film to be formed, a spin coating method, a spray coating method, a dip coating method, or a roll coating method is, for example, preferred.

For example, in a dip coating method, the substrate may be dipped in the composition and withdrawn therefrom at an optional speed. The withdrawing speed at that time is not particularly limited, but it is usually at least 0.01 mm/sec, preferably at least 0.05 mm/sec, more preferably at least 0.1 mm/sec, and usually at most 50 mm/sec, preferably at most 30 mm/sec, more preferably at most 20 mm/sec. If the withdrawing speed is too slow or too fast, the film thickness is likely to be non-uniform. On the other hand, the dipping speed of the substrate into the composition is not particularly limited, but usually, it is preferred that the substrate is dipped into the composition at the substantially the same speed as the withdrawing speed. Further, dipping may be continued for a suitable time after dipping the substrate into the composition until it is withdrawn. The time for continuing this dipping is not particularly limited, but it is usually at least one second, preferably at least 3 seconds, more preferably at least 5 seconds and usually at most 48 hours, preferably at most 24 hours, more preferably at most 12 hours. If this time is too short, such may cause film defects, and if it is too

long, the composition may aggregate on the substrate surface during the dipping.

Whereas, in the spin coating method, the rotational speed is usually at least 10 rpm (rotations/min), preferably at least 50 rpm, more preferably at least 100 rpm, and usually at most 100,000 rpm, preferably at most 50,000 rpm, more preferably at most 10,000 rpm. If the rotation speed is too slow or too fast, the film thickness is likely to be non-uniform.

Further, in the case of a spray coating method, the spray nozzle system is not particularly limited and may be selected in consideration of the merits of each spray nozzle. Typical examples of the spray nozzle include a two-fluid spray nozzle (twin-fluid atomization system), an ultrasonic spray nozzle (ultrasonic atomization system), a rotational spray nozzle (rotational atomization system), etc. From such a viewpoint that atomization of the composition and transportation of the atomized particles to the substrate by a gas flow, can independently be controlled, the ultrasonic spray nozzle and the rotational spray nozzle are preferred, and with a view to maintaining the fluidity of the composition, the two-fluid spray nozzle is preferred.

Further, the flow rate of the gas flow utilized for transportation of the atomized particles of the composition is preferably suitably adjusted depending upon the type of the composition to be used, etc., but it is usually at most 5 m/sec, preferably at most 4 m/sec, more preferably at most 3 m/sec. If the gas flow rate is too fast, the precursor layer to be formed on the substrate is likely to be non-uniform. The gas to be used here is not particularly limited, but an inert gas such as nitrogen is preferred. Further, the distance between the spray nozzle and the substrate is preferably suitably adjusted depending upon the size and shape of the substrate, but it is usually at least 3 cm, preferably at least 6 cm, more preferably at least 9 cm, and usually at most 100 cm, preferably at most 80 cm, more preferably at most 50 cm. If it exceeds this range, the film thickness is likely to be non-uniform. Depending upon the spray nozzle system, the drying speed may vary, and a slight difference may result in the stabilized structure immediately after the film formation. Such a drying speed may be adjusted, for example, by the atmosphere in the film-forming step, and further, a slight difference in the stabilized structure of the precursor layer may be adjusted also by surface treatment of the substrate, but it is particularly preferred to control the drying speed by the after-mentioned drying step.

In the case of the roll coating method, the casting speed is not particularly limited, but it is usually at least 0.1 m/min, preferably at least 0.5 m/min, more preferably at least 1 m/min, and usually at most 1,000 m/min, preferably at most 700 m/min, more preferably at most 500 m/min. If the casting speed is too slow, the film thickness is likely to be non-uniform, and if it is too fast, control of the wettability with the substrate is likely to be difficult.

(COATING ENVIRONMENT)

The relative humidity during coating with the composition is usually at least 20%, preferably at least 25%, more preferably at least 30%, further preferably at least 50%, and usually at most 85%, preferably at most 80%, more preferably at most 75%. By adjusting the relative humidity to be within the above range, it is possible to obtain a heat ray reflective layer having little coating defects. Further, the atmosphere during the coating is not particularly limited. For example, coating with the composition may be carried out in an air atmosphere, or coating with the composition may be carried out in an inert atmosphere of e.g. argon.

The temperature at the time of coating is not particularly limited, but it is usually at least 0˚C, preferably at least 10˚C, more preferably at least 20˚C, and usually at most 200˚C, preferably at most 150˚C, more preferably at most 120˚C, further preferably at most 100˚C, particularly preferably at most 80˚C. If the temperature at the time of coating with the composition is too low, the solvent tends to be hardly evaporated, and aggregation of metal particles is likely to occur in the composition, and non-uniformity of the film thickness due to evaporation of the solvent is likely to result.

The pressure at the time of carrying out the coating is not particularly limited, but it is usually at least 5 kPa, preferably at least 8 kPa, more preferably at least 10 kPa, and usually at most 500 kPa, preferably at most 400 kPa, more preferably at most 300 kPa. If the pressure at the time of the coating is too low, the leveling effect of the precursor layer cannot be obtained, and the smoothness of the obtainable heat ray reflective layer is likely to be low, and if it is too high, the solvent becomes hardly be evaporated, and coating defects in the heat ray reflective layer are likely to increase.

Further, the control range of the relative humidity , the temperature and the pressure is preferably within 25%, more preferably within 20 %, further preferably within 10%.

(DRYING TREATMENT)

In this production process, in the above-mentioned film-forming step, for the purpose of removing the solvent contained in the precursor layer, it is preferred to have a drying process to dry the precursor layer. By carrying out drying prior to the conversion step to remove the solvent in the precursor layer, it becomes possible to stabilize the structure of the precursor layer and to apply heating or the like in the conversion step more efficiently. Here, the heat drying process in the film-forming step and the heat treatment in the subsequent conversion step may be carried out simultaneously in one step.

<DRYING METHOD>

The drying method in the drying process is not limited. For example, heat drying, vacuum drying, draught drying, etc. may be mentioned. One of them may be carried out alone, or two or more of them may be carried out in combination.

The drying means is also optional. For example, in a case where rough drying is carried out by heat drying, the means for heat drying may, for example, be a hot plate, an oven, infrared irradiation or electromagnetic wave irradiation. Whereas, the means for draught heat drying may, for example, be an air-circulation drying oven. One of them may be used alone, or two or more of them may be used in combination.

<HEATING TEMPERATURE>

In a case where heat drying is carried out as the drying process, its temperature is not particularly limited, but it is usually at least room temperature. If it is lower than room temperature, the effect of the drying process tends to be hardly obtainable. Further, the heating temperature is preferably lower than the heat treatment temperature in the subsequent conversion step. If the heating temperature exceeds the heat treatment temperature in the conversion step, the surface resistivity is likely to be non-uniform in the plane direction of the layer, and a heat ray reflective layer having a high heat-shielding property may not be obtainable.

Specifically, the heating temperature is usually at least 25˚C, preferably at least 30˚C, more preferably at least 40˚C, further preferably at least 60˚C, particularly preferably at least 70˚C. Further, it is usually at most 250˚C, preferably at most 200˚C, more preferably at most 150˚C, further preferably at most 120˚C, particularly preferably at most 100˚C. Especially, the heating temperature in the drying process is preferably a temperature lower by at least 15˚C, particularly lower by at least 30˚C, than the heat treatment temperature in the subsequent conversion step.

Here, the temperature during the heat drying may be constant or may be varied.

<DRYING TIME>

The drying time is also not limited and is optional so long as the solvent in the precursor layer can be removed. However, it is preferably determined in consideration of the conditions such as the temperature, pressure, humidity, etc. during the drying, the boiling point of the solvent contained in the composition, the speed of the process, the properties of the precursor layer, etc. The drying time is usually at least 1 second, preferably at least 30 seconds, more preferably at least 1 minute and usually at most 100 hours, preferably at most 24 hours, more preferably at most 3 hours, further preferably at most 1 hour, particularly preferably at most 30 minutes. If the drying time is shorter than 1 second, the drying tends to be inadequate, and the residual solvent may remain. If the drying time is longer than 100 hours, the underlayer is likely to be swelled, the surface roughness is likely to be large, and scattering of light at the interface is likely to increase thereby to lower the transparency.

<TEMPERATURE RAISING RATE>

The temperature raising rate of the substrate during the drying is, in a usual case, preferably from 10 to 10,000˚C/min, more preferably from 15 to 1,000˚C/min, further preferably from 15 to 500˚C/min. If the temperature raising rate is too low, aggregation of metal particles is likely to take place, and the transparency of the heat ray reflective layer is likely to be low. On the other hand, if the temperature raising rate is too high, the temperature control tends to be difficult. However, in a case where the substrate is heated to 40˚C or higher even prior to the coating, a preferred temperature raising rate of the substrate during the drying may not be within the above range.

<PRESSURE DURING DRYING>

The pressure during the drying is also not limited. However, in the case of reduced pressure drying, the pressure is usually at most normal pressure, preferably at most 10 kPa, more preferably at most 1 kPa.

<DRYING ENVIRONMENT>

The relative humidity during the drying is also not limited, but in order to prevent moisture absorption of the precursor layer, usually, it is preferably adjusted to be at most about 60%RH, preferably at most 30%RH under normal pressure, or in a vacuum state (humidity: 0%RH).

The atmosphere during the drying is also not limited, and it may be the atmospheric air atmosphere, an inert gas atmosphere such as a nitrogen atmosphere, or a vacuum atmosphere. The atmosphere may suitably be selected

taking into consideration the solvent to be used or the properties of the non-metal compound. However, usually , it is preferably a dust-proof atmosphere.

<COOLING STEP>

A cooling step may be introduced after drying in the film-forming step and/or the conversion step. The cooling step is a step of cooling or permitting to cool the precursor layer or the heat ray reflective layer heated in the drying step or the conversion step.

(COOLING SPEED)

At that time, the cooling speed is optional so long as it does not substantially impair the effects of the present invention, but it is usually at least 0.1˚C/min, preferably at least 0.5˚C/min, more preferably at least 0.8˚C/min, further preferably at least 1˚C/min, and usually at most 100˚C/min, preferably at most 50˚C/min, more preferably at most 30˚C/min, further preferably at most 20˚C/min. If the cooling speed is too slow, the production costs tend to be high, and if it is too fast, such is likely to cause film defects.

(ENVIRONMENT IN COOLING STEP)

The atmosphere in the cooling step is optional so long as it does not substantially impair the effects of the present invention. For example, it may be a vacuum environment or an inert gas environment. Further, the temperature and the humidity are not particularly limited, but usually, the cooling is carried out at a normal temperature under normal humidity.

<CONVERSION STEP>

This production process is characterized in that by the conversion step, the precursor layer is converted to a heat ray reflective layer having a surface resistivity of at most 100 Ω/□.

In the conversion step in the present invention, in order to realize such a surface resistivity, it is possible to apply heat, microwaves, UV, etc. to the precursor layer. Among them, it is preferred to apply heat from the viewpoint of the productivity. In the case of treatment by heat, the heat treatment may be carried out by an IR heater, an oven, a hot plate or the like.

Further, in the conversion step, the heat treatment conditions to obtain the desired surface resistivity may suitably be adjusted depending upon e.g. the metal particles, the non-metal compound and the solvent contained in the composition, and the type, thickness, size, etc. of the substrate to be used.

The surface resistivity of the heat ray reflective layer to be obtained in the conversion step is preferably from 0.1 to 100 Ω/□, more preferably from 0.1 to 80 Ω/□, further preferably from 0.5 to 50 Ω/□, particularly preferably from 0.5 to 30 Ω/□, especially preferably from 2 to 20 Ω/□. If this surface resistivity is lower than the above lower limit, the transparency tends to be low, and the reflectivity tends to be high, over the visible to infrared region, whereby the translucency is likely be impaired, and the applications to which the obtained heat ray reflective layer can be applied, are likely to be limited. On the other hand, if the surface resistivity is higher than the above upper limit, the heat ray-shielding property tends to be low and such tends to be not suitable for a heat ray reflective layer.

Such a surface resistivity may be evaluated by a four-probe method.

(HEAT TREATMENT CONDITIONS)

<HEAT TREATMENT TEMPERATURE>

The heat treatment temperature in the conversion step is usually at least 50˚C, preferably at least 70˚C, more preferably at least 100˚C, further preferably at least 120˚C. If the heat treatment temperature is too low, the surface resistivity is likely to change due to the influence of the solvent remaining in the layer, and a high heat ray-shielding property may not be obtained. On the other hand, in order to prevent a change in the surface resistivity by bleeding out of an alkali component from the substrate, or a plasticizer, a stabilizer, etc., which is likely to occur at the time of heating, the heat treatment temperature is preferably at most the glass transition temperature in a case where a resin substrate is employed as the substrate. Specifically, it is at most 300˚C, preferably at most 200˚C, more preferably at most 180˚C, further preferably at most 150˚C. If the heat treatment temperature is too high, the surface resistivity is likely to increase depending upon the conditions of the substrate and the metal particles, the heat ray-shielding property is likely to be low, and the substrate which may be used, is likely to be limited.

<TEMPERATURE RAISING RATE>

The temperature raising rate of the substrate during the heat treatment is preferably from 10 to 10,000˚C/min, more preferably from 15 to 1,000˚C/min, further preferably from 15 to 500˚C/min. If the temperature raising rate is too low, aggregation of the metal particles is likely to occur, and the transparency of the heat ray reflective layer tends to be low. On the other hand, if the temperature raising rate is too high, the temperature control tends to be difficult.

<HEATING TIME>

The heat treatment time is usually from 10 seconds to 3 hours, preferably from 30 seconds to 2 hours, more preferably from 1 minute to 1 hour, further preferably from 3 minutes to 30 minutes, particularly preferably from 5 minutes to 10 minutes. If it is longer or shorter than such a range, film defects are likely to form. Further, if the heat treatment time is too long, the surface resistivity is likely to increase depending upon the conditions of the substrate or the metal particles, and the heat ray-shielding property is likely to be substantially lowered.

<HEATING MEANS>

As the heating means for the heat treatment, an oven, a hot plate, an IR heater, an electromagnetic wave heater, etc. may be used, and the heating means is not particularly limited so long as it does not substantially impair the effects of the present invention.

(ENVIRONMENT IN CONVERSION STEP)

The relative humidity in the conversion step is usually at least 5%, preferably at least 10%, more preferably at least 20%, and usually at most 90%, preferably at most 80%, more preferably at most 70%. By adjusting the relative humidity within the above range, the uniformity of the layer tends to be easily controlled.

Further, the atmosphere may, for example, be the atmospheric air atmosphere, a nitrogen atmosphere, an argon atmosphere, a helium atmosphere or a carbon dioxide atmosphere, and it is not particularly limited so long as it does not substantially impair the effects of the present invention.

[COATING FLUID FOR FORMING HEAT RAY REFLECTIVE LAYER]

Now, a coating fluid for forming a heat ray reflective layer (hereinafter sometimes referred to simply as a "coating fluid") suitable for the present invention, and a method for forming a heat ray reflective layer using such a coating fluid, will be described.

For the formation of the heat ray reflective layer, preferably, a coating fluid for forming a heat ray relative layer of the present invention as represented by the following [i] or [ii] may be used.

[i] A coating fluid comprising fine metal particles having an average particle size of at most 100 nm, a binder resin containing a hydrophilic group other than an N-pyrrolidonyl group, and a polar solvent as a dispersion medium.

[ii] A coating fluid comprising fine metal particles having an average particle size of at most 100 nm, a polar solvent as a dispersion medium, a heterocyclic compound capable of forming a coordination bond to the metal, and a binder.

The coating fluid [i] preferably further contains a heterocyclic compound capable of coordination to the metal, and the coating fluid [i] or [ii] may contain a dispersant for the fine metal particles.

<FINE METAL PARTICLES>

The fine metal particles are aggregated structural material formed by bonding of a plurality of metal atoms, and their shapes may, for example, be spherical, flat, rod-like, plate-like, thread-like, cube-like or other irregular shapes.

As the metal species constituting the fine metal particles, it is possible to employ one mentioned as the metal which is contained in the heat ray reflective layer, and it may be one type, or two or more types among those exemplified as the metal species to be contained in the above-mentioned heat ray reflective layer, and it may further be an alloy. Further, it is preferred that silver is contained in the fine metal particles, and a preferred content of such silver is the same as the preferred content of silver contained in all metals in the above-described heat ray reflective layer.

A dispersant may be bonded to the surface of the fine metal particles, so that it contributes to the dispersion stability of the particles and to the improvement of the durability.

Such a dispersant will be described later, but it is preferably a compound having an electric charge. When the

compound having an electric charge is coordinated to the surface of the fine metal particles, the fine metal particles will be covered by an electric charge, whereby the best dispersion stability can be obtained by Coulomb repulsion.

The average particle size of the fine metal particles is preferably at least 1 nm, more preferably at least 2 nm, further preferably at least 5 nm, and preferably at most 80 nm, more preferably at most 50 nm, further preferably at most 40 nm, particularly preferably at most 30 nm. If the average particle size exceeds 100 nm, the metallic luster of heat ray reflective layer to be formed tends to be strong, and further, white turbidity due to scattering of light by the fine metal particles tends to be observed on the appearance, whereby the outer appearance is likely to be impaired. Further, if the particle size is large, fusion of fine metal particles at a low temperature tends to hardly take place in the subsequent heat treatment step, whereby formation of the electroconductive path tends to be inadequate. If the particle size of the fine metal particles is too small, the fine particles tend to be aggregated, whereby the stability of the coating fluid tends to be hardly obtainable. When the average particle size is within the above range, it is possible to obtain both a suitable appearance of the heat ray reflective layer and the dispersion stability of fine particles.

The measurement of the particle size of the fine metal particles may be measurement of an average particle size by a dynamic light scattering measurement, or the particle size may be the average particle size measured by direct observation by means of a scanning electron microscope or a transmission electron microscope. In the present invention, in the case of direct measurement by means of e.g. an electron microscope, an average value of 100 points of the measured particle sizes of the fine metal particles is taken as the average particle size.

For the fine metal particles, two or more types of different metal species may be employed, or fine metal particles having different average particle sizes may be used as mixed.

In a dispersion containing fine metal particles, their aggregates are contained in many cases, but aggregates exceeding the above-described particle size range are removed by e.g. filtration.

<DISPERSION MEDIUM>

As the dispersion medium, a polar solvent is used. As such a polar solvent, water or a mixed liquid of water with a polar solvent other than water, is usually employed.

Here, the polar solvent is defined by the mixing ratio with water, and it is one capable of forming a uniform solution at normal temperature under normal pressure at a mixing ratio within a range of the weight ratio of water being from 5 to 95% in a mixed liquid with water.

By using such a polar solvent as the dispersion medium for the coating fluid, it is possible to obtain effects to improve the dispersion stability of the fine metal particles thereby to suppress formation of aggregates in the coating film, or effects to improve the solubility of the after-mentioned heterocyclic compound and the binder in the coating fluid, whereby the storage stability of the coating fluid, and the coating property to the transparent substrate will be improved.

Such a polar solvent may, for example, be water; an alcohol such as methanol, ethanol, propanol, isopropanol, butanol, 2-butanol, isobutanol, tert-butanol, diacetone alcohol, furfuryl alcohol, tetrahydrofurfuryl alcohol, ethylene glycol, hexylene glycol or 1-ethoxy-2-propanol; an ester such as acetic acid methyl ester or acetic acid ethyl ester; an ether such as diethyl ether, ethylene glycol monomethyl ether, ethylene glycol monoethyl ether, ethylene glycol monoisopropyl ether, ethylene glycol monobutyl ether, diethylene glycol monomethyl ether, diethylene glycol monoethyl ether, propylene glycol monomethyl ether, propylene glycol monomethyl ether acetate or cellosolve acetate; a ketone such as acetone, methyl ethyl ketone, acetyl acetone or acetoacetic acid ester; or an amide such as N,N-dimethylformamide.

One of these polar solvents may be used alone, but two or more of them may be used as mixed, and one of them is preferably water. That is, in a case where a compound having an electric charge such as a heterocyclic compound is used as a ligand for the fine metal particles, if the coating fluid contains water, it is possible to obtain an effect to improve the dispersion property of such fine metal particles by the presence of the electric charge and an effect to prevent aggregates in the coating film to be formed, whereby the storage stability of the coating fluid will be further improved.

In a case where a mixed liquid containing water is used as the dispersion medium, the polar solvent other than water is preferably one having a boiling point of from 60 to 170˚C, preferably from 80 to 160˚C, particularly preferably from 90 to 150˚C. That is, by selecting a polar solvent having a boiling point not substantially different from water, it is possible to prevent deterioration of the stability of the coating film without no substantial change of the composition of the dispersion medium even in the drying process during the coating on the substrate. Such a solvent may, for example, be methanol, ethanol, isopropanol, 1-propanol, n-butanol, 2-butanol, isobutanol, tert-butanol, N,N-dimethylformamide, propylene glycol monomethyl ether, ethylene glycol monoisopropyl ether, propylene glycol monomethyl ether acetate, propylene glycol monoethyl ether, cellosolve acetate, methyl cellosolve, ethyl cellosolve or diacetone alcohol. Among them, preferred is isopropanol, methyl cellosolve, ethyl cellosolve, propylene glycol monomethyl ether or propylene glycol monoethyl ether, and particularly preferred is propylene glycol monomethyl ether or propylene glycol monoethyl ether. One of them may be used alone, or two or more of them may be used as mixed.

In a case where the mixed liquid containing water is used as the dispersion medium, the ratio of water in such

a mixed liquid is preferably from 5 to 95%, more preferably from 10 to 90%, further preferably from 20 to 80%, by weight ratio. If water is too little, the dispersion stability is hardly obtainable, and if it is too much, the effect to improve the solubility of the after-mentioned heterocyclic compound and the binder is likely to be low.

In a case where a water-soluble binder is used or in a case where the after-mentioned heterocyclic compound is not used, the dispersion medium may be composed solely of water.

<BINDER>

As the binder, one or more of those exemplified above as non-metal binders to be used for the heat ray reflective layer in the present invention may be employed.

<HETEROCYCLIC COMPOUND>

As the heterocyclic compound, one or more of those described above as heterocyclic compounds capable of being coordinated to the metal contained in the heat ray reflective layer in the present invention, may be used.

<DISPERSANT>

In order to maintain the fine metal particles in a dispersed state stably for a long period of time in the coating fluid for forming a heat ray reflective layer, it is preferred that a dispersant is contained in the coating fluid. Such a dispersant is a compound having an affinity to the surface of the fine metal particles and having a function to improve the dispersion stability of the fine metal particles. The dispersant may not only be added to the coating fluid but also covers the surface of the fine metal particles. The type of the dispersant may suitably be selected from e.g. a low molecular weight dispersant, a polymeric dispersant, a resin other than the above-described non-metal binder, etc.

The low molecular weight dispersant may, for example, be a monobasic carboxylic acid such as acetic acid or lactic acid, or a dibasic or higher basic carboxylic acid, aniline or its derivative, a thiol, such as an acid thiol such as a mercapto acetic acid, mercapto propionic acid, thiodipropionic acid, mercaptosuccinic acid or thioacetic acid, an aliphatic thiol such as methyl mercaptan, ethyl mercaptan, propyl mercaptan, isopropyl mercaptan, n-butyl mercaptan, n-butyl mercaptan, allyl mercaptan, dimethyl mercaptan, mercaptoethanol, aminoethyl mercaptan or thiodiethylamine, an alicyclic thiol such as cyclohexylthiol, or an aromatic thiol such as thiophenol, a thioglycol such as thiodiethylene glycol, thiodiglycoholic acid or ethylenethioglycol, a thioamide such as thioformamide, a dithiol, a thion, a polythiol, a thiocarbonic acid, a thiourea, a sulfur compound such as hydrogensulfide, or derivatives thereof.

Among them, particularly, a polybasic carboxylic acid and/or its derivative is preferably added to the coating fluid. The polybasic carboxylic acid and/or its derivative may, for example, be oxalic acid, citric acid, malonic acid, tartaric acid, malic acid, succinic acid, gluconic acid, L-glutamic acid, L-ascorbic acid, etc. and their alkali metal salts, alkaline earth metal salts, ammonium salts, ester compounds or amide compounds. These compounds may have a large electric charge in one molecule and thus contribute substantially to the dispersion stability of the fine metal particles, and further they have a suitable reducing property and thus are capable of promoting fusion of the fine metal particles in the firing step after coating the substrate with the coating fluid.

Particularly, a polybasic carboxylic acid or its derivative is preferred since it is readily decomposable in the fusion process of fine metal particles thereby to be less likely to prevent fusion of the fine metal particles.

In order to obtain such an effect, the decomposition temperature of the dispersant is usually at most 200˚C, preferably at most 150˚C, further preferably at most 120˚C, and usually at least 40˚C, preferably at least 50˚C, further preferably at least 60˚C. If the decomposition temperature of the dispersant is higher than this temperature, the dispersant will not be decomposed during the firing, and the dispersant is likely to prevent fusion of the fine metal particles. If the firing temperature is made higher to decompose the dispersant, it may not be possible to form a preferred porous structure of the heat ray reflective film. On the other hand, if the decomposition temperature is lower than this temperature, the storage stability in the coating fluid is likely to be problematic.

Here, the decomposition temperature of the dispersant may be obtained by TPD-MS. Further, as a method to ascertain whether or not the dispersant has been decomposed, there may, for example, be a method wherein before and after the heat treatment (firing) step after coating the substrate with the coating fluid for forming a heat ray reflective layer, the presence of the dispersant such as a polybasic carboxylic acid is ascertained by the measurement by means of TOS-SIMS.

As the polymeric dispersant, a known dispersant of e.g. an acrylic type or an urethane type may be used. Especially when water is contained in a solvent (dispersion medium) to be used for the coating fluid, the polymeric dispersant may be an acetal resin such as polyvinyl butyral, a polyvinyl alcohol resin, a cellulose resin such as hydroxyethylcellulose or hydroxypropylcellulose, or a water-soluble resin such as polyvinylpyrrolidone.

These dispersants may be used alone or in combination as a mixture of two or more of them.

As the method to cover the fine metal particles with the dispersant, a method is preferred wherein at the time of preparing the fine metal particles, reduction of a metal salt is carried out in a state where the metal salt and the dispersant are mixed, thereby to cover the fine metal particles with the dispersant. Otherwise, a method may be selected for use wherein the fine metal particles and the dispersant are mixed in accordance with a usual surface treating method. Such treatment may be carried out prior to the preparation of the coating fluid, or may be carried out at the time of preparing the coating fluid by mixing the fine metal particles and the dispersant together with other components.
The amount of the dispersant to be used will be represented as the content in the coating fluid in the after-mentioned coating fluid composition.

<COMBINATION OF BINDER AND DISPERSANT>

In a case where both of the binder and the dispersant have ionic groups, in order to prevent aggregation due to the electric charges of ions, it is preferred to select the binder and the dispersant to have the same combination in the positive or negative charges of ions. Particularly, in a case where fine metal particles are dispersed by using a polybasic carboxylic acid, particularly preferably citric acid, as the dispersant, the hydrophilic group of the binder to be used is preferably nonionic or anionic, particularly preferably a -OH group or a carboxy group.

<OTHER ADDITIVES>

To the coating fluid for forming a heat ray reflective layer in the present invention, in addition the above-described components, various additives may be added for the purpose of maintaining the effects of the heat ray reflective layer, such as a heat stabilizer, an ultraviolet absorber, an antioxidant, an anticeptic, an antifungal agent, a flame retardant, a crystal-nucleating agent, inorganic particles, organic particles, a viscosity-reducing agent, a lubricant, a surface treating agent, an infrared absorber, a leveling agent, a pigment, etc., unless such addition is against the purpose of the present invention.
Further, various additives may be added for the purpose of imparting further functions, such as fine inorganic oxide particles or a colorant such as a dye or pigment to absorb visible light, near infrared ray or infrared ray having a specific wavelength.
Further, as mentioned above, colloid particles, micelle, emulsion, etc. serving as a template to form pores may be added.

<COMPOSITION OF COATING FLUID FOR FORMING HEAT RAY REFLECTIVE LAYER>

The concentration of the solid content in the coating fluid for forming a heat ray reflective layer in the present invention (here, the solid content is meant for the total of all components excluding the solvent in the coating fluid) is usually at most 35 wt%, preferably at most 20 wt%, more preferably at most 15 wt%. If the concentration of the solid content is high, the interaction of the respective components in the coating fluid tends to increase and the possibility of forming precipitates during the storage of the coating fluid for a long period of time becomes high. The solid content concentration is usually at least 0.015 wt%.
Further, the content of the fine metal particles in the coating fluid for forming a heat ray reflective layer is usually from 0.01 to 30 wt%, preferably from 0.02 to 25 wt%, more preferably from 0.05 to 10 wt%. The content of the metal fine particles in the above solid content is preferably from 70 to 99.5 wt%, more preferably from 80 to 99.5 wt%, further preferably from 90 to 99.5 wt%. Further, the content of the binder is usually from 0.05 to 30 wt%, preferably from 0.1 to 20 wt%, more preferably from 0.5 to 10 wt%, to the fine metal particles. The content of the binder in the above solid content is preferably from 0.5 to 30 wt%, more preferably from 0.5 to 20 wt%, particularly preferably from 0.5 to 10 wt%.
In a case where the content of the fine metal particles is too small, and the binder is too much, fusion of the fine metal particles tends to hardly proceed in the firing process after coating the substrate, whereby no adequate infrared reflectivity tends to be obtainable. On the other hand, if the content of the fine metal particles is too large, and the binder is too little, at the time of coating the substrate to prepare a heat ray reflective layer having a sufficient visible light transmittance, the coating film thickness is required to be thin, whereby the very thin coating film tends to be unstable.
Further, in this coating fluid, the content of the non-metal compound contained in the solid content is preferably from 0.1 to 40.0 wt%, more preferably from 0.2 to 30.0 wt%, further preferably from 0.3 to 20.0 wt%, particularly preferably from 0.5 to 10.0 wt%, especially preferably from 1.0 to 10.0 wt%. If the content of the non-metal compound exceeds this upper limit, the surface resistivity of the heat ray reflective layer may not be lowered in the above-described conversion step, whereby a high heat ray-shielding property may not be obtainable. On the other hand, if the non-metal compound content is lower than this lower limit, the non-metal compound may not uniformly be distributed in the heat ray reflective layer, whereby aggregation of the fine metal particles is likely to occur, and the outer appearance is likely to be impaired.
Further, the weight ratio of the non-metal compound to the fine metal particles is usually from 0.01 to 0.4,

preferably from 0.02 to 0.3, more preferably from 0.03 to 0.1. If the ratio of the non-metal compound to the fine metal particles exceeds this upper limit, the metal tends to hardly form a linked state in the surface structure of the heat ray reflective layer under the above-described conversion step conditions. On the other hand, if the ratio of the non-metal compound to the fine metal particles is lower than the lower limit, aggregation of the fine metal particles tends to occur during the film formation.

Further, in a case where a heterocyclic compound is contained in the coating fluid, the content of the heterocyclic compound is preferably from 0.01 to 10 parts by weight, more preferably from 0.02 to 8 parts by weight, particularly preferably from 0.05 to 5 parts by weight, per 100 parts by weight of the fine metal particles. If the content of the heterocyclic compound is too small, the effect to prevent coating film defects tends to be hardly sufficiently obtainable, and if it is too much, fusion of the metal tends to hardly proceed in the firing step after coating the substrate, whereby no adequate infrared reflectivity tends to be obtainable.

Further, in a case where a dispersant is contained in the coating fluid, the content of the dispersant is preferably from 0.0001 to 50 wt%, more preferably from 0.001 to 10 wt%, further preferably from 0.1 to 5 wt%, to the fine metal particles. If the amount of the dispersant is too small, the amount of the dispersant to the fine metal particles tends to inadequate, whereby aggregation of the fine particles tends to occur, and the stability of the coating fluid tends to be hardly obtainable. If the amount of the dispersant is too much, fusion of the fine metal particles is likely to be hindered, whereby the solar reflectance of the obtainable heat ray reflective layer tends to be low.

The content of the dispersion medium in the coating fluid of the present invention is preferably from 65 to 99.985 wt%, particularly preferably from 80 to 99.950 wt%, especially preferably from 85 to 99.900 wt%, in order to contain the necessary amounts of the above-mentioned respective components.

<VISCOSITY>

The viscosity of the coating fluid of the present invention at 25˚C is preferably from 0.1 mPa·s to 30 mPa·s, more preferably from 0.5 mPa·s to 5.0 mPa·s. If the viscosity of the coating fluid is too high, coating irregularities are likely to form. If the viscosity of the coating fluid is too low, it is likely to be difficult to obtain a film thickness of at least a certain level. Accordingly, the content of the fine metal particles, the content of the binder (and/or its precursor), the content of the dispersing medium and the amounts of other additives in the coating fluid are determined so that the content of the fine metal particles and the content of the binder in the heat ray reflective layer to be formed will be within the above-described preferred ranges, and the viscosity of the coating fluid will be within the above range. Further, when the viscosity of the coating fluid is within the above range, the above-described thermosetting resin or ionization radiation-curable resin as the binder may be applied with no solvent, whereby a drying step after the coating may be omitted.

<SURFACE TENSION>

The surface tension of the coating fluid of the present invention at 20˚C is preferably at most 120 mN/m, more preferably at most 100 mN/m, further preferably at most 80 mN/m. If the surface tension is too high, the coating property to the substrate tends to be low.

<PREPARATION METHOD>

The coating fluid of the present invention can be obtained by mixing the above-described respective components with the dispersion medium in a solid or solution state. The temperature, pressure, etc. during the preparation of the coating fluid are not particularly limited unless the final composition of the coating fluid is substantially changed by boiling or freezing of the dispersion medium or by sublimation of a solid component.

Further, the order of mixing the respective components is basically optional. For example, among components for the coating fluid, the components excluding one or more may preliminarily be mixed, and the rest of the components may be added immediately before the use to form the coating fluid of the present invention. Otherwise, transportation and storage may be carried out in a concentrated dispersion state, and immediately before the use, it may be diluted with the dispersion medium to form the coating fluid of the present invention. Further, the solid content of the coating fluid may be stored in a dried state, and it may be dispersed in a dispersion medium before the use to obtain the coating fluid.

Depending upon the composition of the coating fluid, the respective components may be mixed in a predetermined order, so that the stability of the coating fluid may be improved. For example, in a case where the fine metal particles are used in a form dispersed in water, a dispersion medium may be added gradually in small amounts to a dispersion of the fine metal particles, and a binder (or a binder solution) and a heterocyclic compound (or a solution of a heterocyclic compound) may be added thereto to prevent aggregation of the fine metal particles. Further, in a case where a binder having a low hydrophilicity is to be employed, such a binder may be added to a dispersion medium, and

then, a heterocyclic compound and a dispersion of the fine metal particles may be mixed in this order, whereby precipitation of the binder may be suppressed.

In order to remove a dust or aggregates from the prepared coating fluid, it is preferred to carry out filtration before using the coating fluid. The size of the solid to be removed by the filtration is preferably at least 10 μm, more preferably at least 5 μm, further preferably at least 1 μm. If a solid larger than the above lower limit is not removed, the solid is likely to be a factor for coating defects. However, if it is attempted to remove an excessively small solid, the load to the filtration installation increases, and the time required for the filtration treatment increases.

Further, the coating fluid may be subjected to ultrasonic wave treatment to improve the dispersion property of the coating fluid.

[WET FILM-FORMING]

<COATING>

The wet film-forming method of the coating fluid of the present invention on the transparent substrate is optional, and various known coating methods may be used. It is possible to employ, for example, a flow coating method, a spin coating method, a spray coating method, a dip coating method, a blade coating method, a gravure roll coating method, a curtain roll coating method, a reverse roll coating method, an air knife coating method, a rod coating method, a lip dye coating method or an offset printing method, For a transparent substrate having a large area or a curved surface, it is possible to use a flow coating method, a spin coating method, a spray coating method, a dip coating method or an offset printing method, although the method is not limited thereto.

The relative humidity during the coating is usually at least 20%, preferably at least 25%, more preferably at least 30%, further preferably at least 50%, and usually at most 85%, preferably at most 80%, more preferably at most 75%. By adjusting the relative humidity to be within the above range, it is possible to obtain a heat ray reflective layer excellent in surface properties.

Further, the atmosphere during the coating is not particularly limited. For example, application of the coating fluid may be carried out in the atmospheric air atmosphere, or application of the coating fluid may be carried out in an inert gas atmosphere of e.g. argon, helium or carbon dioxide.

<DRYING>

In the wet film-forming method, after applying the coating fluid to the transparent substrate, drying is carried out to remove the dispersion medium (hereinafter sometimes referred to as the "solvent"). The drying method may, for example, be heat drying, draught drying or vacuum drying, and one of them may be carried out alone, or two or more of them may be carried out in combination.

In the case of the heat drying, the drying temperature is preferably from 40 to 300˚C, more preferably from 60 to 200˚C, further preferably from 70 to 150˚C, particularly preferably from 70 to 120˚C, especially preferably from 70 to 100˚C. If the drying temperature is too low, the solvent tends to remain. If the drying temperature is too high, a useful substrate is limited from the viewpoint of the heat resistance, and the binder resin in the coating fluid is likely to be decomposed.

The atmosphere during the drying may suitably be selected, and the atmospheric air atmosphere, a nitrogen atmosphere, an argon atmosphere, a helium atmosphere or a carbon dioxide atmosphere may, for example, be mentioned.

The temperature raising speed during the drying is usually preferably from 10 to 10,000˚C/min, more preferably from 15 to 1,000˚C/min, further preferably from 15 to 500˚C/min. If the temperature raising speed is too slow, a non-uniform structure is likely to be formed in the solvent drying process, and the transparency of the heat ray reflective layer to be formed is likely to be low. If the temperature raising speed is too high, the temperature control tends to be difficult. However, in a case where the substrate is heated to at least 40˚C prior to the coating, a preferred temperature raising speed of the substrate during the drying may not be within the above range.

The heating time during the drying is preferably from 1 second to 3 hours, preferably from 10 seconds to 1 hour, further preferably from 30 seconds to 30 minutes, particularly preferably from 1 to 10 minutes. If the drying time is too short, the drying tends to be inadequate, and the solvent tends to remain. If the drying time is too long, the transparent substrate is likely to be deformed, or the underlayer is likely to be swelled, the surface roughness is likely to increase, and scattering of light at the interface is likely to increase, whereby the transparency is likely to decrease.

For the drying, an over, a hot plate, an infrared ray heater or an electromagnetic wave heater may, for example, be used.

Further, after the heat drying, cooling may be carried out naturally or positively.

<HEAT TREATMENT>

In the wet film-forming method, it is preferred to carry out heat treatment after applying and drying the coating fluid, to interlink the fine metal particles thereby to increase the infrared reflectance and bring the heat-shielding property to a high level.

The heat treatment conditions depend on e.g. the type of metal including the dispersant in the coating fluid, the type of the binder, the type of the solvent, the composition of the coating fluid, the particle size of the fine metal particles, etc. and cannot generally be defined, but they may suitably be selected from the following ranges. Further, the drying and the heat treatment may be carried out in one step without being sequentially carried out.

The heat treatment temperature is usually from 70 to 300˚C, preferably from 100 to 200˚C, more preferably from 120 to 150˚C. if the heat treatment temperature is too low, formation of an electroconductive path by fusion of the fine metal particles tends to be inadequate, the solar reflectance of the heat ray reflective layer to be formed is likely to be low, and the heat-shielding property is likely to be low. If the heat treatment temperature is too high, there is a possible danger such that fusion of the fine metal particles proceeds excessively, such being undesirable from the viewpoint of interlinkage of the fine metal particles to one another or formation of pores. Further, the useful binder or transparent substrate may be limited.

The atmosphere during the heat treatment may suitably be selected, and the atmospheric air atmosphere, a nitrogen atmosphere, an argon atmosphere, a helium atmosphere or a carbon dioxide atmosphere may, for example, be mentioned.

For the heat treatment, an oven, a hot plate, an infrared ray heater or an electromagnetic wave heater may, for example, be used.

The heat treatment time is usually from 10 seconds to 3 hours, preferably from 30 seconds to 2 hours, more preferably from 1 minute to 1 hour, particularly preferably from 1 minute to 30 minutes, especially preferably from 1 to 10 minutes. If the heat treatment time is too short, the interlinkage of the fine metal particles to one another tends to be inadequate, the solar reflectance of the heat ray reflective layer to be formed is likely to be low, and the solar absorptance is likely to be high, whereby the heat-shielding property is likely to be low. If the heat treatment time is too long, the substrate is likely to be deformed, or there is a possible danger that fusion of the fine metal particles proceeds excessively, such being undesirable from the viewpoint of the interlinkage of the fine metal particles to one another or formation of pores.

The relative humidity during the heat treatment is usually at least 10%, preferably at least 20%, more preferably at least 30%, further preferably at least 50%, and usually at most 95%, preferably at most 90%, more preferably at most 80%, further preferably at most 70%. By adjusting the relative humidity to be within the above range, fusion of the fine metal particles can be promoted, and it is possible to increase the heat-shielding property.

[OPTICAL PROPERTIES OF HEAT RAY REFLECTIVE LAYER]

Now, the optical properties of the heat ray reflective layer constituting the transparent heat ray reflective laminate of the present invention will be described, but it should be understood that the present invention is by no means restricted by the following description.

<VISIBLE LIGHT ABSORPTANCE>

The visible light absorptance ($A_{VIS}$) of the heat ray reflective layer in the present invention is preferably at most 45%, more preferably at most 40%, further preferably at most 35%. If $A_{VIS}$ is higher than the above upper limit, the temperature of the film itself tends to be high by the absorbed visible light, whereby deterioration is likely to be accelerated. Further, the film is likely to be colored, and the transparency is likely to be low when it is used to constitute the transparent heat ray reflective laminate. The lower limit for such $A_{VIS}$ is not particularly limited, but it is usually at least 1 %. If it is lower than this lower limit, the heat-shielding property tends to be small.

Here, $A_{VIS}$ is calculated from the following formula by using the visible light transmittance ($T_{VIS}$) and the visible light reflectance ($R_{VIS}$).

$$A_{VIS}=100-T_{VIS}-R_{VIS}$$

Here, $T_{VIS}$ is obtained from the spectral transmittance measured by a spectrophotometer by means of the method for calculation of the visible light transmittance in accordance with JIS R3106. $T_{VIS}$ of the heat ray reflective layer is either one or both values of the following (1) and (2).

(1) The visible light transmittance of a laminate having the heat ray reflective layer formed on a glass substrate having the minimum transmittance of at least 87% at a wavelength of from 380 nm to 2,500 nm (this laminate is composed solely of the glass substrate and the heat ray reflective layer).

If the minimum transmittance of the glass substrate used here is lower than 87%, deterioration of the transmittance by the glass substrate is substantial, whereby the error given to the visible light transmittance or visible light absorptance of the heat ray reflective layer itself becomes substantial, such being undesirable. The lower limit value of the minimum transmittance of the glass substrate is preferably 88%.

(2) A value obtained by dividing the spectral transmittance of a laminate having the heat ray reflective layer formed on a substrate (this laminate is composed solely of the substrate and the heat ray reflective layer) by the spectral transmittance of the substrate.

In this case, by dividing the spectral transmittance of the laminate by the spectral transmittance of the substrate, it is possible to eliminate the influence of the substrate, so that there is no particular restriction to the minimum transmittance of the substrate to be used at a wavelength of from 380 nm to 2,500 nm, and the substrate is meant for a substrate in a broad sense including a film. The material or thickness of this substrate is not particularly limited, but, for example, glass or a resin substrate of e.g. polycarbonate, polyethylene terephthalate or polymethyl methacrylate may be used.

Here, $R_{VIS}$ is calculated by the calculation method disclosed in JIS R3106 using a spectral reflectance, by taking, as the spectral reflectance, a diffuse reflectance of the heat ray reflective layer surface measured with reference to a standard diffuse reflection plate (made of barium sulfate or aluminum oxide) in a wavelength range in accordance with JIS R3106. A similar spectral reflectance is measured whether barium sulfate or aluminum oxide is used as the standard diffuse reflection plate.

<VISIBLE LIGHT REFLECTANCE>

Of the heat ray reflective layer in the present invention, the above-mentioned visible light reflectance ($R_{VIS}$) is preferably at least 1%, more preferably at least 5%, further preferably at least 10%, particularly preferably at least 15%, especially preferably at least 20%. If $R_{VIS}$ is too low, the visible light reflectance having a high energy density contained in sunlight becomes small. However, if $R_{VIS}$ is excessively high, the appearance tends to glare, such being undesirable, and further, the visible light transmittance also decreases, whereby the visibility may be deteriorated. Accordingly, $R_{VIS}$ of the heat ray reflective layer in the present invention is preferably at most 50%, more preferably at most 45%.

<VISIBLE LIGHT TRANSMITTANCE>

Of the heat ray reflective layer in the present invention, the above-mentioned visible light transmittance ($T_{VIS}$) is preferably from 10 to 90%, more preferably from 15 to 80%, further preferably from 20 to 70%. If $T_{VIS}$ is too low, the visibility via the heat ray reflective layer tends to be poor. Further, low $T_{VIS}$ corresponds to high $R_{VIS}$ or $A_{VIS}$, and also from such a viewpoint, $T_{VIS}$ being too low may sometimes be undesirable. If $T_{VIS}$ is too high, there may be a case where the light-shielding property or the heat-shielding property becomes inadequate, and the privacy performance tends to be low.

<SOLAR ABSORPTANCE>

The solar absorptance ($A_{SUN}$) of the heat ray reflective layer in the present invention is preferably at most 45%, more preferably at most 40%, further preferably at most 35%. If $A_{SUN}$ is higher than this level, the temperature of the heat ray reflective layer tends to be high, and deterioration is likely to be accelerated. Further, such is likely to be a factor for thermal fatigue of the after-described resin layer, or is likely to cause interlayer peeling due to the difference in the thermal expansion coefficient from the resin layer. The lower limit of $A_{SUN}$ is not particularly limited, but it is usually at least 5%. If the solar absorptance becomes lower than this lower limit, the heat-shielding property tends to be small.

Here, $A_{SUN}$ is calculated from the following formula using the solar transmittance ($T_{SUN}$) and solar reflectance ($R_{SUN}$).

$$A_{SUN}=100-T_{SUN}-R_{SUN}$$

Here, $T_{SUN}$ is obtained from the spectral transmittance measured by a spectrophotometer by means of the calculation method for solar transmittance in accordance in with JIS R3106. $T_{SUN}$ for the heat ray reflective layer is either one or both values of (3) and (4), in the same manner as the above-mentioned $T_{VIS}$. (3) Solar transmittance of a laminate having the heat ray reflective layer formed on a glass substrate having the minimum transmittance of at least 87% at a wavelength of from 380 nm to 2,500 nm (this laminate is composed solely of the glass substrate and the heat ray reflective layer).

If the minimum transmittance of the glass substrate used here is lower than 87%, deterioration of the transmittance by the glass substrate is substantial, whereby the error given to the solar transmittance or solar absorptance of the heat ray reflective layer itself becomes substantial, such being undesirable. The lower limit value of the minimum transmittance of the glass substrate is preferably 88%. (4) A value obtainable by dividing the spectral transmittance of a laminate having the heat ray reflective layer formed on a substrate (this laminate is composed solely of the substrate and the heat ray reflective layer) by the spectral transmittance of the substrate.

In this case, by dividing the spectral transmittance of the laminate by the spectral transmittance of the substrate, it is possible to eliminate the influence of the substrate, so that there is no particular restriction to the minimum transmittance of the substrate to be used at a wavelength of from 380 nm to 2,500 nm, and the substrate is meant for a substrate in a broad sense including a film. The material and thickness of this substrate are not particularly limited, but, for example, glass or a resin substrate of e.g. polycarbonate, polyethylene terephthalate or polymethyl methacrylate may be used.

Here, $R_{SUN}$ is calculated by the calculation method disclosed in JIS R3106 using a spectral reflectance, by taking, as the spectral reflectance, a diffuse reflectance of the heat ray reflective layer surface measured with reference to a standard diffuse reflection plate (made of barium sulfate or aluminum oxide) in a wavelength range in accordance with JIS R3106. A similar spectral reflectance is measured whether barium sulfate or aluminum oxide is used as the standard diffuse reflection plate.

<SOLAR REFLECTANCE>

Of the heat ray reflective layer in the present invention, the above solar reflectance ($R_{SUN}$) is preferably at least 15%, more preferably at least 20%, further preferably at least 25%, particularly preferably at least 30%, especially preferably at least 35%. If $R_{SUN}$ is lower than this level, the solar-shielding property tends to be inadequate. $R_{SUN}$ is preferably at most 50% as a visible light reflectance, and accordingly, it is usually at most 70%.

<SOLAR TRANSMITTANCE>

Of the heat ray reflective layer in the present invention, the above solar transmittance ($T_{SUN}$) is preferably at most 70%, more preferably at most 60%, further preferably at most 50%, particularly preferably at most 40%. If $T_{SUN}$ is too high, the heat ray-shielding property is likely to be inadequate, and the application is likely to be limited. $T_{SUN}$ is usually at least 5%, in order to make the transparency high.

<SELECTIVE REFLECTIVITY>

The heat ray reflective layer in the present invention has a relatively high heat ray reflectivity. The selective reflectivity is represented by the following formula.

$$\text{Selective reflectivity} = R_{SUN}/R_{VIS}$$

wherein $R_{SUN}$ and $R_{VIS}$ are the solar reflectance and the visible light reflectance as defined above.

The selective reflectivity of the heat ray reflective layer in the present invention is preferably from 0.9 to 3.0, more preferably from 1.0 to 2.5, further preferably at least 1.05, still further preferably from 1.1 to 2.0. If the selectivity reflectivity is too small, the visible light reflectance tends to be high, and glaring tends to be substantial. On the other hand, if it is too large, the proportion of the visible light reflectance tends to be too small, and the heat ray-shielding function tends to be small.

[RESIN LAYER]

Now, the resin layer constituting the transparent heat ray reflective laminate of the present invention will be described.

{POLYMER CONSTITUTING RESIN LAYER}

<SIDE CHAIN ALKYL GROUP HAVING AT LEAST 8 CARBON ATOMS>

The resin layer in the present invention preferably contains a polymer having an alkyl group having at least 8 carbon atoms, preferably from 10 to 30 carbon atoms, in its side chain.

The long chain alkyl group having at least 8 carbon atoms has high hydrophobicity, and by covering the heat ray reflective layer with a polymer having such a hydrophobic group in its side chain, it is possible to prevent the metal in the heat ray reflective layer from being corroded by moisture thereby to increase the durability of the transparent heat ray reflective laminate.

Typically, such a polymer is preferably a polymer obtainable by polymerizing or copolymerizing a monomer component containing at least one monomer represented by the following formula (1) (this monomer may sometimes be referred to as "monomer (1)").

$$CH_2=C(R^1)COOR^2 \qquad (1)$$

(in the formula (1), $R^1$ is a hydrogen atom or an alkyl group, and $R^2$ is an alkyl group having at least 8 carbon atoms.)

Preferably, each of $R^1$ and $R^2$ is an alkyl group which may have a substituent, and such an alkyl group may have a branched or cyclic structure. However, $R^1$ and $R^2$ in the above formula (1) are suitably selected in consideration of the following characteristics in order to make the characteristics of the resin layer constituting the transparent heat ray reflective laminate of the present invention to be suitable for the object of the present invention.

For the mechanical strength and adhesive property of the resin layer, each of $R^1$ and $R^2$ is preferably a linear alkyl group. From the viewpoint of the mechanical strength and adhesive property of the resin layer, the number of carbon atoms is preferably at most 30. For the same reason, the alkyl group for $R^1$ is preferably an alkyl group having at most 5 carbon atoms, particularly preferably a linear alkyl group having at most 5 carbon atoms, and particularly preferably, $R^1$ is a hydrogen atom, a methyl group or an ethyl group.

Whereas, $R^2$ is an alkyl group having at least 8 carbon atoms in order to suppress penetration of water into the resin layer, and the number of carbon atoms is preferably at least 10, further preferably at least 12, particularly preferably at least 16 and preferably at most 30, more preferably at most 25.

It is particularly preferred that in the above formula (1), $R^1$ is a hydrogen atom, a methyl group or an ethyl group, and $R^2$ is an alkyl group having from 8 to 30 carbon atoms, which may have a branch.

Specifically, the monomer (1) may, for example, be 2-ethylhexyl (meth)acrylate, isodecyl (meth)acrylate, lauryl (meth)acrylate, dodecyl (meth)acrylate, stearyl (meth)acrylate, isostearyl (meth)acrylate, cetyl (meth)acrylate, or behenyl (meth)acrylate. One of such monomers (1) may be used alone, or two or more of them may be used in combination.

<ULTRAVIOLET-ABSORBING GROUP>

The resin layer preferably contains a polymer having a ultraviolet-absorbing group for the purpose of preventing the transparent substrate and the resin layer itself from deterioration by ultraviolet rays.

As such an ultraviolet-absorbing group, a group having a benzophenone skeleton of e.g. 2,4-dihydroxybenzophenone, a group having a triazine skeleton, and a group having a benzotriazole skeleton of e.g. 2-(5'-methyl-2'-hydroxyphenyl)benzotriazole, a group having a cyano acrylate skeleton of e.g. ethyl-2-cyano-3,3'-diphenylacrylate, a group having a salicylate skeleton of e.g. phenyl salicylate, or a group having a benzylidene malonate skeleton of e.g. diethyl-p-methoxybenzylidene malonate, may preferably be used. Among them, a group having a benzophenone skeleton, a group having a triazine skeleton or a group having a benzotriazole skeleton is preferred, and a group having a benzotriazole skeleton is particularly preferably employed.

From the viewpoint of increasing the adhesion with the heat ray reflective layer and the environmental durability, the ultraviolet-absorbing group is preferably an ultraviolet-absorbing group having a heterocyclic structure containing a nitrogen atom, particularly a group having a triazine skeleton or a group having a benzotriazole skeleton, especially preferably a group having a benzotriazole skeleton.

Details of the reason as to why such a ultraviolet-absorbing group increases the adhesion to the heat ray reflective layer or the durability, are not clearly understood, but it is considered that the heterocyclic structure, particularly the heterocyclic structure having a nitrogen atom, interacts with the metal surface to prevent deterioration of the metal and the adhesion. That is, the ultraviolet-absorbing group is adsorbed to the metal contained in the heat ray reflective layer, and as a result, the metal surface is covered with the polymer to which the ultraviolet-absorbing group is bonded, whereby the metal is protected from the exterior environment and at the same time, the adhesion to the heat ray reflective layer is improved.

Heretofore, in order to increase the adhesion to a metal, functional groups of e.g. carboxylic acids, amines and

thiols have been used, but if such functional groups are substantially incorporated to the resin layer in the present invention, they are likely to increase the water absorption of the resin layer, thereby to lower the adhesion between the heat ray reflective layer and the resin layer and further to deteriorate the metal contained in the heat ray reflective layer, and in a case where a cured layer is laminated on the resin layer, they may cause a deterioration of the adhesion between the resin layer and the cured layer. Further, water is permitted to penetrate, so that water remains between the respective layers, whereby swelled water bubbles are likely to be formed.

Whereas, by incorporating ultraviolet-absorbing groups in the resin layer in the present invention, not only an effect to absorb ultraviolet rays thereby to protect the transparent substrate and the resin layer itself from ultraviolet rays, but also an unexpected effect to improve the environmental durability or the adhesion between the respective layers of the transparent heat ray reflective laminate of the present invention is obtainable as mentioned above.

To incorporate ultraviolet-absorbing groups to a polymer contained in the resin layer in the present invention, a method may be mentioned wherein the polymer to constitute the resin layer is obtained by using a polymerizable monomer having an ultraviolet-absorbing group. Here, the polymerizable monomer having an ultraviolet-absorbing group may, for example, be a compound having a benzotriazole skeleton as represented by the following formula (2), a compound having a benzophenone skeleton as represented by the formula (3), or a compound having a triazine skeleton as represented by the formula (4).

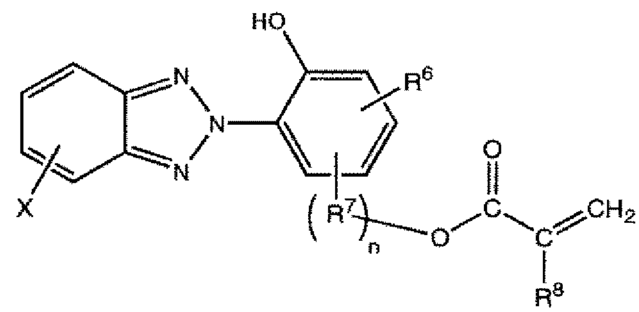

(2)

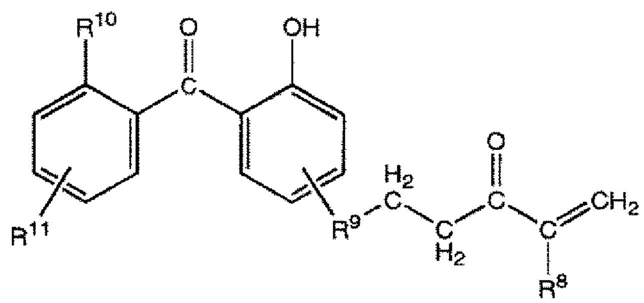

(3)

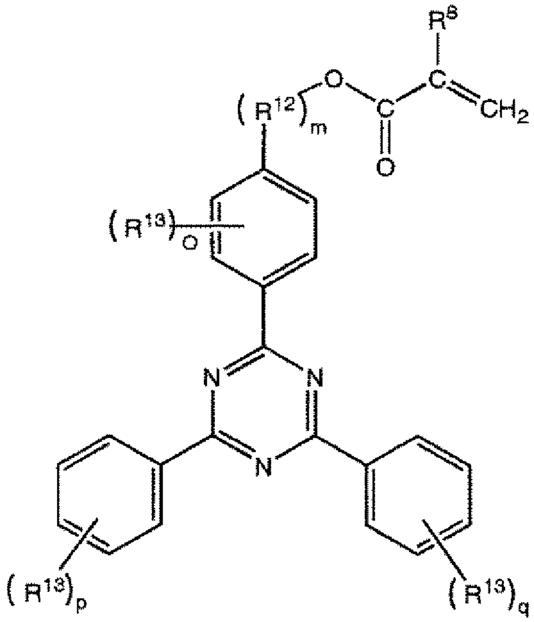

(4)

In the formula (2), X is a hydrogen atom or a chlorine atom, and $R^6$ is a hydrogen atom, a methyl group or a $C_{4-8}$ tertiary alkyl group. $R^7$ is a linear or branched a $C_{2-10}$ alkylene group, and $R^8$ is a hydrogen atom or a methyl group. n is 0 or 1.

In the formula (3), $R^8$ has the same meaning as $R^8$ in the formula (2), and $R^9$ is $C_{1-10}$ linear or branched alkylene group. $R^{10}$ is a hydrogen atom or a hydroxy group, and $R^{11}$ is a hydrogen atom, a hydroxy group or a $C_{1-6}$ alkoxy group.

In the formula (4), $R^8$ has the same meaning as $R^8$ in the formula (2), $R^{12}$ is a linear bond, $-CH_2CH_2O-$ or $CH_2CH(OH)-CH_2O-$, and m is an integer of from 1 to 5. Each of $R^{13}$ is independently a hydrogen atom, a $C_{1-10}$ alkyl group or an alkenyl group, o is an integer of from 0 to 4, and each of p and q is independently an integer of from 0 to 5.

The resin layer in the present invention preferably contains a polymer obtained by polymerizing or copolymerizing at least one of the above-mentioned polymerizable monomer having an ultraviolet-absorbing group, but such a polymer may be a copolymer employing a polymerizable monomer having an alkyl group having at least 8 carbon atoms, such as the above monomer (1), or a compound selected from the group of other compounds having a (meth)acryloyl group copolymerizable therewith.

The resin layer in the present invention may contain a polymer having both an alkyl group having at least 8 carbon atoms and an ultraviolet-absorbing group, or may contain a polymer having an ultraviolet-absorbing group separately from a polymer having an alkyl group having at least 8 carbon atoms.

<COPOLYMERIZABLE MONOMER>

A monomer copolymerizable with the above polymerizable monomer having an alkyl group having at least 8 carbon atoms such as the monomer (1), or a monomer copolymerizable with the above polymerizable monomer having an ultraviolet-absorbing group, may, for example, be (meth)acrylic acid, a (meth)acrylic acid ester, a (meth)acrylonitrile, a (meth)acrylamide, an alkyl vinyl ether, an alkyl vinyl ester, styrene or their derivatives.

Specific examples of the (meth)acrylic acid ester or its derivatives, include methyl (meth)acrylate, ethyl (meth) acrylate, n-butyl (meth)acrylate, isobutyl (meth)acrylate, benzyl (meth)acrylate, cyclohexyl (meth)acrylate, isobonyl (meth)acrylate, tetrahydrofurfuryl (meth)acrylate, dicyclopentenyl (meth)acrylate, dicyclopentenyloxyethyl (meth)acrylate, ethoxyethyl (meth)acrylate, ethylcarbitol (meth)acrylate, butoxyethyl (meth)acrylate, dimethylaminoethyl (meth) acrylate, diethylaminoethyl (meth)acrylate, cyanoethyl (meth)acrylate, an alkoxypolyalkylene glycol (meth)acrylate such as methoxypolyethylene glycol (meth)acrylate or methoxypolypropylene glycol (meth)acrylate, glycidyl (meth)acrylate, 3,4-epoxycyclohexylmethyl (meth)acrylate, 4-hydroxybutyl (meth)acrylate glycidyl ether, 2-hydroxyethyl (meth)acrylate, 2-hydroxypropyl (meth)acrylate, 2-hydroxybutyl (meth)acrylate, 4-hydroxybutyl (meth)acrylate, 2-hydroxy-3-phenoxypropyl (meth)acrylate, 2-acryloyloxyethyl-2-hydroxyethyl phthalate, (meth)acrylic acid, 2-acryloyloxyethyl phthalate, 2-(meth)acryloyloxyethylhexahydro phthalate, 2-(meth)acryloylpropyl phthalate, (meth)acryloyloxyethyl succinate, 2-isocyanateethyl (meth)acrylate, 3-(meth)acryloyloxypropylmethyldimethoxysilane, 3-(meth)acryloyloxypropylmethyl trimethoxysilane, and 3-(meth)acryloyloxypropylmethyl triethoxysilane.

Further, specific examples of the (meth)acrylonitrile or its derivatives include α-chloroacrylonitrile, α-chloromethylacrylonitrile, α-trifluoromethylacrylonitrile, α-methoxyacrylonitrile, α-ethoxyacrylonitrile and vinylidene cyanide.
Further, specific examples of the (meth)acrylamide or its derivatives include N-methyl (meth)acrylamide, N,N-dimethyl (meth)acrylamide, N-ethyl (meth)acrylamide, N,N-diethyl (meth)acrylamide, N-methoxy (meth)acrylamide, N,N-dimethoxy (meth)acrylamide, N-ethoxy (meth)acrylamide, N,N-diethoxy (meth)acrylamide, diacetone (meth)acrylamide, N-methylol (meth)acrylamide, N-(2-hydroxyethyl) (meth)acrylamide, N,N-dimethylaminomethyl (meth)acrylamide, N-(2-dimethylamino)ethyl (meth)acrylamide, N,N-methylenebis(meth)acrylamide, and N,N-ethylenebis(meth)acrylamide.
Specific examples of the alkyl vinyl ether or its derivatives include methyl vinyl ether, ethyl vinyl ether, butyl vinyl ether and hexyl vinyl ether.
Specific examples of the alkyl vinyl ester or its derivatives include vinyl formate, vinyl acetate, vinyl acrylate, vinyl butyrate, vinyl caproate and vinyl stearate.
Specific examples of styrene or its derivatives include styrene, p-styryltrimethoxysilane, α-methylstyrene, vinyltoluene and chloromethylstyrene.
One of these may be used alone, or two or more of them may be used as mixed.

<RATIO OF COMPONENTS>

A suitable monomer composition as copolymerizable components for a polymer to constitute the resin layer in the present invention preferably comprises from 1 to 70 wt%, preferably from 5 to 40 wt%, of a polymerizable monomer having an alkyl group having at least 8 carbon atoms, such as monomer (1), from 5 to 70 wt% of a polymerizable monomer having an ultraviolet-absorbing group, and from 1 to 94 wt% of a monomer copolymerizable with such monomers. If the polymerizable monomer having an alkyl group having at least 8 carbon atoms, such as monomer (1) is in a large amount, the solvent may be limited in the case of preparing a coating fluid for forming the resin layer, and if it is in a small amount, when a resin layer is formed, water is permitted to penetrate, whereby the environmental durability of the heat ray reflective layer is likely to be low. Further, if the polymerizable monomer having an ultraviolet-absorbing group is in a small amount, the above effect of using such a monomer may not sufficiently be obtainable, and if it is too much, the strength of the film of the resin layer is likely to be low. Further, if the monomer copolymerizable with such monomers is more than this range, there may be a case where the polymerizable monomer having an alkyl group having at least 8 carbon atoms or the polymerizable monomer having an ultraviolet-absorbing group may not be sufficiently incorporated, and the environmental durability of the transparent heat ray reflective laminate of the present invention may not be increased, and if it is less, the solvent selectivity at the time of forming the coating fluid is likely to be narrow.

<MOLECULAR WEIGHT>

The number average molecular weight of the polymer constituting the resin layer is usually at least 1,000, preferably at least 3,000, more preferably at least 10,000 and usually at most 1,000,000, preferably at most 700,000, more preferably at most 500,000, further preferably at most 300,000. If the molecular weight is too small, the mechanical strength and environmental durability of the transparent heat ray reflective laminate of the present invention tend to be poor, and if it is too large, the solubility in a solvent tends to be poor, whereby not only it tends to be difficult to produce a polymer, but it is required to dilute the polymer to an extremely low concentration by a solvent at the time of forming the resin layer by a wet-film-forming method, and in such a case, such a large molecular weight is likely to cause coating non-uniformity or drying non-uniformity.
Here, various methods may be used for the measurement of the number average molecular weight. For example, a common method may be used for the measurement, such as GPC (gel permeation chromatography), SEC (size exclusion chromatography), static light-scattering measurement or viscosity measurement.

<GLASS TRANSITION TEMPERATURE>

The glass transition temperature (Tg) of the polymer to constitute the resin layer is preferably at least 40°C, more preferably at least 60°C, further preferably at least 70°C, particularly preferably at least 80°C. If Tg is too low, the durability of the transparent heat ray reflective laminate tends to be low at a high temperature.
Such a glass transition temperature may be measured by a differential scanning calorimeter (DSC), a dynamic mechanical analyzer (DMA) or a thermo-mechanical analyzer (TMA).

{OTHER COMPONENTS}

The resin layer in the present invention may contain various additives to be blended in a resin composition,

such as a stabilizer (such as a hindered amine stabilizer), an antioxidant (such as a phenol type, sulfur type or phosphorus type antioxidant), a blocking-preventive agent, a leveling agent, a silane coupling agent, etc., respectively, in a proportion of from 0.01 to 10 wt%, based on the weight of the resin layer-forming components.

<PHOTOSTABILIZER>

The photostabilizer may, for example, be a hindered amine such as bis(2,2,6,6-tetramethyl-4-piperidyl) carbonate, bis(2,2,6,6-tetramethyl-4-piperidyl) succinate, bis(2,2,6,6-tetramethyl-4-piperidyl) sebacate, 4-benzoyloxy-2,2,6,6-tetramethylpiperidine, 4-octanoyloxy-2,2,6,6-tetramethylpiperidine, bis(2,2,6,6-tetramethyl-4-piperidyl)diphenylmethane-p,p'-dicarbamate, bis(2,2,6,6-tetramethyl-4-piperidyl)benzene-1,3-disulfonate or bis(2,2,6,6-tetramethyl-4-piperidyl)phenyl phosphite, or a nickel complex such as nickel bis(octylphenyl) sulfide, nickel complex-3,5-di-t-butyl-4-hydroxybenzyl phosphoric acid monoethylate or nickeldibutyl dithiocarbamate. One of these photostabilizers may be used alone, or two or more of them may be used in combination.

<SILANE COUPLING AGENT>

The silane coupling agent may, for example, be γ-(2-aminoethyl)aminopropyl trimethoxysilane, γ-(2-aminoethyl) aminopropylmethyl dimethoxysilane, γ-methacryloxypropyl trimethoxysilane, N-β-(N-vinylbenzylaminoethyl)-γ-aminopropyl trimethoxysilane·hydroxide, γ-glycidoxypropyl trimethoxysilane, γ-mercaptopropyl trimethoxysilane, vinyl triacetoxysilane, γ-anilinopropyl trimethoxysilane, vinyl trimethoxysilane, octadecyldimethyl[3-(trimethoxysilyl)propyl]ammonium chloride or γ-ureidopropyl triethoxysilane, and a partially hydrolyzed condensate of the above silane coupling agent may also be used.
By incorporating such an agent, it is possible to adhere the resin layer to the transparent substrate, particularly to the polycarbonate substrate, via pores in the heat ray reflective layer and further to increase the adhesive force with the cured layer.
One of such silane coupling agents may be used alone, or two or more of them may be used in combination.

{WATER ABSORPTION}

The water absorption of the resin layer in the present invention is preferably at most 2 wt%, more preferably at most 1.0 wt%, particularly preferably at most 0.5 wt%. If the water absorption of the resin layer is high, the resin layer is likely to be turbid, or the heat ray reflective layer is likely to be deteriorated. The water absorption of the resin layer may be measured by the same method as for the water absorption of the transparent substrate.
Further, in the selection of the above transparent substrate and the resin layer, the water absorption ratio Q is preferably at most 4, more preferably at most 3, particularly preferably at most 2. Here, the water absorption ratio Q is a value obtained by dividing the water absorption of the resin layer by the water absorption of the transparent substrate.
That is, peeling of respective layers or cracking of the heat ray reflective layer or a cured layer is likely to occur by a change in shape due to expansion or shrinkage of the respective layers due to the temperature-and-humidity change. Therefore, the value of the water absorption ratio Q is preferably within the above range.

{THICKNESS OF RESIN LAYER}

The thickness of the resin layer of the transparent heat ray reflective laminate of the present invention is usually at least 0.5 μm, preferably at least 1 μm, more preferably at least 2 μm, further preferably at least 5 μm, in order to improve the environmental durability of the heat ray reflective layer. On the other hand, it is usually at most 100 μm, preferably at most 70 μm, more preferably at most 50 μm, further preferably at most 30 μm, for a reason such that when the resin layer is formed by applying and drying a coating fluid employing a solvent, the drying property is excellent.

[COATING FLUID FOR FORMING RESIN LAYER]

In the transparent heat ray reflective laminate of the present invention, the method for forming the resin layer is not particularly limited, but the resin layer is preferably formed by a wet film-forming method by using a coating fluid having the above-described components to form a resin layer dissolved or dispersed in a solvent, more preferably a coating fluid for forming a resin layer, which contains from 1 to 70 wt% of the monomer having an alkyl group having at least 8 carbon atoms in all copolymerizable components and which has a polymer containing at least one ultraviolet-absorbing group and a number average molecular weight of at least 1,000 and at most 1,000,000 dissolved or dispersed in a solvent, from such a merit that mass production is easy.

<SOLVENT>

The solvent to be used for the coating fluid for forming the resin layer in the present invention may, for example, be an alcohol such as methanol, ethanol, n-propanol, isopropanol or n-butanol; a ketone such as acetone, methyl ethyl ketone, methyl isobutyl ketone or cyclohexanone; an ether such as 2-methoxyethanol, 2-ethoxyethanol, 2-butoxyethanol, 1-methoxy-2-propanol, 1-ethoxy-2-propanol, ethylene glycol dimethyl ether, ethylene glycol diethyl ether or diethylene glycol dimethyl ether; an ether ester such as 2-methoxyethyl acetate, 2-ethoxyethyl acetate, 2-methoxypropyl acetate or 2-butoxyethyl acetate; an aromatic hydrocarbon such as toluene or xylene; or an ester such as ethyl acetate, propyl acetate or butyl acetate. Further it may be a mixture of these solvents in an optional ratio.

These solvents may also be used at the time of synthesizing a polymer to form the resin layer.

<SOLID CONTENT CONCENTRATION>

The solid content concentration of the coating fluid for forming a resin layer is preferably at least 1 wt%, more preferably at least 2 wt%, further preferably at least 3 wt% and preferably at most 80 wt%, more preferably at most 65 wt%, further preferably at most 50 wt%. If the solid content concentration is too low, such tends to bring about coating non-uniformity or drying non-uniformity of the resin layer, and if it is too high, coating tends to be difficult.

<WET FILM-FORMING METHOD>

The wet film-forming method to apply the coating fluid for forming a resin layer is not particularly limited, and coating may be carried out by any known coating method such as a dip coating method, a flow coating method, a spray coating method, a spin coating method, a bar coating method, a curtain coating method, a dye coating method, a gravure coating method, a roll coating method, a blade coating method or an air knife coating method.

Further, at that time, the thickness of the applied coating fluid for forming a resin layer is not particularly limited so long as the thickness of the finally formed resin layer will be the above-mentioned desired thickness. However, the applied thickness is usually at least 10 μm, preferably at least 30 μm, more preferably at least 50 μm and usually at most 300 μm, preferably at most 200 μm, more preferably at most 120μm. Further, the coating may be carried out by a single step or may be carried out dividedly in two or more times. Usually, it is economically advantageous and preferred to carry out the coating by one step.

<DRYING>

After applying the coating fluid for forming a resin layer containing the above-mentioned solvent, drying is carried out to remove the solvent. Preferred ranges of such drying conditions may be different depending upon the boiling point of the solvent, the material of the substrate, the applied amount, etc., but usually, the drying is carried out at a temperature of from 30 to 200˚C for from 1 to 60 minutes, preferably at a temperature of from 80 to 150˚C for from 1 to 10 minutes. If the drying temperature is lower or the drying time is shorter than this range, the solvent is likely to remain to form defects, and if the drying temperature is higher or the drying time is longer than this range, the substrate is likely to be deformed, or the heat ray reflective layer is likely to be broken.

[CURED LAYER]

It is preferred that the transparent heat ray reflective laminate of the present invention further has a cured layer on the above-mentioned resin layer.

The cured layer in the present invention is a layer made of a resin crosslinked and cured by a crosslinking agent represented by a polyisocyanate compound or a trialkoxysilane hydrolysate, and it may be any cured layer so long as it is a layer made of a resin crosslinked and cured. Here, as a method for crosslinking and curing for such a cured layer, any conventional crosslinking and curing method may be employed, such as curing by heat or curing by irradiation with active energy rays. However, in a case where a thermoplastic resin is used as the transparent substrate, it is preferred to carry out curing by irradiation with active energy rays rather than a method of curing by heat, since the substrate may deteriorate or undergo a deformation by softening.

More specifically, as a curable compound to be used for the cured layer, it is possible to employ a monomer and/or oligomer having at least one member selected from the group consisting of a (meth)acrylate group, a cyclic ether group and a vinyl ether group.

The monomer or oligomer having a (meth)acrylate group is radical-polymerizable by irradiation with active energy rays. Therefore, a composition containing a monomer or oligomer having a (meth)acrylate group can be cured by radical polymerization by irradiation with active energy rays.

The cured layer in the present invention is preferably formed by curing a composition comprising a polyfunctional (meth)acrylate having no urethane bond (hereinafter sometimes referred to simply as a "polyfunctional (meth)acrylate"), urethane (meth)acrylate and an ultraviolet absorber. Further preferably, curing is carried out by active energy.

Such an active energy ray-curable composition is preferably a coating fluid for forming a cured layer preferably containing a polyfunctional (meth)acrylate having no urethane bond, urethane (meth)acrylate and an ultraviolet absorber in the following blend ratio, when the total amount of the polyfunctional (meth)acrylate and the urethane (meth)acrylate is 100 parts by weight.

(A) Polyfunctional (meth)acrylate having no urethane bond: from 10 to 90 parts by weight
(B) Urethane (meth)acrylate: from 10 to 90 parts by weight
(C) Ultraviolet absorber: from 0.1 to 20 parts by weight, per 100 parts by weight of the total of (A) the polyfunctional (meth)acrylate and (B) the urethane (meth)acrylate.

<(A) POLYFUNCTIONAL (METH)ACRYLATE HAVING NO URETHANE BOND>

The polyfunctional (meth)acrylate to be used for the cured layer in the present invention is not particularly limited so long as it is a polyfunctional (meth)acrylate which is commonly used and one having no urethane bond. However, the following ones may, for example, be mentioned.

A di(meth)acrylate such as 1,4-butanediol di(meth)acrylate, 1,6-hexandiol di(meth)acrylate, neopentyl glycol di(meth)acrylate, polyethylene glycol di(meth)acrylate, polypropylene glycol di(meth)acrylate, neopentyl glycol adipate di(meth)acrylate, hydroxypivalic acid neopentyl glycol di(meth)acrylate, dicyclopentanyl di(meth)acrylate, caprolactone-modified dicyclopentenyl di(meth)acrylate, EO(ethylene oxide)-modified bisphenol A di(meth)acrylate, EO(ethylene oxide)-modified phosphoric acid di(meth)acrylate, allyl-modified cyclohexyl di(meth)acrylate, isocyanuric acid ethoxy-modified di(meth)acrylate, isocyanuric acid ethoxy-modified tri(meth)acrylate, or trimethylolpropane di(meth)acrylate;
a tri-functional or higher functional (meth)acrylate such as trimethylolpropane tri(meth)acrylate, pentaerythritol tri(meth) acrylate, pentaerythritol tetra(meth)acrylate, dipentaerythritol tri(meth)acrylate, dipentaerythritol penta(meth)acrylate, propionic acid-modified dipentaerythritol tri(meth)acrylate, PO(propylene oxide)-modified trimethylolpropane tri(meth) acrylate, tris(acryloxyethyl) isocyanurate, propionic acid-modified dipentaerythritol tetra(meth)acrylate, propionic acid-modified dipentaerythritol penta(meth)acrylate, dipentaerythritol hexa(meth)acrylate or caprolactone-modified dipentaerythritol hexa(meth)acrylate;
a hydrolytic condensate of colloidal silica and/or silicate of the above-mentioned trifunctional or higher functional (meth) acrylate and an adduct of γ-mercaptopropyl trimethoxysilane;
a hydrolytic condensate of colloidal silica and/or silicate of a hydroxy group-containing acrylate such as glycerol diacrylate, pentaerythritol triacrylate or dipentaerythritol pentaacrylate, and an adduct of an isocyanate propyl triethoxysilane;
bisphenol A diglycidyl ether or a novolac type epoxy resin;
an epoxy (meth)acrylate obtained by modifying with (meth)acrylic acid e.g. trisphenolmethane triglycidyl ether, 1,4-butanediol diglycidyl ether, 1,6-hexanediol diglycidyl ether, glycerol triglycidyl ether, trimethylolpropane triglycidyl ether, propylene glycol diglycidyl ether, 2,4-epoxycyclohexylmethyl-3,4-epoxycyclohexane carboxylate, bis(3,4-epoxycyclohexylmethyl) adipate, 2-(3,4-epoxycyclohexyl-5,5-spiro-3,4-epoxy)cyclohexanone-meta-dioxane, bis(2,3-epoxycyclopentyl) ether or EHPE-3150 (manufactured by DAICEL CHEMICAL INDUSTRIES, LTD., alicyclic epoxy resin).

One of such unsaturated compounds having at least two unsaturated groups may be used alone, or two or more of them may be used in combination.

<(B) URETHANE (METH)ACRYLATE>

As the urethane (meth)acrylate to be used for the cured layer in the present invention, it is possible to use a usual urethane acrylate which is obtained by an urethanization reaction of a polyol, an isocyanate compound and a (meth)acrylate compound having a hydroxy group.

For example, an urethane poly(meth)acrylate may be mentioned which is obtained by adding a hydroxy group of one or more compounds such as (poly)butadienediol (here "(poly)butadienediol" represents "butadienediol and/or polybutadienediol", the same applies hereinafter), (poly)ethylene glycol, (poly)propylene glycol, (poly)tetramethylene glycol, (poly)esterdiol, (poly)caprolactone-modified diol, (poly)carbonatediol and (poly)spiroglycol, to an alicyclic isocyanate compound such as isophorone diisocyanate or hydrogenated diphenylmethane diisocyanate, and then, reacting a (meth)acrylate having a hydroxy group, such as 2-hydroxyethyl (meth)acrylate, 2-hydroxypropyl (meth)acrylate, 4-hydroxybutyl (meth)acrylate, caprolactone-modified 2-hydroxyethyl (meth)acrylate or pentaerythritol tri(meth)acrylate, to the remaining isocyanate groups.

Particularly, the urethane (meth)acrylate in the present invention may be synthesized by reacting a diol having an alicyclic structure, a lactone, a polyisocyanate and a (meth)acrylate containing a hydroxy group.

The diol having alicyclic structure may, for example, be a hydroxy alkylated compound of e.g. indene, naphthalene, azulene or anthracene;
bicyclo[5,3,0]decanedimethanol, bicyclo[4,4,0]decanedimethanol, bicyclo[4,3,0]nonanedimethanol, norbornanedimethanol, tricyclodecanedimethanol, 1,3-adamantanediol(1,3-dihydroxytricyclo[3,3,1,1$^{3.7}$]decane, 3,9-bis(2-hydroxy1,1-dimethylethyl)-2,4,8,10-tetraoxaspiro[5,5]undecane, iso-sorbide, hydrogenated bisphenol A, 1,4-cyclohexanedimethanol, 1,3-cyclohexanedimethanol or 1,2-cyclohexanedimethanol.

The lactone may, for example, be β-propiolactone, ε-caprolactone, δ-valerolactone, β-methyl-δ-valerolactone, α,β,γ-trimethoxy-δ-valerolactone, β-methyl-ε-isopropyl-ε-caprolactone, lactide or glycolide.

The polyisocyanate may, for example, be tolylene diisocyanate, diphenylmethane diisocyanate, hydrogenated diphenylmethane diisocyanate, hexanemethylene diisocyanate, isophorone diisocyanate, xylylene diisocyanate, hydrogenated xylylene diisocyanate, tetramethylxylylene diisocyanate, trimethylhexamethylene diisocyanate, 1,5-napthalene diisocyanate, norbornene diisocyanate, tolidine diisocyanate, p-phenylene diisocyanate or lysine diisocyanate.

The hydroxy group-containing (meth)acrylate may, for example, be 2-hydroxyethyl (meth)acrylate, 2-hydroxypropyl (meth)acrylate, 2-hydroxybutyl (meth)acrylate, 4-hydroxybutyl (meth)acrylate, 2-hydroxy-3-phenoxypropyl (meth)acrylate, 2-acryloyloxyethyl-2-hydroxyethyl (meth)acrylate, pentaerythritol tri(meth)acrylate or dipentaerythritol penta(meth)acrylate.

The urethane (meth)acrylate in the present invention may be obtained by synthesizing a caprolactone-modified diol having an alicyclic structure, then reacting the diol with a diisocyanate at a temperature of from 20 to 100˚C, preferably from 40 to 80˚C, for from 1 to 20 hours to synthesize a diisocyanate, which is further reacted with a hydroxy group-containing (meth)acrylate at a temperature of from 20 to 100˚C for from 1 to 20 hours. For example, the caprolactone-modified diol having an alicyclic structure may be synthesized by carrying out an addition reaction by heating to a temperature of from 50 to 220˚C, preferably from 100 to 200˚C, in the presence of a catalyst, in a case where tricyclodecane dimethanol is employed as the diol having an alicyclic structure, and ε-caprolactone is employed as the lactone. At that time, if the temperature is low, the reaction rate is slow, and if the temperature is high, heat decomposition is likely to occur. As the catalyst to be used for this reaction, it is possible to use, for example, an inorganic salt, an inorganic acid, an organic alkali metal, a tin compound, a titanium compound, an aluminum compound, a zinc compound, a tungsten compound, a molybdenum compound or a zirconium compound.

In the reaction of a diol with a dicyanate, or a dicyanate with a hydroxy group-containing (meth)acrylate, it is preferred to use a catalyst to accelerate the reaction. As the catalyst to be used here, it is possible to use an organic tin compound represented by dibutyltin dilaurate, dioctyltin dilaurate or dibutyltin diacetate, or a tertiary amine compound such as triethylamine.

One of these catalysts may be used alone or two or more of them may be used in combination.

<(C) ULTRAVIOLET ABSORBER>

The ultraviolet absorber to be used for the cured layer in the present invention may, for example, be an ultraviolet absorber of benzotriazole type, benzophenone type, benzoate type or cyanoacrylate type.

Specific examples thereof include 2-(2-hydroxy-5-methyl)benzotriazole, 2-[2-hydroxy-3,5-bis(α,α-dimethylbenzyl)phenyl]-2H-benzotriazole, 2-(2'-hydroxy-5'-t-butylphenyl)benzotriazole, 2-(2'-hydroxy-3'-t-butyl-5'-methylphenyl)benzotriazole, 2-(2'-hydroxy-3',5'-t-butylphenyl)benzotriazole, 2-(2'-hydroxy-3',5'-t-butylphenyl)-5-chlorobenzotriazole, 2-(2H-benzotriazol-2-yl)-4 ,6-bis(1-methyl-1-phenylethyl)phenol, 2-(2'-hydroxy-3',5'-t-pentylbenzotriazole, 2-[2'-hydroxy-5'-(1,1,3,3-tetramethylbutyl)]benzotriazole, 2-(2'-hydroxy-3'-s-butyl-5'-t-butylbenzotriazole, 2-(2'-hydroxy-3-dodecyl-5'-methylbenzotriazole, 2-(2'-hydroxy-3'-tert-butyl-5'-methylphenyl)-5-chlorobenzotriazole, 2-(2'-hydroxy-5'-methylphenyl)benzotriazole, 2,2-methylenebis[4-1,1,3,3-tetramethylbutyl]-6-(2H-benzotriazol-2-yl)phenol], a reaction product of 3-[3-(2H-benzotriazol-2-yl)-5-t-butyl-4-hydroxyphenyl]propionate with polyethylene glycol, 2-hydroxybenzophenone, 5-chloro-2-hydroxybenzophenone, 2,4-dihydroxybenzophenone, 2-hydroxy-4-methoxybenzophenone, 2-hydroxy-4-n-octoxybenzophenone, 4-dodecyloxy-2-hydroxybenzophenone, 2,2'-dihydroxy-4-methoxybenzophenone, 2,2'-dihydroxy-4,4'-dimethoxybenzophenone, 2-hydroxy-4-dodecyloxybenzophenone, phenyl salicylate, p-tert-butylphenyl salicylate, 3-hydroxyphenylbenzoate, phenylene-1,3-benzoate, 2-ethylhexyl-2-cyano-3,3'-diphenyl acrylate, ethyl-2-cyano-3,3'-diphenyl acrylate, 2-(4,6-diphenyl-1,3,5-triazin-2-yl)-5-hexyloxyphenol, etc.

One of these ultraviolet absorbers may be used alone, or two or more of them may be used in combination.

<(D) PHOTOPOLYMERIZATION INITIATOR>

The active energy ray-curable composition to form the cured layer in the present invention preferably contains a photopolymerization initiator.

The photopolymerization initiator to be used for the cured layer in the present invention may, for example, be benzoin or its alkyl ether such as benzoin, benzoin methyl ether, benzoin ethyl ether or benzoin isopropyl ether; an

acetophenone such as acetophenone, 2,2-dimethoxy-2-phenylacetophenone, 2,2-diethoxy-2-phenylacetophenone, 1,1-dichloroacetophenone, 1-hydroxycyclohexylphenyl ketone, 2-hydroxy-2-methyl-1-phenylpropan-1-one, 1-[4-(2-hydroxyethoxy)phenyl]-2-hydroxy-2-methyl-1-propan-1-one, 2-methyl-1-[4-(methylthio)phenyl]-2-morpholinopropan-1-one or 2-benzyl-2-dimethylamino-1-(4-morpholinophenyl)-1-butanone; or an anthraquinone such as 2-methylanthraquinone, 2-ethylanthraquinone, 2-tertiary butyl anthraquinone, 1-chloroanthraquinone or 2-amylanthraquinone.

Further, it may, for example, be a thioxanthone such as 2,4-dimethylthioxanthone, 2,4-diethylthioxanthone, 2-chlorothioxanthone or 2,4-diisopropylthioxanthone; a ketal such as acetophenone dimethyl ketal or benzyldimethyl ketal; a benzophenone or xanthone such as benzophenone; an α-aminoketone such as 2-benzyl-2-dimethylamino-1-(4-morpholinophenyl)-butanone-1; bis(2,6-dimethoxybenzoyl)-2,4,4-trimethylpentylphosphone oxide, bis(2,4,6-trimethylbenzoyl)-phenylphosphine oxide, bis(η5-2,4-cyciopentadien-1-yl)-bis(2,6-difluoro-3-(1H-pyrrol-1-yl)phenyl titanium, or η5-cyclopentadienyl-η6-cumenyl iron(1+)-hexafluorophosphate(1-).

One of these photopolymerization initiators may be used alone, or two or more of them may be used in combination.

<PHOTOSTABILIZER>

A photostabilizer functioning as a radical scavenger may be contained in the active energy ray-curable composition to form the cured layer in the present invention.

Such a photostabilizer may, for example, be 4-benzoyloxy-2,2,6,6-tetramethylpiperidine, 4-hexanoyloxy-2,2,6,6-tetramethylpiperidine, 4-octanoyloxy-2,2,6,6-tetramethylpiperidine, 4-stearoyloxy-2,2,6,6-tetramethylpiperidine, bis(2,2,6,6-tetramethylpiperidine) succinate, bis(2,2,6,6-tetramethylpiperidine) sebacate, bis(1,2,2,6,6-pentamethyl-4-piperidine) sebacate, 8-acetyl-3-dodecyl-7,7,9,9-tetramethyl-1,3,8-triazaspiro[4,5]decane-2,4-dione, N-methyl-3-dodecyl-1-(2,2,6,6-tetramethyl-4-piperidinyl)pyrrolidine-2,5-dione, N-acetyl-3-dodecyl-1-(2,2,6,6-tetramethyl-4-piperidine) or tris(2,2,6,6-tetramethyl-4-piperidyl) trimesate.

One of these photostabilizers may be used alone, or two or more of them may be used in combination.

<COLLOIDAL SILICA>

The cured layer in the present invention may contain colloidal silica having a volume average particle size of at least 1 nm and at most 200 nm, whereby an effect to increase the hardness of the cured layer may be obtained. Accordingly, colloidal silica may be contained in the active energy ray-curable composition to form the cured layer in the present invention.

As colloidal silica preferred in the present invention, one having fine particles of inorganic silicic acid formed into a colloidal solution may be used. Further, particulate silica in a powder form containing no dispersant may also be used in the present invention. The dispersant for the colloidal silica may, for example, be water, an alcohol such as methanol, ethanol, isopropanol, n-butanol or n-propanol, a polyhydric alcohol such as ethylene glycol or propylene glycol, a polyhydric alcohol or its derivative, such as ethylene glycol monomethyl ether, ethylene glycol monoethyl ether, ethylene glycol monopropyl ether, ethylene glycol monobutyl ether, propylene glycol monomethyl ether or propylene glycol monomethyl ether acetate, a ketone such as methyl ethyl ketone, methyl isobutyl ketone or diacetone alcohol, an aromatic hydrocarbon such as toluene or xylene, or an amide such as dimethylacetamide.

As such colloidal silica, one having the above particle size may be selected for use among those produced by well-known methods and commercially available. It may, for example, be one known by tradename SNOWTEX O, AK, methanol silica sol, IPA-ST, MEK-ST, MIBK-ST or PMA-ST, commercially available from Nissan Chemical Industries, Ltd, or known by tradename Cataloid-SN or OSCAL1432, commercially available from JGC Catalysts and Chemicals Ltd. Fine particulate silica in a powder form may, for example, be one known by tradename OSCAP commercially available from JGC Catalysts and Chemicals Ltd. or one known by tradename NANOTEC commercially available from C.I. Kasei Co., Ltd.

The colloidal silica is available in an acidic or basic form, but in the active energy ray-curable composition to form the cured layer in the present invention, it is preferred to use an acidic form.

<HYDROLYTIC CONDENSATE OF ALKOXYSILANE>

In a case where the cured layer in the present invention contains colloidal silica having a volume average particle size of at least 1 nm and at most 200 nm, such cured layer may contain a hydrolytic condensate of an alkoxysilane represented by the following formula (5).

$$R^3{}_rR^4{}_sSi(OR^5)_{4-r-S} \qquad (5)$$

In the formula (5), each of $R^3$ and $R^4$ is a $C_{1-4}$ alkyl group, or a $C_{1-3}$ alkyl group substituted by at least one functional group selected from the group consisting of a vinyl group, a methacryloyl group, an amino group, a glycidoxy group and a 3,4-epoxycyclohexyl group, $R^5$ is a $C_{1-4}$ alkyl group, and each of r and s is an integer of from 0 to 3, provided r+s is an integer of from 0 to 3.

Such a hydrolytic condensate of an alkoxysilane is more specifically, for example, tetramethoxysilane, tetraethoxysilane, tetra n-propoxysilane, tetraisopropoxysilane, tetra n-butoxysilane, tetraisobutoxysilane, methyltrimethoxysilane, methyltriethoxysilane, ethyltrimethoxysilane, isobutyltrimethoxysilane, vinyltrimethoxysilane, vinyltriethoxysilane, γ-methacryloxypropyltrimethoxysilane, β-(3,4-epoxycyclohexyl)ethyltrimethoxysilane, γ-glycidoxypropyltrimethoxysilane, γ-aminopropyltrimethoxysilane, γ-aminopropyltriethoxysilane, N-β-(aminoethyl)-γ-aminopropyltrimethoxysilane, N-β-(aminoethyl)-γ-aminopropyltriethoxysilane, 3-methacryloxypropylmethyldimethoxysilane, 3-glycidoxypropylmethyldimethoxysilane, 3-glycidoxypropylmethyldiethoxysilane or 3-aminopropylmethyldiethoxysilane.

<OTHER COMPONENTS>

Other components to be used for the cured layer in the present invention include, for example, a stabilizer such as antioxidant, a heat stabilizer or a light absorber; a filler such as glass fiber, glass beads, mica, talc, kaolin, metal fiber or metal powder; a carbon material such as carbon fiber, carbon black, graphite, carbon nanotube or fullerene of e.g. $C_{60}$; a modifier such as an antistatic agent, a plasticizer, a release agent, a defoaming agent, a leveling agent, a precipitation-preventive agent, a surfactant or a thixotropy-imparting agent; a colorant such as a pigment, a dye or a color-adjusting agent; and a curing agent (such as an acid, an alkali or water), a catalyst, a curing accelerator, etc. required for the synthesis of a monomer and/or its oligomer, or an inorganic component.

<SOLVENT>

The curable layer-forming coating fluid of the present invention may contain a solvent from the viewpoint of the handling efficiency. As such a solvent, the same type as the solvent used for forming the resin layer may be used, but it may be a different one. Such a solvent may, for example, be an alcohol such as methanol, ethanol, n-propanol, isopropanol or n-butanol; a ketone such as acetone, methyl ethyl ketone, methyl isobutyl ketone or cyclohexanone; an ether such as 2-methoxyethanol, 2-ethoxyethanol, 2-butoxyethanol, 1-methoxy-2-propanol, 1-ethoxy-3-propanol, ethylene glycol dimethyl ether, ethylene glycol diethyl ether or diethylene glycol dimethyl ether; an ether ester such as 2-methoxyethyl acetate, 2-ethoxyethyl acetate, 2-butoxyethyl acetate or 3-methoxypropyl acetate; an aromatic hydrocarbon such as toluene or xylene; or an ester such as ethyl acetate, propyl acetate or butyl acetate.

One of these solvents may be used alone, or two or more of them may be used in combination.

The blend amounts of the respective components contained in the active energy ray-curable composition to be used for forming the cured layer in the present invention, are as follows when the total of (A) the polyfunctional (meth) acrylate and (B) the urethane (meth)acrylate is 100 parts by weight.

(A) Polyfunctional (meth)acrylate: usually from 10 to 90 parts by weight, preferably from 20 to 80 parts by weight, further preferably from 30 to 75 parts by weight. If it is too small, the cured layer tends to be easily scratched. If it is too much, an internal stress is likely to be formed by shrinkage upon curing, and peeling tends to be likely.

(B) Urethane (meth)acrylate: usually from 10 to 90 parts by weight, preferably from 20 to 80 parts by weight, further preferably from 30 to 75 parts by weight. If it is too small, the environmental durability tends to be poor, and if it is too much, curing of the cured layer is likely to be inadequate.

(C) Ultraviolet absorber: usually from 0.1 to 20 parts by weight, preferably from 0.3 to 10 parts by weight, more preferably from 0.5 to 8 parts by weight, per 100 parts by weight of (A) the polyfunctional (meth)acrylate and (B) the urethane (meth)acrylate. If it is too small, the transparent heat ray reflective laminate of the present invention may not be able to sufficiently absorb ultraviolet rays, and when it is used as a window material, ultraviolet rays are likely to penetrate into a vehicle, and further, the cured layer, the resin layer, the heat ray reflective layer or the substrate contained in the transparent heat ray reflective laminate of the present invention is likely to be deteriorated by the ultraviolet rays. On the other hand, if it is too much, when the cured layer is to be formed by curing with active energy rays, particularly ultraviolet rays, sufficient curing may not be obtained.

(D) Photopolymerization initiator: usually from 0.05 to 10 parts by weight, preferably from 0.1 to 8 parts by weight, more preferably from 0.5 to 5 parts by weight, per 100 parts by weight of (A) the polyfunctional (meth)acrylate and (B) the urethane (meth)acrylate.

Further, the cured layer preferably contains a photostabilizer from the viewpoint of the weather resistance, and such a photostabilizer is preferably preliminarily added to the coating fluid. Its content is usually from 0.1 to 15 parts by weight, preferably from 0.5 to 10 parts by weight, particularly preferably from 0.8 to 5 parts by weight, per 100 parts by

weight of the total amount of the polyfunctional (meth)acrylate and the urethane (meth)acrylate. If it is too small, no adequate effect may be obtainable, and if it is too much, the cured layer may not sufficiently be cured.

Further, in a case where the cured layer in the present invention and the above coating fluid contain the above-mentioned colloidal silica, its content is preferably from 10 to 40 parts by weight per 100 parts by weight of the total amount of (A) the polyfunctional (meth)acrylate and (B) the urethane (meth)acrylate components, from the viewpoint of the scratch resistance/weather resistance. It is particularly preferred to use colloidal silica dispersed in an organic solvent, since high transparency can be obtained when a coating film is formed. Typically, it is preferred to employ an organosilicasol dispersed in a solvent having a hydroxy group or a polar solvent having a ketone group. Specifically, "IPA-ST" (IPA-dispersed ORGANOSILICASOL, manufactured by Nissan Chemical Industries, Ltd.), "MEK-ST" (MEK-dispersed ORGANOSILICASOL, manufactured by Nissan Chemical Industries, Ltd.), "MIBK-ST" (MIBK-dispersed ORGANOSILICASOL, manufactured by Nissan Chemical Industries, Ltd.), or a sol obtained by subjecting such an organosilicasol as a starting material to a solvent substitution with another solvent having a hydroxy group (e.g. a PGM-dispersed organosilicasol) may, for example, be mentioned.

Further, in a case where the cured layer in the present invention and the coating fluid contain the above-mentioned other components, they may be added in an amount whereby the effective performance of such other components can be obtained, but their content is usually from 0.5 to 50 parts by weight per 100 parts by weight of the total amount of (A) the polyfunctional (meth)acrylate and (B) the urethane (meth)acrylate component, from the viewpoint of the curing property/weather resistance of the cured layer.

The amount of the solvent in the cured layer-forming coating fluid of the present invention may be 0 wt% (no solvent), or usually at most 95 wt%, preferably at most 80 wt%, further preferably at most 70 wt%. If the amount of the solvent is too much, it is required to make the coating film thick in order to obtain an effective thickness of the cured layer, in such a case, coating non-uniformity or drying non-uniformity is likely to result.

[METHOD FOR FORMING CURED LAYER]

(COATING/DRYING)

The cured layer in the present invention is formed by applying the above-described active energy ray-curable composition or cured layer-forming coating fluid on the resin layer by wet film-forming and curing the formed coating film preferably by irradiation with active energy rays. The coating is not particularly limited, and it may be carried out by any coating method such as a dip coating method, a flow coating method, a spray coating method, a spin coating method, a bar coating method, a curtain coating method, a die coating method, a gravure coating method, a roll coating method, a blade coating method or an air knife coating method.

Further, at that time, the layer thickness of the applied active energy ray-curable composition or cured layer-forming coating fluid is not particularly limited, but it is usually at least 10 μm, preferably at least 30 μm, more preferably at least 50 μm and usually at most 300 μm, preferably at most 200 μm, more preferably at most 120 μm.

Further, coating may be carried out all at once or may be carried out dividedly in two or more times, but usually, it is economically advantageous and preferred to carry out the coating all at once.

In a case where a solvent is used, as the case requires, for the formation of the cured layer in the present invention, the solvent is removed by carrying out drying after the coating. Preferred ranges of the drying conditions in such a case may be different depending upon the boiling point of the solvent, the material of the substrate, the applied amount, etc., but usually, the drying is carried out at a temperature of from 30 to 150˚C for from 1 to 60 minutes, preferably at a temperature of from 80 to 120˚C for from 1 to 10 minutes. If the drying temperature is too low or the drying time is too short, the solvent is likely to remain. If the drying temperature is too high, or the drying time is too long, a useful substrate may be limited from the viewpoint of the heat resistance, or organic components in the coating fluid may be decomposed.

(CURING OF COMPOSITION FOR CURED LAYER)

There is no particularly restriction as to the curing method at the time of curing the above applied layer to form a cured layer, but, as mentioned above, it is preferred to use irradiation with active energy rays.

At the time of curing by active energy rays, the applied layer is irradiated with active energy rays to have a polymerization reaction of a monomer or oligomer initiated in the applied layer.

The active energy rays are electromagnetic waves (γ-rays, X-rays, ultraviolet rays, visible light, infrared rays, microwaves, etc.) or particle beams (electron beams, α-rays, various atomic rays, etc.) which have a function to act on a polymerization initiator to initiate the necessary polymerization reaction thereby to let it generate a chemical species to initiate the polymerization reaction.

For example, as examples of active energy rays which are preferably employed, ultraviolet rays, visible light

and electron beams are preferred, and more preferred are ultraviolet rays and electron beams, from the viewpoint of the energy and a common light source being useful.

In a case where ultraviolet rays are to be used, it is common to employ a method of using, as a polymerization initiator, a photoradical initiator to generate radicals by ultraviolet rays. At that time, a photosensitizer may be used in combination, as the case requires. The ultraviolet rays may have an optional wavelength so long as the composition for a cured layer is thereby curable. For example, the wavelength is usually at least 200 nm, preferably at least 250 nm, and usually within a range of at most 400 nm. The photosensitizer which may be used in combination at that time, as the case requires, may, for example, be ethanolamine, diethanolamine, triethanolamine, N-methyldiethanolamine, methyl 4-dimethylaminobenzoate, ethyl 4-dimethylaminobenzoate, amyl 4-dimethylaminobenzoate or 4-dimethylaminoacetophenone.

Further, as the apparatus to radiate ultraviolet rays, an optional apparatus may be employed, and it is possible to preferably employ a known optional apparatus, such as a high pressure mercury lamp, a metal halide lamp or an ultraviolet lamp having a structure to generate ultraviolet rays by microwaves. The output power of such an apparatus is usually from 10 to 200 W/cm, and such an apparatus is preferably installed at a distance of from 5 to 80 cm from the object to be irradiated, so as to minimize photo deterioration, heat deterioration, heat deformation, etc. of the object to be irradiated.

Further, the composition for a cured layer may also be cured preferably by electron beams as mentioned above, whereby it is possible to obtain a cured product excellent in mechanical properties, particularly in tensile elongation properties. In a case where electron beams are employed, the light source and irradiation apparatus are expensive, but use of an initiator can be omitted, and polymerization can be carried out without hindrance by oxygen, and accordingly, the surface curing degree will be excellent, and thus this method may sometimes be preferably employed. The electron beam radiation apparatus to be used for irradiation with electron beams is not particularly limited with respect to its system, and an optional apparatus may be employed. For example, a curtain type, an area beam type, a broad beam type or a pulse beam type may be mentioned. Further, the acceleration voltage at the time of irradiation with electron beams is usually preferably from 10 to 1,000 kV.

The intensity of active energy rays to be irradiated for curing is optional so long as it is capable of curing the composition for a cured layer, but irradiation is preferably carried out with an energy of usually at least 0.1 $J/cm^2$, preferably at least 0.2 $J/cm^2$. Further, irradiation is preferably carried out within an energy range of usually at most 20 $J/cm^2$, preferably at most 10 $J/cm^2$, more prefealby at most 8 $J/cm^2$, further preferably at most 7 $J/cm^2$, particularly preferably at most 5 $J/cm^2$. The active energy rays may suitably selected for use depending upon the type of the composition for a cured layer, so long as the intensity is in such a range.

Further, irradiation with active energy rays may be carried out in one step or may be carried out dividedly in two or more steps. Further, as the energy ray source, usually, a diffuse ray source is employed whereby active energy rays will spread in all directions.

<THICKNESS OF CURED LAYER>

The cured layer of the transparent heat ray reflective laminate of the present invention, to be thus formed, has a thickness of usually from 0.1 to 50 μm, preferably from 0.5 to 40 μm, particularly preferably from 1 to 30 μm, although it may vary depending upon the properties required for the particular application, the constituting material of the cured layer, etc. If the thickness of the cured layer is too thick, peeling is likely to occur by an internal stress due to shrinkage upon curing, and if it is too thin, adequate effects for abrasion resistance or weather resistance by providing the cured layer, may not be obtainable.

[PROPERTIES OF TRANSPARENT HEAT RAY REFLECTIVE LAMINATE]

{SPECTROSCOPIC PROPERTIES}

The spectroscopic properties of the transparent heat ray reflective laminate of the present invention (hereinafter sometimes referred to simply as the "laminate") will be shown below, but it should be understood that the present invention is by no means thereby restricted.

<VISIBLE LIGHT TRANSMITTANCE>

The visible light transmittance ($T_{VIS}$) of the laminate of the present invention is preferably from 5 to 80%, more preferably from 10 to 70%, further preferably from 15 to 60%, particularly preferably from 20 to 50%. If $T_{VIS}$ is too low, the visibility tends to be poor when the laminate is used for e.g. a window. If $T_{VIS}$ is too high, the light-shielding property or the heat-shielding property is likely to be inadequate, or when the laminate is used for e.g. a window, inside of the

room is likely to be easily seen from outside, whereby it may be difficult to secure the privacy.

Here, $T_{VIS}$ is obtained from the spectral transmittance measured by a spectrophotometer by means of the method for calculation of the visible light transmittance in accordance with JIS R3106.

<VISIBLE LIGHT REFLECTANCE>

The visible light reflectance ($R_{VIS}$) of the laminate of the present invention is usually at least 10%, preferably from 10 to 50%, more preferably from 15 to 45%, further preferably from 15 to 40%, particularly preferably from 15 to 35%. If $R_{VIS}$ is too low, the light-shielding property or the heat-shielding property is likely to be inadequate. Usually, the reflectance at the interface between glass and air is from about 4 to 8%, and it is not desirable to intentionally lower the reflectance than such a reflectance to lower the light-shielding property or the heat-shielding property. On the other hand, if $R_{VIS}$ is too high, glaring of the laminate tends to be high, whereby the good appearance is likely to be impaired.

Here, $R_{VIS}$ is obtained by means of the method for calculation of the visible light transmittance in accordance with JIS R3106, from the diffuse reflectance measured by a spectrophotometer at an incident angle of 10˚ with reference to a standard diffuse reflection plate (made of barium sulfate or aluminum oxide).

<VISIBLE LIGHT ABSORPTANCE>

The visible light absorptance ($A_{VIS}$) of the laminate of the present invention is preferably at most 85%, more preferably at most 75%, further preferably at most 65%, particularly preferably at most 60%. If $A_{VIS}$ is too high, the temperature of the laminate itself tends to be high, and it is likely that deterioration of the resin contained in the heat ray reflective layer or the resin contained in the resin layer is accelerated. Further, the visible light absorptance being high is not desirable also from such a viewpoint that it looks as colored, and the transparency will be deteriorated. The lower limit of such $A_{VIS}$ is not particularly limited, but it is usually 1 %. If it is lower than this lower limit, the visible light transmittance and/or the visible light reflectance tends to be high. If the visible light transmittance is high, the light-shielding property or the heat-shielding property tends to be low. On the other hand, if the visible light reflectance is high, glaring of the laminate tends to increase, and the good appearance is likely to be impaired.

Here, $A_{VIS}$ is calculated from the following formula.

$$A_{VIS}=100-T_{VIS}-R_{VIS}$$

Here, as mentioned above, the visible light transmittance ($T_{VIS}$) is obtained from the spectral transmittance measured by a spectrophotometer by means of the method for calculation of the visible light transmittance in accordance with JIS R3106. Whereas, the visible light reflectance ($R_{VIS}$) is obtained, as mentioned above, by means of the method for calculation of the visible light reflectance in accordance with JIS R3106, from the diffuse reflectance measured by a spectrophotometer at an incident angle of 10˚ with reference to a standard diffuse reflection plate (made of barium sulfate or aluminum oxide).

<SOLAR TRANSMITTANCE>

The solar transmittance ($T_{SUN}$) of the laminate of the present invention is preferably at most 70%, more preferably at most 60%, further preferably at most 55%, particularly preferably at most 50%, especially preferably at most 30%. If $T_{SUN}$ is higher than this, the light-shielding property or the heat-shielding property tends to be inadequate. The lower limit of such $T_{SUN}$ is not particularly limited, but it is usually 5%. If it is lower than this lower limit, the transparency of the laminate tends to be low.

Here, $T_{SUN}$ is obtained from the spectral transmittance measured by a spectrophotometer by means of the method for calculation of the solar transmittance in accordance with JIS R3106.

<SOLAR REFLECTANCE>

The solar reflectance ($R_{SUN}$) of the laminate of the present invention is preferably at least 15%, more preferably at least 17%, particularly preferably at least 19%, especially preferably at least 21 %. If $R_{SUN}$ is lower than 15%, the heat-shielding property may sometimes be inadequate. The upper limit of such $R_{SUN}$ is not particularly limited, but it is usually at most 75%, preferably at most 70%. If $R_{SUN}$ is too high, the visible light reflectance tends to be high, and glaring of the laminate tends to increase, and the good appearance may be impaired.

Here, $R_{SUN}$ is obtained by using the method for calculation of the solar reflectance in accordance with JIS

R3106 from the diffuse reflectance measured by a spectrophotometer at an incident angle of 10˚ with reference to a standard diffuse reflection plate (made of barium sulfate or aluminum oxide).

$R_{SUN}$ is measured from the side containing the heat ray reflective layer to the substrate.

<SOLAR ABSORPTANCE>

The solar absorptance ($A_{SUN}$) of the laminate is preferably at most 80%, more preferably at most 70%, further preferably at most 60%, particularly preferably at most 50%. If $A_{SUN}$ is too high, the temperature of the heat ray reflective layer itself tends to be high, and the deterioration may be accelerated. The lower limit of such $A_{SUN}$ is not particularly limited, but usually it is 5%. If it is lower than this lower limit value, the solar transmittance and/or the solar reflectance tends to be high. If the solar transmittance is high, the light-shielding property or the heat-shielding property tends to be low. On the other hand, if the solar reflectance is high, the visible light reflectance may be high, and in such a case, glaring of the laminate tends to increase, and the good appearance may be impaired.

Here, $A_{SUN}$ is calculated from the following formula.

$$A_{SUN}=100-T_{SUN}-R_{SUN}$$

Here, the solar transmittance ($T_{SUN}$) is obtained, as mentioned above, from the spectral transmittance measured by a spectrophotometer by means of the calculation method for solar transmittance in accordance in with JIS R3106. Whereas, the solar reflectance ($R_{SUN}$) is obtained, as mentioned above, by means of the method for calculation of the solar reflectance in accordance with JIS R3106 from the diffuse reflectance measured by a spectrophotometer at an incident angle of 10˚ with reference to a standard diffuse reflection plate (made of barium sulfate or aluminum oxide).

<SELECTIVE REFLECTIVITY FOR INFRARED RAY $R_{IR}/R_{VIS}$>

The selective reflectivity for infrared ray of the laminate of the present invention is preferably at least 1.05, more preferably from 1.05 to 50, further preferably from 1.10 to 40, particularly preferably from 1.15 to 30. If the selective reflectivity is lower than the above lower limit, the visible light reflectance tends to be high in order to increase the heat-shielding property, and glaring of the laminate tends to increase, whereby the good appearance is likely to be impaired. If the selective reflectivity is higher than the above upper limit, the radiowave permeability may be deteriorated.

Here, the selective reflectivity is calculated by the following formula from the infrared reflectance ($R_{IR}$) and the visible light reflectance ($R_{VIS}$).

$$\text{Selective reflectivity for infrared ray}=R_{IR}/R_{VIS}$$

Here, $R_{IR}$ is obtained by means of the method for calculation of the solar reflectance in accordance with JIS R3106 from the diffuse reflectance measured by a spectrophotometer at an incident angle of 10˚ with reference to a standard diffuse reflection plate (made of barium sulfate or aluminum oxide) by setting the wavelength range to be from 780 nm to 1,300 nm. Whereas, $R_{VIS}$ is obtained by means of the method for calculation of the visible light reflectance in accordance with JIS R3106 from the diffuse reflectance measured by a spectrophotometer at an incident angle of 10˚ with reference to a standard diffuse reflection plate (made of barium sulfate or aluminum oxide), as mentioned above.

<SELECTIVE REFLECTIVITY FOR SUNLIGHT $R_{VIS}/R_{SUN}$>

The heat ray reflective laminate of the present invention is one to present a relatively high heat ray reflection and, on the other hand, a low visible light reflection by a single layer heat ray reflection film, and an index for such selectivity (hereinafter sometimes referred to as "selective index $S_{ML}$" is represented by:

$$\text{Selective reflectivity } S_{ML}=R_{VIS}/R_{SUN}$$

Here, $R_{VIS}$ is the above-mentioned visible light reflectance of the heat ray reflective laminate, and $R_{SUN}$ is the solar reflectance obtained in accordance with JIS R3106, provided that $R_{SUN}$ is calculated by the calculation method disclosed in JIS R3106 using a spectral reflectance, by taking, as the spectral reflectance, a diffuse reflectance on the side of the heat ray reflective laminate where light including heat rays such as sunlight enters, which is measured with

reference to barium sulfate or aluminum oxide within a wavelength range in accordance with JIS R3106.

The selectivity index $S_{ML}$ of the heat ray reflective laminate of the present invention is preferably at most 1.0, more preferably at most 0.95, further preferably at most 0.9, particularly preferably at most 0.8. If $S_{ML}$ is larger than the above upper limit, the visible light reflectance tends to be high in order to increase the heat ray-shielding property, and glaring of the heat ray reflective laminate tends to increase, whereby the good appearance may be impaired. On the other hand, the selectivity index $S_{ML}$ is usually preferably larger than 0.1. If $S_{ML}$ is smaller than this lower limit, the heat ray reflective laminate is obliged to have a small visible light reflectance, and reflection of visible light having a high energy density contained in sunlight tends to be small, and the heat-shielding property is likely to be low.

<HAZE>

The haze of the laminate of the present invention is preferably from 0.05 to 40%, more preferably from 0.1 to 20%, further preferably from 0.5 to 10%, particularly preferably from 0.5 to 5%. If the haze of the laminate is made to be lower than the above lower limit, the transparent substrate is required to be thin, whereby the mechanical strength is likely to be inadequate. If the haze is too high, the visibility is likely to be poor when the laminate is used for e.g. a window.

The haze may be measured by a haze meter.

{ENVIRONMENTAL DURABILITY}

The laminate of the present invention is excellent in environmental durability, as one of its effects, and shows the following preferred properties.

<WET HEAT RESISTANCE>

The laminate of the present invention is excellent in wet heat resistance. As its index, a reflectance change r (%) may be mentioned which is obtained by carrying out the following wet heat resistance test.

(WET HEAT RESISTANCE TEST)

The transparent heat ray reflective laminate of the present invention is left to stand for 300 hours in a high temperature high humidity environment at 85°C under a relative humidity of 85%, and the change r% in the reflectance between before and after such high temperature high humidity treatment is calculated by the following formula.

$$r(\%)=(R_b-R_a)\times100/R_a$$

(wherein $R_a$ and $R_b$ are, respectively, the reflectances before and after the wet heat resistance test to light having a wavelength of 1,500 nm at the heat ray reflective layer surface of the transparent heat ray reflective laminate.)

The laminate of the present invention exhibits an excellent environmental durability such that the absolute value of r is usually at most 80%, preferably at most 50%, further preferably at most 30%, particularly preferably at most 20%, especially preferably at most 10%. If r is larger than this upper limit, the electroconductive path of the metal of the heat ray reflective layer will be broken, and the heat-shielding performance will be lost, or fusion of metal is likely to proceed so that the reflectance is increased to the visible light region, and consequently, glaring is likely to be brought about.

Further, as another index for the degree of the wet heat resistance of the laminate of the present invention, in a case where the laminate of the present invention is left to stand for 100 hours in a high temperature high humidity environment at 85°C under a relative humidity of 85%, the width of change in reflectance ($r2_{IR}$) between before and after the high temperature high humidity treatment is calculated by the following formula, and it is usually from 0.6 to 3.0, preferably from 0.7 to 2.0, more preferably from 0.8 to 1.5, further preferably from 0.9 to 1.1. If $r2_{IR}$ is lower than the above lower limit, the heat-shielding property tends to be low. If $r2_{IR}$ is higher than the above upper limit, glaring increases, whereby the good appearance is likely to be impaired.

$$r2_{IR}=R2_{IR}2/R2_{IR}1$$

(wherein $R2_{IR}1$ and $R2_{IR}2$ are, respectively, the reflectances before and after the high temperature high humidity treatment at a wavelength of 1,500 nm).

<HEAT RESISTANCE>

The laminate of the present invention is excellent in heat resistance, as one of its effects. The degree of the heat resistance is preferably such that when the laminate of the present invention is heated at 150˚C for 30 minutes, between before and after the heat treatment, the reflectance, the surface roughness of the heat ray reflective film and the width of change in haze are preferably the following (1) to (3), respectively.

(1) The reflectance of the laminate before and after the heat treatment is measured, and its ratio being the change in reflectance ($r_{IR}$) is calculated by the following formula, and such a value is usually from 0.8 to 3.0, preferably from 0.8 to 2.0, more preferably from 0.9 to 1.5. If $r_{IR}$ is lower than the above lower limit, glaring increases, whereby the good appearance is likely to be impaired. If $r_{IR}$ is higher than the above upper limit, the heat-shielding property tends to be low.

$$r_{IR}= R_{IR}1/R_{IR}2$$

(wherein $R_{IR}1$ and $R_{IR}2$ are, respectively, the reflectances at a wavelength of 780 nm before and after the heat treatment.)

(2) The surface roughness of the heat ray reflective film on the laminate is measured before and after the heat treatment, and its ratio being the surface roughness change ($r_{Ra}$) is calculated by the following formula, and this value is usually from 0.8 to 3.0, preferably from 0.8 to 2.0, more preferably from 0.9 to 1.5. If $r_{Ra}$ is lower than the above lower limit, the smoothness of the heat ray reflective film surface tends to be high, and the adhesion with a film laminated on this film is likely to be deteriorated. If $r_{Ra}$ is higher than the above upper limit, the incident light is likely to be scattered, whereby the good appearance may be impaired.

$$r_{Ra}=Ra2/Ra1$$

(wherein Ra1 and Ra2 are, respectively, the surface roughnesses before and after the heat treatment.

(3) The haze of the laminate is measured before and after the heat treatment, and its ratio being the haze change ($r_H$) is calculated by the following formula, and its value is usually from 0.5 to 2.0, preferably 0.8 to 10, more preferably from 0.8 to 5, further preferably from 0.9 to 2.0. If $r_H$ is lower than the above lower limit, smoothness of the heat ray reflective film surface tends to be high, and the adhesion with a film laminated on this film is likely to be deteriorated. If $r_H$ is higher than the above upper limit, the visibility is likely to be poor when the laminate is used for e.g. a window.

$$r_H=H2/H1$$

(wherein H1 and H2 are, respectively, the hazes before and after the heat treatment.)

[SPECIFIC CONSTRUCTIONS OF TRANSPARENT HEAT RAY REFLECTIVE LAMINATE]

The constructions of the transparent heat ray reflective laminate of the present invention are exemplified in Figs. 1(a) to 1(e). In Figs. 1(a) to 1(e), 1 represents a transparent substrate, 2 a heat ray reflective layer, 3 a resin layer, and 4 a cured layer. Here, Figs. 1(a) to 1(e) show examples of the laminate of the present invention, and the present invention is by no means limited to those shown in the drawings.

Fig. 1(a) illustrates the basic construction of the transparent heat ray reflective laminate of the present invention and is an example wherein on one side of the transparent substrate 1, the heat ray reflective layer 2 and the resin layer 3 are sequentially laminated. Fig. 1 (b) is an example wherein the cured layer 4 is further provided thereon. Fig. 1 (c) is an example wherein the cured layer 4 is provided on the reverse side to the side having the heat ray reflective layer 2 of the transparent substrate 1 in Fig. 1 (a). Fig. 1 (d) is an example wherein the resin layer 3 and the cured layer 4 are sequentially laminated on the reverse side to the side having the heat ray reflective layer 2 of the transparent substrate 1 in Fig. 1(a). Fig. 1(e) is an example wherein the heat ray reflective layer 2, the resin layer 3 and the cured layer 4 are sequentially laminated on each side of the transparent substrate 1.

Thus, in the transparent heat ray reflective laminate of the present invention, two layers each of the heat ray reflective layer, the resin layer and the cured layer may be provided to one sheet of the transparent substrate. Otherwise, it may take a construction wherein two sheets of the transparent substrate are bonded by an intermediate film, and the

heat ray reflective layer, the resin layer and the cured layer are provided to each sheet.

[SIZE OF TRANSPARENT HEAT RAY REFLECTIVE LAMINATE]

The size of the transparent heat ray reflective laminate of the present invention is not particularly limited, but in a case where it is used as a window material for buildings or automobiles, the size of the laminate (the area of the plate surface) is, for example, from about 1,000 $cm^2$ to 5 $m^2$, so that it may be suitably used for sunlight-shielding. Further, when it is used as a sunshade for window (such as a sun visor), the size of the laminate (the area of the plate surface) is, for example, from about 100 $cm^2$ to 2,000 $cm^2$.

[USE]

According to the transparent heat ray reflective laminate of the present invention, it is possible to provide a transparent heat-shielding component which has a high heat ray reflection performance and which has a high environmental durability and is excellent in cost performance, and when such a component is applied particularly to a window material, it is possible to improve the comfort in the living room or in a vehicle particularly in a summer season, or to attain energy saving due to reduction of the air conditioner load.

The form in use of the transparent heat ray reflective laminate of the present invention may be one wherein the transparent heat ray reflective laminate formed in a film-shape is laminated on a window (such will hereinafter be referred to as a "laminated type"), a form wherein it is laminated between two sheets of window material, or a form wherein the window material itself is used as the transparent substrate and it is included as a constituting element of the transparent heat ray reflective laminate (such will hereinafter be referred to as a "window material provided with heat ray-shielding function").

The above window material provided with heat ray-shielding function may suitably be used as a window material for automobiles. It is useful particularly at a site where colored glass having a visible light transmittance of at most 75% is applicable, and the heat ray-shielding function will be most efficiently provided especially when it is applied to a roof as a horizontal component. Further, it is possible to impart a heat ray-shielding function also to a side window, a rear window or a back window as an inclined component, since sunlight entered in an inclined direction can be reflected. Particularly, a window material provided with heat ray-shielding function employing a transparent resin substrate has merits in that as compared with a window material using a glass substrate, it can contribute to weight reduction of a vehicle, and further, it is possible to expand a vehicle design or ornamental design utilizing the degree of freedom in shaping or coloring efficiency.

With a vehicle such as an automobile having such a window material provided with heat ray-shielding performance mounted, the comfort in the space in the vehicle can be increased since the heat rays are shielded, and the air conditioner load is reduced, and further, deterioration of the interior components will be prevented, and their durability will be improved.

EXAMPLES

Now, the present invention will be described in further detail with reference to Examples, but it should be understood that the present invention is by no means restricted to the following Examples.

Here, the evaluations of the heat ray reflective metal film (the same as the heat ray reflective layer or the heat ray reflective film) and the heat ray reflective laminate were carried out by the following methods.

<THICKNESS>

The thickness of the heat ray reflective metal film (the heat ray reflective layer) was, when the substrate was glass, evaluated by means of a step/surface roughness/fine shape-measuring apparatus (P15, manufactured by KLA Tencor) from the step when a part of a sample was scraped off. The measuring conditions were such that the measured length was 1 mm, the scanning rate was 10 $\mu$m/sec, and the needle pressure was 0.2 mg.

The thickness of the heat ray reflective metal film (the heat ray reflective layer) was, when the substrate was a resin, evaluated by means of a transmission electron microscope (H-9000UHR, manufactured by Hitachi, Ltd.) by observing the cross section of a sample at an acceleration voltage of 100 kV.

The thickness of the resin layer adjacent to the heat ray reflective metal film (the heat ray reflective layer) was, when the substrate was glass, evaluated by means of a step/surface roughness/fine shape-measuring apparatus, by measuring the step when a part of a sample was scraped off, and deducting the thickness of the heat ray reflective metal film (the heat ray reflective layer). Further, in Examples V-1 to V-6 and Comparative Examples V-1 to V-5, the thickness of the heat ray reflective layer was sufficiently thin as compared with the resin layer and accordingly regarded

as being in an error range.

The thickness of the resin layer adjacent to the heat ray reflective metal film (the heat ray reflective layer) was, when the substrate was resin, evaluated by means of a reflection spectroscopic thickness meter (FE-3000, manufactured by Otsuka Electronics Co., Ltd.) by deducting the thickness of the heat ray reflective metal film. Further, in Examples VI-1 to V-6 and Comparative Examples V-1 to V-5, the thickness of the heat ray reflective layer was sufficiently thin as compared with the resin layer and accordingly regarded as being in an error range.

The thickness of the cured layer was obtained by measuring the thickness of the resin layer+the cured layer by a reflection spectroscopic thickness meter (manufactured by Otsuka Electronics Co., Ltd.) and deducting the thickness of the resin layer which was preliminarily measured.

<SURFACE ROUGHNESS>

The surface roughness (Ra) was evaluated by a step/surface roughness/fine shape-measuring apparatus (P15, manufactured by KLA Tencor). The measuring conditions were such that the measured length was 500 μm, the scanning rate was 20 μm/sec, and the needle pressure was 0.2 mg.

<CONTACT ANGLE>

From a syringe, 4 μl of a sample solution was dropped, and after 30 seconds, the contact angle was measured by means of a contact angle measuring apparatus (FTA 125, manufactured by First Ten Angstroms). The measurement environment was in the atmospheric air at 23˚C under a relative humidity of 50%.

<PORES>

A scanning electron microscopic (SEM) observation of the heat ray reflective metal film formed on a substrate was carried out by a scanning electron microscope (S-4500, manufactured by Hitachi, Ltd.) (detector: upper, acceleration voltage: 15 kV, magnifications: 60,000 times). Here, pretreatment such as electroconductive coating was not carried out. The size of the visual field was set to be 1,530 nm x 1,920 nm. In such a SEM image, the metal portion and the pore portion were distinguished by binarization. From such a binarized image, individual pore areas were measured, and the area-weighted average area and the pore area ratio were calculated. For the image processing, "Image Pro Plus" manufactured by NIPPON ROPER was used.

<SURFACE RESISTIVITY>

The surface resistivity was measured by attaching PSP probe to a low resistivity meter (LORESTA-GP (manufactured by Mitsubishi Chemical Analytech).

<HAZE>

The haze at D65 light was measured by a haze meter (HZ-2, manufactured by Suga Test Instruments Co., Ltd.).

<VISIBLE LIGHT TRANSMITTANCE ($T_{VIS}$)>

The visible light transmittance ($T_{VIS}$) of a test sample is obtained from the spectral transmittance measured by a spectrophotometer (U-4000, manufactured by Hitachi, Ltd.) by means of the method for calculation of the visible light transmittance in accordance with JIS R3106.

$T_{VIS}$ of the heat ray reflective film is the following (1) or (2).

(1) In the case of a laminate having the heat ray reflective film formed on a glass substrate having the minimum transmittance of at least 87% at a wavelength of from 380 nm to 2,500 nm, the visible light transmittance of such a laminate.

(2) In the case other than the above (1) i.e. in the case of a laminate having the heat ray reflective film formed on a substrate other than the glass substrate having the minimum transmittance of at least 87% at a wavelength of from 380 nm to 2,500 nm, a value obtained by dividing the spectral transmittance of such a laminate by the spectral transmittance of the substrate on which the heat ray reflective film is formed.

In Examples wherein glass was used as the substrate, the measurement was made by the above (1), and in Examples wherein other than glass was used as the substrate, the measurement was made by the above (2).

$T_{VIS}$ of the laminate is the visible light transmittance of a laminate having the heat ray reflective film laminated on the substrate.

<VISIBLE LIGHT REFLECTANCE ($R_{VIS}$)>

The visible light reflectance ($R_{VIS}$) of a test sample is obtained by means of the method for calculation of the visible light reflectance in accordance with JIS R3106 from the diffuse reflectance measured by a spectrophotometer at an incident angle of 10° using a light-absorbing blackout sheet (#65, manufactured Edmund Optics Japan) as a light trap, with reference to barium sulfate or aluminum oxide, by a spectrophotometer (U-4000, manufactured by Hitachi Ltd.).
Each of $R_{VIS}$ of the heat ray reflective film and $R_{VIS}$ of the laminate is the visible light reflectance of a laminate having the heat ray reflective film laminated on the substrate.
In Examples I, II and III, barium sulfate was used as the reference material, and in Examples IV and V, aluminum oxide was used as the reference material.

<VISIBLE LIGHT ABSORPTANCE ($A_{VIS}$)>

The visible light absorptance ($A_{VIS}$) of a test sample was calculated from the following formula by using the visible light transmittance ($T_{VIS}$) and the visible light reflectance ($R_{VIS}$).

$$A_{VIS}\,(\%)=100-T_{VIS}\,(\%)-R_{VIS}\,(\%)$$

$A_{VIS}$ of the heat ray reflective film was calculated from the visible light transmittance and the visible light reflectance of the heat ray reflective film. Further, $A_{VIS}$ of the laminate was calculated from the visible light transmittance and the visible light reflectance of the laminate.

<SOLAR TRANSMITTANCE ($T_{SUN}$)>

The solar transmittance ($T_{SUN}$) of a test sample is obtained from the spectral transmittance measured by a spectrophotometer (U-4000, manufactured by Hitachi, Ltd.) by means of the method for calculation of the solar transmittance in accordance with JIS R3106.
$T_{SUN}$ of the heat ray reflective film is the following (3) or (4).

(3) In the case of a laminate having the heat ray reflective film formed on a glass substrate having the minimum transmittance of at least 87% at a wavelength of from 380 nm to 2,500 nm, the solar transmittance of such a substrate.
(4) In the case other than the above (3) i.e. in the case of a laminate having the heat ray reflective film formed on a substrate other than the glass substrate having the minimum transmittance of at least 87% at a wavelength of from 380 nm to 2,500 nm, a value obtained by dividing the spectral transmittance of such a laminate by the spectral transmittance of the substrate on which the heat ray reflective film is formed.

In Examples wherein glass was used as the substrate, the measurement was made by the above (3), and in Examples wherein other than the glass was used as the substrate, the measurement was made by the above (4).
$T_{SUN}$ of the laminate is the solar transmittance of a laminate having the heat ray reflective film laminated on the substrate.

<SOLAR REFLECTANCE ($R_{SUN}$)>

The solar reflectance ($R_{SUN}$) of a test sample is obtained by means of the method for calculation of the solar reflectance in accordance with JIS R3106 from the diffusion reflectance measured by a spectrophotometer at an incident angle of 10° by using a light-absorbing blackout sheet (#65, manufactured by Edmund Optics, Japan) as a light trap, with reference to barium sulfate or aluminum oxide by a spectrophotometer (U-4000, manufactured by Hitachi, Ltd.).
Each of $R_{SUN}$ of the heat ray reflective film and $R_{SUN}$ of the laminate is the solar reflectance of a laminate having the heat ray reflective film laminated on the substrate.
In Examples I, II and III, barium sulfate was used as the reference material, and in Examples IV and V, aluminum oxide was used as the reference material.

<SOLAR ABSORPTANCE ($A_{SUN}$)>

The solar absorptance ($A_{SUN}$) of a test sample was calculated from the following formula by using the solar transmittance ($T_{SUN}$) and the solar reflectance ($R_{SUN}$).

$$A_{SUN}\ (\%)=100-T_{SUN}\ (\%)\ -R_{SUN}\ (\%)$$

$A_{SUN}$ of the heat ray reflective film was calculated from the solar transmittance and the solar reflectance of the heat ray reflective film. Further, $A_{SUN}$ of the laminate was calculated from the solar transmittance and the solar reflectance of the laminate.

<SELECTIVE REFLECTIVITY FOR INFRARED RAY ($R_{IR}/R_{VIS}$)>

The selective reflective for infrared ray was calculated by the following formula.

Selective reflectivity for infrared ray=$R_{IR}/R_{VIS}$

Here, the infrared reflectance ($R_{IR}$) of a test sample is obtained from the diffuse reflectance measured by a spectrophotometer at an incident angle of 10˚ by using a light-absorbing blackout sheet (#65, manufactured by Edmund Optics Japan) as a light trap, with reference to barium sulfate, by means of the method for calculation of the solar reflectance in accordance with JIS R3106 by setting the wavelength range to be from 780 nm to 1,300 nm.

Each of $R_{IR}$ of the heat ray reflective film and $R_{IR}$ of the laminate is the infrared reflectance of the laminate having the heat ray reflective film laminated on the substrate.

<CHROMATICITY>

The spectral reflectance of a test sample was measured by a spectrophotometer ("U-4000", manufactured by Hitachi, Ltd.), and chromaticity a* and b* in the L*a*b* color system were calculated in accordance with JIS Z8729.

The color changes Δa* and Δb* by lamination of a resin layer were calculated from the following formulae from a* and b* of a heat ray reflective metal film and a heat ray reflective laminate having a resin layer formed on such a heat ray reflective metal film.

$$\Delta a^*=|a2^*-a1^*|$$

$$\Delta b^*=|b2^*-b1^*|$$

Here, a1* and a2* are, respectively, a* of a substrate provided with the heat ray reflective metal film and a* of a heat ray reflective laminate having the resin layer further formed thereon, and b1* and b2* are, respectively, b* of a laminate provided with the heat ray reflective metal film and b* of a heat ray reflective laminate having the resin layer further formed thereon.

<DECREASE RATIO OF MAXIMUM REFLECTANCE>

In a case where the conversion step was applied, the decrease ratio of the maximum reflectance at a wavelength of from 500 to 600 nm was calculated from the following formula.

$$\text{Decrease ratio}=(R1-R2)\times 100/R2$$

Here, R1 and R2 are, respectively, the maximum reflectance of the precursor layer and the maximum reflectance of the heat ray reflective layer after the conversion step, at a wavelength of from 500 to 600 nm, measured by a spectrophotometer.

<INCREASE RATIO OF MAXIMUM REFLECTANCE>

In a case where the conversion step was applied, the increase of the maximum reflectance at a wavelength

of from 1,500 to 2,000 nm was calculated from the following formula.

$$\text{Increase ratio}=(R4-R3)\times 100/R4$$

Here, R3 and R4 are, respectively, the maximum reflectance of the precursor layer and the maximum reflectance of the heat ray reflective layer after the conversion step, at a wavelength of from 1,500 to 2,000 nm measured by a spectrophotometer.

<SELECTIVE REFLECTIVITY FOR SUNLIGHT ($R_{SUN}/R_{VIS}$)>

The selective reflectivity for sunlight was calculated by the following formula from the above-mentioned solar reflectance ($R_{SUN}$) and visible light reflectance ($R_{VIS}$).

$$\text{Selective reflectivity}= R_{SUN}/R_{VIS}$$

<HEAT RESISTANCE TEST>

A test sample was heated for 30 minutes in a constant temperature dryer (DO-450FPA, manufactured by As One Corporation) at 150˚C.

(EVALUATION OF HEAT RESISTANCE)

(1) Before and after the above heat resistance test, the reflectance on the heat ray reflective film surface of the laminate was measured by a spectrophotometer (U-4000, manufactured by Hitachi, Ltd.), and its ratio being the change in reflectance ($r_{IR}$) was calculated by the following formula.

$$r_{IR}= R_{IR}1/R_{IR}2$$

Here, $R_{IR}1$ and $R_{IR}2$ are, respectively, the reflectances at a wavelength of 780 nm before and after the heat resistance test.

(2) Before and after the heat resistance test, the surface roughness of the laminate (the surface roughness of the heat ray reflective film) was measured, and its ratio being the change in surface roughness ($r_{Ra}$) was calculated by the following formula.

$$r_{Ra}=Ra2/Ra1$$

Here, Ra1 and Ra2 are, respectively, the surface roughnesses before and after the heat resistance test.

(3) Before and after the heat resistance test, the haze of the laminate was measured, and its ratio being the change in haze ($r_H$) was calculated by the following formula.

$$r_H=H2/H1$$

Here, H1 and H2 are, respectively, the hazes before and after the heat resistance test.

<WET HEAT RESISTANCE TEST I>

A test sample was left to stand for 100 hours in a small size environmental tester (SH-241, manufactured by Espec Corporation) at 85˚C under a humidity of 85%RH.

(EVALUATION OF WET HEAT RESISTANCE)

Before and after the above wet heat resistance test, the reflectance on the heat ray reflective film surface of the laminate was measured by a spectrophotometer (U-4000, manufactured by Hitachi, Ltd.), and its ratio being the change in reflectance ($r2_{IR}$) was calculated by the following formula.

$$r2_{IR}=R2_{IR}2/R2_{IR}1$$

Here, $R2_{IR}1$ and $R2_{1R}2$ are, respectively, the reflectances at a wavelength of 1,500 nm before and after the wet heat resistance test.

<WET HEAT RESISTANCE TEST II>

A test sample was left to stand for 300 hours in a small size environmental tester (SH-241, manufactured by Espec Corporation) at 85˚C under a humidity of 85%RH.

(EVALUATION OF WET HEAT RESISTANCE)

After the wet heat resistance test, with respect to one free from layer peeling, the reflectance on the heat ray reflective layer surface of the laminate was measured by a spectrophotometer (U-4000, manufactured by Hitachi, Ltd.) before and after the above wet heat resistance test, and its ratio being the change in reflectance (r) was calculated by the following formula.

$$r=(R_b-R_a)\times100/R_a$$

(wherein $R_a$ and $R_b$ are, respectively, the reflectances at 1,500 nm before and after the wet heat resistance test.)

<EVALUATION OF COATING DEFECTS>

A test sample was observed by naked eyes, and among coating defects formed when the coating film formed by the coating fluid for the heat ray reflective film was repelled from the substrate, ones having a diameter of at least 0.5 mm were counted, whereby a case where the number was at least 0.2 defect/$cm^2$ was evaluated to be " x", and a case where the number was less than 0.2 defect/$cm^2$ was evaluated to be "○".

<SALT WATER DURABILITY TEST>

The surface of a test sample was scratched to have a linear scratch mark of about 3 cm, and the sample was immersed in an aqueous sodium chloride solution (5 wt%) and left to stand at 40˚C for 24 hours, whereupon the change of the sample was observed. A case where whitening was observed around the scratch mark was evaluated to be " x ", and a case where no such whitening was observed, was evaluated to be "O".

[EXAMPLE I-1]

<PREPARATION OF COATING FLUID I-A>

11.9 Parts by weight of a silver colloid aqueous solution(average particle size evaluated by a dynamic light scattering method: 23 nm, solid content concentration: 3.6 wt%, pH 5.1, citric acid content: 2.1 wt%) and 0.09 part by weight of a 3 wt% polyvinyl alcohol aqueous solution ("PVA117", manufactured by Kuraray Co., Ltd., degree of polymerization: 1,700, Tg=83˚C) were mixed to prepare coating fluid I-A.

<PREPARATION OF HEAT RAY REFLECTIVE METAL FILM I-A>

0.8 mL of coating fluid I-A was dropped on a slide glass (manufactured by Matsunami Glass Ind., Ltd., substrate size: 76 mm x 26 mm, thickness: 1.3 mm, solar absorptance: 6%, surface roughness: 0.2 nm) and applied by a spin coater ("1H-D7", manufactured by Mikasa Co., Ltd.) under a condition of 500 rpm for 30 seconds, followed by heat-

drying for 10 minutes on a hot plate ("HPD-3000", manufactured by As One Corporation) at 70˚C. Then, heat-drying was carried out for 10 minutes in a constant temperature dryer ("DO-450FPA", manufactured by As One Corporation) at 150˚C to prepare heat ray reflective metal film I-A, and various evaluations were carried out. The evaluation results of heat ray reflective metal film I-A are shown in Tables 2a and 2b. Further, an SEM photograph of heat ray reflective metal film I-A is shown in Fig. 2.

[EXAMPLE I-2]

<PREPARATION OF COATING FLUID I-B>

Coating fluid I-B was prepared by carrying out the same operation as in Example I-1 except that the silver colloid aqueous solution was changed to 29.0 parts by weight, and the 3 wt% polyvinyl alcohol aqueous solution was changed to 1.0 part by weight.

<PREPARATION OF HEAT RAY REFLECTIVE METAL FILM I-B>

Heat ray reflective metal film I-B was prepared by carrying out the same operation as in Example I-1 except that coating fluid I-B was used, and the time for heat-treatment at 150˚C after drying at 70˚C was changed to 30 minutes, and various evaluations were carried out. The evaluation results of heat ray reflective metal film I-B are shown in Tables 2a and 2b. Further, an SEM photograph of heat ray reflective metal film I-B is shown in Fig. 3.

[EXAMPLE I-3]

<PREPARATION OF COATING FLUID I-C>

Coating fluid I-C was prepared by carrying out the same operation as in Example I-1 except that the silver colloid aqueous solution was changed to 11.1 parts by weight, and the 3 wt% polyvinyl alcohol aqueous solution was changed to 0.86 part by weight.

<PREPARATION OF HEAT RAY REFLECTIVE METAL FILM I-C>

Heat ray reflective metal film I-C was prepared by carrying out the same operation as Example I-2 except that coating fluid I-C was used, and various evaluations were carried out. The evaluation results of heat ray reflective metal film I-C are shown in Tables 2a and 2b. Further, an SEM photograph of heat ray reflective metal film I-C is shown in Fig. 4.

[EXAMPLE I-4]

<PREPARATION OF COATING FLUID I-D>

0.06 Part by weight of aluminum(III) tris(2,4-pentanedionate) (manufactured by Tokyo Chemical Industry Co., Ltd.) was dissolved in 13 parts by weight of methanol (manufactured by Junsei Chemical Co., Ltd.), whereupon 6.6 parts by weight of silicate MSEP2 (manufactured by Mitsubishi Chemical Corporation) and 1.5 parts by weight of demineralized water were added, followed by stirring at room temperature for 2 days. To 0.5 part by weight of the obtained solution, 4.5 parts by weight of ethanol (manufactured by Junsei Chemical Co., Ltd.) was added to obtain a silicate solution.

To 0.25 part by weight of the obtained silicate solution, 2.8 parts by weight of the same silver colloid aqueous solution as used in Example I-1, was mixed to prepare coating fluid I-D.

<PREPARATION OF HEAT RAY REFLECTIVE METAL FILM I-D>

Heat ray reflective metal film I-D was prepared by carrying out the same operation as in Example I-2 except that coating fluid I-D was used, and various evaluations were carried out. The evaluation results of heat ray reflective metal film I-D are shown in Tables 2a and 2b. Further, an SEM photograph of heat ray reflective metal film I-D is shown in Fig. 5. Further, a non-metal binder in this Example is thermosetting, and the binder content is 7.2% in the coating fluid, based on the weight of the binder and fine metal particles. Further, the content of the binder in the heat ray reflective metal film when the condensation polymerization has completely proceeded, is 6.9%.

<EXAMPLE I-5]

<PREPARATION OF COATING FLUID I-E>

2,006 Parts by weight of a silver colloid aqueous solution (average particle size evaluated by dynamic light scattering method: 27 nm, solid content concentration: 3.6 wt%, pH 5.1, citric acid content: 2.1 wt%), 72 parts by weight of the same 3 wt% polyvinyl alcohol aqueous solution as used in Example I-1, 448 parts by weight of a 0.1 wt% of dodecylsodium sulfate (manufactured by Kishida Chemical Co., Ltd.) and 2,099 parts by weight of demineralized water were mixed to prepare coating fluid I-E.

<PREPARATION OF HEAT RAY REFLECTIVE METAL FILM I-E>

Coating fluid I-E was applied on a polycarbonate (PC) substrate ("lupilon sheet NF-2000U", manufactured by Mitsubishi Engineering-Plastics Corporation, substrate size: 10 cm × 10 cm, thickness: 2 mm, linear expansion coefficient: $6.5\times10^{-5}$/K, glass transition temperature: 145˚C, solar absorptance: 2%, surface roughness: 3 nm) by means of a desktop dip coater ("TD-1 501 ", manufactured by SATUMA Communication Industry Co., Ltd.) and dried at 70˚C for 10 minutes. Then, heating was carried out for 1 hour in a constant temperature dryer at 120˚C to prepare heat ray reflective metal film I-E, and various evaluations were carried out. The evaluation results of heat ray reflective metal film I-E are shown in Tables 2a and 2b. Further, an SEM photograph of heat ray reflective metal film I-E is shown in Fig. 6.

[EXAMPLE I-6]

Heat ray reflective metal film I-F was prepared by carrying out the same operation as in Example I-2 except that the heat treatment condition after drying at 70˚C was changed to 120˚C for 30 minutes, and various evaluations were carried out. The evaluation results of heat ray reflective metal film I-F are shown in Tables 2a and 2b. Further, an SEM photograph of heat ray reflective metal film I-F is shown in Fig. 7.

[COMPARATIVE EXAMPLE I-1]

The same slide glass as used in Example I-1 was set in a vacuum vapor deposition apparatus ("VPC-410", manufactured by ULVAC KIKO Inc.). Further, in a resistance heating boat made of molybdenum, silver (manufactured by Furuuchi Chemical Corporation) was put and attached to the vacuum vapor deposition apparatus. Rough pumping of the vacuum vapor deposition apparatus was carried out by an oil-sealed rotary pump, and then evacuation was carried out by means of a diffusion pump until the vacuum degree in the vacuum vapor deposition apparatus became at most $5\times10^{-5}$ Torr. Then, the heating boat was energized and heated, and silver was vapor-deposited on the substrate at a vapor deposition rate of from 1.0 to 1.5 Å/sec to prepare heat ray reflective metal film I-G, and various evaluations were carried out. The evaluation results of heat ray reflective metal film I-G are shown in Tables 2a and 2b. Further, an SEM photograph of heat ray reflective metal film I-G is shown in Fig. 17.

[COMPARATIVE EXAMPLE I-2]

0.8 mL of the same silver colloid aqueous solution as used in Example I-1 was dropped on the same slide glass as used in Example I-1 and applied by a spin coater ("1H-D7", manufactured by Mikasa Co., Ltd.) under a condition of 500 rpm for 30 seconds, followed by heating for 10 minutes on a hot plate ("HPD-3000", manufactured by As One Corporation) at 70˚C to prepare heat ray reflective metal film I-H, and various evaluations were carried out. The evaluation results of heat ray reflective metal film I-H are shown in Tables 2a and 2b. Further, an SEM photograph of heat ray reflective metal film I-H is shown in Fig. 18.

[COMPARATIVE EXAMPLE I-3]

Heat ray reflective metal film I-I was prepared by carrying out the same operation as in Example I-2 except that in Example I-2, the heat treatment time at 150˚C was changed to 2 minutes, and various evaluations were carried out. The evaluation results of heat ray reflective metal film I-I are shown in Tables 2a and 2b. Further, as shown in Tables 2a and 2b, heat ray reflective metal film I-I had an extremely high surface resistivity and was poor in electrical conductivity, whereby observation by SEM was not possible by charge up.

[COMPARATIVE EXAMPLE I-4]

<PREPARATION OF COATING FLUID I-J>

7.6 Parts by weight of the same silver colloid aqueous solution as used in Example I-1 and 4.4 parts by weight of the same 3 wt% polyvinyl alcohol aqueous solution as used in Example I-1 were mixed to prepare coating fluid I-J.

<PREPARATION OF HEAT RAY REFLECTIVE METAL FILM I-J>

Heat ray reflective metal film I-J was prepared by carrying out the same operation as in Comparative Example I-2 except that coating fluid I-J was used instead of the silver colloid aqueous solution, and various evaluations were carried out. The evaluation results of heat ray reflective metal film I-J are shown in Tables 2a and 2b. Further, an SEM photograph of heat ray reflective metal film I-J is shown in Fig. 10.

[COMPARATIVE EXAMPLE I-5]

Heat ray reflective metal film I-K was prepared by carrying out the same operation as in Example I-2 except that coating fluid I-J was used instead of coating fluid I-B, and various evaluations were carried out. The evaluation results of heat ray reflective metal film I-K are shown in Tables 2a and 2b. Further, an SEM photograph of heat ray reflective metal film I-K is shown in Fig. 11.

[COMPARATIVE EXAMPLE I-6]

Heat ray reflective metal film I-L was prepared by carrying out the same operation as in Example I-1 except that heat treatment at 150˚C was not carried out, and various evaluations were carried out. The evaluation results of heat ray reflective metal film I-L are shown in Tables 2a and 2b. Further, an SEM photograph of heat ray reflective metal film I-L is shown in Fig. 12.

[COMPARATIVE EXAMPLE I-7]

Heat ray reflective metal film I-M was prepared by carrying out the same operation as in Example I-3 except that the heat treatment after drying at 70˚C was changed to 100˚C for 10 minutes, and various evaluations were carried out. The evaluation results of heat ray reflective metal film I-M are shown in Tables 2a and 2b. Further, an SEM photograph of heat ray reflective metal film I-M is shown in Fig. 13.

[COMPARATIVE EXAMPLE I-8]

Heat ray reflective metal film I-N was prepared by carrying out the same operation as in Example I-4 except that heat treatment after drying at 70˚C was not carried out, and various evaluations were carried out. The evaluation results of heat ray reflective metal film I-N are shown in Tables 2a and 2b..

[COMPARATIVE EXAMPLE I-9]

Heat ray reflective metal film I-O was prepared by carrying out the same operation as in Comparative Example I-1 except that vapor deposition was carried out so that the thickness of the heat ray reflective metal film became 14 nm, and various evaluations were carried out. The evaluation results of heat ray reflective metal film I-O are shown in Tables 2a and 2b. Further, an SEM photograph of heat ray reflective metal film I-O is shown in Fig. 14.

[COMPARATIVE EXAMPLE I-10]

Heat ray reflective metal film I-H obtained in Comparative Example I-2 was heated at 150˚C for 10 minutes to prepare heat ray reflective metal film I-P, and various evaluations were carried out. The evaluation results of heat ray reflective metal film I-P are shown in Tables 2a and 2b. Further, an SEM photograph of heat ray reflective metal film I-P is shown in Fig. 15.

[EXAMPLE I-7]

<PREPARATION OF HEAT RAY REFLECTIVE LAMINATE I-A>

On heat ray reflective metal film I-E prepared in Example I-5, a 10 wt% polymethyl methacrylate solution in polypropylene glycol monomethyl ether was applied by spray coating and dried at room temperature, followed by heat drying for 10 minutes in a constant temperature dryer at 90˚C to prepare heat ray reflective laminate I-A, and various evaluations were carried out. The evaluations of heat ray reflective laminate I-A are shown in Tables 3a and 3b. Further, the refractive index of the resin layer formed on the heat ray reflective metal film I-E is 1.5.

[EXAMPLE I-8]

On heat ray reflective laminate I-A prepared in Example I-7, a 30 wt% pentaerythritol triacrylate solution in polypropylene glycol monomethyl ether was applied by spray coating and heated by an IR heater, followed by heat drying for 10 minutes at 90˚C. Then, irradiation was carried out for 2 minutes by a high pressure mercury lamp ("HI-6 (N)", manufactured by GS Yuasa Lighting) to prepare heat ray reflective laminate I-B, and various evaluations were carried out. The evaluation results of heat ray reflective laminate I-B are shown in Tables 3a and 3b. Further, the refractive index of the resin layer formed on the heat ray reflective laminate I-A is 1.5.

[EXAMPLE I-9]

On heat ray reflective metal film I-F prepared in Example I-6, 2.5 mL of the same 3 wt% polyvinyl alcohol aqueous solution as used in Example I-1 was uniformly spread and dried for 2 hours on a hot plate at 50˚C to prepare heat ray reflective laminate I-C, and various evaluations were carried out. The evaluation results of heat ray reflective laminate I-C are shown in Tables 3a and 3b. Further, the refractive index of the resin layer formed on the heat ray reflective metal film I-F is 1.5.

[EXAMPLE I-10]

On heat ray reflective metal film I-F prepared in Example I-6, 0.6 mL of the silicate solution prepared in Example I-4 was applied by a spin coater ("1H-D7", manufactured by Mikasa Co., Ltd.) under a condition of 500 rpm for 30 seconds and heated for 30 minutes on a hot plate ("HPD-3000", manufactured by As One Corporation) at 150˚C to prepare heat ray reflective laminate I-D, and various evaluations were carried out. The evaluation results of heat ray reflective laminate I-D are shown in Tables 3a and 3b. Further, the refractive index of the resin layer formed on the heat ray reflective metal film I-F is 1.5.

[EXAMPLE I-11]

On heat ray reflective metal film I-F, 1.6 mL of the same 3 wt% polyvinyl alcohol aqueous solution as used in Example I-1 was applied by a spin coater under a condition of 500 rpm for 30 seconds and then heated for 10 minutes on a hot plate at 70˚C to prepare heat ray reflective laminate I-E. The evaluation results of heat ray reflective laminate I-E are shown in Tables 3a and 3b. Further, the refractive index of the resin layer formed on the heat ray reflective metal film I-F is 1.5.

[EXAMPLE I-12]

<PREPARATION OF DISPERSION I-F1>

109 Parts by weight of titanium oxide ("TTO-55A", manufactured by Ishihara Sangyo Kaisha, Ltd., particle size: 30 to 50 nm, aluminum hydroxide-surface treated product) as inorganic particles, 11 parts by weight of a polyethyleneimine type block polymer as a dispersant and 180 parts by weight of polypropylene glycol monomethyl ether acetate (PGMEA, manufactured by Wako Pure Chemical Industries, Ltd.) were dispersed for 24 minutes by a beads mill dispersing machine using 141 parts by weight of zirconia beads having a diameter of 0.5 mm, and then, after changing the beads to zirconia beads having a diameter of 0.1 mm, dispersed by the beads mill dispersing machine for 147 minutes to obtain dispersion I-F1.

<PREPARATION OF SOLUTION I-F2>

A PGMEA solution containing 50 wt% of 4,4'-bis(β-methacryloyoxyethylthio)diphenylsulfone as a binder and 0.25 wt% of 2,4,6-trimethylbenzoyldiphenylphosphine oxide as a polymerization initiator, was prepared and designated as solution I-F2.

<PREPARATION OF SOLUTION I-F3>

A mixed liquid of dispersion I-F1 and solution I-F2 in a weight mixed ratio of 1:7 was prepared and designated as solution I-F3.

<PREPARATION OF SOLUTION I-F4>

A mixed liquid of solution I-F3 and PGMEA in a weight mixed ratio of 1:2 was prepared and designated as solution I-F4.

<PREPARATION OF HEAT RAY REFLECTIVE LAMINATE I-F>

On heat ray reflective metal film I-F prepared in Example I-6, 0.8 mL of solution IF4 was applied by a spin coater ("1H-D7", manufactured by Mikasa Co., Ltd.) under a condition of 1,000 rpm for 30 seconds and then heated at 120˚C for 10 minutes. Then, irradiation with ultraviolet rays was carried out at an irradiation intensity of 2.8 $J/cm^2$ by means of an electrodeless mercury lamp with an output power of 184 W/cm (manufactured by Fusion UV Systems, Inc.) to prepare heat ray reflective laminate I-F, and various evaluations were carried out. The evaluation results of heat ray reflective laminate I-F are shown in Tables 3a and 3b. Further, the refractive index of the resin layer formed on heat ray reflective metal film I-F is 2.1.

[EXAMPLE I-13]

On heat ray reflective metal film I-F prepared in Example I-6, primer PH-91 (manufactured by Momentive Performance Materials, Inc.) was applied by a film applicator provided with a micrometer ("SA-204", manufactured by Sheen) and then dried at 50˚C for 10 minutes. Then, a hard coating silicone varnish Tosguard 510 (manufactured by Momentive Performance Materials, Inc.) was applied by a film applicator provided with a micrometer and then dried at 50˚C for 10 minutes, followed by heat treatment at 120˚C for 30 minutes to prepare heat ray reflective laminate I-G, and various evaluations were carried out. The evaluation results of heat ray reflective laminate I-G are shown in Tables 3a and 3b.

[EXAMPLE I-14]

To 39 parts by weight of a 10 wt% polymethyl methacrylate solution in polypropylene glycol monomethyl ether, 0.7 part by weight of Diaresin Green C (manufactured by Mitsubishi Chemical Corporation) was added to prepare coloring liquid I-A. On heat ray reflective laminate I-A prepared in Example I-7, coloring liquid I-A was applied by a film applicator provided with a micrometer ("SA-204", manufactured by Sheen) and then heat-dried for 10 minutes in a constant temperature dryer at 90˚C to prepare heat ray reflective laminate I-H, and various evaluations were carried out. The evaluation results of heat ray reflective laminate I-H are shown in Tables 3a and 3b.

TABLE 2a

| | Substrate | Heat reflective metal film | ray Thickness (nm) | Binder content (wt%) | Surface resistivity (Ω/□) | Area-weighted average area of pores ($nm^2$) | Pore area ratio (%) | Ra of heat ray reflective metal film (nm) | Contact angle (°) of coating fluid to substrate |
|---|---|---|---|---|---|---|---|---|---|
| Ex.I-1 | Glass | I-A | 33 | 0.6 | 6 | 491 | 18.0 | 2.0 | 45 |
| Ex.I-2 | Glass | I-B | 29 | 2.8 | 6 | 268 | 10.9 | 0.7 | 48 |
| Ex.I-3 | Glass | I-C | 32 | 6.1 | 11 | 260 | 12.6 | 0.8 | 52 |
| Ex.I-4 | Glass | I-D | 33 | 7.2 | 23 | 163 | 12.2 | 1.0 | 58 |
| Ex.I-5 | PC | I-E | 25 | 2.9 | 16 | 548 | 8.9 | 4.4 | 83 |
| Ex.I-6 | Glass | I-F | 32 | 2.8 | 12 | 296 | 17.3 | 0.3 | 48 |
| Comp. Ex.I-1 | Glass | I-G | 30 | 0.0 | 1 | 13 | 0.1 | 0.5 | - |
| Comp. Ex.I-2 | Glass | I-H | 28 | 0.0 | 240,000 | 1078 | 20.5 | 1.8 | 54 |
| Comp. Ex.I-3 | Glass | I-I | 14 | 2.8 | Not possible to measure | * | * | 5.9 | 48 |
| Comp. Ex.I-4 | Glass | I-J | 73 | 32.5 | 3,731,000 | 376 | 7.3 | 0.5 | 48 |
| Comp. Ex.I-5 | Glass | I-K | 60 | 32.5 | Not possible to measure | 417 | 9.5 | 0.5 | 48 |
| Comp. Ex.I-6 | Glass | I-L | 38 | 0.6 | 69,800 | 635 | 19.0 | 5.4 | 45 |
| Comp. Ex.I-7 | Glass | I-M | 38 | 6.1 | 1,170 | 112 | 9.0 | 1.3 | 52 |
| Comp. Ex.I-8 | Glass | I-N | 40 | 7.2 | 238 | 20 to 5000 | 3 to 40 | 0.7 | 58 |
| Comp. Ex.I-9 | Glass | I-O | 14 | 0.0 | 6 | 3960 | 25.4 | 0.4 | - |
| Comp. Ex.I-10 | Glass | I-P | 32 | 0.0 | $1.0\times10^3$ | 10803 | 29.7 | 0.7 | 54 |

*Not possible to observe the form by scanning electron microscope

TABLE 2b

| | Visible light | | | Sunlight (300 - 2100nm) | | | Selectivity index $S_{SL}$ | Reflected color | |
|---|---|---|---|---|---|---|---|---|---|
| | Transmittance (%) | Reflectance (%) | Absorptance (%) | Transmittance (%) | Reflectance (%) | Absorptance (%) | | a* | b* |
| Ex.I-1 | 42 | 35 | 23 | 36 | 47 | 17 | 0.76 | 0.87 | 3.51 |
| Ex.I-2 | 46 | 37 | 17 | 36 | 50 | 14 | 0.74 | 1.35 | 4.16 |
| Ex.I-3 | 38 | 34 | 28 | 34 | 41 | 25 | 0.84 | 0.52 | 1.60 |
| Ex.I-4 | 48 | 25 | 27 | 42 | 38 | 20 | 0.68 | 1.14 | -1.16 |
| Ex.I-5 | 38 | 34 | 28 | 33 | 42 | 25 | 0.80 | 0.71 | 2.31 |
| Ex.I-6 | 36 | 34 | 30 | 31 | 42 | 27 | 0.80 | 1.04 | 2.13 |
| Comp. Ex.I-1 | 18 | 82 | 0 | 12 | 84 | 4 | 0.97 | 0.02 | 7.01 |
| Comp. Ex.I-2 | 36 | 34 | 30 | 41 | 35 | 24 | 0.97 | 3.65 | 5.70 |
| Comp. Ex.I-3 | 85 | 12 | 3 | 86 | 12 | 2 | 1.01 | 0.11 | -0.29 |
| Comp. Ex.I-4 | 30 | 20 | 50 | 31 | 25 | 44 | 0.83 | 1.20 | 1.58 |
| Comp. Ex.I-5 | 25 | 20 | 54 | 27 | 25 | 48 | 0.83 | 1.18 | 1.64 |
| Comp. Ex.I-6 | 17 | 51 | 32 | 22 | 45 | 33 | 1.14 | 2.59 | 10.37 |
| Comp. Ex.I-7 | 14 | 50 | 36 | 22 | 40 | 39 | 1.25 | -0.76 | 6.59 |
| Comp. Ex.I-8 | 10 | 58 | 32 | 32 | 50 | 18 | 1.17 | 1.94 | 11.66 |
| Comp. Ex.I-9 | 59 | 40 | 1 | 43 | 53 | 4 | 0.76 | 1.46 | 6.40 |
| Comp. Ex.I-10 | 48 | 25 | 27 | 49 | 25 | 26 | 1.03 | -0.17 | -0.35 |

TABLE 3a

| | Heat ray reflective metal film | Heat ray reflective laminate | Thickness of adjacent resin layer (μm) | Visible light | | | Haze (%) |
|---|---|---|---|---|---|---|---|
| | | | | Transmittance (%) | Reflectance (%) | Absorptance (%) | |
| Ex.I-7 | I-E | I-A | 9 | 46 | 22 | 32 | 1.0 |
| Ex.I-8 | I-E | I-B | 18 | 46 | 22 | 32 | 1.4 |
| Ex.I-9 | I-F | I-C | 30 | 48 | 18 | 34 | 0.9 |
| Ex.I-10 | I-F | I-D | 2 | 49 | 19 | 32 | 0.6 |
| Ex.I-11 | I-F | I-E | 0.25 | 54 | 8 | 38 | 0.3 |
| Ex.I-12 | I-F | I-F | 0.17 | 46 | 16 | 38 | 0.9 |
| Ex.I-13 | I-F | I-G | 6 | 34 | 22 | 44 | 0.5 |
| Ex.I-14 | I-E | I-H | 21 | 44 | 13 | 43 | 1.0 |

TABLE 3b

| | Sunlight (300 - 2100nm) | | | Selectivity index ($S_{ML}$) | Reflected color | | Change in reflected color | |
|---|---|---|---|---|---|---|---|---|
| | Transmittance (%) | Reflectance (%) | Absorptance (%) | | a* | b* | Δa* | Δb* |
| Ex.I-7 | 38 | 35 | 27 | 0.63 | 1.15 | 1.70 | 0.43 | 0.61 |
| Ex.I-8 | 38 | 35 | 27 | 0.63 | 1.10 | 1.93 | 0.39 | 0.38 |
| Ex.I-9 | 43 | 24 | 33 | 0.75 | 0.63 | 0.58 | 0.41 | 1.55 |
| Ex.I-10 | 44 | 25 | 31 | 0.75 | 0.43 | 1.35 | 0.61 | 0.77 |
| Ex.I-11 | 45 | 22 | 33 | 0.35 | 3.13 | -9.05 | 2.09 | 11.18 |
| Ex.I-12 | 40 | 27 | 33 | 0.61 | 10.20 | 0.74 | 9.15 | 1.39 |
| Ex.I-13 | 30 | 32 | 38 | 0.70 | 0.93 | 0.84 | -0.12 | -1.29 |
| Ex.I-14 | 41 | 26 | 33 | 0.49 | -1.55 | -0.85 | -2.27 | -3.16 |

<EVALUATION OF HEAT STABILITY OF HEAT RAY REFLECTIVE METAL FILM>

With respect to heat ray reflective metal films I-A, B, C, E, F, H and O each having a visible light reflectance of at most 50% and a solar reflectance of at least 30%, they were heated in a constant temperature dryer (DO-450FPA, manufactured by As One Corporation) at 150˚C for 30 minutes, and the changes in the spectral reflectance at 1,000 nm between before and after the heating were evaluated. Here, the spectral reflectance is a diffuse reflectance measured in the evaluation of the solar reflectance. The results of the evaluation of the heat stability are shown in Table 4.

TABLE 4

| | Heat ray reflective metal film | Spectral reflectance at 1,000 nm (%) | | |
|---|---|---|---|---|
| | | Before test | After test | difference |
| Ex.I-1 | I-A | 56 | 42 | -14 |
| Ex.I-2 | I-B | 42 | 43 | 1 |
| Ex.I-3 | I-C | 43 | 44 | 1 |
| Ex.I-4 | I-E | 36 | 39 | 3 |

(continued)

| | Heat ray reflective metal film | Spectral reflectance at 1,000 nm (%) | | |
|---|---|---|---|---|
| | | Before test | After test | difference |
| Ex.I-5 | I-F | 44 | 56 | 12 |
| Comp. Ex.I-2 | I-H | 37 | 19 | -18 |
| Comp. Ex.I-9 | I-O | 66 | 28 | -38 |

[CONSIDERATION OF EVALUATION RESULTS OF HEAT RAY REFLECTIVE METAL FILMS]

As shown in Tables 2a and 2b, each of heat ray reflective metal films in Examples I-1 to I-6, is a porous metal film having a thickness of from 25 to 33 nm and containing a non-metal binder, and its surface resistivity is from 6 to 23 Ω/□. Each heat ray reflective metal film has a solar reflectance of at least 35% and thus is suitable for applications for heat ray reflection. On the other hand, the absorptance is controlled to be at most 35% for visible light and at most 30% for sunlight. Further, the selectivity index is at most 0.85, and it is rich in heat ray reflection as compared with visible light reflection. As a result, the visible light reflectance is larger than 10%, but in each case, it is lower than 40%.

Whereas, the silver-vapor deposition film not containing a non-metal binder in Comparative Example I-1 has a very low proportion of pores and does not correspond to a porous metal film. Such a silver-vapor deposition film is mirror-like with its visible light reflectance exceeding 80% although the visible light absorptance and solar absorptance are low, and as such, is not suitable as a heat ray reflective metal film.

Comparative Example I-2 is a metal film not containing a non-metal binder, formed by a coating method, which is porous but has a high surface resistivity. As a result, the solar absorbance is high, and further, the selectivity index is larger than 0.85, thus being inferior in the selective reflectivity.

Comparative Example I-3 is a porous metal film which contains a non-metal binder and of which the thickness also satisfies the requirement of the present invention, but the surface resistivity is extremely high. Therefore, the solar reflectance is low at a level of 12%, such being not suitable as a heat ray reflective metal film. Further, it fails to have selective reflectivity.

Comparative Examples I-4, 5, 6, 7 and 8 are porous metal films which contain a non-metal binder and of which the film thickness also satisfies the requirement of the present invention, but represent different cases wherein the surface resistivity is extremely high. In Comparative Examples I-4 and 5, solar reflectance is obtained, but the film has a high visible light absorptance and solar absorptance, such being not suitable as a heat ray reflective metal film, In Comparative Examples I-6, 7 and 8, solar reflectance is obtained, but the visible light reflectance is high and mirror-like, and the selectivity index is larger than 0.85, thus being inferior in the selective reflectivity and not suitable as a heat ray reflective metal film.

As shown in Table 4, when the heat stability is compared with respect to metal films I-A, B, C, E, F and H in Examples being heat ray reflective metal films having a visible light transmittance of at most 50% and a solar reflectance of at least 30%, I-A, B, C, E and F containing a non-metal binder have the thermal stability improved as compared with metal film I-H in Comparative Example not containing a non-metal binder, and particularly with respect to metal films I-B, C and E in Examples, a remarkably high heat stability is obtained.

Comparative Example I-9 is a porous metal film, of which the film thickness, surface resistivity, area-weighted average area of pores and pore area ratio satisfy the requirements of the present invention, but represents a case wherein a non-metal binder is not contained. The solar reflectance is high at a level of 53%, the visible light absorptance is low at a level of 1%, and the selectivity index is at most 0.85 and thus it is rich in the heat ray reflection as compared with the visible light reflection. However, as shown in Table 4, the heat stability is low, such being not suitable as a heat ray reflective metal film.

Like Comparative Example I-2, Comparative Example 1-10 is a metal film not containing a non-metal binder formed by a coating method, which is porous, but has a high surface resistivity. As a result, the solar absorptance is high, and further, the selectivity index is larger than 0.85, thus being inferior in the selective reflectivity. Further, the area-weighted average area of pores is larger than 5,000 $nm^2$, whereby the metal film is turbid, and the good appearance is likely to be impaired.

[CONSIDERATION OF EVALUATION RESULTS OF HEAT RAY REFLECTIVE LAM I NATES]

Each of the heat ray reflective laminates in Examples I-7 to 14 is a heat ray reflective laminate prepared by laminating a porous metal film containing a non-metal binder and having a thickness of 25 nm or 32 nm on a transparent substrate and further laminating from 1 to 3 resin layers directly, and as shown in Table 3a, has a visible light reflectance

of from 8 to 22%. Further, as shown in Table 3b, each has a solar absorptance of at most 38% and a solar reflectance of at least 20% and thus is suitable as a heat ray reflective laminate. Further, the selectivity index $S_{ML}$ is lower than 0.8 in each case, and the visible light reflection is relatively low, and thus it is suitable as a heat ray reflective laminate which has glaring suppressed.

Further, the change in the reflected color by lamination of the resin layer is at most 12 in each of Δa* and Δb* in Examples I-11, 12 and 14 and is suppressed to be at most 2 especially in Examples I-7 to 10 and 13, thus indicating that the reflected color inherent to the heat ray reflective metal film I-E or F is not impaired.

[EXAMPLEII-1]

<PREPARATION OF COATING FLUID II-A>

14.5 Parts by weight of a silver colloid aqueous solution (average particle size evaluated by dynamic light scattering method: 23 nm, solid content concentration: 3.6 wt%, pH 5.1, citric acid content: 2.1 wt%) and 0.5 part by weight of a 3 wt% polyvinyl alcohol aqueous solution ("PVA117", manufactured by Kuraray Co., Ltd., polymerization degree: 1,700, Tg 83˚C) were mixed to prepare coating fluid II-A.

<PREPARATION OF HEAT RAY REFLECTIVE FILM II-A>

0.8 mL of coating fluid II-A was dropped on a slide glass (manufactured by Matsunami Glass Ind., Ltd., thickness: 1.3 mm, minimum transmittance at from 380 to 2,500 nm: 88%, solar absorptance: 6%, surface roughness: 0.2 nm) and applied by a spin coater (1H-D7, manufactured by Mikasa Co., Ltd.) under a condition of 500 rpm for 30 seconds, followed by heat drying at 70˚C for 3 minutes. Then, heating was carried out at 150˚C for 15 minutes to obtain heat ray reflective film II-A1. Here, the laminate having heat ray reflective film II-A1 formed on the glass substrate was designated as laminate II-A1.

Laminate II-A2 having heat ray reflective film II-A2 formed on a polycarbonate resin, was obtained by carrying out the same operation except that the substrate was changed to a polycarbonate (PC) resin (lupilon NF-2000U, manufactured by Mitsubishi Engineering-Plastics Corporation, thickness: 3 mm, minimum transmittance at from 380 to 2,500 nm: 14%, linear expansion coefficient: $6.5\times10^{-5}$/K, Tg: 145˚, solar absorptance: 4%, surface roughness: 5 nm).

<EVALUATION OF HEAT RAY REFLECTIVE FILM II-A1>

Of heat ray reflective film II-A1, the film thickness was 40 nm, the visible light transmittance ($T_{VIS}$) was 33%, the visible light reflectance ($R_{VIS}$) was 31 %, the visible light absorptance ($A_{VIS}$) was 36%, the solar transmittance ($T_{SUN}$) was 29%, the solar reflectance ($R_{SUN}$) was 36%, the solar absorptance ($A_{SUN}$) was 35%, the selective reflectivity for infrared ray ($R_{IR}/R_{VIS}$) was 1.25, and the surface roughness (Ra) (Ra1) was 1.0 nm.

<EVALUATION OF LAMINATE II-A1>

Of laminate II-A1, the visible light transmittance ($T_{VIS}$) was 33%, the visible light reflectance ($R_{VIS}$) was 31 %, the visible light absorptance ($A_{VIS}$) was 36%, the solar transmittance ($T_{SUN}$) was 29%, the solar reflectance ($R_{SUN}$) was 36%, the solar absorptance ($A_{SUN}$) was 35%, the selective reflectivity for infrared ray ($R_{IR}/R_{VIS}$) was 1.25, and the haze was 1.1 %.

<EVALUATION OF HEAT RAY REFLECTIVE FILM II-A2>

Of heat ray reflective film II-A2, the film thickness was 35 nm, the visible light transmittance ($T_{VIS}$) was 33%, the visible light reflectance ($R_{VIS}$) was 36%, the visible light absorptance ($A_{VIS}$) was 31 %, the solar transmittance ($T_{SUN}$) was 30%, the solar reflectance ($R_{SUN}$) was 40%, the solar absorptance ($A_{SUN}$) was 30%, the selective reflectivity for infrared ray ($R_{IR}/R_{VIS}$) was 1.16, and the surface roughness (Ra) (Ra1) was 5.0 nm.

<EVALUATION OF LAMINATE II-A2>

Of laminate II-A2, the visible light transmittance ($T_{VIS}$) was 29%, the visible light reflectance ($R_{VIS}$) was 36%, the visible light absorptance ($A_{VIS}$) was 35%, the solar transmittance ($T_{SUN}$) was 26%, the solar reflectance ($R_{SUN}$) was 40%, the solar absorptance ($A_{SUN}$) was 35%, the selective reflectivity for infrared ray ($R_{IR}/R_{VIS}$) was 1.16, and the haze was 0.5 %.

<EVALUATION OF HEAT RESISTANCE OF LAMINATE II-A1 >

Between before and after the heat resistance test of laminate II-A1, the reflectance change ($r_{IR}$) was 1.0, the surface roughness change ($r_{Ra}$) was 1.0, and the haze change ($r_H$) was 1.2.

<EVALUATION OF HEAT RESISTANCE OF LAMINATE II-A2>

Between before and after the heat resistance test of laminate II-A2, the reflectance change ($r_{IR}$) was 0.9, the surface roughness change ($r_{Ra}$) was 0.8, and the haze change ($r_H$) was 1.1.

The evaluation results of heat ray reflective films II-A1 and A2 are shown in Table 5, the evaluation results of laminates II-A1 and A2 are shown in Table 6, and the heat resistance test results of laminates II-A1 and A2 are shown in Table 7. Further, SEM photographs of heat ray reflective films II-A1 and A2 are shown in Figs. 16 and 17.

[EXAMPLES II-2]

<PREPARATION OF COATING FLUID II-B>

Coating fluid II-B was prepared by carrying out the same operation as in Example II-1 except that the same silver colloid aqueous solution as in Example II-1 was changed to 14.8 parts by weight, and the 3 wt% polyvinyl alcohol aqueous solution was changed to 0.2 part by weight.

<PREPARATION OF HEAT RAY REFLECTIVE FILM II-B>

Heat ray reflective film II-B was prepared by carrying out the same operation as in Example II-1 except that coating fluid II-B was applied on a slide glass, and the heating time at 150˚C was changed to 30 minutes, and various evaluations were carried out.

The evaluation results of heat ray reflective film II-B are shown in Table 5, the evaluation results of laminate II-B composed of heat ray reflective film II-B and the glass substrate are shown in Table 6, and the heat resistance test results of laminate II-B are shown in Table 7. Further, an SEM photograph of heat ray reflective film II-B is shown in Fig. 18.

[EXAMPLE II-3]

Heat ray reflective film II-C was prepared by carrying out the same operation as in Example II-1 except that the substrate was the same polycarbonate resin as one used in Example II-1, and the heat treatment condition was changed to 120˚C for 1 hour, and various evaluations were carried out.

The evaluation results of heat ray reflective film II-C are shown in Table 5, the evaluation results of laminate II-C composed of heat ray reflective film II-C and the polycarbonate resin substrate are shown in Table 6, the heat resistance test results of laminate II-C are shown in Table 7, and the results of wet heat resistance test I are shown in Table 8. Further, an SEM photograph of heat ray reflective film II-C is shown in Fig. 19.

[EXAMPLE II-4]

<PREPARATION OF COATING FLUID II-4>

7.8 Parts by weight of partially benzyl-modified polyvinyl alcohol ("S-LEC KX-1", manufactured by Sekisui Chemical Co., Ltd.), 8.1 parts by weight of 2-propanol (manufactured by Junsei Chemical Co., Ltd.) and 4.1 parts by weight of demineralized water were mixed to prepare polymer solution II-dp.

0.5 Part by weight of pentaerythritol triacrylate (manufactured by Osaka Organic Chemical Industry Ltd.) as a monomer, 0.01 part by weight of IRGACURE 2959 (manufactured by Ciba Specialty Chemicals) as an initiator, 7.3 parts by weight of propylene glycol monomethyl ether (manufactured by Wako Pure Chemical Industries, Ltd.) and 7.3 parts by weight of demineralized water were mixed to prepare monomer solution II-dm.

4.9 Parts by weight of a silver colloid aqueous solution (average particle size evaluated by dynamic light scattering method: 21 nm, solid content concentration: 10.5 wt%, pH 3.7, citric acid content: 2 wt%), 2.4 parts by weight of demineralized water, 7.3 parts by weight of propylene glycol monomethyl ether, 0.3 part by weight of polymer solution II-dp and 0.3 part by weight of monomer solution II-dm were mixed to obtain coating fluid II-D.

<PREPARATION OF HEAT RAY REFLECTIVE FILM II-D>

Heat ray reflective film II-D was prepared by carrying out the same operation as in Example II-1 except that coating fluid II-D was applied to the same polycarbonate resin as used in Example II-1 and heat-treated at 120˚C for 1 hour and then cured by an ultraviolet irradiation apparatus (H bulb, manufactured by Fusion UV Systems) with an ultraviolet irradiation cumulative amount of about 2 J/cm$^2$, and the binder resin was crosslinked, and various evaluations were carried out.

The evaluation results of heat ray reflective film II-D are shown in Table 5, the evaluation results of laminate II-D composed of heat ray reflective film II-D and the polycarbonate resin substrate are shown in Table 6, the heat resistance test results of laminate II-D are shown in Table 7, and the results of the wet heat resistance test I are shown in Table 8. Further, an SEM photograph of heat ray reflective film II-D is shown in Fig. 20.

[EXAMPLE II-5]

<PREPARATION OF COATING FLUID II-E>

14.6 Parts by weight of the same silver colloid aqueous solution as in Example II-1 and 0.4 part by weight of a 3 wt% modified polyvinyl alcohol UV-curable resin were mixed to prepare coating fluid II-E.

<PREPARATION OF HEAT RAY REFLECTIVE FILM II-E>

Heat ray reflective film II-E containing a crosslinked binder resin was prepared by carrying out the same operation as in Example II-4 except that coating fluid II-E was used instead of coating fluid II-D, and various evaluations were carried out.

The evaluation results of heat ray reflective film II-E are shown in Table 5, the evaluation results of laminate II-E composed of heat ray reflective film II-E and the polycarbonate resin substrate are shown in Table 6, the heat resistance test results of laminate II-E are show in Table 7, and the results of wet heat resistance test I are shown in Table 8. Further, an SEM photograph of heat ray reflective film II-E is shown in Fig. 21.

[EXAMPLE II-6]

<PREPARATION OF COATING FLUID F>

14.5 Parts by weight of the same silver colloid aqueous solution as in Example II-1 and 0.5 part by weight of the polymer solution II-dp prepared in Example II-4 were mixed to prepare coating fluid F.

<PREPARATION OF HEAT RAY REFLECTIVE FILM II-F>

Heat ray reflective film II-F was prepared by carrying out the same operation as in Example II-3 except that coating fluid F was used instead of coating fluid II-A, and various evaluations were carried out.

The evaluation results of heat ray reflective film II-F are shown in Table 5, the evaluation results of laminate II-F composed of heat ray reflective film II-F and the polycarbonate resin substrate are shown in Table 6, the heat resistance test results of laminate II-F are shown in Table 7, and the results of wet heat resistance test I are shown in Table 8. Further, an SEM photograph of heat ray reflective film II-F is shown in Fig. 22.

[COMPARATIVE EXAMPLE II-1]

A glass substrate (manufactured by Matsunami Glass Ind., Ltd., thickness: 1.3mm) was set in a vacuum vapor deposition apparatus (VPC-41 0, manufactured by ULVAC KIKO Inc.). Further, in a resistance heating boat made of molybdenum, silver (manufactured by Furuuchi Chemical Corporation) was put and attached to the vacuum vapor deposition apparatus. Rough pumping of the vacuum vapor deposition apparatus was carried out by an oil-sealed rotary pump, and then evacuation was carried out by means of a diffusion pump until the vacuum degree in the vacuum vapor deposition apparatus became at most $5\times10^{-5}$ Torr. Then, the heating boat was energized and heated, and vapor deposition was carried out at a vapor deposition rate of from 1.0 to 1.5 Å/sec so that the thickness of the silver layer on the substrate became 14 nm to prepare heat ray reflective film II-G, and various evaluations were carried out.

The results of heat ray reflective film II-G are shown in Table 5, the evaluation results of laminate II-G composed of heat ray reflective film II-G and the glass substrate are shown in Table 6, and the heat resistance test results of laminate II-G are shown in Table 7. Further, an SEM photograph of heat ray reflective film II-G is shown in Fig. 23.

[COMPARATIVE EXAMPLE II-2]

Heat ray reflective film II-H was prepared by carrying out the same operation as in Comparative Example II-1 except that vapor deposition was carried out so that the thickness of the silver layer became 30 nm, and various evaluations were carried out.

The results of heat ray reflective film II-H are shown in Table 5, the evaluation results of laminate II-H composed of heat ray reflective film II-H and the glass substrate are shown in Table 6, and the heat resistance test results of laminate II-H are shown in Table 7. Further, an SEM photograph of heat ray reflective film II-H is shown in Fig. 24.

[COMPARATIVE EXAMPLE II-3]

0.8 mL of the same silver colloid aqueous solution as in Example II-1 was dropped on a slide glass and applied by a spin coater under a condition of 500 rpm for 30 seconds, followed by heating at 70˚C for 3 minutes to obtain heat ray reflective film II-I. Here, the laminate having heat ray reflective film II-I formed on the glass substrate was designated as laminate II-I.

The evaluation results of heat ray reflective film II-I are shown in Table 5, the evaluation results of laminate II-I are shown in Table 6, and the heat resistance test results of laminate II-I are shown in Table 7. Further, an SEM photograph of heat ray reflective film I is shown in Fig. 25.

[COMPARATIVE EXAMPLE II-4]

Heat ray reflective film II-J was prepared by carrying out the same operation as in Example II-1 except that a solution having coating fluid II-A diluted four times by demineralized water, was used, the spin coating condition was changed to 2,000 rpm, and the heating time at 150˚C was changed to 2 minutes, and various evaluations were carried out.

The results of heat ray reflective film II-J are shown in Table 5, the evaluation results of laminate II-J composed of heat ray reflective film II-J and the glass substrate are shown in Table 6, and the heat resistance test results of laminate II-J are shown in Table 7. Further, an SEM photograph of heat ray reflective film II-J is shown in Fig. 26.

TABLE 5 Evaluation results of heat ray reflective film

| | Ex.II-1 | Ex.II-1 | Ex.II-2 | Ex.II-3 | Ex.II-4 | Ex.II-5 | Ex.II-6 | Comp. Ex.II-1 | Comp. Ex.II-2 | Comp. Ex.II-3 | Comp. Ex.II-4 |
|---|---|---|---|---|---|---|---|---|---|---|---|
| Sample No. | II-A1 | II-A2 | II-B | II-C | II-D | II-E | II-F | II-G | II-H | II-I | II-J |
| Film thickness(nm) | 40 | 35 | 43 | 36 | 37 | 47 | 36 | 14 | 30 | 38 | 12 |
| Metal content in heat ray reflective film (wt%) | 95 | 95 | 97 | 95 | 95 | 95 | 95 | 100 | 100 | 98 | 95 |
| Presence or absence of binder | Present | Present | Present | Present | Present | Present | Present | Absent | Absent | Absent | Present |
| Substrate | Glass | PC | Glass | PC | PC | PC | PC | Glass | Glass | Glass | Glass |
| Contact angle (°) of coating fluid to substrate | 48 | 85 | 43 | 85 | 25 | 72 | 25 | - | - | 54 | 49 |
| $T_{VIS}$ (%) | 33 | 33 | 33 | 42 | 37 | 41 | 35 | 54 | 16 | 33 | 84 |
| $R_{VIS}$ (%) | 31 | 36 | 34 | 35 | 34 | 32 | 35 | 40 | 82 | 34 | 12 |
| $A_{VIS}$ (%) | 36 | 31 | 33 | 23 | 29 | 27 | 30 | 6 | 2 | 33 | 4 |
| $T_{SUN}$ (%) | 29 | 30 | 27 | 41 | 32 | 37 | 30 | 38 | 11 | 37 | 84 |
| $R_{SUN}$ (%) | 36 | 40 | 38 | 41 | 41 | 40 | 43 | 53 | 84 | 35 | 12 |
| $A_{SUN}$ (%) | 35 | 30 | 35 | 17 | 26 | 24 | 27 | 9 | 5 | 28 | 4 |
| $R_{IR}/R_{VIS}$ | 1.25 | 1.16 | 1.22 | 1.29 | 1.32 | 1.35 | 1.36 | 1.60 | 1.10 | 1.02 | 0.93 |
| Area-weighted average area of pores ($nm^2$) | 344 | 354 | 385 | 128 | 2453 | 302 | 671 | 3960 | 13 | 1078 | 133 |
| Pore area ratio (%) | 18.7 | 14.1 | 11.4 | 8.0 | 27.5 | 14.6 | 18.0 | 25.4 | 0.1 | 20.5 | 7.7 |
| Ra1 (nm) | 1.0 | 5.0 | 0.9 | 4.1 | 4.5 | 4.6 | 7.6 | 0.4 | 0.5 | 1.0 | 5.9 |

TABLE 6 Evaluation results of laminate

| | Ex.II-1 | Ex.II-1 | Ex.II-2 | Ex.II-3 | Ex.II-4 | Ex.II-5 | Ex.II-6 | Comp. Ex.II-1 | Comp. Ex.II-2 | Comp. Ex.II-3 | Comp. Ex.II-4 |
|---|---|---|---|---|---|---|---|---|---|---|---|
| Sample No. | II-A1 | II-A2 | II-B | II-C | II-D | II-E | II-F | II-G | II-H | II-I | II-J |
| $T_{VIS}$ (%) | 33 | 29 | 33 | 37 | 32 | 36 | 31 | 54 | 16 | 33 | 84 |
| $R_{VIS}$ (%) | 31 | 36 | 34 | 35 | 34 | 32 | 35 | 40 | 82 | 34 | 12 |
| $A_{VIS}$ (%) | 36 | 35 | 33 | 28 | 33 | 31 | 34 | 6 | 2 | 33 | 4 |
| $T_{SUN}$ (%) | 29 | 26 | 27 | 33 | 27 | 31 | 26 | 38 | 11 | 37 | 84 |
| $R_{SUN}$ (%) | 36 | 40 | 38 | 41 | 41 | 40 | 43 | 53 | 84 | 35 | 12 |
| $A_{SUN}$ (%) | 35 | 35 | 35 | 26 | 31 | 29 | 31 | 9 | 5 | 28 | 4 |
| $R_{IR}/R_{VIS}$ | 1.25 | 1.16 | 1.22 | 1.29 | 1.32 | 1.35 | 1.36 | 1.60 | 1.10 | 1.02 | 0.93 |
| Haze 1 (%) | 1.1 | 0.5 | 1.9 | 0.3 | 0.5 | 0.4 | 0.5 | 0.2 | 0.3 | 0.3 | 0.4 |

TABLE 7 Results of heat resistance test

| | Ex.II-1 | Ex.II-1 | Ex.II-2 | Ex.II-3 | Ex.II-4 | Ex.II-5 | Ex.II-6 | Comp. Ex.II-1 | Comp. Ex.II-2 | Comp. Ex.II-3 | Comp. Ex.II-4 |
|---|---|---|---|---|---|---|---|---|---|---|---|
| Sample No. | II-A1 | II-A2 | II-B | II-C | II-D | II-E | II-F | II-G | II-H | II-I | II-J |
| $r_{IR}$ | 1.0 | 0.9 | 1.0 | 0.9 | 1.0 | 0.9 | 1.0 | 2.0 | 0.9 | 1.6 | 1.1 |
| $r_{Ra}$ | 1.0 | 0.8 | 1.2 | 1.0 | 0.8 | 1.1 | 0.7 | 7.4 | 5.2 | 2.3 | 0.9 |
| $r_H$ | 1.2 | 1.1 | 1.8 | 1.1 | 1.1 | 1.2 | 1.1 | 86.0 | 3.8 | 42.1 | 1.5 |

TABLE 8 Results of wet heat resistance test I

| | Example II-3 | Example II-4 | Example II-5 | Example II-6 |
|---|---|---|---|---|
| $r2_{IR}$ | 0.7 | 1.0 | 1.0 | 0.9 |

From Tables 5 and 6, it is evident that as in Examples II-1 to 6, heat ray reflective films containing a binder resin therein and having a film thickness of at least 15 nm and their laminates each have a high solar reflectance ($R_{SUN}$) of at least 36%, a low solar absorptance ($A_{SUN}$) of at most 35% and a high selective reflectivity for infrared ray ($R_{IR}/R_{VIS}$) of at least 1.16. Further, as shown in Table 7, between before and after the heat resistance test, such films show a small change in reflectance $r_{IR}$ of about 1, a small surface roughness change ($r_{Ra}$) of about 1 and a small haze change ($r_H$) of at most 1.8, and thus have high heat resistance. Further, as shown in Examples II-1 and 3 to 6, the heat ray reflective film of the present invention can be formed even on a resin substrate.

Further, in wet heat resistance test I shown in Table 8, as in Examples II-4 and 5, as a binder resin contained in the heat ray reflective film, a curable resin is employed and crosslinked, whereby between before and after wet heat resistance test I, the change in reflectance ($r2_{IR}$) is not changed at a level of 1.0, and thus, the wet heat resistance is high as compared with a case where as in Examples II-3 and 6, the binder resin is a thermoplastic resin and is not crosslinked.

On the other hand, as in Comparative Example II-1, in a case where a binder resin is not contained in the heat ray reflective film, when the film thickness is thin at a level of 14 nm, the film has a porous structure as shown by the SEM photograph in Fig. 23 and has a high solar reflectance ($R_{SUN}$) of 53%, a low solar absorptance ($A_{SUN}$) of 9% and a high selective reflectivity for infrared ray ($R_{IR}/R_{VIS}$) of 1.60. However, as shown in Table 7, between before and after

the heat resistance test I, the change in reflectance $r_{IR}$ is 2.0, the surface roughness change ($r_{Ra}$) is 7.4 and the haze change ($r_H$) is 86.0, thus showing large changes, and the heat resistance is very low.

Further, as in Comparative Example II-2, in a case where a binder resin is not contained in the heat ray reflective film, and the film thickness is at least 15 nm, as shown in Table 7, between before and after heat resistance test I, the change in reflectance $r_{IR}$ is 0.9, the surface roughness change ($r_{Ra}$) is 5.2, and the haze change ($r_H$) is 3.8, and thus, the heat resistance is higher than in Comparative Example II-1 wherein the film thickness is less than 15 nm, but the heat resistance is lower than the heat ray reflective film containing a binder resin. Further, this film has a low pore area ratio and thus does not correspond to a porous metal film, and the visible light reflectance ($R_{VIS}$) of this film is high at a level of 82%, and thus, glaring is substantial, such being undesirable from the viewpoint of the appearance and not suitable as a heat ray reflective film.

Also in Comparative Example II-3, like in Comparative Example II-1, a binder resin is not contained in the heat ray reflective film, and thus, as shown in Table 7, between before and after the heat resistance test, the reflectance change, the surface roughness change and the haze change are large, and thus, the heat resistance is low.

As in Comparative Example II-4, even if a binder resin is contained in the heat ray reflective film, if the film thickness is thin at a level of at most 15 nm, the solar reflectance ($R_{SUN}$) is low at a level of 12% as shown in Table 5, whereby the heat ray-shielding property is inadequate, and the selective reflectivity for infrared ray ($R_{IR}/R_{VIS}$) is as low as 0.93, such being not suitable as a heat ray reflective film.

As described in the foregoing, by satisfying the conditions of the present invention, it was possible to obtain heat ray reflective films excellent in heat resistance and having a low solar absorptance and a high selective reflectivity for infrared ray, and laminates having such a heat ray reflective film formed on a transparent substrate.

[EXAMPLE III-1]

<PREPARATION OF COMPOSITION>

4.0 Parts by weight of a metal particle-containing aqueous solution having a solid content concentration of 3.7 wt%, containing silver particles (average particle size evaluated by dynamic light scattering method: 27 nm) as metal particles and citric acid as a dispersant at a concentration of 2.1 wt%, and 0.03 part by weight of a PVA aqueous solution having a PVA concentration of 3 wt%, containing polyvinyl alcohol (PVA) ("PVA117", manufactured by Kuraray Co., Ltd., polymerization degree: 1,700, Tg=83°C) as a non-metal compound, were mixed to prepare a composition. The proportion of the non-metal compound to the solid content in this composition is 2.7 wt%.

<PREPARATION OF PRECURSOR LAYER>

0.8 mL of the above composition was dropped on a slide glass (manufactured by Matsunami Glass Ind., Ltd., substrate size: 76 mm × 26 mm, thickness: 1.3 mm, total light transmittance: 90.8%, haze: 0.04%, surface roughness: 0.2 nm) and applied by a spin coater under a condition of 500 rpm for 30 seconds (room temperature, relative humidity: 60%), followed by heating for 10 minutes on a hot plate at 70°C as drying treatment to form a precursor layer. Here, the static contact angle of the composition to the substrate is at most 90°.

<PREPARATION OF HEAT RAY REFLECTIVE LAYER>

The precursor layer formed on the above glass substrate was heated for 10 minutes on a hot plate at 100°C as a conversion step to obtain a heat ray reflective layer.

<EVALUATION OF HEAT RAY REFLECTIVE LAYER>

The heat ray reflective layer had a thickness of 36 nm and a visible light transmittance ($T_{VIS}$) of 39%. The evaluation results of the heat ray reflective layer are shown in Tables 9 and 10. Further, an SEM photograph of the heat ray reflective layer is shown in Fig. 27.

[EXAMPLE III-2]

A heat ray reflective layer was prepared by carrying out the same operation as in Example III-1 except that in the conversion step, heating was carried out for 30 minutes on the hot plate at 100°C. The evaluation results of the heat ray reflective layer are shown in Tables 9 and 10. Further, an SEM photograph of the heat ray reflective layer is shown in Fig. 28.

[EXAMPLE III-3]

A heat ray reflective layer was prepared by carrying out the same operation as in Example III-1 except that in the conversion step, heating was carried out for 30 minutes on the hot plate at 150˚C. The evaluation results of the heat ray reflective layer are shown in Tables 9 and 10.

[EXAMPLE III-4]

A heat ray reflective layer was prepared by carrying out the same operation as in Example III-2 except that a composition prepared by mixing 3.4 parts by weight of the same metal particle-containing aqueous solution as in Example III-1 and 0.13 part by weight of a PVA aqueous solution, was used. The evaluation results of the heat ray reflective layer are shown in Tables 9 and 10. Further, an SEM photograph of the heat ray reflective layer is shown in Fig. 29. The proportion of the non-metal compound to the solid content in the composition used here, is 5.0 wt%.

[EXAMPLE III-5]

A heat ray reflective layer was prepared by carrying out the same operation as in Example III-4 except that in the conversion step, heating was carried out for 10 minutes on the hot plate at 150˚C. The evaluation results of the heat ray reflective layer are shown in Tables 9 and 10. Further, an SEM photograph of the heat ray reflective layer is shown in Fig. 30.

[EXAMPLE III-6]

A heat ray reflective layer was prepared by carrying out the same operation as in Example III-2 except that a composition prepared by mixing 2.8 parts by weight of the same metal particle-containing aqueous solution as in Example III-1 and 0.22 part by weight of the PVA aqueous solution, was used. The evaluation results of the heat ray reflective layer are shown in Tables 9 and 10. Further, an SEM photograph of the heat ray reflective layer is shown in Fig. 31.
The proportion of the non-metal compound to the solid content in the composition used here is 8.0 wt%.

[EXAMPLE III-7]

A heat ray reflective layer was prepared by carrying out the same operation as in Example III-6 except that in the conversion step, heating was carried out for 10 minutes on the hot plate at 150˚C. The evaluation results of the heat ray reflective layer are shown in Tables 9 and 10. Further, an SEM photograph of the heat ray reflective layer is shown in Fig. 32.

[EXAMPLE III-8A]

<PREPARATION OF COMPOSITION>

937 Parts by weight of a metal particle-containing aqueous solution having a solid content concentration of 3.5 wt%, containing silver particles (average particle size evaluated by dynamic light scattering method: 23 nm) as metal particles, and citric acid as a dispersant at a concentration of 2.1 wt%, 33 parts by weight of the same PVA aqueous solution as used in Example III-1, 102 parts by weight of 0.1 wt% dodecylsodium sulfate aqueous solution (manufactured by Kishida Chemical Co., Ltd.) and 728 parts by weight of demineralized water were mixed to prepare a composition. The proportion of the non-metal compound to the solid content in this composition is 5.0 wt%.

<PREPARATION OF PRECURSOR LAYER>

On a polycarbonate substrate ("lupilon sheet NF-2000U", manufactured by Mitsubishi Engineering-Plastics Corporation, substrate size: 10 cm × 10 cm, thickness: 2 mm, linear expansion coefficient: $6.5\times10^{-5}$/K, Tg=145˚C, total light transmittance: 88.6%, haze: 0.06%, surface roughness: 3 nm), the composition was applied by means of a desktop dip coater (room temperature, relative humidity: 50%) for a dipping time of 30 seconds and a withdrawing speed of 1.0 mm/sec and heated at 70˚C for 10 minutes as drying treatment to obtain a precursor layer. Here, the static contact angle of the composition to the substrate is at most 90˚.

<PREPARATION OF HEAT RAY REFLECTIVE LAYER>

The precursor layer prepared on the polycarbonate substrate was heated for 30 minutes in a constant temperature dryer at 120˚C as a conversion step to prepare a heat ray reflective layer. The evaluation results of the heat ray reflective layer are shown in Tables 9 and 10. Further, an SEM photograph of the heat ray reflective layer is shown in Fig. 33.

[EXAMPLE III-8B]

By the same operation as in Example III-8A, a heat ray reflective layer was formed on a polycarbonate substrate ("lupilon sheet NF-2000U", manufactured by Mitsubishi Engineering-Plastics Corporation, substrate size: 20 cm $\times$ 30 cm, thickness: 5 mm, linear expansion coefficient: $6.5\times10^{-5}$/K, Tg=145˚C, total light transmittance: 86.3%, haze: 0.1%, surface roughness: 8 nm).

In this Example, it was possible to form a uniform heat ray reflective layer on a substrate having an area of 600 $cm^2$, and it was found that by the process of the present invention, it is possible to obtain a heat ray reflective layer having an equally high heat ray reflectivity even when the size of the substrate became 6 times.

[EXAMPLE III-8C]

On the heat ray reflective layer obtained in Example III-8A, a 10 wt% polymethyl methacrylate solution in polypropylene glycol monomethyl ether was applied by spray coating and dried at room temperature, followed by heat drying for 10 minutes in a constant temperature dryer at 90˚C to prepare a heat ray reflective laminate. The evaluation results of the heat ray reflective laminate III-8C are shown in Table 11.

[EXAMPLE III-9]

<PREPARATION OF COMPOSITION>

0.06 Part by weight of aluminum(III) tris(2,4-pentanedionate) (manufactured by Tokyo Chemical Industry Co., Ltd.) was dissolved in 13 parts by weight of methanol (manufactured by Junsei Chemical Co., Ltd.), and then 6.6 parts by weight of polymethoxysiloxane ("MS51 ", manufactured by Mitsubishi Chemical Corporation) and 1.5 parts by weight of demineralized water were added, followed by stirring at room temperature for 2 days. To 0.5 part by weight of the obtained solution, 4.5 parts by weight of ethanol (manufactured by Junsei Chemical Co., Ltd.) was added to obtain an inorganic type binder solution.

To 0.25 part by weight of the obtained inorganic type binder solution, 2.8 parts by weight of the same metal particle-containing aqueous solution as used in Example III-1 was mixed to prepare a composition.

The proportion of the non-metal compound to the solid content in this composition is 9.0 wt%.

<PREPARATION OF HEAT RAY REFLECTIVE LAYER>

A heat ray reflective layer was prepared by carrying out the same operation as in Example III-3 except that the above composition was used. The evaluation results of the heat ray reflective layer are shown in Tables 9 and 10. Further, an SEM photograph of the heat ray reflective layer is shown in Fig. 18.

[COMPARATIVE EXAMPLE III-1]

0.8 mL of the same metal particle-containing aqueous solution as used in Example III-1 was dropped on the same slide glass as used in Example III-1 and applied by a spin coater under a condition of 500 rpm for 30 seconds (room temperature, relative humidity: 60%), followed by heating for 10 minutes on a hot plate at 70˚C for drying treatment, and then, heating was carried out at 150˚C for 10 minutes as a conversion step to prepare a heat ray reflective layer. The evaluation results of the heat ray reflective layer are shown in Tables 9 and 10. Further, an SEM photograph of the heat ray reflective layer is shown in Fig. 35.

The proportion of the non-metal compound to the solid content in the composition (metal particle-containing aqueous solution) used here is 2.1 wt%.

[COMPARATIVE EXAMPLE III-2]

A heat ray reflective layer was prepared by carrying out the same operation as in Example III-1 except that the

conversion step was not carried out. The evaluation results of the heat ray reflective layer are shown in Tables 9 and 10. Further, an SEM photograph of the heat ray reflective layer is shown in Fig. 36.

[COMPARATIVE EXAMPLE III-3]

A heat ray reflective layer was prepared by carrying out the same operation as in Example III-6 except that the heating time at 100˚C in the conversion step was changed to 10 minutes. The evaluation results of the heat ray reflective layer are shown in Tables 9 and 10. Further, an SEM photograph of the heat ray reflective layer is shown in Fig. 37.

[COMPARATIVE EXAMPLE III-4]

A heat ray reflective layer was prepared by carrying out the same operation as in Example III-6 except that the conversion step was not carried out. The evaluation results of the heat ray reflective layer are shown in Tables 9 and 10.

[REFERENCE EXAMPLE III-1]

On a polycarbonate substrate ("Iupilon sheet NF-2000U", manufactured by Mitsubishi Engineering-Plastics Corporation, substrate size: 10 cm × 10 cm, thickness: 2 mm, linear expansion coefficient: $6.5 \times 10^{-5}$/K, Tg=145˚C, total light transmittance: 88.6%, haze: 0.06%, surface roughness: 3 nm), a sunlight-adjusting film ("LIGHT SMOKE", manufactured by A-NEST) and a heat insulating film ("C-mal IRSM50-HC", manufactured by TOCHISEN) were bonded to obtain a heat ray reflective laminate. The evaluation results of the heat ray reflective laminate are shown in Table 11.

TABLE 9 Evaluation results of heat ray reflective layer

| | substrate | Composition | | Surface resistivity (Ω/□) | Contact angle (˚) of coating fluid to substrate | Ra of heat ray reflective layer (nm) | Conversion step | | Visible light transmittance (%) | Visible light reflectance (%) | Solar transmittance (%) | Solar reflectance (%) |
|---|---|---|---|---|---|---|---|---|---|---|---|---|
| | | Solvent | Non-metal compound to solid content (wt%) | | | | Temp. | Time | | | | |
| Ex.III-1 | Glass | Water | 2.7 | 18 | 45 | 1.2 | 100˚C | 10 min | 39 | 33 | 35 | 35 |
| Ex.III-2 | Glass | Water | 2.7 | 14 | 45 | 1.3 | 100˚C | 30 min | 43 | 32 | 38 | 37 |
| Ex.III-3 | Glass | Water | 2.7 | 19 | 45 | 0.8 | 150˚C | 30 min | 39 | 36 | 40 | 40 |
| Ex.III-4 | Glass | Water | 5.0 | 25 | 48 | 0.5 | 100˚C | 30 min | 35 | 33 | 33 | 33 |
| Ex.III-5 | Glass | Water | 5.0 | 9 | 48 | 0.7 | 150˚C | 10 min | 44 | 32 | 38 | 42 |
| Ex.III-6 | Glass | Water | 8.0 | 74 | 52 | 0.5 | 100˚C | 30 min | 21 | 40 | 25 | 36 |
| Ex.III-7 | Glass | Water | 8.0 | 11 | 52 | 0.9 | 150˚C | 10 min | 37 | 34 | 34 | 41 |
| Ex.III-8A | Polycarbonate | Water | 5.0 | 12 | 83 | 4.4 | 120˚C | 30 min | 38 | 34 | 32 | 42 |
| Ex.III-9 | Glass | Ethanol | 9.0 | 24 | 36 | 2.6 | 150˚C | 30 min | 37 | 28 | 43 | 42 |
| | Glass | Methanol | | | | | | | | | | |
| | Glass | Water | | | | | | | | | | |
| Comp. Ex. III-1 | Glass | Water | 2.1 | $1.0\times10^3$ | 54 | 0.7 | 150˚C | 10 min | 48 | 27 | 32 | 40 |
| Ex.III-2 | Glass | Water | 2.7 | $7.0\times10^4$ | 45 | 5.4 | Nil | Nil | 17 | 51 | 50 | 25 |
| Comp. Ex. III-3 | Glass | Water | 8.0 | $1.2\times10^3$ | 52 | 1.3 | 100˚C | 10 min | 14 | 42 | 22 | 41 |
| Comp. Ex. III-4 | Glass | Water | 8.0 | $1.4\times10^5$ | 52 | 1.0 | Nil | Nil | 10 | 50 | 22 | 40 |

TABLE 10 Evaluation results of heat ray reflective layer

| | Layer thickness (nm) | Surface structure | Area-weighted average area of pores ($nm^2$) | Pore area ratio (%) | Spectral properties of heat ray reflective layer between before and after conversion step | | | | | |
|---|---|---|---|---|---|---|---|---|---|---|
| | | | | | R1 (%) | R2 (%) | R3 (%) | R4 (%) | Decrease ratio at 500 to 600 nm (%) | Increase ratio at 1,500 to 2,000 nm (%) |
| Ex. III-1 | 36 | Particulate linkage | 155 | 14.4 | 58 | 35 | 35 | 41 | 66 | 15 |
| Ex. III-2 | 37 | Particulate linkage | 298 | 20.7 | 58 | 33 | 35 | 49 | 76 | 36 |
| Ex. III-3 | 44 | Particulate linkage | 20 to 5000 | 3 to 40 | 58 | 37 | 35 | 50 | 57 | 30 |
| Ex. III-4 | 37 | Particulate linkage | 153 | 12.3 | 61 | 34 | 30 | 38 | 79 | 21 |
| Ex. III-5 | 32 | Particulate linkage | 360 | 18.6 | 61 | 34 | 30 | 67 | 79 | 55 |
| Ex. III-6 | 38 | Particulate linkage | 276 | 17.4 | 61 | 42 | 27 | 30 | 45 | 10 |
| Ex. III-7 | 33 | Particulate linkage | 184 | 13.8 | 61 | 35 | 27 | 63 | 74 | 57 |
| Ex. III-8A | 32 | Particulate linkage | 548 | 8.9 | 62 | 35 | 46 | 67 | 77 | 33 |
| Ex. III-9 | 41 | Particulate linkage | 263 | 17.1 | 64 | 28 | 24 | 66 | 129 | 64 |
| Comp. Ex. III-1 | 32 | Particulate linkage | 10803 | 29.7 | 40 | 26 | 22 | 24 | 54 | 8 |
| Comp. Ex. III-2 | 38 | Particulate | 635 | 19.0 | 58 | 58 | 35 | 35 | 0 | 0 |
| Comp. Ex. III-3 | 38 | Particulate linkage | 112 | 9.0 | 61 | 52 | 27 | 30 | 17 | 10 |
| Comp. Ex. III-4 | 38 | Particulate | 20 to 5000 | 3 to 40 | 61 | 61 | 34 | 34 | 0 | 0 |

From Tables 9 and 10, it was confirmed that by applying a composition wherein the proportion of the non-metal compound to the metal particles is from 2.7 to 9.0 wt% on a substrate to form a precursor layer and carrying out a conversion step of heat-treating this precursor layer to bring the surface resistivity of the heat ray reflective layer to be at most 100 Ω/□, it is possible to reduce the maximum reflectance within a wavelength of from 500 nm to 600 nm by from 45 to 129% and to increase the maximum reflectance within a wavelength of from 1,500 nm to 2,000 nm by from 10 to 64%.

On the other hand, in Comparative Example III-1, the proportion of the non-metal compound to metal particles was small, and although it was a porous metal film, the area-weighted average area of pores was as large as at least 10,000 $nm^2$, and the surface resistivity of the heat ray reflective layer subjected to the conversion step was at least $1 \times 10^3$ Ω/□ and thus did not satisfy the range of the present invention, whereby although the maximum reflectance within a wavelength range of from 500 nm to 600 nm was reduced by 81 %, the maximum reflectance within a wavelength range of from 1,500 nm to 2,000 nm was increased only by 8%, and it was not possible to obtain a high heat ray reflectivity.

Further, in Comparative Example III-3, when the surface resistivity of the heat ray reflective layer subjected to the conversion step was made high to be $1.2 \times 10^3$ Ω/□, the decrease ratio of the maximum reflectance within a wavelength

range of from 500 nm to 600 nm was as small as 17%, and the maximum reflectance within a wavelength range of from 1,500 nm to 2,000 nm was also increased only by 10%, thus resulting in a heat ray reflective layer having a low heat ray reflectivity and a low light transmittance.

Further, in Comparative Example III-2 and Comparative Example III-4, no conversion step was carried out, the surface resistivity of the formed heat ray reflective layer was as high as $1\times10^3$ Ω/□, and the maximum reflectance within a wavelength range of from 500 nm to 600 nm and the maximum reflectance within a wavelength range of from 1,500 nm to 2,000 nm did not change, whereby it was not possible to obtain a heat ray reflective layer having a high heat ray reflectivity.

[EVALUATION OF HEAT RAY REFLECTIVITY]

In order to confirm the heat ray reflectivity of the heat ray reflective layer to be produced by the present invention, with respect to the heat ray reflective laminate obtained in Example III-8C and the heat ray reflective laminate obtained in Reference Example III-1, the following heat-shielding property test was carried out, and the applicability to a heat ray-shielding window material for buildings or vehicles was evaluated.

<EVALUATION OF SOLAR TRANSMITTANCE ($T_{SUN}$)>

The solar transmittance of a test sample was measured by a spectral photometer ("U-4000", manufactured by Hitachi, Ltd.). Here, $T_{SUN}$ was calculated in accordance with JIS R3106.

<HEAT-SHIELDING PROPERTY TEST>

At an upper portion of a vacuum heat-insulated container made of stainless steel and having a diameter of 8 cm and a height of 10.7 cm, a polystyrene foam (thickness: 3 cm) having an opening (diameter: 7.5 cm) was fixed, and the heat ray reflective laminate was attached thereon. Artificial sunlight (artificial sunlight lamp "XC-500", "500W", manufactured by SERIC Ltd.) was applied for 40 minutes in a room of 26˚C, while maintaining a distance of 50 cm from the heat ray reflective layer on the laminate, whereby the temperature change in the heat-insulated container was measured by a thermocouple. Further, for the purpose of comparison, a similar evaluation was carried out also with respect to a polycarbonate substrate having no heat ray reflective layer formed thereon. At that time, the thermocouple was covered with an aluminum foil while maintaining a distance of 1 cm to prevent direct exposure to artificial sunlight. The results are shown in Table 11.

TABLE 11 Results of heat-shielding property test

| | Visible light transmittance (%) | Visible light reflectance (%) | Solar transmittance (%) | Solar reflectance (%) | Temp. (˚C) | Temp. increase (˚C) | Haze (%) |
|---|---|---|---|---|---|---|---|
| Heat ray reflective laminate (Ex. III-8C) | 46 | 22 | 38 | 35 | 65 | 39 | 1.0 |
| Heat ray reflective laminate (Ref. Ex.III-1) | 21 | 6 | 42 | 8 | 79 | 53 | 1.6 |
| Polycarbonate substrate | 89 | 13 | 85 | 12 | 94 | 68 | 0.1 |

As shown in Table 11, in the case of the heat ray reflective laminate having a commercially available heat ray reflective film laminated on a polycarbonate substrate (Reference Example III-1) or a polycarbonate substrate having no heat ray reflective layer formed thereon, the temperature increase in the heat-insulated container became as high as 53 or 68˚C. Whereas, in the case of the heat ray reflective laminate obtained by the process of the present invention (Example III-8C), even if the artificial sunlight was applied for 40 minutes, the temperature increase in the heat-insulated container was suppressed to less than 40˚C, thus showing a high-shielding property. Further, the solar transmittances of the heat ray reflective laminates in Example III-8C and Reference Example III-1 were 38% and 42%, thus being

substantially equivalent, and nevertheless, the heat ray reflective laminate obtained by the process of the present invention was able to suppress the temperature increase in the heat-insulated container, thus indicating an excellent heat-shielding property.

From the foregoing results, it is evident that the heat ray reflective layer of the present invention is suitable as a heat ray-shielding window material for buildings or vehicles.

As described in the foregoing, it is evident that according to the present invention, by the film-forming step and the conversion step under specific conditions, it is possible to constantly produce a high performance heat ray reflective layer which shows a high transparency to visible light by substantially reducing the maximum reflectance within a wavelength range of from 500 to 600 nm and which shows a high heat ray reflectivity by substantially increasing the maximum reflectance within a wavelength range of from 1,500 nm to 2,000 nm.

[EXAMPLE IV-1]

<SYNTHESIS OF BINDER RESIN (POLY(HYDROXYETHYL METHACRYLATE))>

In a 50 cc four-necked flask, 10 g of HEMA (hydroxyethyl methacrylate, manufactured by Wako Pure Chemical Industries, Ltd.), 30 g of PGM (propylene glycol monomethyl ether, manufactured by Wako Pure Chemical Industries, Ltd.) and 0.11 g of AIBN (2,2'-azobis(isobutyronitrile), manufactured by Sigma-Aldrich) were mixed and deaerated by circulating nitrogen for 30 minutes. Then, the flask was immersed in an oil bath at 75˚C, and polymerization was carried out for 6 hours. The obtained polymerization solution was dropped into 500 cc of ethyl ether for purification. The obtained polymer was preliminarily dried one day and night in a draft and further dried for 12 hours in a vacuum dryer.

<PREPARATION OF COATING FLUID IV-A>

30 Parts by weight of a silver colloid aqueous solution (average particle size of fine silver particles evaluated by dynamic light scattering method: 21.2 nm, solid content concentration: 10.6 wt%, pH 5.1, citric acid content: 2.1 wt%), 10 parts by weight of a 1 wt% poly(hydroxyethyl methacrylate) solution (solvent: PGM) and 30 parts by weight of a 0.1 wt% of 1,2,3-benzotriazole solution (solvent: PGM) were mixed to prepare coating fluid IV-A.

<PREPARATION OF HEAT RAY REFLECTIVE LAMINATE VI-A>

0.8 mL of coating fluid IV-A was dropped on a polycarbonate substrate ("Iupilon sheet NF-2000U", manufactured by Mitsubishi Engineering-Plastics Corporation, substrate size: 5 cm × 5 cm, thickness: 3 mm, linear expansion coefficient: $6.5\times10^{-5}$/K, glass transition temperature: 145˚C, solar absorptance: 2%) and applied by a spin coater ("1H-D7", manufactured by Mikasa Co., Ltd.) under a condition of 600 rpm for 30 seconds, followed by heat-drying for 1 minute on a hot plate ("HPD-3000", manufactured by As One Corporation) at 70˚C. Then, heating was carried out for 1 hour in a constant temperature dryer ("DO-450FPA", manufactured by As One Corporation) at 120˚C to prepare a heat ray reflective film having a film thickness of 50 nm. On this film, a poly(methyl methacrylate) solution (solvent: PGM) having a concentration of 40 wt% was applied by an applicator (1117/150 mm, DHFFB INSTRUMETS). Then, heat-drying was carried out for 10 minutes in a constant temperature dryer at 120˚C to form a transparent resin layer having a thickness of 7 μm on the heat ray reflective film thereby to prepare heat ray reflective laminate IV-A, and various evaluations were carried out. The evaluation results of heat ray reflective laminate IV-A are shown in Table 12.

[EXAMPLE IV-2]

<PREPARATION OF COATING FLUID IV-B>

Coating fluid IV-B was prepared by carrying out the same operation as in the preparation of coating fluid IV-A in Example IV-1 except that 1,10-phenanthroline was used instead of 1,2,3-benzotriazole.

<PREPARATION OF HEAT RAY REFLECTIVE LAMINATE IV-B>

Heat ray reflective laminate IV-B was prepared in the same manner as in Example IV-1 except that coating fluid IV-B was used instead of coating fluid IV-A, and various evaluations were carried out. The evaluation results of heat ray reflective laminate IV-B are shown in Table 12.

[COMPARATIVE EXAMPLE IV-1]

<PREPARATION OF COATING FLUID IV-C>

Coating fluid IV-C was prepared by carrying out the same operation as in the preparation of coating fluid IV-A in Example IV-1 except that PGM not containing 1,2,3-benzotriazole was used instead of the 1,2,3-benzotriazole solution.

<PREPARATION OF HEAT RAY REFLECTIVE LAMINATE IV-C>

Heat ray reflective laminate IV-C was prepared in the same manner as in Example IV-1 except that coating fluid IV-C was used instead of coating fluid IV-A, and various evaluations were carried out. The evaluation results of heat ray reflective laminate IV-C are shown in Table 12.

[COMPARATIVE EXAMPLE IV-2]

<PREPARATION OF COATING FLUID IV-D>

Coating fluid IV-D was prepared by carrying out the same operation as in the preparation of coating fluid IV-A in Example IV-1 except that a 0.1 wt% n-hexadecanethiol solution (solvent: PGM) was used instead of the 1,2,3-benzotriazole solution.

<PREPARATION OF HEAT RAY REFLECTIVE LAMINATE IV-D>

Heat ray reflective laminate IV-F was prepared in the same manner as in Example IV-1 except that coating fluid IV-D was used instead of coating fluid IV-A, and various evaluations were carried out. The evaluation results of heat ray reflective laminate IV-F are shown in Table 12.

TABLE 12

| | | Heat ray reflective laminate | Heterocyclic compound in coating fluid* | Solar reflectance (%) | Solar transmittance (%= | Suppression of coating defects | Salt water durability |
|---|---|---|---|---|---|---|---|
| Ex. | IV-1 | IV-A | 1,2,3-Benzotriazole | 33 | 18 | ○ | ○ |
| | IV-2 | IV-B | 1,10-Phenanthroline | 32 | 19 | ○ | ○ |
| Comp. Ex. | IV-1 | IV-C | - | 35 | 16 | × | × |
| | IV-2 | IV-D | n-Hexa-decanethiol | 25 | 20 | × | × |
| *: In Comparative Example IV-2, corrosion inhibitor other than heterocyclic compound. | | | | | | | |

From Table 12, it is evident that by using a coating fluid of the present invention containing a heterocyclic compound capable of forming a coordination bond to a metal, it is possible to form a heat ray reflective film free from coating defects and excellent in durability.

[EXAMPLE V-1]

<PREPARATION OF COATING FLUID V-A FOR FORMING HEAT RAY REFLECTIVE LAYER>

14.5 Parts by weight of a fine metal particle-containing aqueous solution having a solid content concentration (fine silver particle concentration) of 3.6 wt%, containing fine silver particles (average particle size evaluated by dynamic light scattering method: 23 nm) as fine metal particles and citric acid as a dispersant in an amount of 2.1 wt% to silver, and 0.5 part by weight of a PVA aqueous solution containing 3 wt% of polyvinyl alcohol (PVA117, manufactured by Kuraray Co., Ltd., polymerization degree: 1,700) as a binder resin, were mixed to prepare coating fluid V-A for forming heat ray reflective layer.

<PREPARATION OF COATING FLUID V-A FOR FORMING RESIN LAYER>

Into a flask equipped with a thermometer, a stirrer and a reflux condense, 300 g of propylene glycol monomethyl ether, 150 g of methyl methacrylate, 40 g of stearyl methacrylate, 10 g of (2,[2'-hydroxy-5'-(methacryloxyethyl)phenyl]-2H-benzotriazole (RUVA93, manufactured by Otsuka Chemical Co., Ltd.) and 2 g of 2,2'-azobis(2,4-dimethylvaleronitrile) were added and reacted at 65˚C for 3 hours, and further, 1 g of 2,2'-azobis(2,4-dimethylvaleronitrile) was added, followed by a reaction for 3 hours to obtain a copolymer having a non-volatile content of 40 wt% and a number average molecular weight of 180,000. The number average molecular weight of this copolymer was obtained by means of a gel permeation chromatography, as calculated as polystyrene.

Coating fluid V-A for forming resin layer was prepared by adding to 100 parts by weight of the obtained copolymer, 0.6 part by weight of a photostabilizer TINUVIN 765 (manufactured by Ciba Specialty Chemicals) and adding propylene glycol monomethyl ether so that the entire solid content concentration became 35 wt%.

<PREPARATION OF COATING FLUID V-A FOR FORMING CURED LAYER>

Polyfunctional acrylate:

"Viscoat 300", manufactured by Osaka Organic Chemical Industry Ltd., pentaerythritol triacrylate=50 parts by weight

Urethane-type acrylate:

"UA-122P", manufactured by Shin-Nakamura Chemical Co., Ltd.=50 parts by weight

Ultraviolet absorber:

"TINUVIN 400", manufactured by Ciba Specialty Chemicals, hydroxyphenyltriazine type ultraviolet absorber=5 parts by weight
Photopolymerization initiator: "Irgacure 184", manufactured by Nagase Co., Ltd., 1-hydroxycyclohexyl phenyl ketone=1 part by weight
Photostabilizer: "Sanol LS-765", manufactured by Sankyo, hindered amine type photostabilizer=1.5 parts by weight

Propylene glycol monomethyl ether=161.25 parts by weight

<PREPARATION OF HEAT RAY REFLECTIVE LAYER V-A>

0.8 mL of coating fluid V-A for forming heat ray reflective layer was dropped on a slide glass (manufactured by Matsunami Glass Ind., Ltd., thickness: 1.3 mm) and applied by a spin coater (1H-D7, manufactured by Mikasa Co., Ltd.) under a condition of 500 rpm for 30 seconds, followed by heat drying for 10 minutes on a hot plate at 70˚C. Then, heating was carried out for 30 minutes in a constant temperature dryer (DO-450FPA, manufactured by As One Corporation) at 120˚C to obtain heat ray reflective layer V-A having a thickness shown in Table 13.

<PREPARATION OF TRANSPARENT HEAT RAY REFLECTIVE LAMINATE V-A>

On heat ray reflective layer V-A, coating fluid V-A for forming resin layer was applied by a film applicator provided with a micrometer ("SA-204", manufactured by Sheen) and dried at 120˚C for 3 minutes. Then, coating fluid V-A for forming cured layer was applied by a film applicator provided with a micrometer, dried at 80˚C for 2 minutes and irradiated with ultraviolet rays by means of an ultraviolet irradiation apparatus (LH6/LC-6BUV conveyor system, manufactured by Fusion UV Systems, Inc., using H bulb) so that the cumulative irradiance would be 4 J/cm$^2$, to prepare transparent heat ray reflective laminate V-A. The thicknesses of the resin layer and the cured layer of this transparent heat ray reflective laminate V-A are as shown in Table 15.

<EVALUATION OF HEAT RAY REFLECTIVE LAYER V-A>

Of heat ray reflective layer V-A, the area-weighted average area of pores was 296 nm$^2$, the pore area ratio was 17.3%, the surface resistivity was 12 Ω/□, the visible light transmittance ($T_{VIS}$) was 51 %, the visible light reflectance ($R_{VIS}$) was 27%, the visible light absorptance ($A_{VIS}$) was 22%, the solar transmittance ($T_{SUN}$) was 46%, the solar reflectance ($R_{SUN}$) was 31 %, the solar absorptance ($A_{SUN}$) was 23%, and the selective reflectivity was 1.24.

The evaluation results of heat ray reflective layer V-A are shown in Tables 13 and 14.

<EVALUATION OF TRANSPARENT HEAT RAY REFLECTIVE LAMINATE V-A>

Of transparent heat ray reflective laminate V-A, the visible light transmittance ($T_{VIS}$) was 50%, the visible light reflectance ($R_{VIS}$) was 17%, the visible light absorptance ($A_{VIS}$) was 33%, the solar transmittance ($T_{SUN}$) was 45%, the solar reflectance ($R_{SUN}$) was 22%, the solar absorptance ($A_{SUN}$) was 33%, and the selective reflectivity was 1.41. The evaluation results of transparent heat ray reflective laminate V-A are shown in Tables 15 and 16, and the results of wet heat resistance test II are shown in Table 17.

[EXAMPLE V-2]

<PREPARATION OF HEAT RAY REFLECTIVE LAYER V-B>

Heat ray reflective layer V-B was obtained by carrying out the same operation as in the preparation of heat ray reflective layer V-A in Example V-1 except that the transparent substrate was changed to a polycarbonate (PC) substrate (lupilon NF-2000U, manufactured by Mitsubishi Engineering-Plastics Corporation, thickness: 3 mm), and the heating time at 120˚C was changed to 1 hour. The evaluation results of heat ray reflective layer V-B are shown in Tables 13 and 14.

<PREPARATION OF TRANSPARENT HEAT RAY REFLECTIVE LAMINATE V-B>

Transparent heat ray reflective laminate V-B was prepared by carrying out the same operation as in Example V-1 except that heat ray reflective lay reflective film V-B was used instead of the heat ray reflective film V-A, and various evaluations were carried out. The evaluation results of transparent heat ray reflective laminate V-B are shown in Tables 15 and 16, and the results of wet heat resistance test II are shown in Table 17.

[EXAMPLE V-3]

<PREPARATION OF COATING FLUID V-C FOR FORMING HEAT RAY REFLECTIVE LAYER>

7.8 Parts by weight of a partially benzyl-modified polyvinyl alcohol (S-LEC KX-1, manufactured by Sekisui Chemical Co., Ltd.) as a binder resin, 8.1 parts by weight of 2-propanol (manufactured by Junsei Chemical Co., Ltd.) and 4.1 parts by weight of demineralized water were mixed to prepare KX-1 solution.
Coating fluid V-C for forming heat ray reflective layer was prepared by carrying out the same operation as in the preparation of coating fluid V-A for forming heat ray reflective layer in Example V-1 except that KX-1 solution was used instead of the PVA aqueous solution.

<PREPARATION OF HEAT RAY REFLECTIVE LAYER V-C>

Heat ray reflective layer V-C was prepared by carrying out the same operation as in the preparation of the heat ray reflective layer in Example V-2 except that coating fluid V-C for forming heat ray reflective layer was used instead of coating fluid V-A for forming heat ray reflective layer. The evaluation results of heat ray reflective layer V-C are shown in Tables 13 and 14.

<PREPARATION OF TRANSPARENT HEAT RAY REFLECTIVE LAMINATE V-C>

Transparent heat ray reflective laminate V-C was prepared by carrying out the same operation as in Example V-1 except that the heat ray reflective layer V-C was used instead of the heat ray reflective layer V-A, and various evaluations were carried out. The evaluation results of the transparent heat ray reflective laminate V-C are shown in Tables 15 and 16, and the results of wet heat resistance test II are shown in Table 17.

[EXAMPLE V-4]

<PREPARATION OF COATING FLUID V-D FOR FORMING HEAT RAY REFLECTIVE LAYER>

937 Parts by weight of the same fine metal particle-containing aqueous solution as used in Example V-1, 33 parts by weight of the same PVA aqueous solution as used in Example V-1, 102 parts by weight of a 0.1 wt% dodecylsodium sulfate aqueous solution (manufactured by Kishida Chemical Co., Ltd.) and 728 parts by weight of demineralized water were mixed to prepare coating fluid V-D for forming heat ray reflective layer.

<PREPARATION OF HEAT RAY REFLECTIVE LAYER V-D>

On a polycarbonate (PC) substrate (Iupilon NF-2000U, manufactured by Mitsubishi Engineering-Plastics Corporation, thickness: 2 mm), coating fluid V-D for forming heat ray reflective layer was applied by a desktop dip coater ("TD-1501 ", manufactured by SATUMA Communication Industry Co., Ltd.) and dried at 70˚C for 10 minutes. Then, heating was carried out for 30 minutes in a constant temperature dryer at 120˚C to prepare heat ray reflective layer V-D. The evaluation results of heat ray reflective layer V-D are shown in Tables 13 and 14.

<PREPARATION OF TRANSPARENT HEAT RAY REFLECTIVE LAMINATE V-D>

Transparent heat ray reflective laminate V-D was prepared by carrying out the same operation as in Example V-1 except that heat ray reflective layer V-D was used instead of heat ray reflective layer V-A, and various evaluations were carried out. The evaluation results of transparent heat ray reflective laminate V-D are shown in Tables 15 and 16, and the results of wet heat resistance test II are shown in Table 17.

[EXAMPLE V-5]

<PREPARATION OF COATING FLUID V-E FOR FORMING HEAT RAY REFLECTIVE LAYER>

Coating fluid V-E for forming heat ray reflective layer was prepared by carrying out the same operation as in the preparation of coating fluid V-A for forming heat ray reflective layer in Example V-1 except that a 3 wt% modified polyvinyl alcohol UV curable resin aqueous solution (containing photopolymerization initiator) was used instead of the PVA aqueous solution.

<PREPARATION OF HEAT RAY REFLECTIVE LAYER V-E>

A heat ray reflective layer was formed on a PC substrate by carrying out the same operation as in the preparation of the heat ray reflective layer in Example V-2 except that coating fluid V-E for forming heat ray reflective layer was used instead of coating fluid V-A for forming heat ray reflective layer, and further cured by an ultraviolet irradiation apparatus (LH6/LC-6BUV conveyor system, manufactured by Fusion UV Systems, Inc., using H bulb), with an ultraviolet accumulative irradiance of about 2 $J/cm^2$ to crosslink the binder resin thereby to prepare heat ray reflective layer V-E. The evaluation results of heat ray reflective layer V-E are shown in Tables 13 and 14.

<PREPARATION OF TRANSPARENT HEAT RAY REFLECTIVE LAMINATE V-E>

Transparent heat ray reflective laminate V-E was prepared by carrying out the same operation as in Example V-1 except that heat ray reflective layer V-E was used instead of heat ray reflective layer V-A, and various evaluations were carried out. The evaluation results of transparent heat ray reflective laminate V-E are shown in Tables 15 and 16, and the results of wet heat resistance test II are shown in Table 17.

[EXAMPLE V-6]

<PREPARATION OF COATING FLUID V-F FOR FORMING HEAT RAY REFLECTIVE LAYER>

1,2,3-Benzotriazole (BTA, manufactured by Tokyo Chemical Industry Co., Ltd.) was dissolved in propylene glycol monomethyl ether to obtain a 0.5 wt% solution (BTA solution).

75 g of a fine metal particle-containing aqueous solution having a solid content concentration (fine silver particle concentration) of 10.6 wt%, containing fine silver particles (average particle size evaluated by dynamic light scattering method: 20 nm) as fine metal particles and citric acid as a dispersant in an amount of 2.1 wt% to silver, 25 g of a 1 wt% modified polyvinyl alcohol UV-curable resin aqueous solution (containing photopolymerization initiator), 7 g of the above BTA solution, and 68 g of propylene glycol monomethyl ether were mixed to prepare coating fluid V-F for forming heat ray reflective layer.

<PREPARATION OF HEAT RAY REFLECTIVE LAYER V-F>

On a polycarbonate substrate (Iupilon NF-2000U, manufactured by Mitsubishi Engineering-Plastics Corporation, thickness: 3 mm), 1 mL of coating fluid V-F for forming heat ray reflective layer was dropped and applied by means of a spin coater (1H-DX2, manufactured by Mikasa Co., Ltd.) under a condition of 600 rpm for 30 seconds, followed by

heat-drying for 1 minute on a hot plate at 70˚C. Further, heating was carried out for 1 hour in a constant temperature dryer (DO-450FPA, manufactured by As One Corporation) at 120˚C, and the obtained heat ray reflective layer was irradiated with ultraviolet ray in the same manner as in Example V-5 to crosslink the binder resin thereby to obtain heat ray reflective layer V-F.

<PREPARATION OF TRANSPARENT HEAT RAY REFLECTIVE LAMINATE V-F>

On heat ray reflective layer V-F, coating fluid V-A for forming resin layer was applied by means of a film applicator provided with a micrometer (gap 100 μm, 1117/150 mm, DHFFB INSTRUMENTS) and then dried at 120˚C for 3 minutes. Further, coating fluid V-A for forming cured layer was applied by a bar coater (No. 14, manufactured by Webster) and dried at 80˚C for 2 minutes. Then, in the same manner as in Example V-1, curing for a cured layer was carried out by an ultraviolet irradiation apparatus to prepare transparent heat ray reflective laminate V-F, and various evaluations were carried out. The evaluation results of transparent heat ray reflective laminate V-F are shown in Tables 15 and 16, and the results of wet heat resistance test II are shown in Table 17.

[COMPARATIVE EXAMPLE V-1]

<PREPARATION OF TRANSPARENT HEAT RAY REFLECTIVE LAMINATE V-H>

On heat ray reflective layer V-A obtained in Example V-1, coating fluid V-A for forming cured layer was applied by a film applicator provided with a micrometer, then dried at 80˚C for 2 minutes and irradiated with ultraviolet ray by means of an electrodeless mercury lamp (H bulb, manufactured by Fusion UV Systems, Inc.) so that the cumulative irradiance would be 2 J/$cm^2$, to prepare transparent heat ray reflective laminate V-H, and various evaluations were carried out. The evaluation results of transparent heat ray reflective laminate V-H are shown in Tables 15 and 16, and the results of wet heat resistance test II are shown in Table 17.

[COMPARATIVE EXAMPLE V-2]

<PREPARATION OF COATING FLUID V-X FOR FORMING CURED LAYER>

0.06 Part by weight of aluminum(III) tris(2,4-pentanedionate) (manufactured by Tokyo Chemical Industry Co., Ltd.) was dissolved in 13 parts by weight of methanol (manufactured by Junsei Chemical Co., Ltd.), and then 6.6 parts by weight of silicate MSEP2 (manufactured by Mitsubishi Chemical Corporation) and 1.5 parts by weight of demineralized water were added, followed by stirring at room temperature for 2 days. To 0.5 part by weight of the obtained solution, 4.5 parts by weight of ethanol (manufactured by Junsei Chemical Co., Ltd.) was added to obtain coating fluid V-X for forming cured layer.

<PREPARATION OF TRANSPARENT HEAT RAY REFLECTIVE LAMINATE V-I>

On heat ray reflective layer V-A obtained in Example V-1, coating fluid V-X for forming cured layer was dropped and applied by a spin coater (1H-D7, manufactured by Mikasa Co., Ltd.) under a condition of 1,000 rpm for 30 seconds, and then heated for 30 minutes on a hot plate (HPD-3000, manufactured by As One Corporation) at 150˚C to prepare transparent heat ray reflective laminate V-I, and various evaluations were carried out. The evaluation results of heat ray reflective laminate V-I are shown in Tables 15 and 16, and the results of wet heat resistance test II are shown in Table 17.

[COMPARATIVE EXAMPLE V-3]

<PREPARATION OF COATING FLUID V-X FOR FORMING RESIN LAYER>

A toluene solution containing 10 wt% of polymethyl methacrylate (manufactured by Aldrich, average molecular weight: 120,000) was prepared and designated as coating fluid V-X for forming resin layer.

<PREPARATION OF TRANSPARENT HEAT RAY REFLECTIVE LAMINATE V-J>

On heat ray reflective layer V-A obtained in Example V-1, coating fluid V-X for forming resin layer was applied and then heated for 2 hours on a hot plate (HPD-3000, manufactured by As One Corporation) at 50˚C to prepare transparent heat ray reflective laminate V-J, and various evaluations were carried out. The evaluation results of transparent heat ray reflective laminate V-J are shown in Tables 15 and 16, and the results of wet heat resistance test II are

shown in Table 17.

[COMPARATIVE EXAMPLE V-4]

<PREPARATION OF TRANSPARENT HEAT RAY REFLECTIVE LAMINATE V-K>

Transparent heat ray reflective laminate V-K was prepared by carrying out the same operation as in Comparative Example V-3 except that a PVA aqueous solution containing 3 wt% of polyvinyl alcohol (PVA117, manufactured by Kuraray Co., Ltd., polymerization degree: 1,700) was used instead of coating fluid V-X for forming resin layer, and various evaluations were carried out. The evaluation results of transparent heat ray reflective laminate V-K are shown in Tables 15 and 16, and the results of wet heat resistance test II are shown in Table 17.

[COMPARATIVE EXAMPLE V-5]

<PREPARATION OF TRANSPARENT HEAT RAY REFLECTIVE LAMINATE V-L>

Transparent heat ray reflective laminate V-L was prepared in the same manner as in Comparative Example V-3 except that heat ray reflective layer V-B was used instead of heat ray reflective layer V-A, and various evaluations were carried out. The evaluation results of transparent heat ray reflective laminate V-L are shown in Tables 15 and 16, and the results of wet heat resistance test II are shown in Table 17.

TABLE 13 <Evaluation results of heat ray reflective layer>

| | Heat ray reflective layer | Metal content (wt%) | Binder content (wt%) | Layer thickness (nm) | Area-weighted average area of pores ($nm^2$) | Pore area ratio (%) | Surface resistivity (Ω/□) |
|---|---|---|---|---|---|---|---|
| Ex.V-1 | V-A | 95.2 | 2.8 | 32 | 296 | 17.3 | 12 |
| Ex.V-2 | V-B | 95.2 | 2.8 | 36 | 128 | 8.0 | 16 |
| Ex.V-3 | V-C | 95.2 | 2.8 | 25 | 671 | 18.0 | 13 |
| Ex.V-4 | V-D | 94.8 | 2.8 | 37 | 548 | 8.9 | 16 |
| Ex.V-5 | V-E | 95.2 | 2.8 | 47 | 302 | 14.6 | 18 |
| Ex.V-6 | V-F | 94.5 | 3.0 | 45 | 418 | 14.5 | 18 |

TABLE 14 <Optical properties of heat ray reflective layer>

| | Heat ray reflective layer | $T_{VIS}$ (%) | $R_{VIS}$ (%) | $A_{VIS}$ (%) | $T_{SUN}$ (%) | $R_{SUN}$ (%) | $A_{SUN}$ (%) | Selective reflectivity |
|---|---|---|---|---|---|---|---|---|
| Ex.V-1 | V-A | 51 | 27 | 22 | 46 | 31 | 23 | 1.24 |
| Ex.V-2 | V-B | 42 | 35 | 23 | 39 | 41 | 20 | 1.29 |
| Ex.V-3 | V-C | 35 | 35 | 30 | 31 | 43 | 26 | 1.36 |
| Ex.V-4 | V-D | 38 | 34 | 28 | 33 | 42 | 25 | 1.41 |
| Ex.V-5 | V-E | 31 | 36 | 33 | 27 | 41 | 32 | 1.25 |
| Ex.V-6 | V-F | 25 | 42 | 33 | 23 | 51 | 26 | 1.21 |

TABLE 15 <Thicknesses of resin layer and cured layer of transparent heat ray reflective laminate>

| | Heat ray reflective layer | Transparent heat ray reflective laminate | Thickness of resin layer (μm) | Thickness of cured layer (μm) |
|---|---|---|---|---|
| Ex. V-1 | V-A | V-A | 8 | 5 |
| Ex. V-2 | V-B | V-B | 9 | 8 |
| Ex. V-3 | V-C | V-C | 10 | 9 |
| Ex. V-4 | V-D | V-D | 9 | 10 |
| Ex. V-5 | V-E | V-E | 10 | 12 |
| Ex. V-6 | V-F | V-F | 10 | 10 |
| Comp. Ex. V-1 | V-A | V-H | - | 6 |
| Comp. Ex. V-2 | V-A | V-I | - | 0.17 |
| Comp. Ex. V-3 | V-A | V-J | 60 | - |
| Comp. Ex. V-4 | V-A | V-K | 35 | - |
| Comp. Ex. V-5 | V-B | V-L | 9 | - |

TABLE 16 <Optical properties of transparent heat ray reflective laminate>

| | Transparent heat ray reflective laminate | $T_{VIS}$ (%) | $R_{VIS}$ (%) | $A_{VIS}$ (%) | $T_{SUN}$ (%) | $R_{SUN}$ (%) | $A_{SUN}$ (%) | Selective reflectivity |
|---|---|---|---|---|---|---|---|---|
| Ex. V-1 | V-A | 50 | 17 | 33 | 45 | 22 | 33 | 1.41 |
| Ex. V-2 | V-B | 39 | 27 | 34 | 33 | 39 | 28 | 1.80 |
| Ex. V-3 | V-C | 37 | 26 | 37 | 33 | 36 | 31 | 1.69 |
| Ex. V-4 | V-D | 40 | 22 | 38 | 36 | 35 | 29 | 1.88 |
| Ex. V-5 | V-E | 31 | 30 | 39 | 26 | 47 | 27 | 2.05 |
| Ex. V-6 | V-F | 20 | 28 | 52 | 18 | 42 | 40 | 1.50 |
| Comp. Ex. V-1 | V-H | 52 | 17 | 31 | 48 | 22 | 30 | 1.48 |
| Comp. Ex. V-2 | V-I | 55 | 19 | 26 | 49 | 25 | 26 | 1.49 |
| Comp. Ex. V-3 | V-J | 46 | 28 | 26 | 38 | 41 | 21 | 1.74 |
| Comp. Ex. V-4 | V-K | 51 | 18 | 31 | 48 | 22 | 30 | 1.32 |
| Comp. Ex. V-5 | V-L | 37 | 19 | 44 | 33 | 26 | 41 | 1.37 |

TABLE 17 <Results of wet heat resistance test II of transparent heat ray reflective laminate>

| | Transparent heat ray reflective laminate | Change in reflectance (%) | Peeling |
|---|---|---|---|
| Ex. V-1 | V-A | -6.3 | Not observed |
| Ex. V-2 | V-B | 8.3 | Not observed |

(continued)

| | Transparent heat ray reflective laminate | Change in reflectance (%) | Peeling |
|---|---|---|---|
| Ex. V-3 | V-C | 7.0 | Not observed |
| Ex. V-4 | V-D | -1.7 | Not observed |
| Ex. V-5 | V-E | 3.0 | Not observed |
| Ex. V-6 | V-F | 3.0 | Not observed |
| Comp. Ex. V-1 | V-H | -45.5 | Not observed |
| Comp. Ex. V-2 | V-I | - | Observed |
| Comp. Ex. V-3 | V-J | - | Observed |
| Comp. Ex. V-4 | V-K | -12.6 | Not observed |
| Comp. Ex. V-5 | V-L | -17.1 | Not observed |

[CONSIDERATION OF EVALUATION RESULTS OF TRANSPARENT HEAT RAY REFLECTIVE LAMINATES]

In the case of heat ray reflective layers V-A to F in Examples V-1 to 6, in the results of wet heat resistance test II shown in Table 17, the change in reflectance (r) between before and after wet heat resistance test II is as small as at most 10%, and thus, the wet heat resistance is high.

On the other hand, in the case of transparent heat ray reflective laminate V-H having a cured layer directly laminated on a heat ray reflective layer as in Comparative Example V-1, r is -45.5% i.e. the change in reflectance between before and after wet heat resistance test II is large, and the wet heat resistance is low.

Like Comparative Example V-1, Comparative Example V-2 is transparent heat ray reflective laminate V-I having a cured layer directly laminated on a heat ray reflective layer, and after wet heat resistance test II, the cured layer peeled, and thus, the wet heat resistance is low.

In Comparative Example V-3, a resin layer is laminated on a heat ray reflective layer, but the polymer in the resin layer does not have a long chain alkyl group having at least 8 carbon atoms in its side chain, and it is not a resin layer satisfying the conditions of the present invention, whereby after wet heat resistance test II, the resin layer peeled, and thus the wet heat resistance is low.

Also in Comparative Example V-4, like in Comparative Example V-3, a resin layer is laminated, but the polymer in the resin layer does not have a long chain alkyl group having at least 8 carbon atoms in its side chain, and it is not a resin layer satisfying the conditions of the present invention, whereby r is -12.6% i.e. the change in reflectance is large between before and after wet heat resistance test II, and the wet heat resistance is low.

In Comparative Example V-5, a resin layer is laminated on a heat ray reflective layer, but the polymer in the resin layer does not have a long chain alkyl group having at least 8 carbon atoms in its side chain, and it is not a resin layer satisfying the conditions of the present invention, whereby r is -17.1% i.e. the change in reflectance is large between before and after wet heat resistance test II, and the wet heat resistance is low.

From the foregoing, it has been confirmed that by satisfying the conditions of the present invention, it is possible to obtain a transparent heat ray reflective laminate excellent in wet heat resistance.

[EXAMPLE VI-1]

2 g of a PGME (propylene glycol monomethyl ether, manufactured by Wako Pure Chemical Industries, Ltd.) aqueous solution containing 1 wt% of modified PVA (polyvinyl acetoacetal resin, molecular weight: 17,000) (hydrophilic group content: 25 mol%, hydrophobic group content: 75 mol%, hydrophilic/hydrophobic group ratio: 25:75), 6 g of PGME and 6 g of a fine silver particle aqueous dispersion were mixed and dispersed for 20 minutes by an ultrasonic bath, followed by filtration by means of a syringe filter ("FP30", manufactured by Whatman, pore size: 1.2 $\mu$m), and further, dispersion was carried out for 20 minutes by an ultrasonic bath to prepare coating fluid VI-A for forming heat ray reflective layer.

Here, fine silver particles contained in the fine silver particle dispersion are in the form of an aqueous dispersion of citric acid-coated silver nanoparticles (average particle size: 20 nm, citric acid-coated amount: 2.1 wt% (weight % to silver)).

Using such coating fluid VI-A for forming heat ray reflective layer, heat ray reflective laminate VI-A was prepared by the following method.

As a substrate, a polycarbonate substrate ("Iupilon sheet NF-2000U", manufactured by Mitsubishi Engineering-Plastics Corporation, thickness: 3 mm, 5 cm × 5 cm) was used. Spin coating was carried out at 600 rpm for 30 seconds by means of a spin coater ("1H-D7", manufactured by Mikasa Co., Ltd.) by placing 0.6 ml of coating fluid VI-A on the substrate.

Then, after drying at 70˚C for 2 minutes, firing was carried out at 120˚C for 1 hour.

After thus forming a heat ray reflective layer, a resin layer and a cured layer were formed on this heat ray reflective layer in the same manner as in Example V-1 to obtain heat ray reflective laminate VI-A.

[EXAMPLE VI-2]

10 g of methacrylic acid (manufactured by Wako Pure Chemical Industries, Ltd.), 30 g of PGME (manufactured by Wako Pure Chemical Industries, Ltd.) and 0.11 g of 2,2'-azobis(isobutyronitrile) (manufactured by Sigma-Aldrich) were mixed in a 50 ml four-necked flask and deaerated for 30 minutes by circulating nitrogen. Then, the flask was immersed in an oil bath of 75˚C, and polymerization was carried out for 6 hours. The obtained polymerization solution was dropped into 500 ml of ethyl ether for purification to obtain binder resin VI-B. Obtained binder resin VI-B was dried one day and night in a draft and further dried for 12 hours in a vacuum dryer. Thus obtained binder resin VI-B had a weight average molecular weight of 15,000, a hydrophilic group content of 100 mol%, a hydrophobic group content of 100 mol% and a hydrophilic/hydrophobic group ratio of 50:50.

Heat ray reflective laminate VI-B was prepared in the same manner as in Example VI-1 except that as the binder resin, binder resin VI-B was used instead of the modified PVA.

The optical properties and the thicknesses of various layers of heat ray reflective laminates VI-A and VI-B are shown in Table 18.

TABLE 18

| | Solar transmittance (%) | Solar reflectance (%) | Solar absorptance (%) | Visible light transmittance (%) | Visible light reflectance (%) | Visible light absorptance (%) | Thickness of heat ray reflective layer (nm) | Thickness of resin layer (nm) | Thickness of cured layer (nm) |
|---|---|---|---|---|---|---|---|---|---|
| Heat ray reflective laminate VI-A | 26 | 40 | 34 | 31 | 31 | 38 | 30 | 10 | 10 |
| Heat ray reflective laminate VI-B | 25 | 37 | 38 | 31 | 28 | 41 | 30 | 10 | 10 |

<WARM WATER TEST>

In warm water of 40˚C, each of heat ray reflective laminates VI-A and VI-B was immersed for 300 hours, whereby in each case, no problem was observed on the appearance, and no water bubbles were observed. Further, no change in the reflection spectrum was observed between before and after this warm water test.

[COMPARATIVE EXAMPLE VI-1]

A heat ray reflective layer was prepared in the same manner as in Example VI-1 except that instead of the modified PVA, polyvinylpyrrolidone having an N-pyrrolidonyl group ("K30", manufactured by Wako Pure Chemical Industries, Ltd., viscosity average molecular weight: 40,000) was used as the binder resin, but large agglomerates visually ascertainable were formed.

[REFERENCE EXAMPLE VI-1]

Heat ray reflective laminate VI-C was prepared in the same manner as in Example VI-1 except that instead of the modified PVA, polyvinyl alcohol having only a hydrophilic group, as used in Example V-1, was used as the binder resin, and the warm water test was carried out in the same manner, whereby water bubbles were slightly formed, although no change in the reflection spectrum was observed between before and after the warm water test.

From the foregoing results, the following is evident.

In Comparative Example VI-1, polyvinylpyrrolidone having only an N-pyrrolidonyl group as a hydrophilic group was used as a binder resin, whereby agglomerates of metal colloid were formed, and film-formation was not possible. Whereas, in Example VI-1 wherein a binder resin having a hydroxy group as a hydrophilic group was used and in Example VI-2 wherein a binder resin having a carboxy group as a hydrophilic group was used, it was possible to carry out film-forming satisfactorily, and further, it was possible to prepare a heat ray reflective laminate having a high heat ray reflection performance.

Thus, it is evident that in the case of using a binder resin having a hydrophilic group other than an N-pyrrolidonyl group, it is possible to produce a heat ray reflective laminate free from coating defects with a high film-forming property.

Further, in a case where a binder resin having only a hydrophilic group was used as in Reference Example VI-1, water bubbles were slightly formed by the warm water test. Whereas, in Examples VI-1 and VI-2 wherein a binder resin having a hydrophilic group and a hydrophobic group was used, no water bubbles were formed in the warm water test. This indicates that by using a binder resin having both a hydrophilic group and a hydrophobic group, it is possible to prepare a heat ray reflective laminate having higher durability.

[EXAMPLE VI-3]

75 g of the same fine silver particle dispersion as in Example VI-1, 25 g of an aqueous solution containing 1 wt% of an UV-curable modified PVA (hydrophilic group content: 80 mol%, hydrophobic group content: 20 mol%, hydrophilic/hydrophobic group ratio: 80/20, crosslinked group content: 6 mol%), 68 g of PGME and 7 g of a PGME solution containing 0.5 wt% of 1,2,3-benzotriazole (BTA) were mixed and dispersed for 20 minutes by an ultrasonic bath, followed by filtration by means of a syringe filter ("FP30", manufactured by Whatman, pore size: 1.2 $\mu$m), and further dispersion was carried out for 20 minutes by a ultrasonic bath to prepare coating fluid VI-D for forming heat ray reflective layer.

Using this coating fluid VI-D for forming heat ray reflective layer, heat ray reflective laminate VI-D was prepared.

As the substrate, a polycarbonate substrate ("lupilon sheet NF-2000U", manufactured by Mitsubishi Engineering-Plastics Corporation, thickness: 3 mm, 5 cm x 5 cm) was used. Spin coating was carried out at 600 rpm for 30 seconds by means of a spin coater ("1H-D7", manufactured by Mikasa Co., Ltd.) by placing 1.0 ml of coating fluid VI-D on the substrate.

Then, the substrate was dried by warm air, followed by firing at 120˚C for 1 hour.

Further, by means of an UV irradiation apparatus (electrodeless lamp bulb, H bulb, manufactured by Fusion UV Systems, Inc.), UV irradiation (total UV irradiation energy: 2,000 mJ/cm$^2$) was carried out to obtain heat ray reflective laminate VI-D1.

On the other hand, coating fluid VI-D for forming heat ray reflective layer was stored in a refrigerator (4˚C), and upon expiration of 4 months (16 weeks), in the same manner, heat ray reflective laminate VI-D2 was prepared, and the reflectance at a wavelength of 2,500 nm of each of heat ray reflective laminate VI-D1 and heat ray reflective laminate VI-D2 was measured, and its change ({(reflectance of heat ray reflective laminate VI-D2 - reflectance of heat ray reflective laminate VI-D1)/reflectance of heat ray reflective laminate VI-D1}$\times$100) was examined and found to be 1.4%, and thus it was confirmed that the storage stability of coating fluid VI-D for forming heat ray reflective layer was good.

[EXAMPLE VI-4]

Coating fluid VI-E for forming heat ray reflective layer was prepared in the same manner as in Example VI-3 except that in Example VI-3, PGME was used instead of the PGME solution containing 0.5 wt% of BTA. Using this coating fluid VI-E, evaluation of the storage stability of coating fluid VI-E was carried out in the same manner as in Example VI-3, whereby the change in reflectance at a wavelength of 2,500 nm was 2.2%, and it was confirmed that the storage stability of coating fluid VI-E for forming heat ray reflective layer was good.

[REFERENCE EXAMPLE VI-2]

3 g of the same fine silver particle dispersion as used in Example VI-3, 1 g of an aqueous solution containing 1 wt% of an UV-curable modified PVA, 2.72 g of PGME and 0.28 g of a PGME solution containing 0.5 wt% of BTA, were mixed and dispersed for 20 minutes by an ultrasonic bath, followed by filtration by means of a syringe filter ("FP30", manufactured by Whatman, pore size: 1.2 μm), and further dispersion was carried out for 20 minutes by an ultrasonic bath to prepare coating fluid VI-F1 for forming heat ray reflective layer. Using this coating fluid VI-F, heat ray reflective laminate VI-F1 was prepared in the same manner as in Example VI-3.

On the other hand, the above fine silver particle dispersion was stored as it was in a refrigerator (4˚C), and upon expiration of 4 months, coating fluid VI-F2 for forming heat ray reflective layer was prepared in the same manner as above, and heat ray reflective laminate VI-F2 was prepared in the same manner.

The reflectance at a wavelength of 2,500 nm was measured with respect to each of heat ray reflective laminates VI-F1 and VI-F2, and its change ({(reflectance of heat ray reflective laminate VI-F2 - reflectance of heat ray reflective laminate VI-F1)/reflectance of heat ray reflective laminate VI-F1}×100) was examined and found to be -11.9%, and coating fluid VI-F2 for forming heat ray reflective layer was considered to have been deteriorated.

In Reference Example VI-2, fine silver particles stored in water were stored for a long period of time, and then fluid preparation and film-forming were carried out, whereby it was confirmed that the heat ray reflection performance was deteriorated and the reflectance at 2,500 nm was deteriorated as much as 11.9%. However, like in Examples VI-3 and VI-4, by containing a water-soluble organic solvent (PGME), even in the storage for a long period of time, the reflectance at 2,500 nm was 1.4% and 2.2%, respectively, and did not substantially change.

[TEST EXAMPLE VI-1]

For evaluation of the adsorption power of a functional group in a binder resin to a metal, a temperature-programmed desorption test was carried out in the following procedure using N-methyl-2-pyrrolidone (NMP) as a compound having an N-pyrrolidonyl group and a methyl group bonded to each other and acetic acid as a compound having a carboxy group and a methyl group bonded to each other.

<PREPARATION OF ADSORPTION SAMPLE>

(CLEANING OF SILVER POWDER)

To 1 g of silver powder (particle size: 2 to 3.5 μm, purity: 99.9%, manufactured by Aldrich), 10 g of acetone was added, followed by ultrasonic cleaning for 10 minutes. The supernatant was discarded, and the same cleaning operation was carried out in a total of three times. After the acetone cleaning, 10 g of demineralized water was added, followed by ultrasonic cleaning for 10 minutes. The supernatant was discarded, and the same cleaning operation was carried out in a total of four times. The obtained silver powder was dried at 40˚C for 4 hours while blowing nitrogen gas thereto.

<ADSORPTION OPERATION)

0.4 g of the cleaned silver powder was vacuum-dried at 100˚C for 1 hour, then cooled and, after adding 0.4 g of acetic acid or NMP, left to stand at room temperature for 3 days. After drying while blowing nitrogen gas, drying was carried out in a vacuum dryer at room temperature to a constant weight, to obtain an adsorption sample.

<METHOD FOR MEASURING THE PEAK OF DESORPTION TEMPERATURE>

With respect to each of the above adsorption samples, the temperature-programmed desorption behavior was measured by TPD-MS (Temperature Programmed Desorption or Dicomposition-Mass-Spectrometry).

The temperature-raising condition was such that in a He atmosphere, the temperature was raised to 600˚C at

a rate of 10˚C/min. The amount of each sample was 100 mg.

As a result, in the case of the acetic acid-silver adsorption sample, the peak indicating generation of acetic acid (the peak of desorption temperature of a carboxy group) was 260˚C.

On the other hand, in the case of the NMP-silver adsorption sample, the peak indicating generation of NMP (the peak for desorption temperature of an N-pyrrolidonyl group) was 300˚C.

The entire disclosures of Japanese Patent Application (No. 2008-272825) filed on October 23, 2008, Japanese Patent Application (No. 2008-272826) filed on October 23, 2008, Japanese Patent Application (No. 2008-272827) filed on October 23, 2008, Japanese Patent Application (No. 2009-114453) filed on May 11, 2009, Japanese Patent Application (No. 2009-115297) filed on May 12, 2009, Japanese Patent Application (No. 2009-117267) filed on May 14, 2009, Japanese Patent Application (No. 2009-150064) filed on June 24, 2009 and Japanese Patent Application (No. 2009-160338) filed on July 7, 2009 including specifications, claims, drawings and summaries are incorporated herein by reference in their entireties.

MEANINGS OF SYMBOLS

1: Transparent substrate
2: Heat ray reflective layer
3: Resin layer
4: Cured layer
10A, 10B, 10C, 10D, 10E: Transparent heat ray reflective laminate

## Claims

1. A heat ray reflective laminate which is a laminate comprising a transparent substrate and a heat ray reflective layer and which has a solar reflectance of at least 15% as measured from the side containing the heat ray reflective layer, wherein the heat ray reflective layer comprises a binder resin containing a hydrophilic group other than an N-pyrrolidonyl group, and a metal, and the heat ray reflective layer has a layer thickness of at most 100 nm.

2. The heat ray reflective laminate according to Claim 1, wherein the hydrophilic group has a peak of desorption temperature of at most 290˚C, as determined under the following measurement conditions:

   (Measurement conditions)
   Hydrophilic group-$CH_3$ (a compound having the hydrophilic group and a methyl group bonded to each other) and silver particles having a particle size of from 1 to 5 μm are mixed, and the peak of desorption temperature of the hydrophilic group-$CH_3$ from silver is measured by TPD-MS.

3. The heat ray reflective laminate according to Claim 1 or 2, wherein the hydrophilic group is selected from the group consisting of a hydroxy group, a carboxy group, and an oxyethylene group.

4. The heat ray reflective laminate according to any one of Claims 1 to 3, wherein the binder resin contains a hydrophobic group.

5. The heat ray reflective laminate according to Claim 4, wherein the hydrophobic group is selected from an alkyl group, an acetyl group, and a phenyl group which may have a substituent.

6. The heat ray reflective laminate according to any one of Claims 1 to 5, wherein the binder resin is a curable resin.

7. The heat ray reflective laminate according to any one of Claims 1 to 6, wherein the heat ray reflective layer contains a heterocyclic compound capable of forming a coordination bond to the metal.

8. The heat ray reflective laminate according to any one of Claims 1 to 7, which is a heat ray reflective laminate having a resin layer laminated on the heat ray reflective layer, wherein the resin layer contains a polymer having an alkyl group having at least 8 carbon atoms in its side chain.

9. The heat ray reflective laminate according to Claim 8, wherein the polymer having an alkyl group having at least 8

carbon atoms in its side chain contains an ultraviolet absorbing group.

**10.** The heat ray reflective laminate according to Claim 8 or 9, wherein the resin layer contains a polymer having an ultraviolet absorbing group, other than the polymer having an alkyl group having at least 8 carbon atoms.

**11.** The heat ray reflective laminate according to any one of Claims 1 to 10, wherein in the heat ray reflective layer, the area-weighted average area of pores as observed from the layer surface is from 20 to 5,000 $nm^2$, and the proportion of the total pore area to the area of the layer surface of the heat ray reflective layer is from 3 to 40%.

**12.** A heat ray reflective laminate which is a laminate comprising a transparent substrate and a heat ray reflective layer and which has a solar reflectance of at least 15% as measured from the side containing the heat ray reflective layer to the transparent substrate, wherein the heat ray reflective layer comprises a binder resin containing a hydrophilic group and a hydrophobic group, and a metal, and the heat ray reflective layer has a layer thickness of at most 100 nm.

**13.** A metal film for heat ray reflection, which is a metal film for heat ray reflection made of a porous metal film containing a non-metal binder and having a film thickness of from 12 to 80 nm, and which has a visible light reflectance of at least 10%, as calculated in accordance with the method disclosed in JIS R3106 by taking, as a spectral reflectance, a diffuse reflectance with reference to barium sulfate or aluminum oxide, a visible light absorptance of at most 45%, and a surface resistivity of at most 80 Ω/□ as measured by a four probe method.

**14.** The metal film for heat ray reflection according to Claim 13, wherein in the porous metal film, the area-weighted average area of pores as observed from the film surface is from 20 to 5,000 $nm^2$, and the proportion of the total pore area to the area of the surface of the metal film is from 3 to 40%.

**15.** A heat ray reflective laminate having a heat ray reflective layer and a resin layer laminated sequentially and directly on at least one side of a transparent substrate, wherein the heat ray reflective layer is made of the metal film for heat ray reflection as defined in Claim 14.

**16.** A heat ray reflective laminate having a heat ray reflective layer and a resin layer laminated sequentially and directly on at least one side of a transparent substrate, wherein the solar radiation-receiving side of the heat ray reflective laminate has a visible light reflectance of from10 to 50%, as calculated in accordance with the method disclosed in JIS R3106 by taking, as a spectral reflectance, a diffuse reflectance with reference to barium sulfate or aluminum oxide, and the heat ray reflective layer is made of a porous metal film containing a non-metal binder and having a film thickness of from 12 to 80 nm.

**17.** A heat ray reflective film which contains a binder resin and has a film thickness of at least 15 nm and which has a visible light absorptance of at most 45%, as defined by the following formula, and a visible light reflectance of at least 10%, as calculated in accordance with the method disclosed in JIS R3106 by taking, as a spectral reflectance, a diffuse reflectance with reference to barium sulfate or aluminum oxide:

Visible light absorptance (%) = 100 – visible light transmittance (%) – visible light reflectance (%)

(wherein the visible light transmittance is a visible light transmittance of a laminate having the heat ray reflective film formed on a glass substrate having the lowest transmittance of at least 87% at a wavelength of from 380 to 2,500 nm, as calculated in accordance with the method as disclosed in JIS R3106, and the visible light reflectance is calculated in accordance with the method disclosed in JIS R3106 by taking, as a spectral reflectance, a diffuse reflectance with reference to barium sulfate or aluminum oxide.)

**18.** A heat ray reflective film which contains a binder resin and has a film thickness of at least 15 nm and which has a visible light absorptance of at most 45%, as defined by the following formula, and a visible light reflectance of at least 10%, as calculated in accordance with the method disclosed in JIS R3106 by taking, as a spectral reflectance, a diffuse reflectance with reference to barium sulfate or aluminum oxide:

Visible light absorptance (%) = 100 – visible light transmittance (%) – visible light reflectance (%)

(wherein the visible light transmittance is a value obtained by dividing the spectral transmittance of a laminate having the heat ray reflective film formed on a substrate by the spectral transmittance of the substrate, as calculated in accordance with the method as disclosed in JIS R3106, and the visible light reflectance is calculated in accordance with the method disclosed in JIS R3106 by taking, as a spectral reflectance, a diffuse reflectance with reference to barium sulfate or aluminum oxide.)

**19.** The heat ray reflective film according to Claim 17 or 18, wherein the heat ray reflective film contains a metal.

**20.** The heat ray reflective film according to any one of Claims 17 to 19, which has a selective reflectivity for infrared ray of at least 1.05, as calculated by the following formula:

Selective reflectivity for infrared ray = infrared reflectance/visible light reflectance (wherein the infrared reflectance is calculated by taking, as a spectral reflectance, a diffuse reflectance with reference to barium sulfate or aluminum oxide and setting the wavelength range at the time of calculating a solar reflectance of JIS R3106 to be from 780 to 1,300 nm, and the visible light reflectance is calculated in accordance with the method disclosed in JIS R3106 by taking, as a spectral reflectance, a diffuse reflectance with reference to barium sulfate or aluminum oxide.)

**21.** A laminate comprising a heat ray reflective film as defined in any one of Claims 17 to 20 and a transparent substrate.

**22.** The laminate according to Claim 21, which has a solar reflectance of at least 15%, as calculated in accordance with the method disclosed in JIS R3106 by taking, as a spectral reflectance, a diffuse reflectance with reference to barium sulfate or aluminum oxide, a visible light reflectance of at least 10%, as calculated in accordance with the method disclosed in JIS R3106 by taking, as a spectral reflectance, a diffuse reflectance with reference to barium sulfate or aluminum oxide, and a selective reflectivity for infrared ray of at least 1.05, as calculated by the following formula:

Selective reflectivity for infrared ray = infrared reflectance/visible light reflectance (wherein the infrared reflectance is calculated by taking, as a spectral reflectance, a diffuse reflectance with reference to barium sulfate or aluminum oxide and setting the wavelength range at the time of calculating a solar reflectance of JIS R3106 to be from 780 to 1,300 nm, and the visible light reflectance is calculated in accordance with the method disclosed in JIS R3106 by taking, as a spectral reflectance, a diffuse reflectance with reference to barium sulfate or aluminum oxide.)

**23.** A transparent heat ray reflective laminate having a heat ray reflective layer containing a metal, and a resin layer laminated sequentially on a transparent substrate, wherein the resin layer contains a polymer having an alkyl group having at least 8 carbon atoms in its side chain.

**24.** The transparent heat ray reflective laminate according to Claim 23, wherein the polymer having an alkyl group having at least 8 carbon atoms in its side chain contains an ultraviolet absorbing group.

**25.** A window material for an automobile, which contains the laminate as defined in any one of Claims 1 to 12, 15, 16 and 21 to 24, or the metal film as defined in Claim 13 or 14, or the heat ray reflective film as defined in any one of Claims 17 to 20.

**26.** An automobile having the window material as defined in Claim 25.

**27.** A process for producing a heat ray reflective layer, which comprises a film-forming step of subjecting a composition comprising metal particles, a non-metal compound and a solvent, wherein the proportion of the non-metal compound to the solid content is from 0.1 to 40 wt%, to wet film-forming on a substrate to form a precursor layer, and a conversion step of heat-treating the precursor layer, wherein in the conversion step, the precursor layer is converted to a heat ray reflective layer having a surface resistivity of at most 100 Ω/□, and the heat ray reflective layer has a layer thickness of at most 80 nm.

**28.** A coating fluid for forming a heat ray reflective layer, which comprises fine metal particles having an average particle size of at most 100 nm, a binder resin containing a hydrophilic group other than an N-pyrrolidonyl group, and a polar solvent.

**29.** The coating fluid for forming a heat ray reflective layer according to Claim 28, wherein the hydrophilic group has a

peak of desorption temperature of at most 290˚C, as determined under the following measurement conditions:

(Measurement conditions)
Hydrophilic group-$CH_3$ (a compound having the hydrophilic group and a methyl group bonded to each other) and silver particles having a particle size of from 1 to 5 μm are mixed, and the peak of desorption temperature of the hydrophilic group-$CH_3$ from silver is measured by TPD-MS.

**30.** The coating fluid for forming a heat ray reflective layer according to Claim 28 or 29, wherein the hydrophilic group is selected from the group consisting of a hydroxy group, a carboxy group, and an oxyethylene group.

**31.** The coating fluid for forming a heat ray reflective layer according to any one of Claims 28 to 30, wherein the binder resin contains a hydrophobic group.

**32.** The coating fluid for forming a heat ray reflective layer according to Claim 31, wherein the hydrophobic group is selected from an alkyl group, an acetyl group, and a phenyl group which may have a substituent.

**33.** The coating fluid for forming a heat ray reflective layer according to any one of Claims 28 to 32, wherein the binder resin is a curable resin.

**34.** The coating fluid for forming a heat ray reflective layer according to any one of Claims 28 to 33, which contains a heterocyclic compound capable of forming a coordination bond to the metal.

**35.** The coating fluid for forming a heat ray reflective layer according to any one of Claims 28 to 34, wherein the polar solvent is a mixed solvent of water and a polar solvent other than water, wherein the polar solvent other than water has a boiling point of from 60 to 170˚C.

**36.** A coating fluid for a heat ray reflective film, which comprises fine metal particles having an average particle size of at most 100 nm, a polar solvent, a heterocyclic compound capable of forming a coordination bond to the metal, and a binder.

Fig. 1

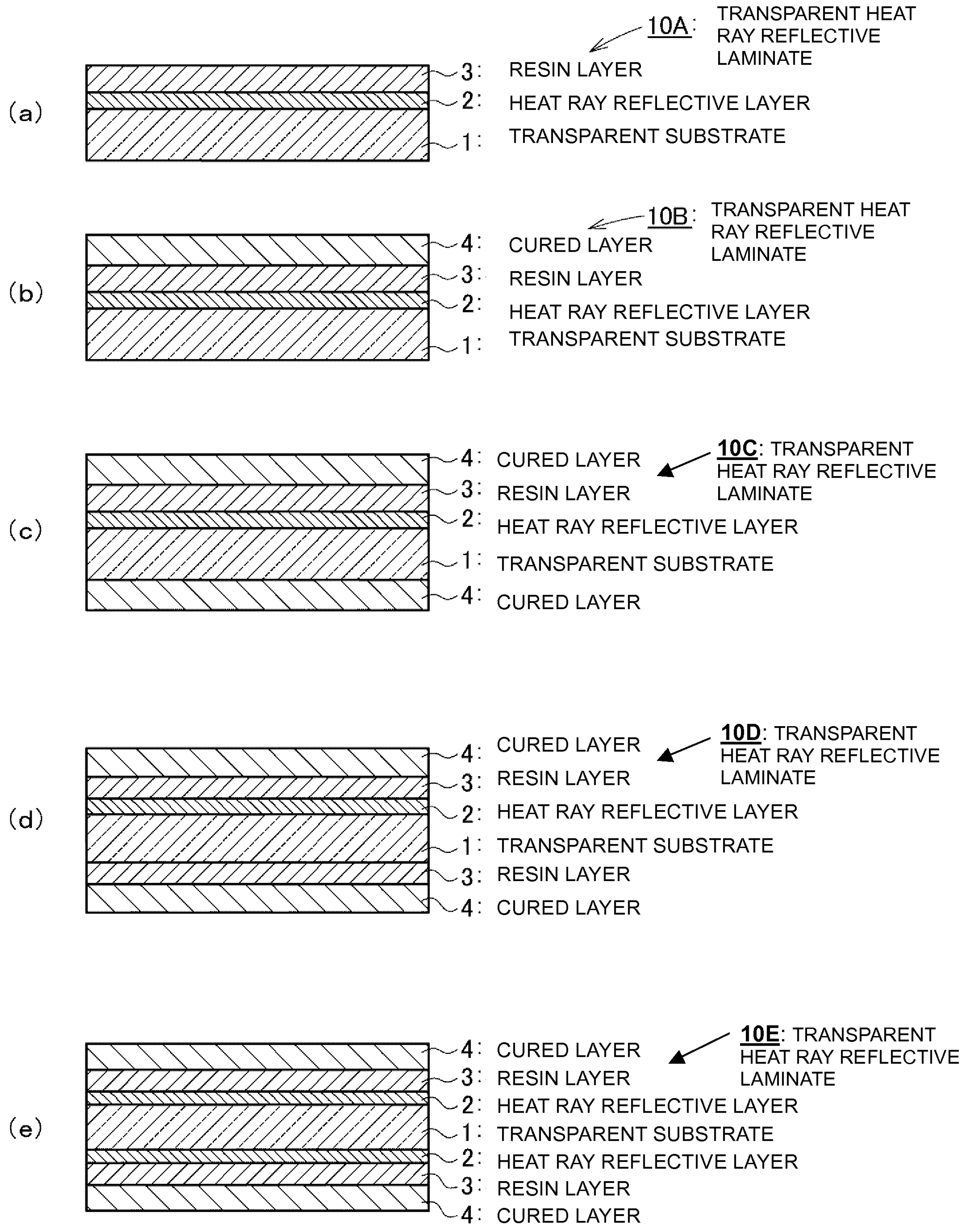
(a)
10A: TRANSPARENT HEAT RAY REFLECTIVE LAMINATE
3: RESIN LAYER
2: HEAT RAY REFLECTIVE LAYER
1: TRANSPARENT SUBSTRATE
(b)
10B: TRANSPARENT HEAT RAY REFLECTIVE LAMINATE
4: CURED LAYER
3: RESIN LAYER
2: HEAT RAY REFLECTIVE LAYER
1: TRANSPARENT SUBSTRATE
(c)
10C: TRANSPARENT HEAT RAY REFLECTIVE LAMINATE
4: CURED LAYER
3: RESIN LAYER
2: HEAT RAY REFLECTIVE LAYER
1: TRANSPARENT SUBSTRATE
4: CURED LAYER
(d)
10D: TRANSPARENT HEAT RAY REFLECTIVE LAMINATE
4: CURED LAYER
3: RESIN LAYER
2: HEAT RAY REFLECTIVE LAYER
1: TRANSPARENT SUBSTRATE
3: RESIN LAYER
4: CURED LAYER
(e)
10E: TRANSPARENT HEAT RAY REFLECTIVE LAMINATE
4: CURED LAYER
3: RESIN LAYER
2: HEAT RAY REFLECTIVE LAYER
1: TRANSPARENT SUBSTRATE
2: HEAT RAY REFLECTIVE LAYER
3: RESIN LAYER
4: CURED LAYER

Fig. 2

EXAMPLE I-1

100nm

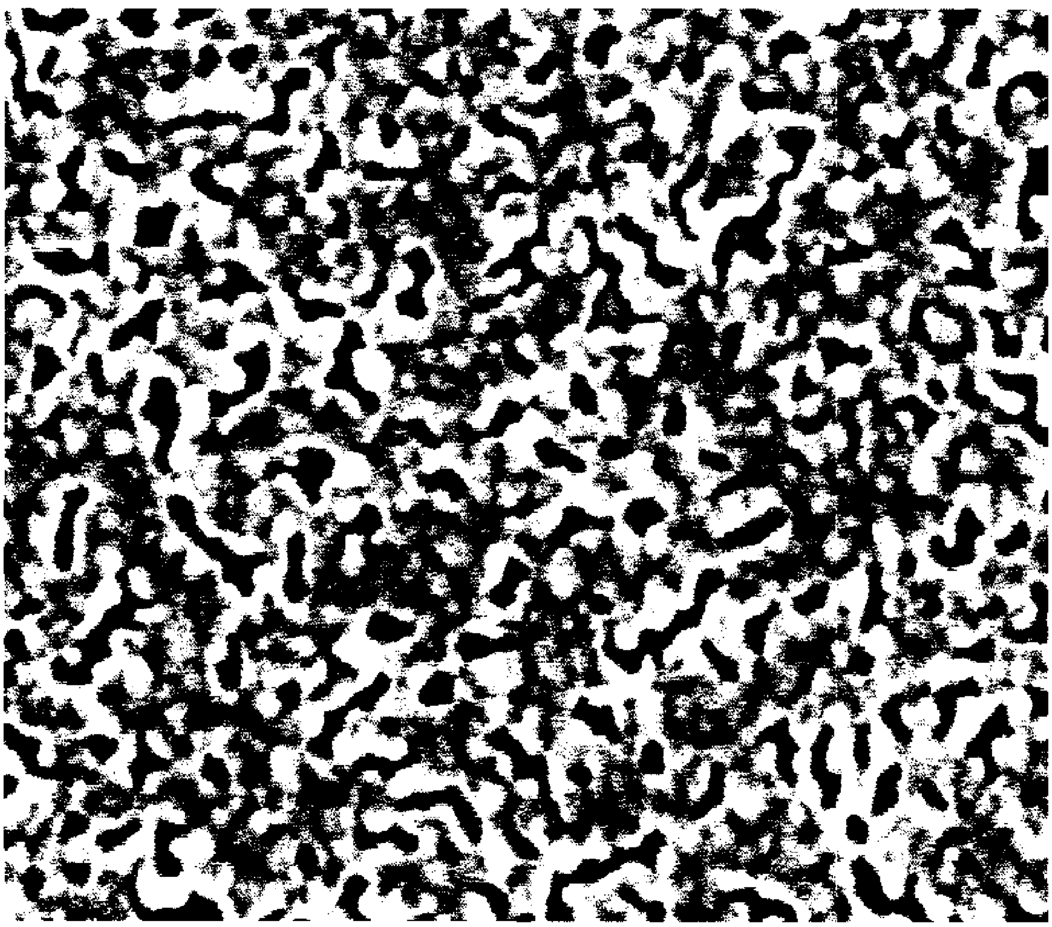

Fig. 3

EXAMPLE I-2

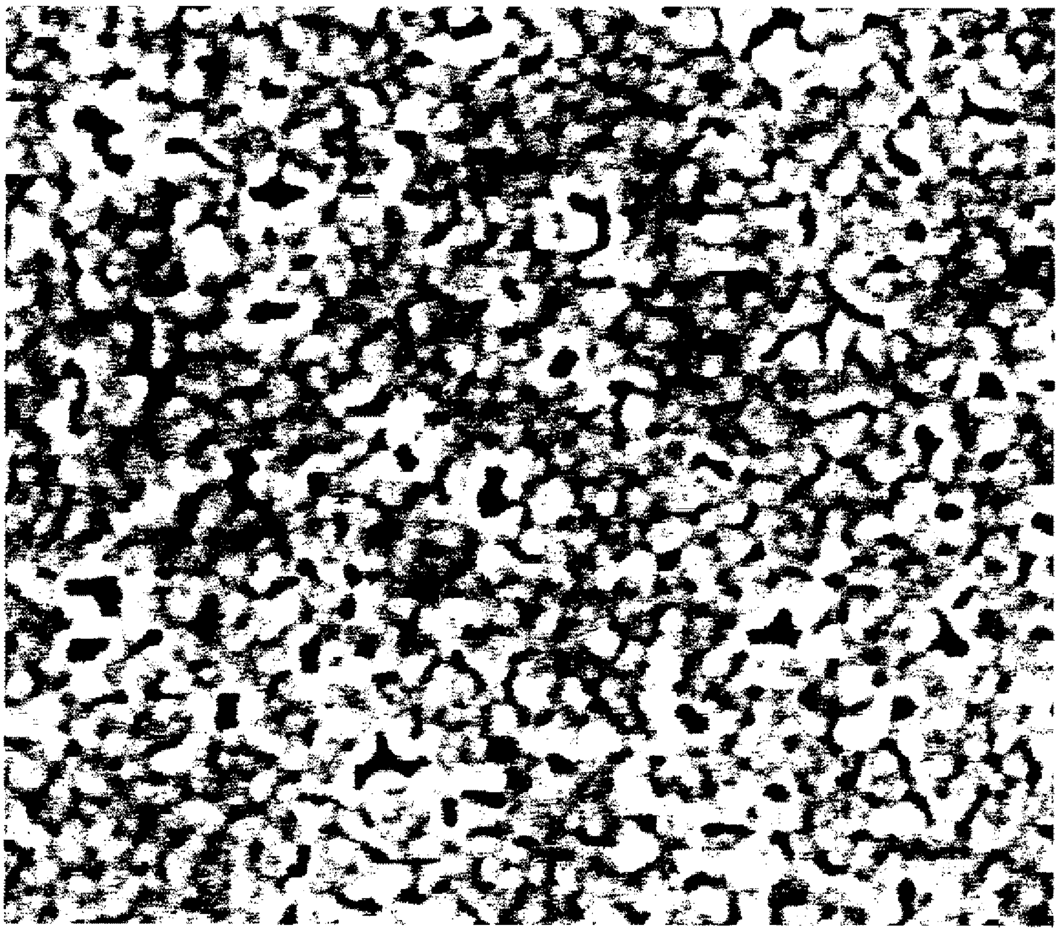

Fig. 4

EXAMPLE I-3

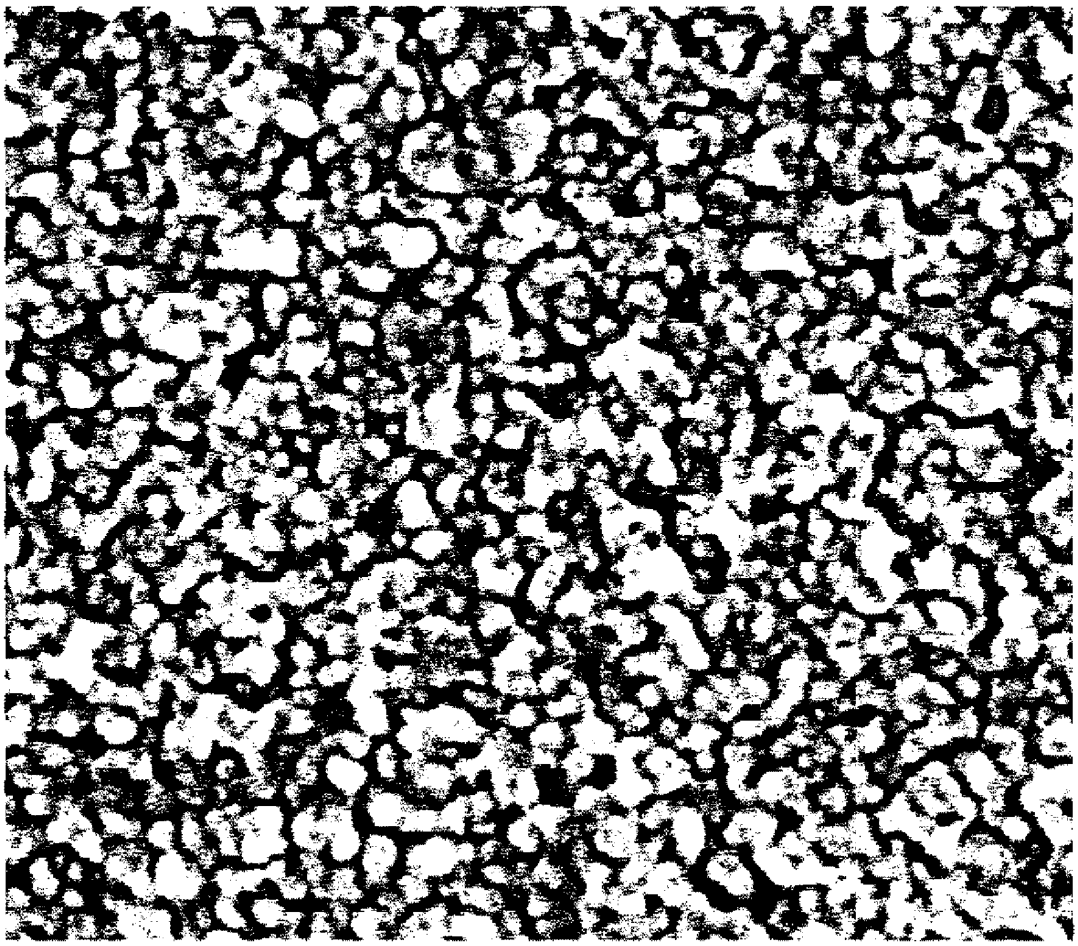

Fig. 5

EXAMPLE I-4

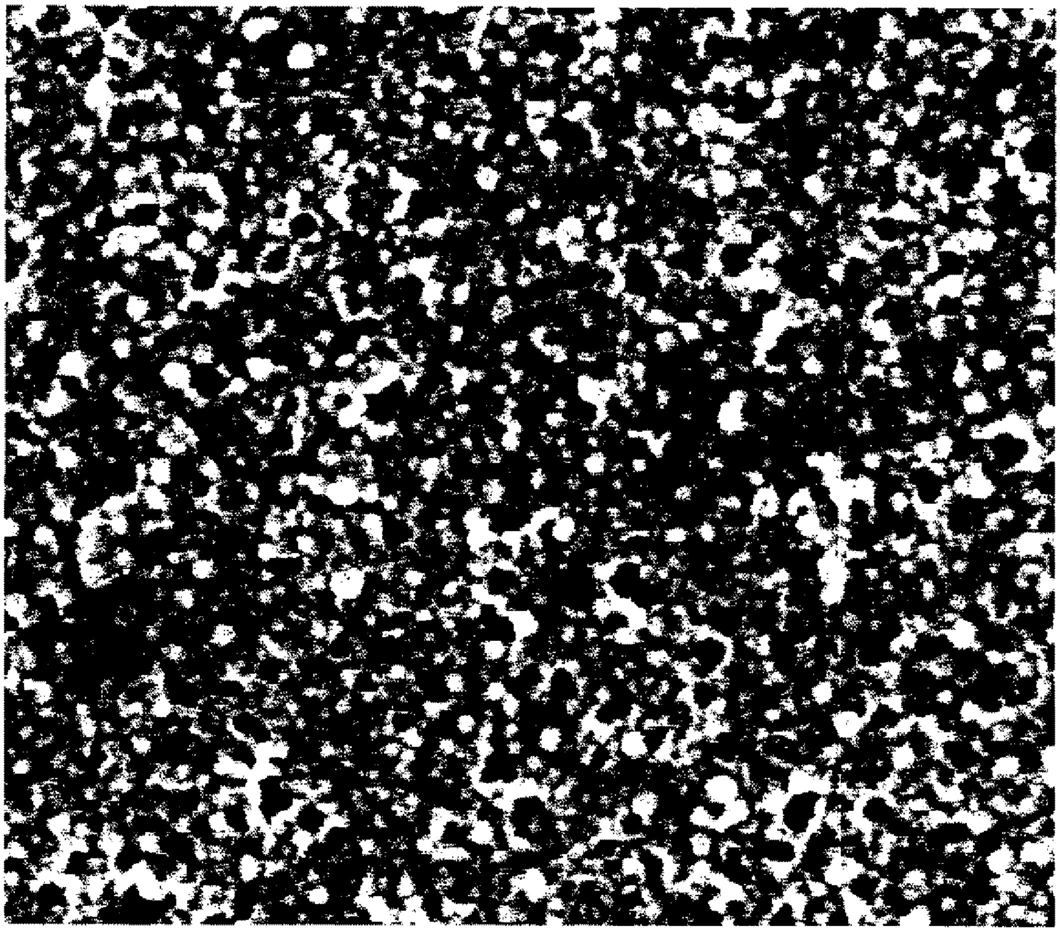

Fig. 6

EXAMPLE I-5

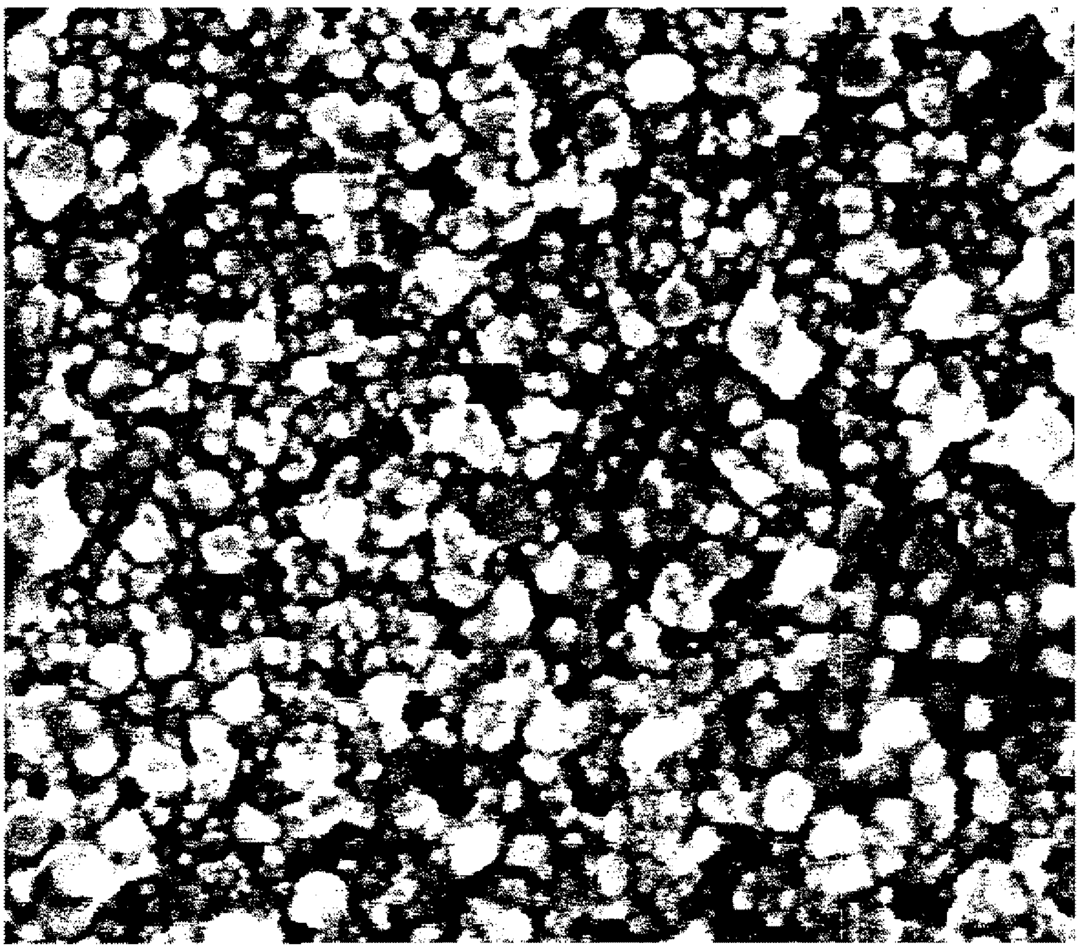

Fig. 7

EXAMPLE I-6

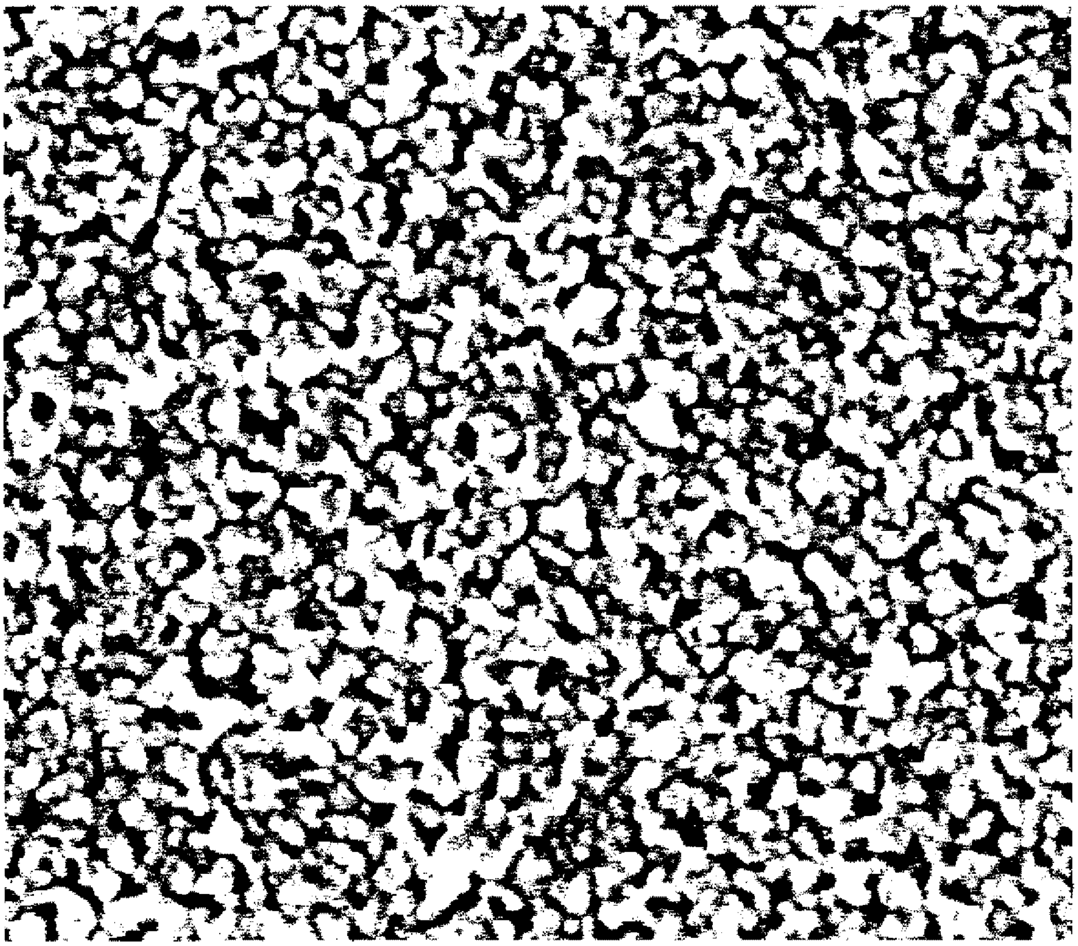

Fig. 8

COMPARATIVE EXAMPLE I-1

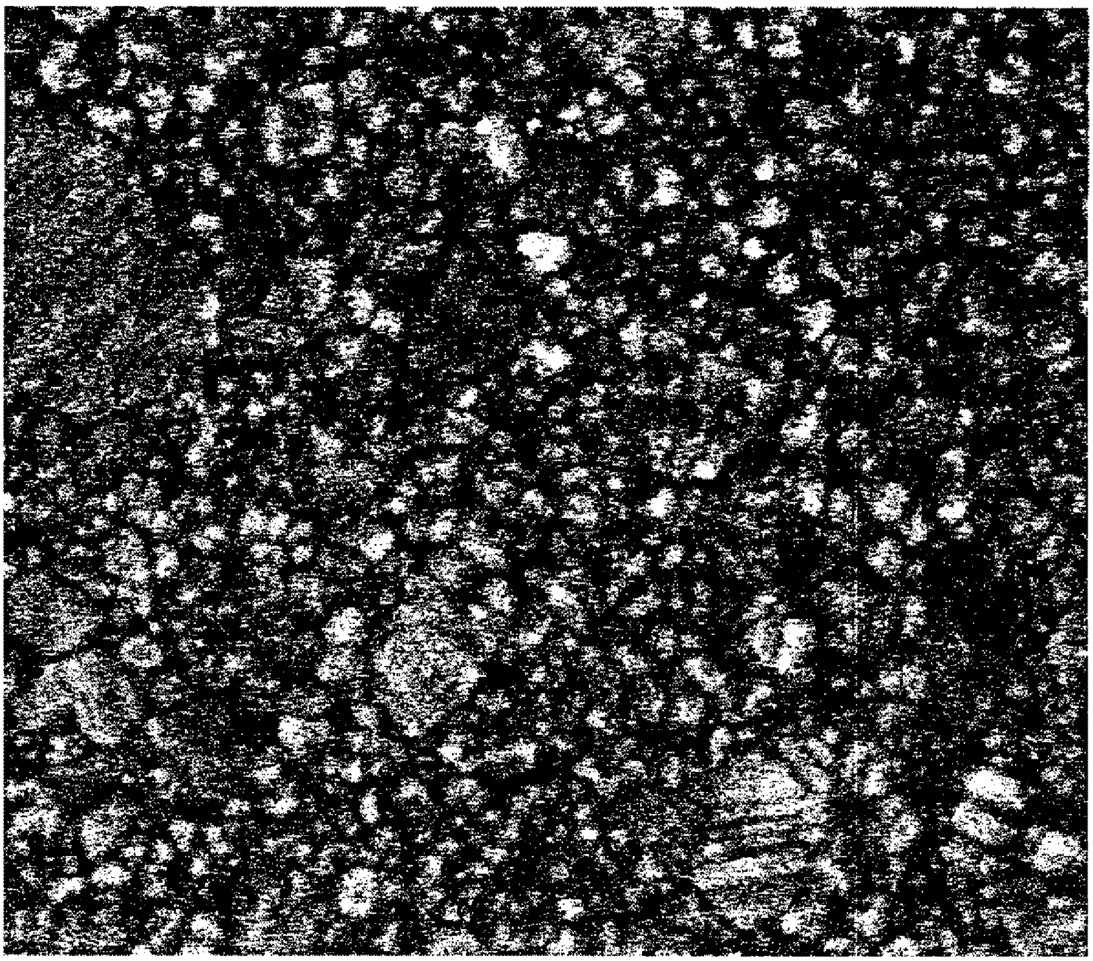

Fig. 9

COMPARATIVE EXAMPLE I-2

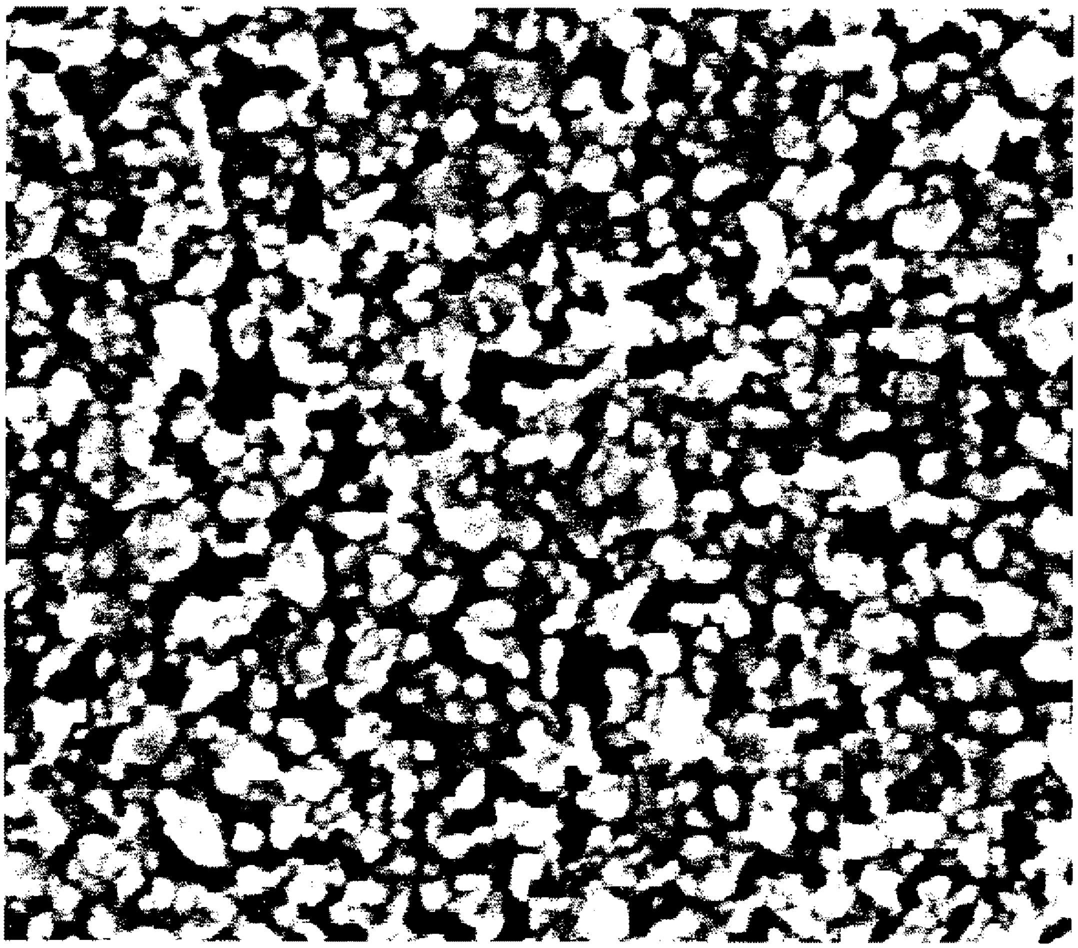

Fig. 10

COMPARATIVE EXAMPLE I-4

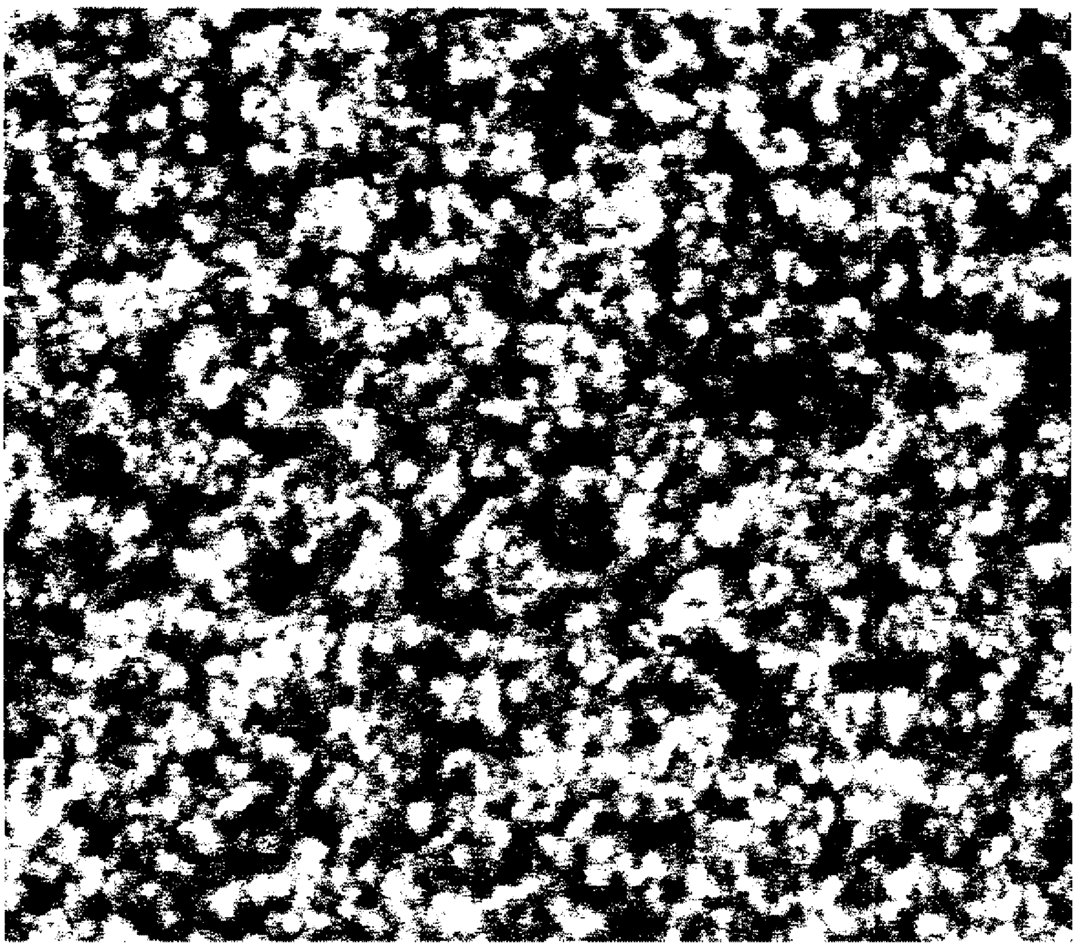

Fig. 11

COMPARATIVE EXAMPLE I-5

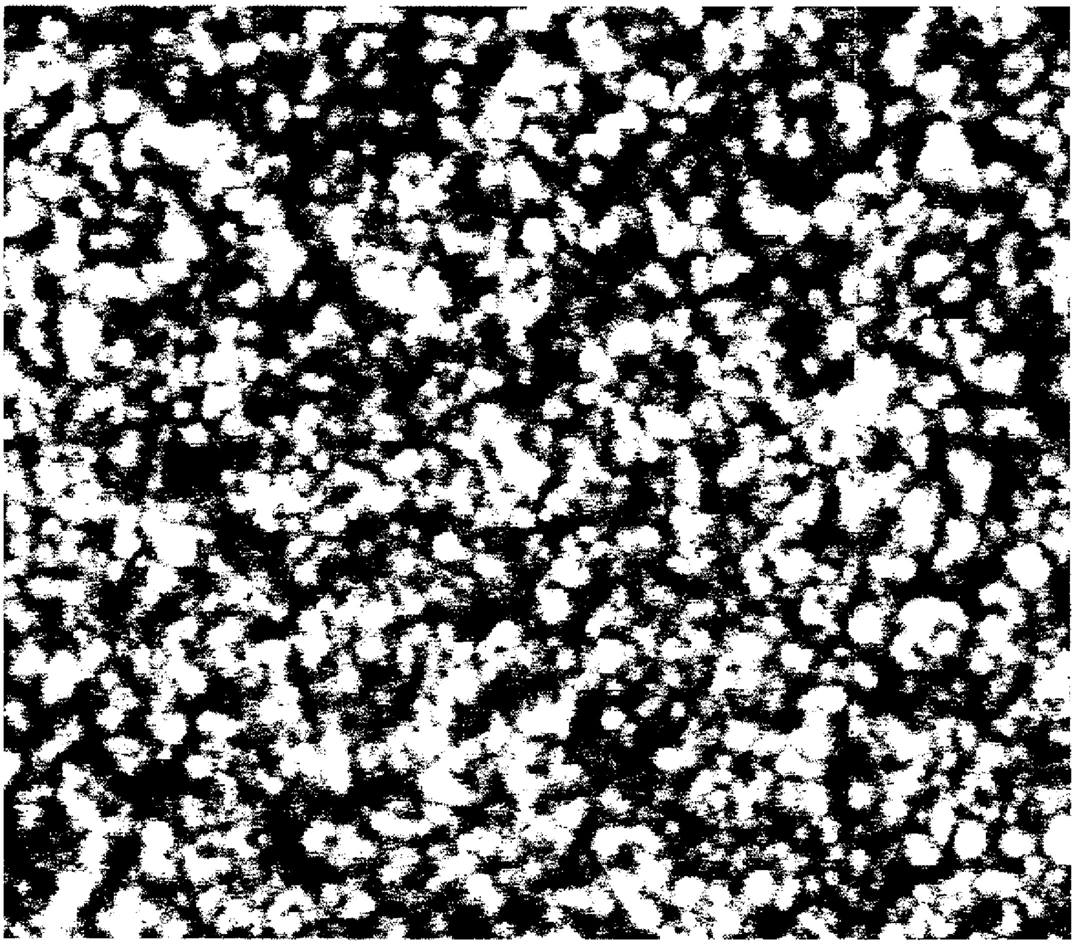

Fig. 12

COMPARATIVE EXAMPLE I-6

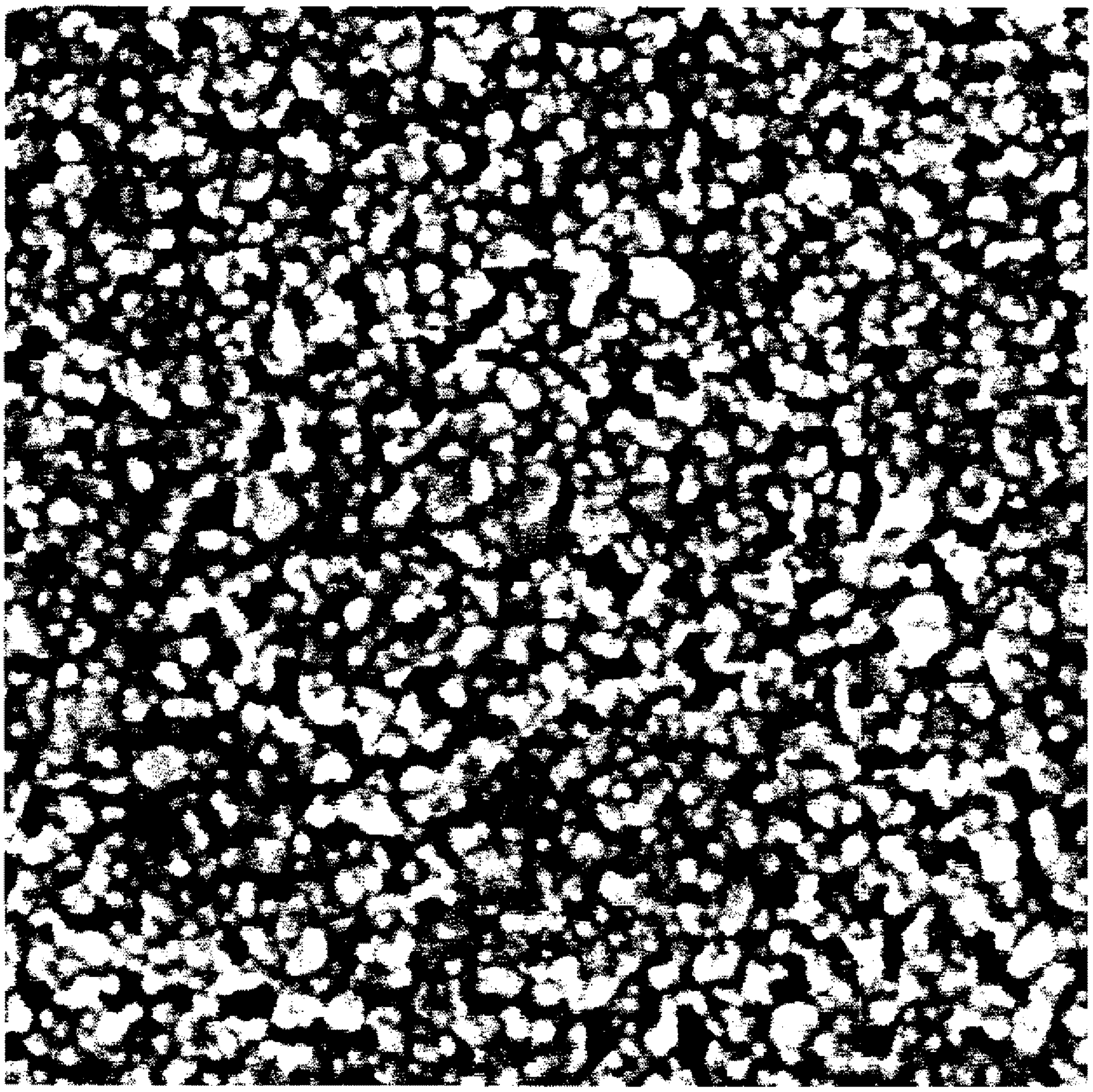

Fig. 13

COMPARATIVE EXAMPLE I-7

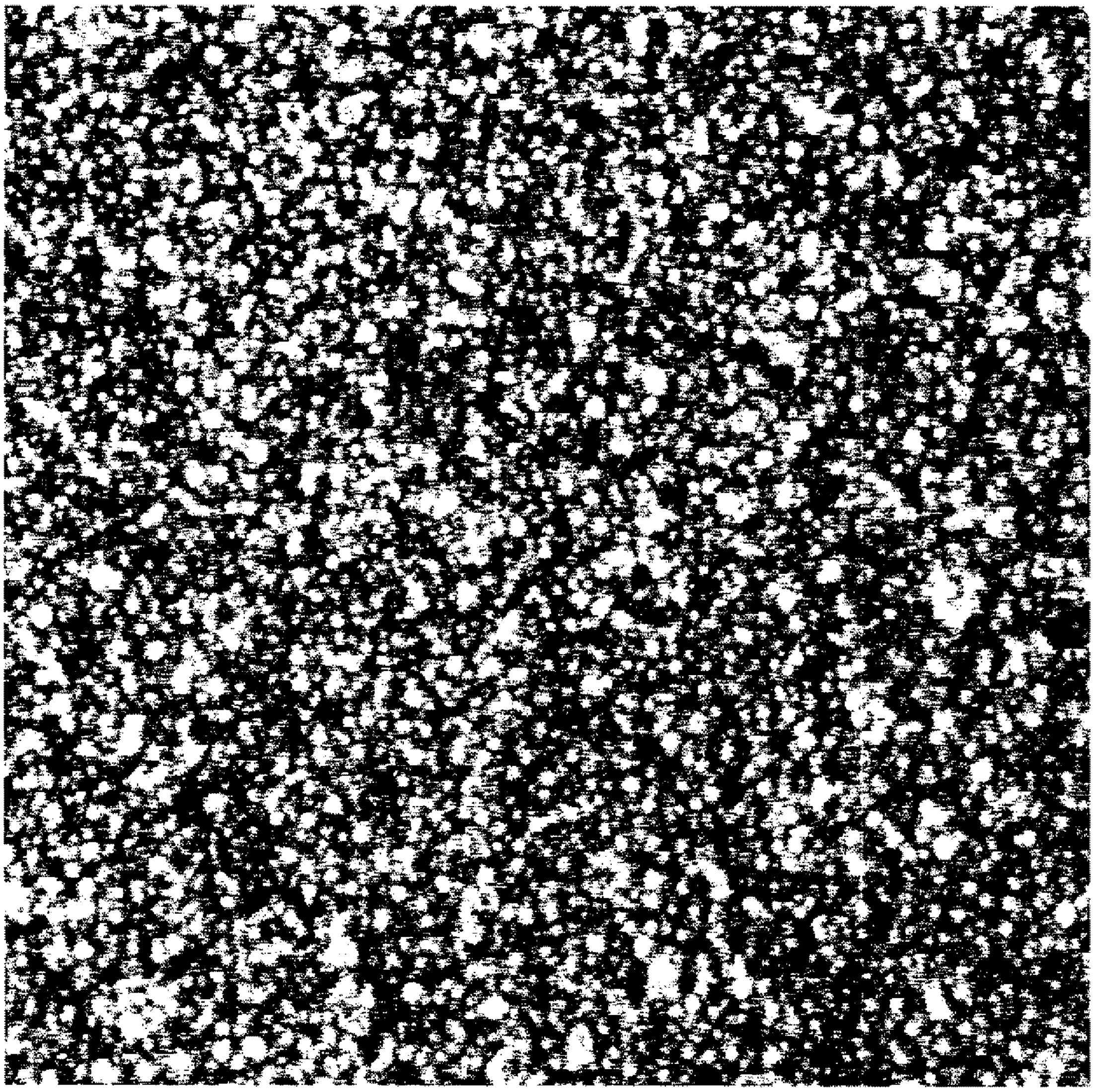

Fig. 14

COMPARATIVE EXAMPLE I-9

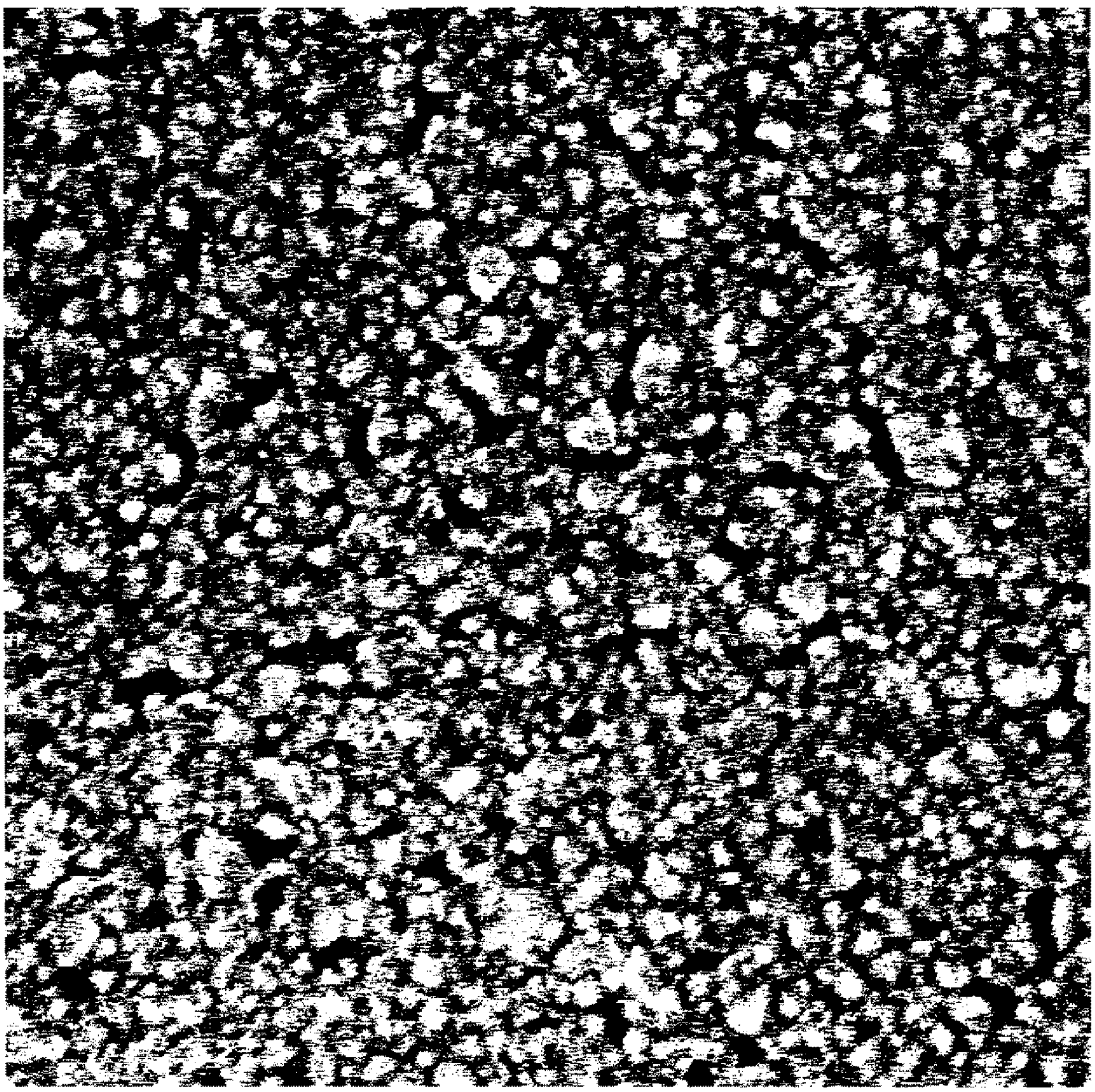

Fig. 15

COMPARATIVE EXAMPLE I-10

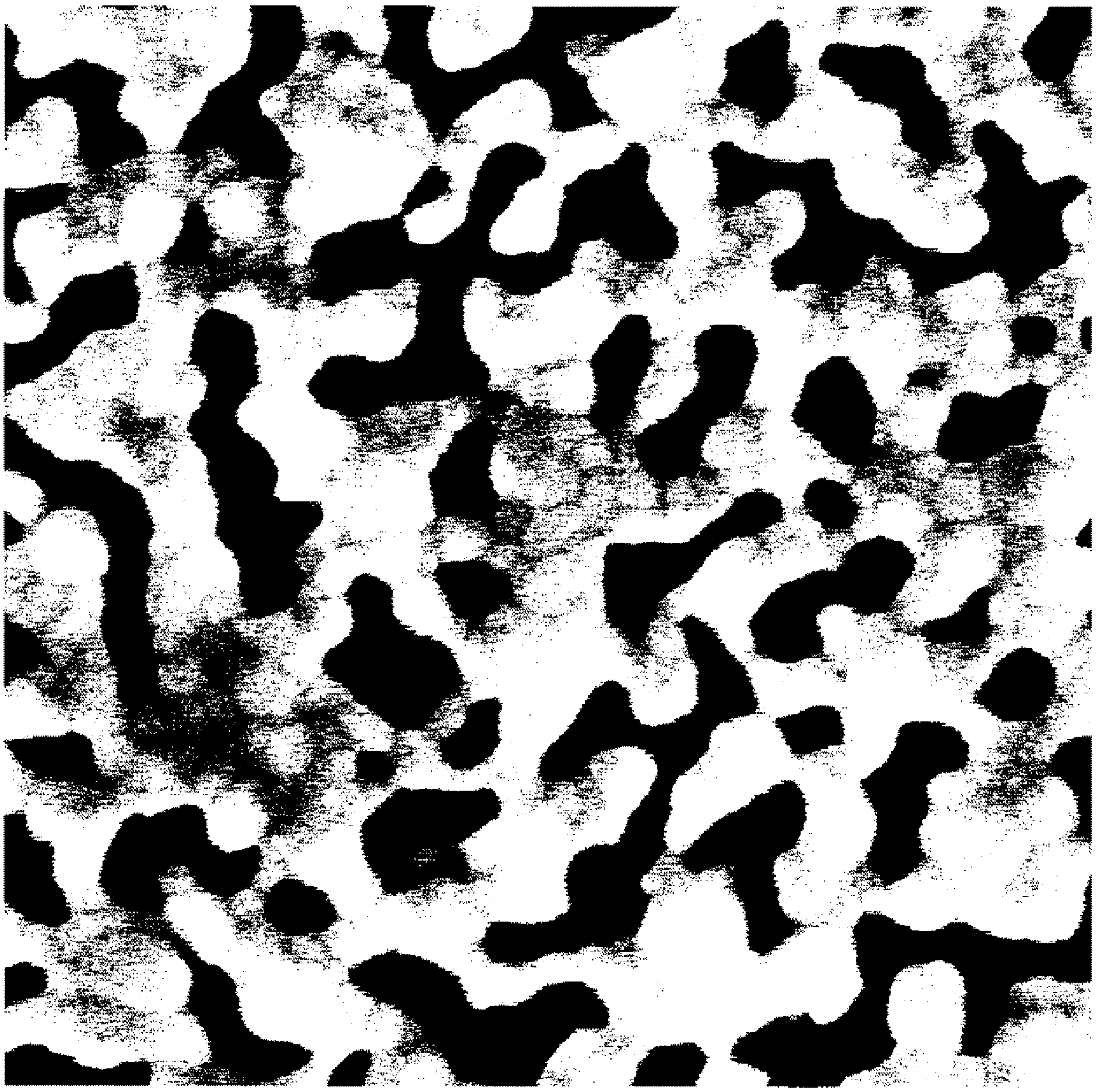

Fig. 16

EXAMPLE II-1

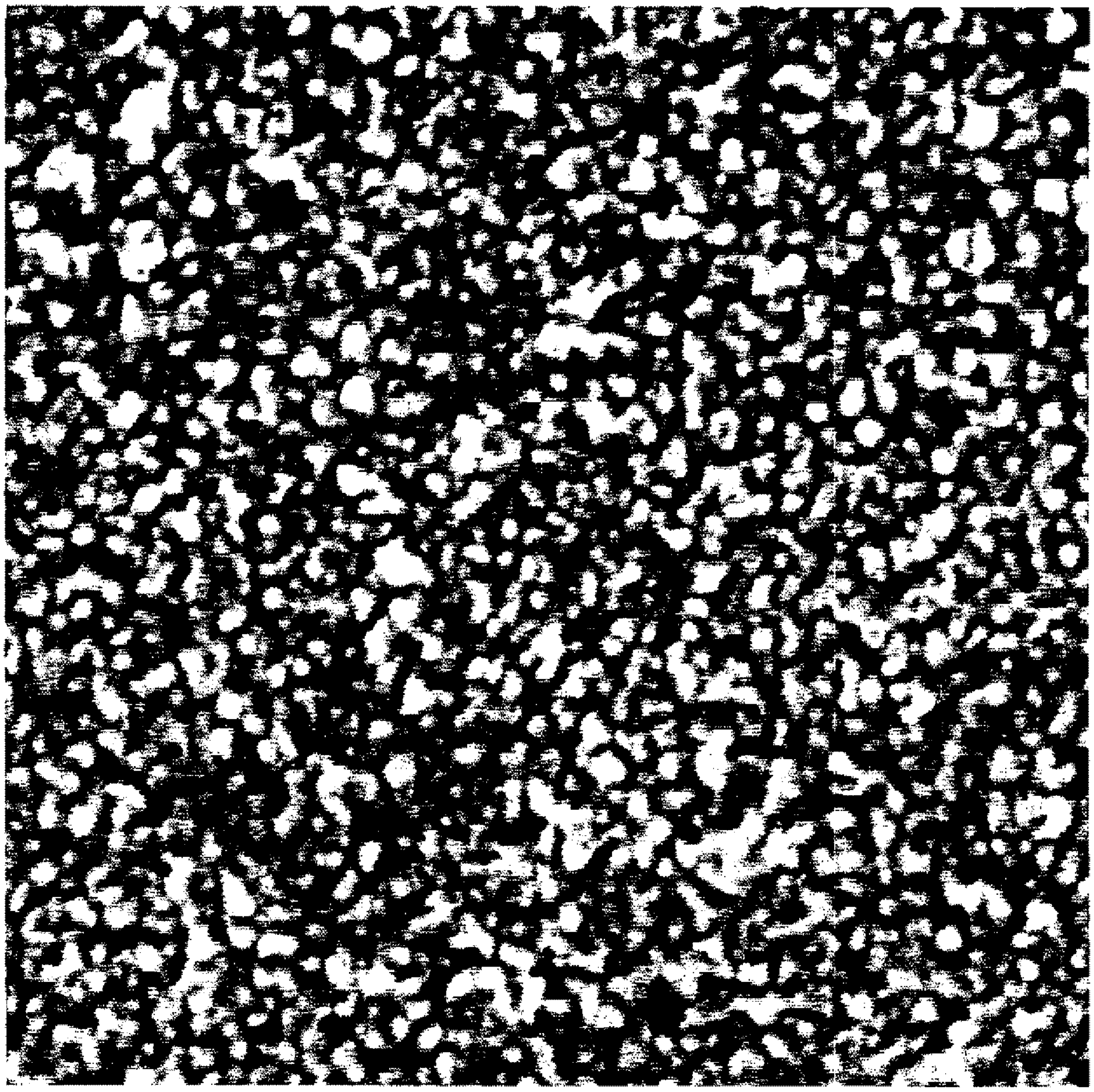

Fig. 17

EXAMPLE II-1

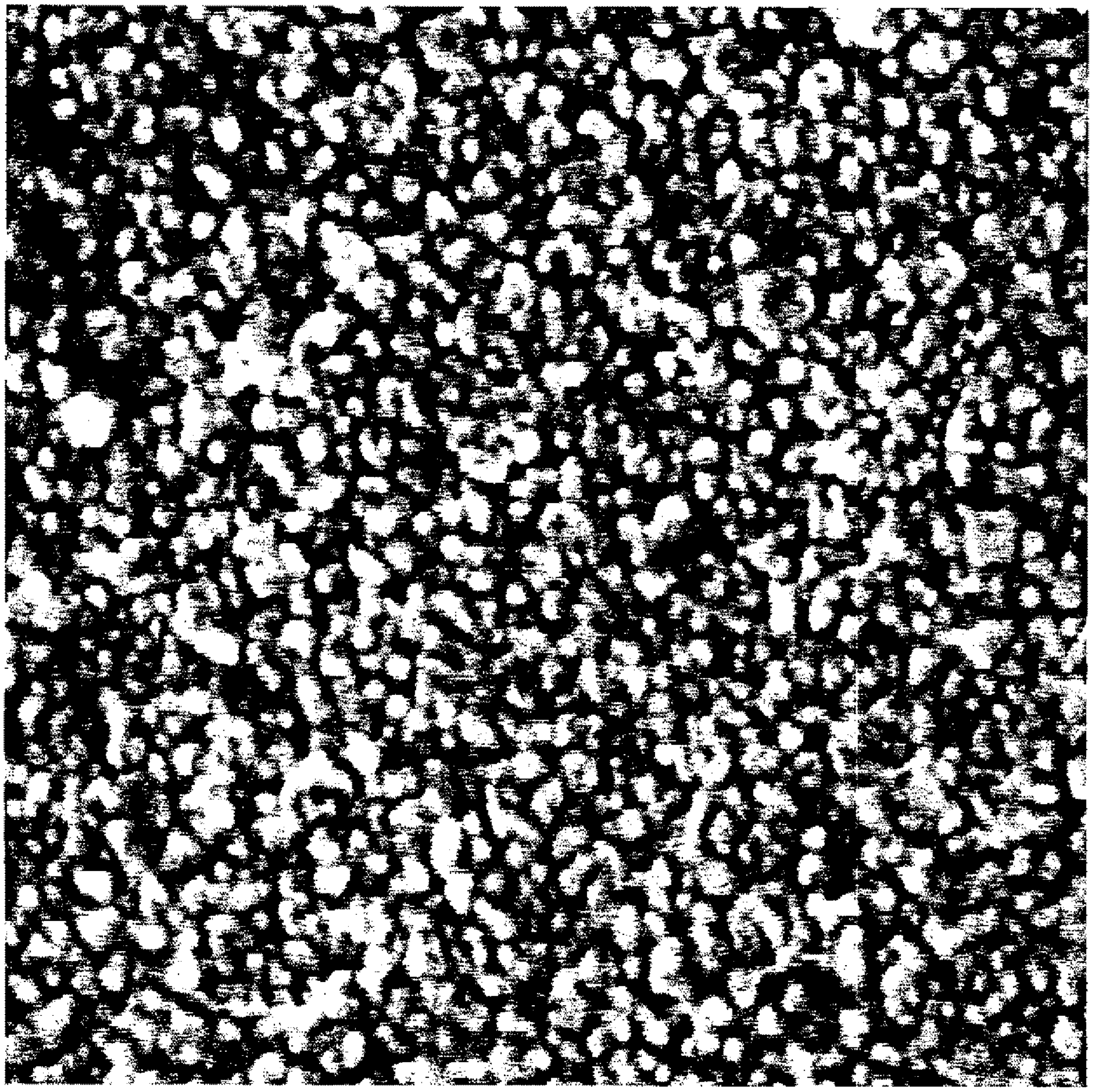

Fig. 18

EXAMPLE II-2

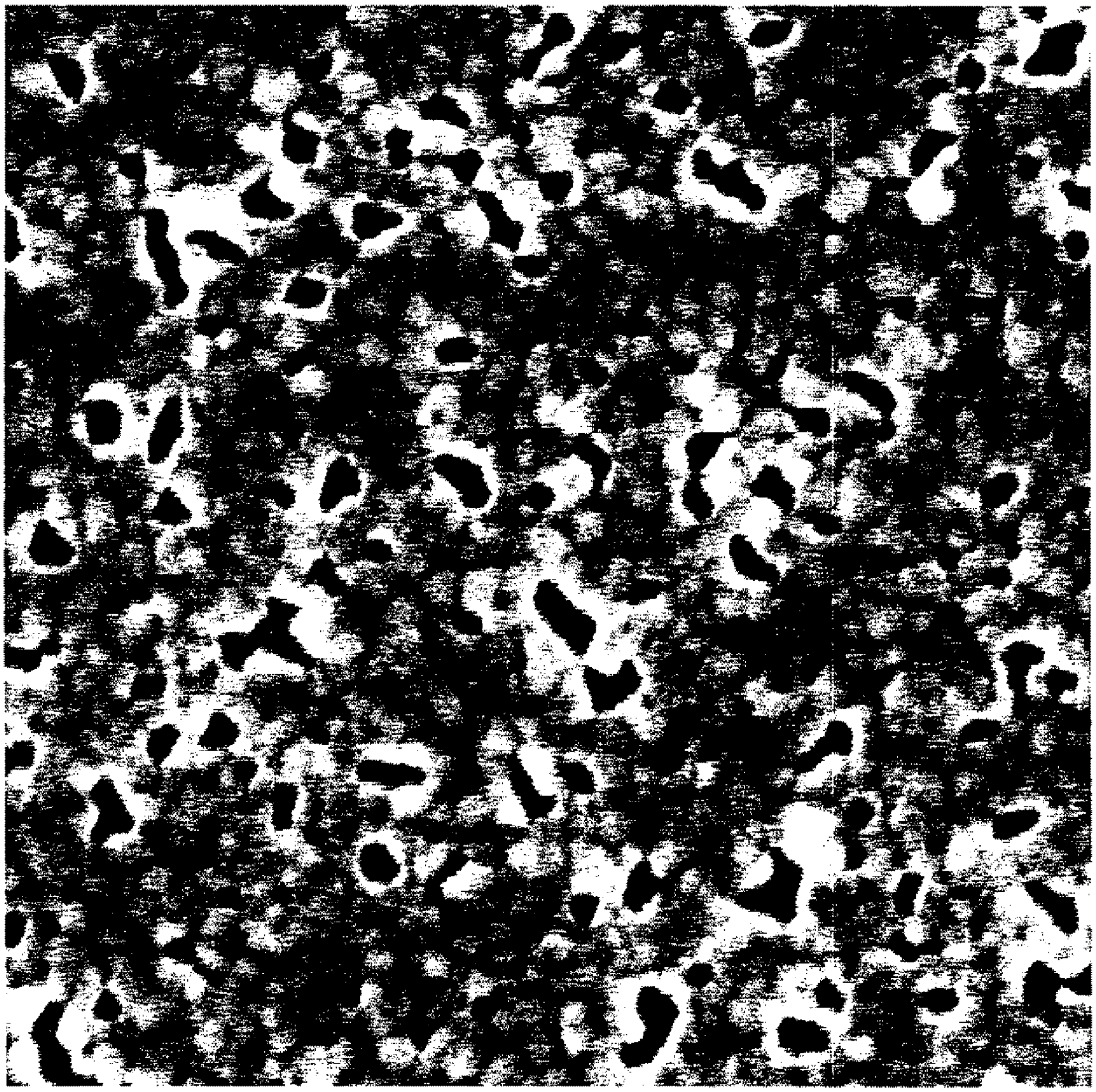

Fig. 19

EXAMPLE II-3

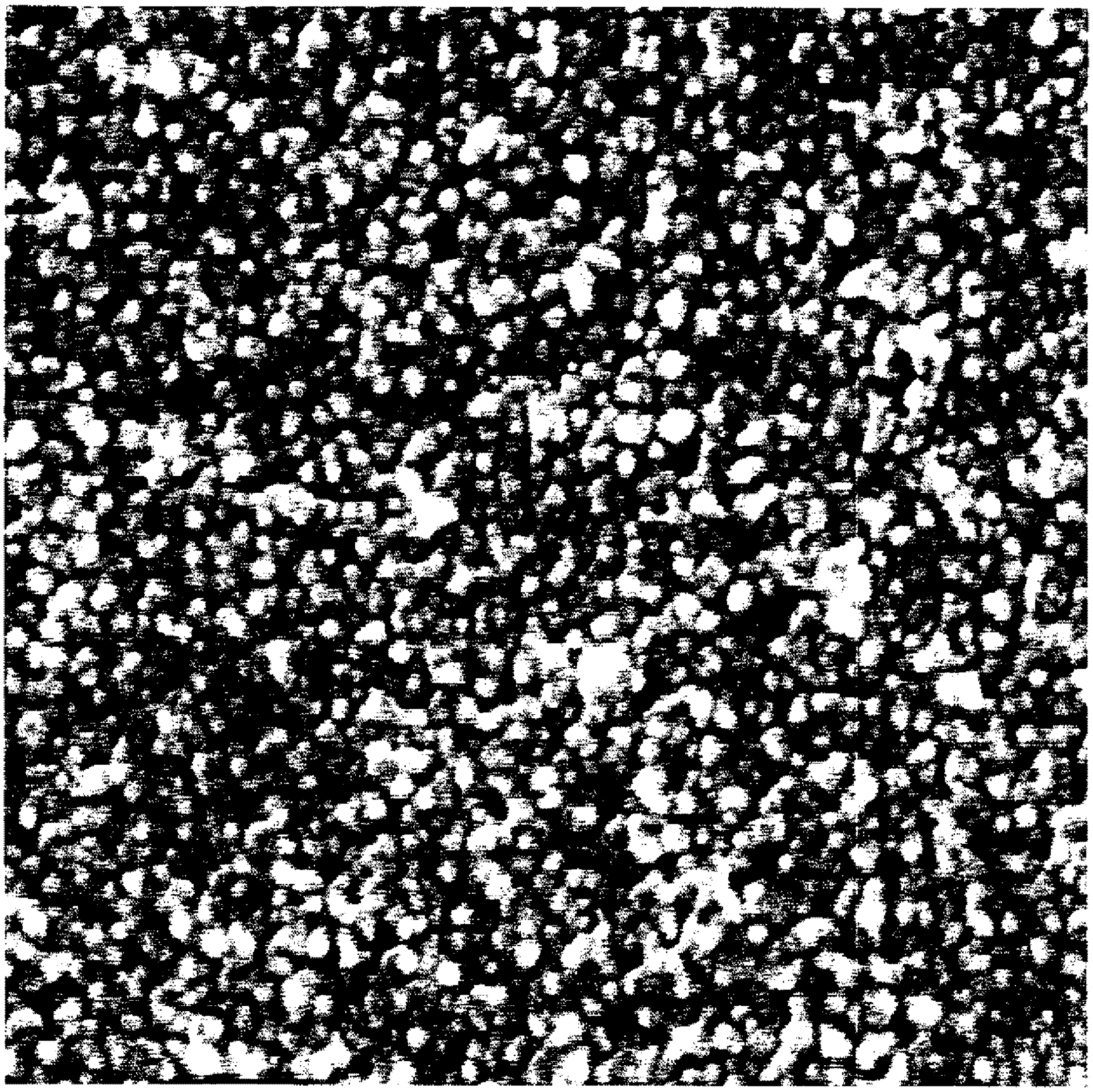

Fig. 20

EXAMPLE II-4

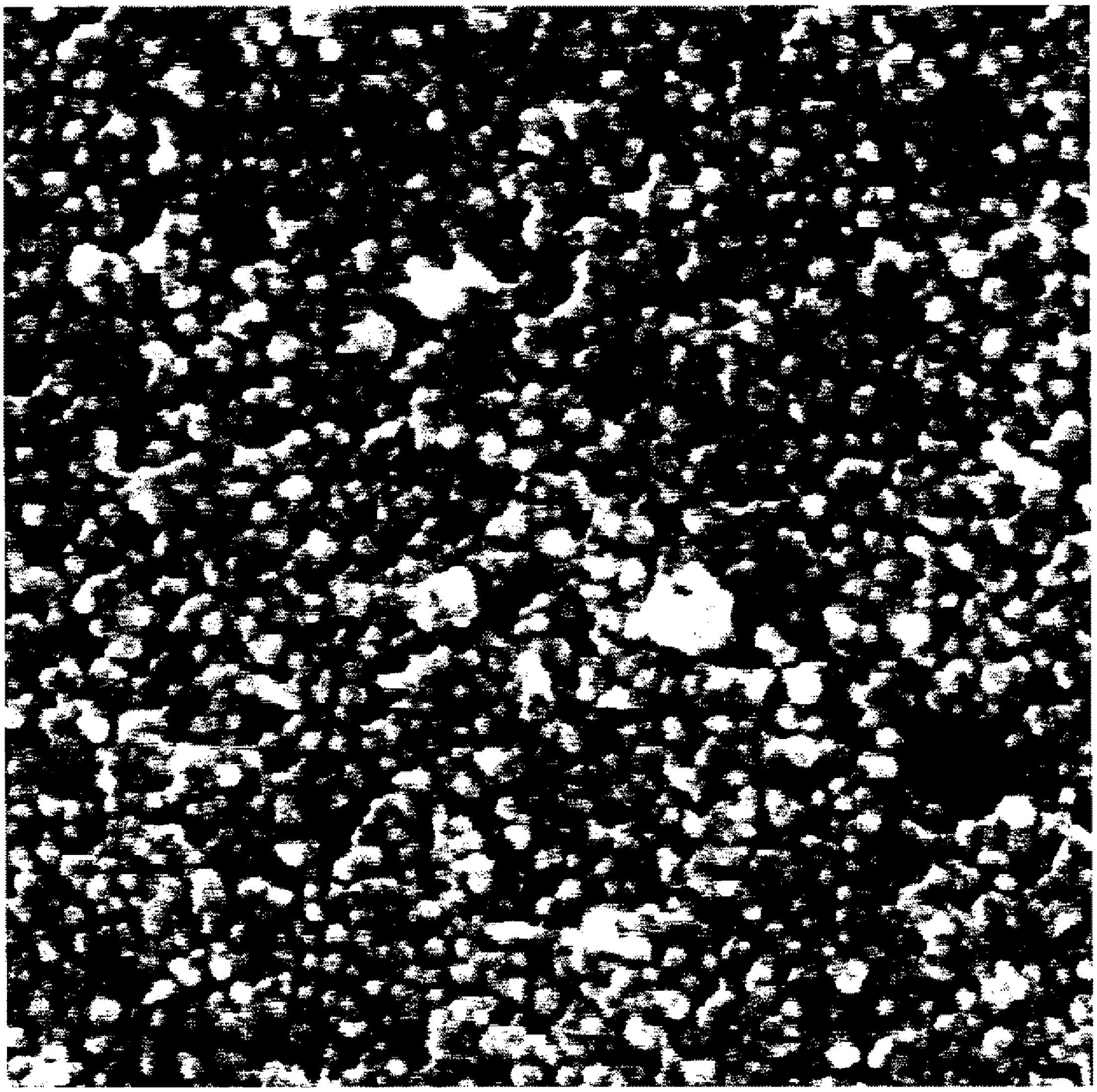

Fig. 21

EXAMPLE II-5

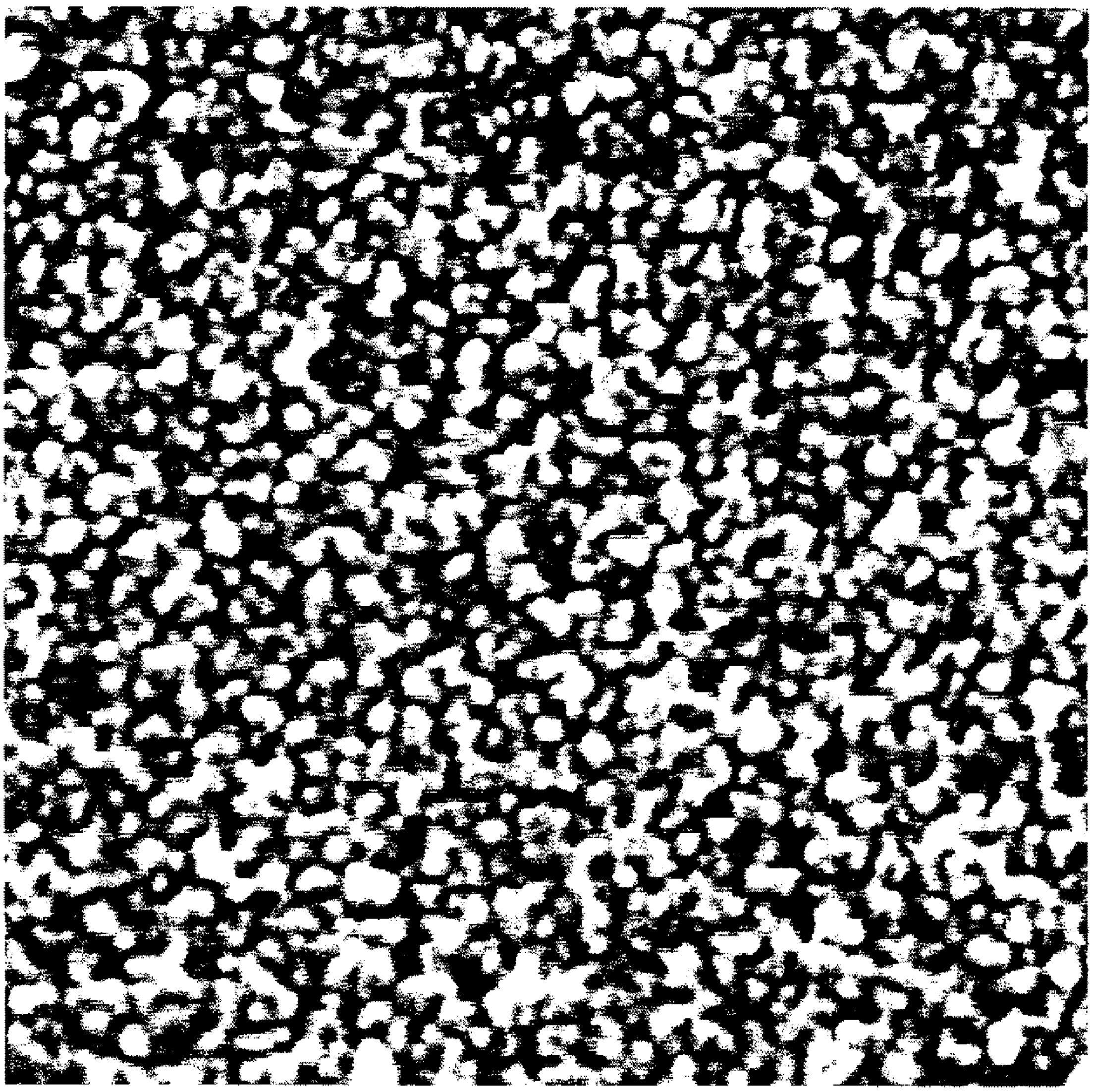

Fig. 22

EXAMPLE II-6

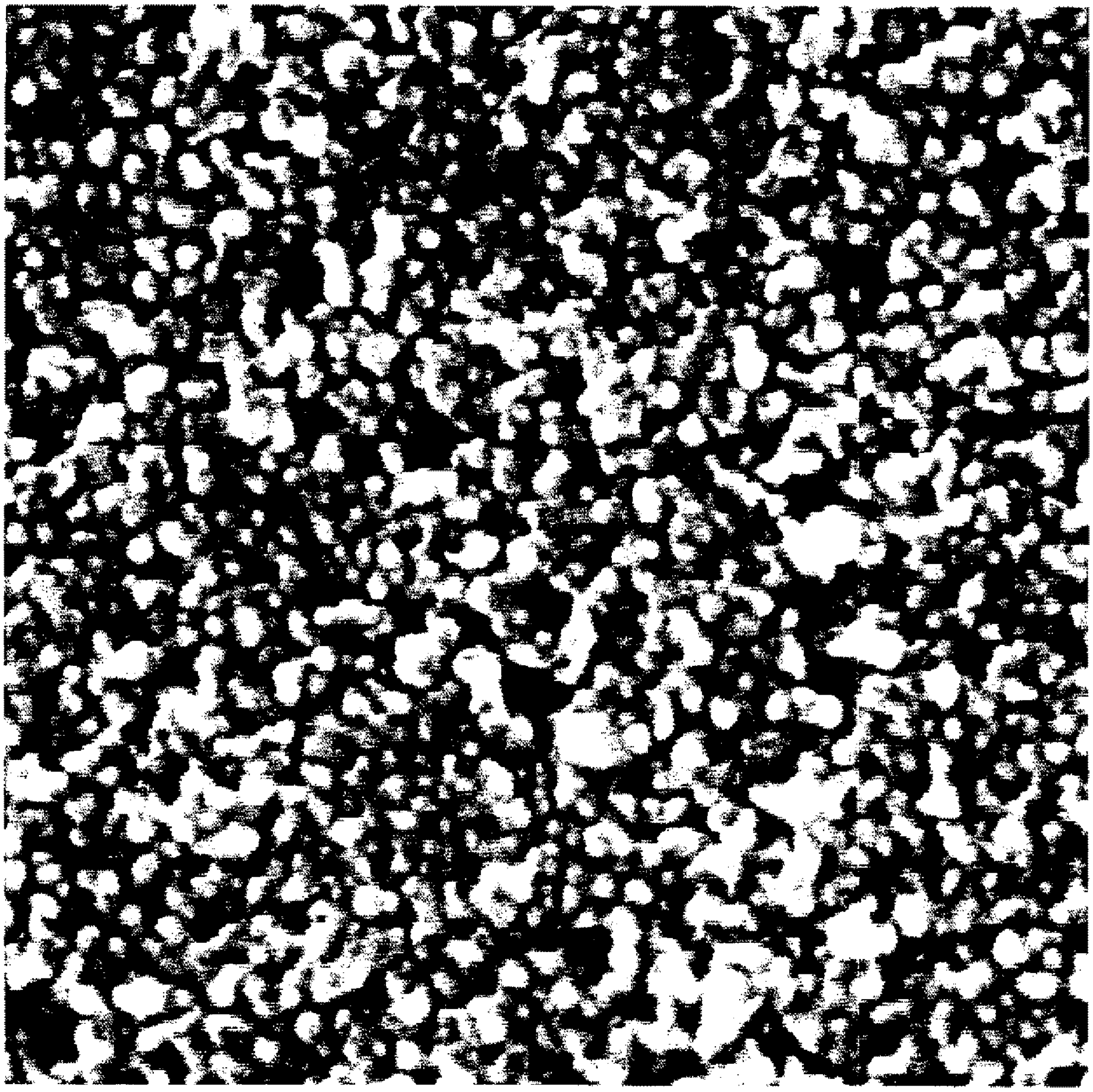

Fig. 23

COMPARATIVE EXAMPLE II-1

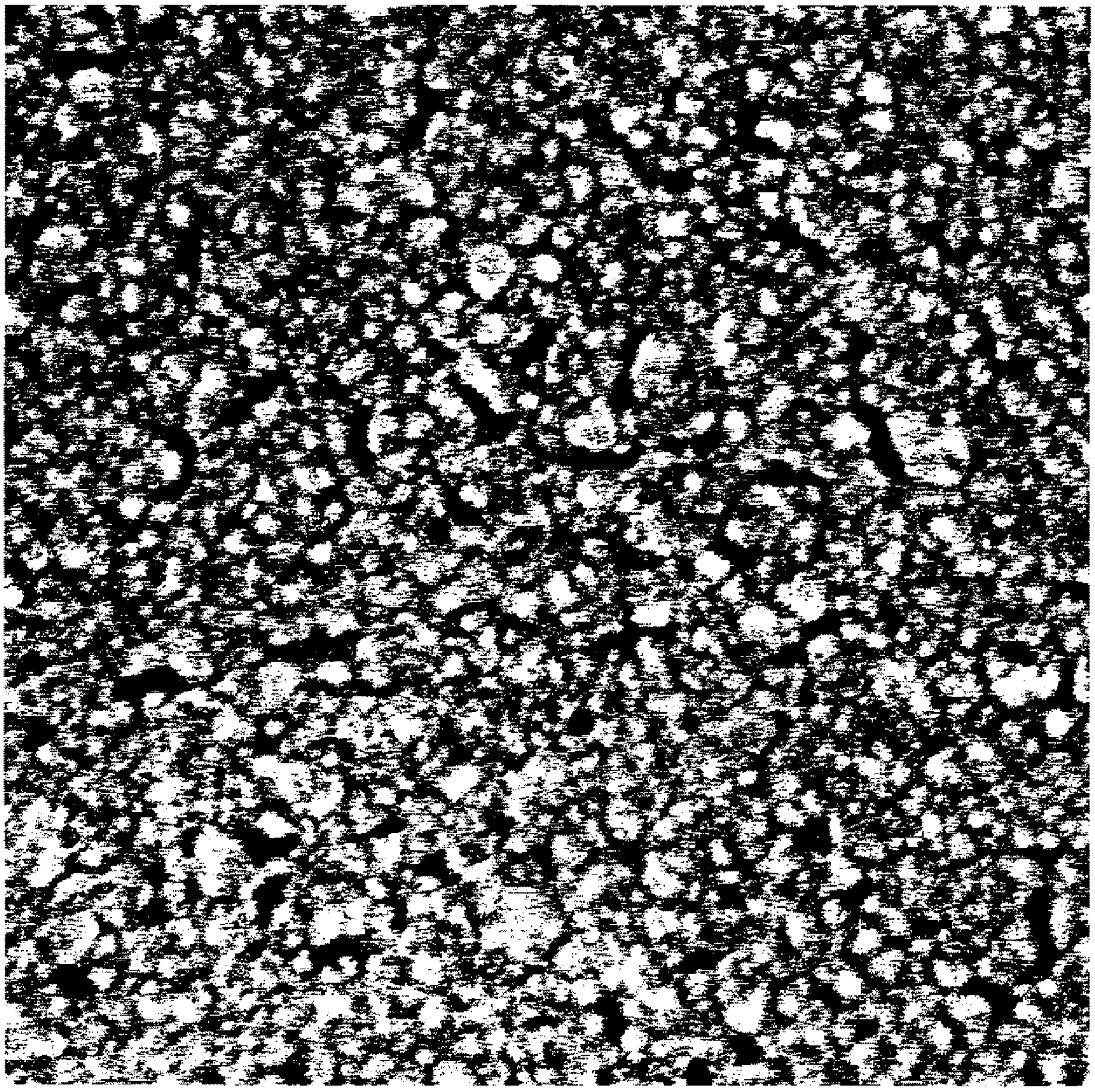

Fig. 24

COMPARATIVE EXAMPLE II-2

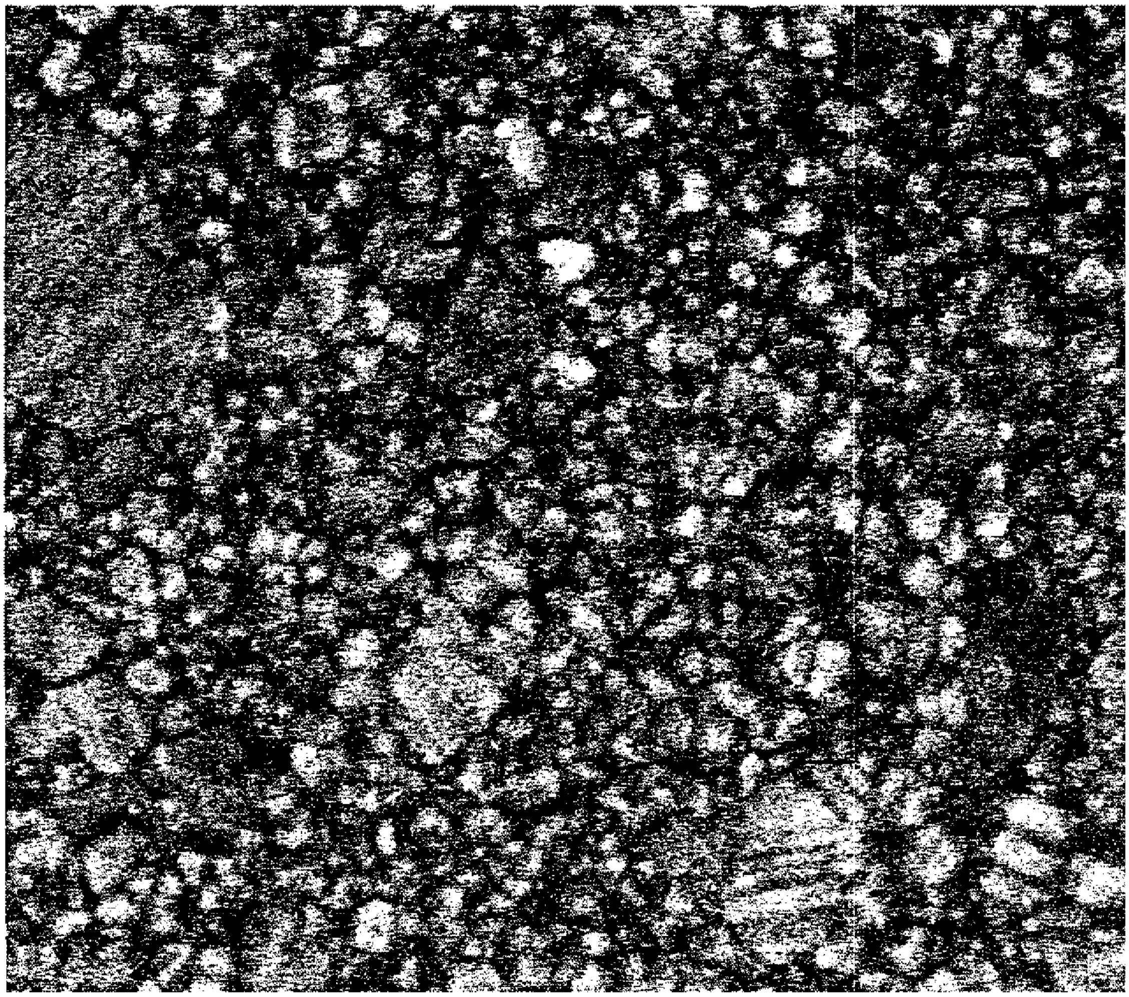

Fig. 25

COMPARATIVE EXAMPLE II-3

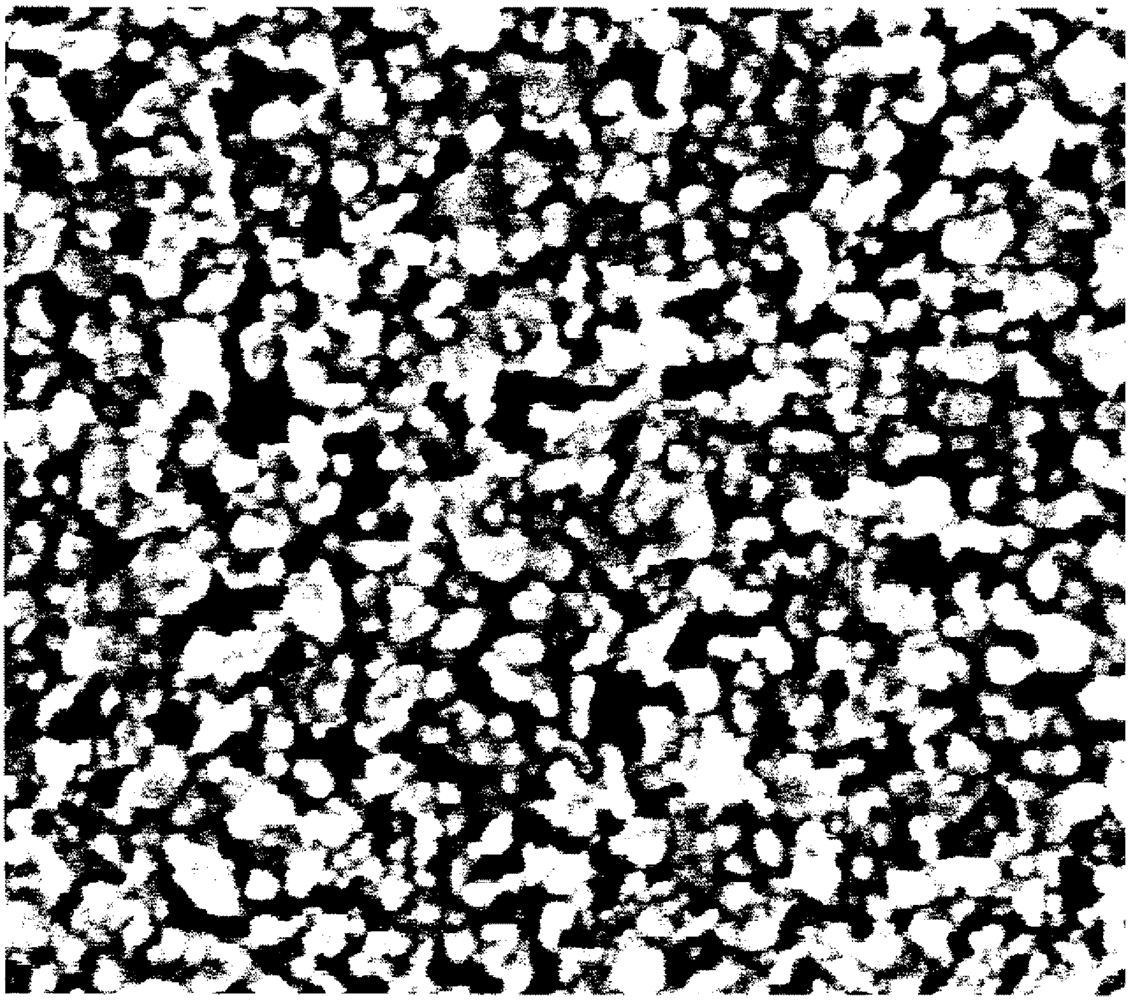

Fig. 26

COMPARATIVE EXAMPLE II-4

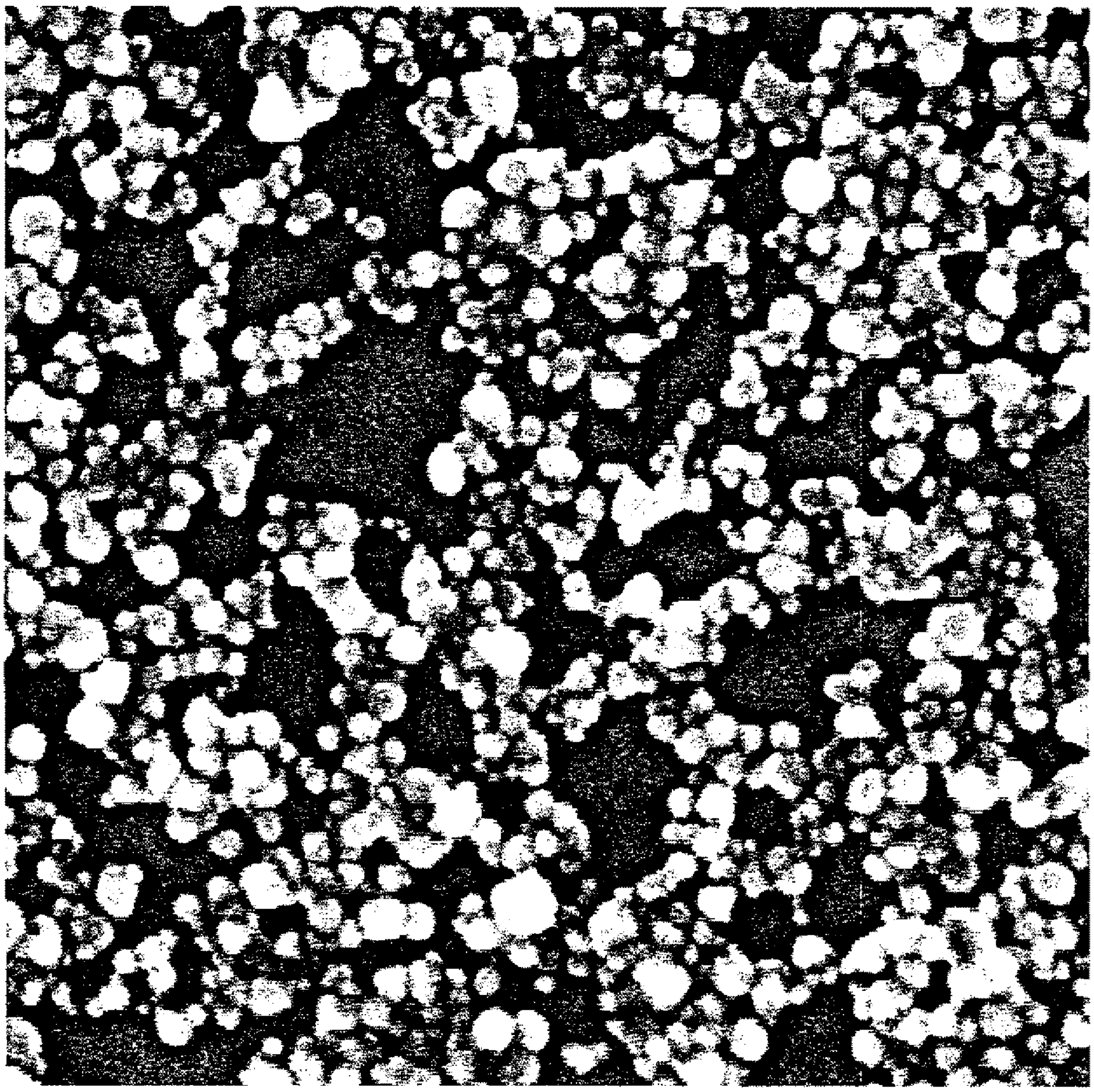

Fig. 27

EXAMPLE III-1

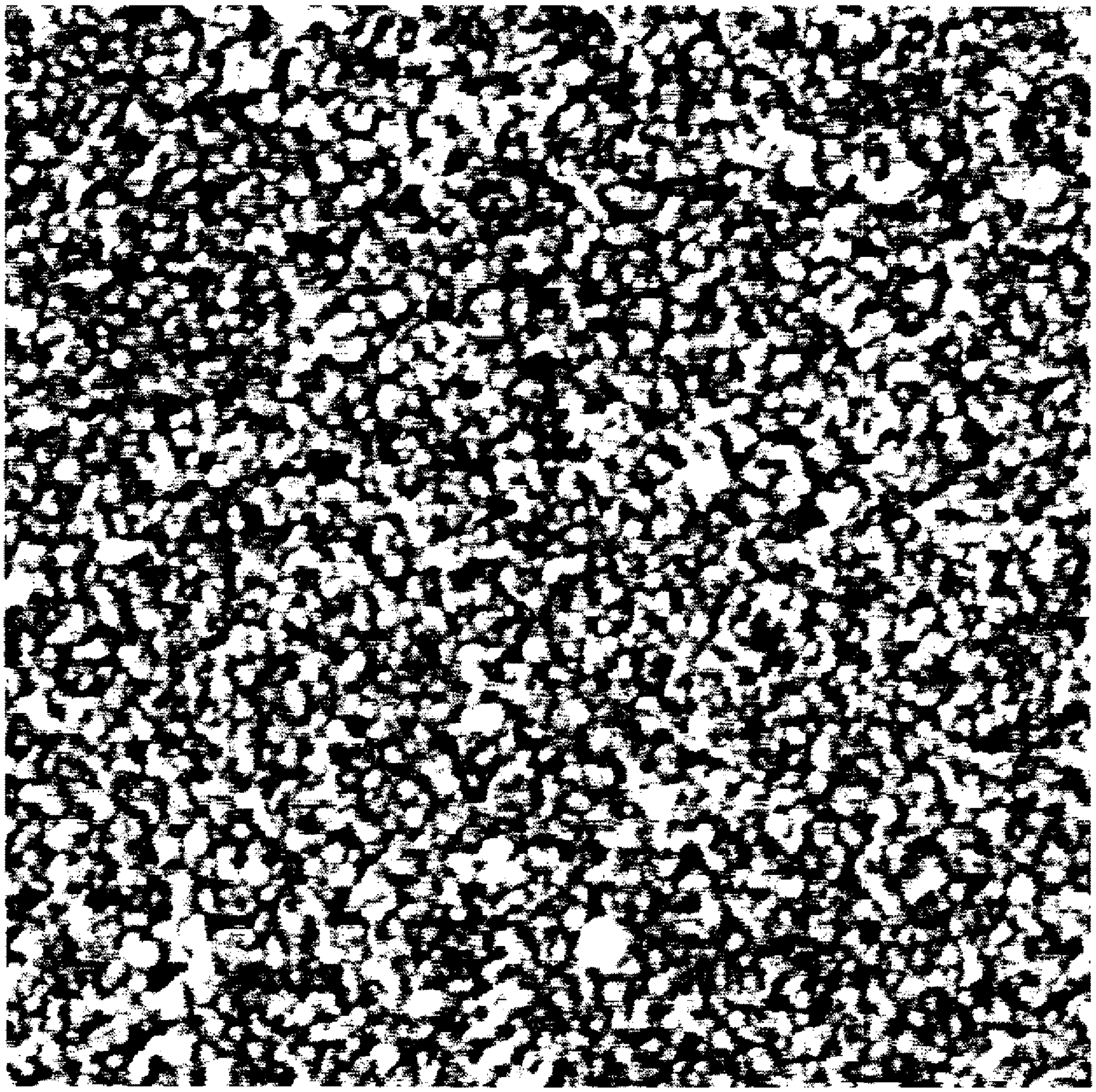

Fig. 28

EXAMPLE III-2

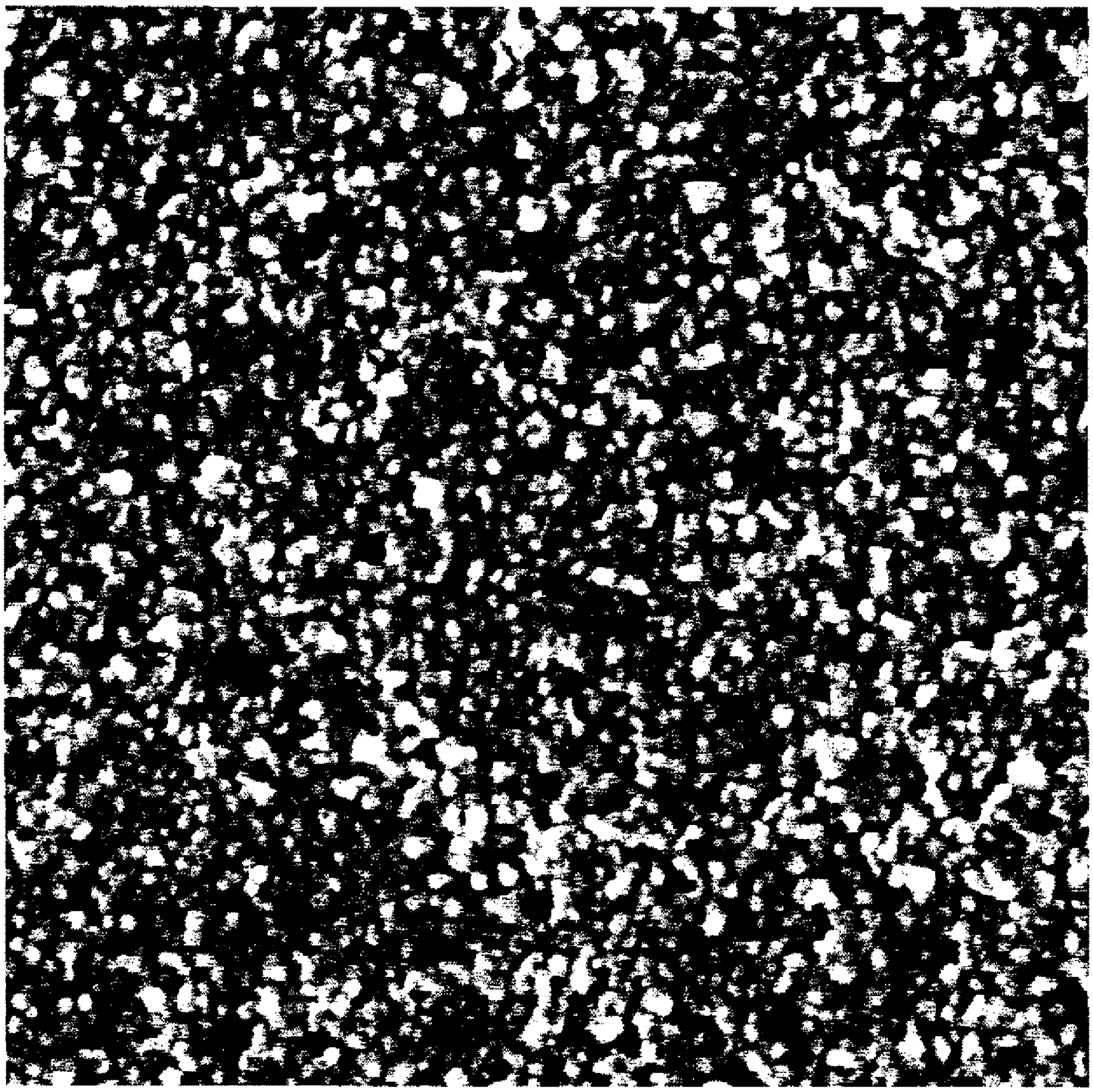

Fig. 29

EXAMPLE III-4

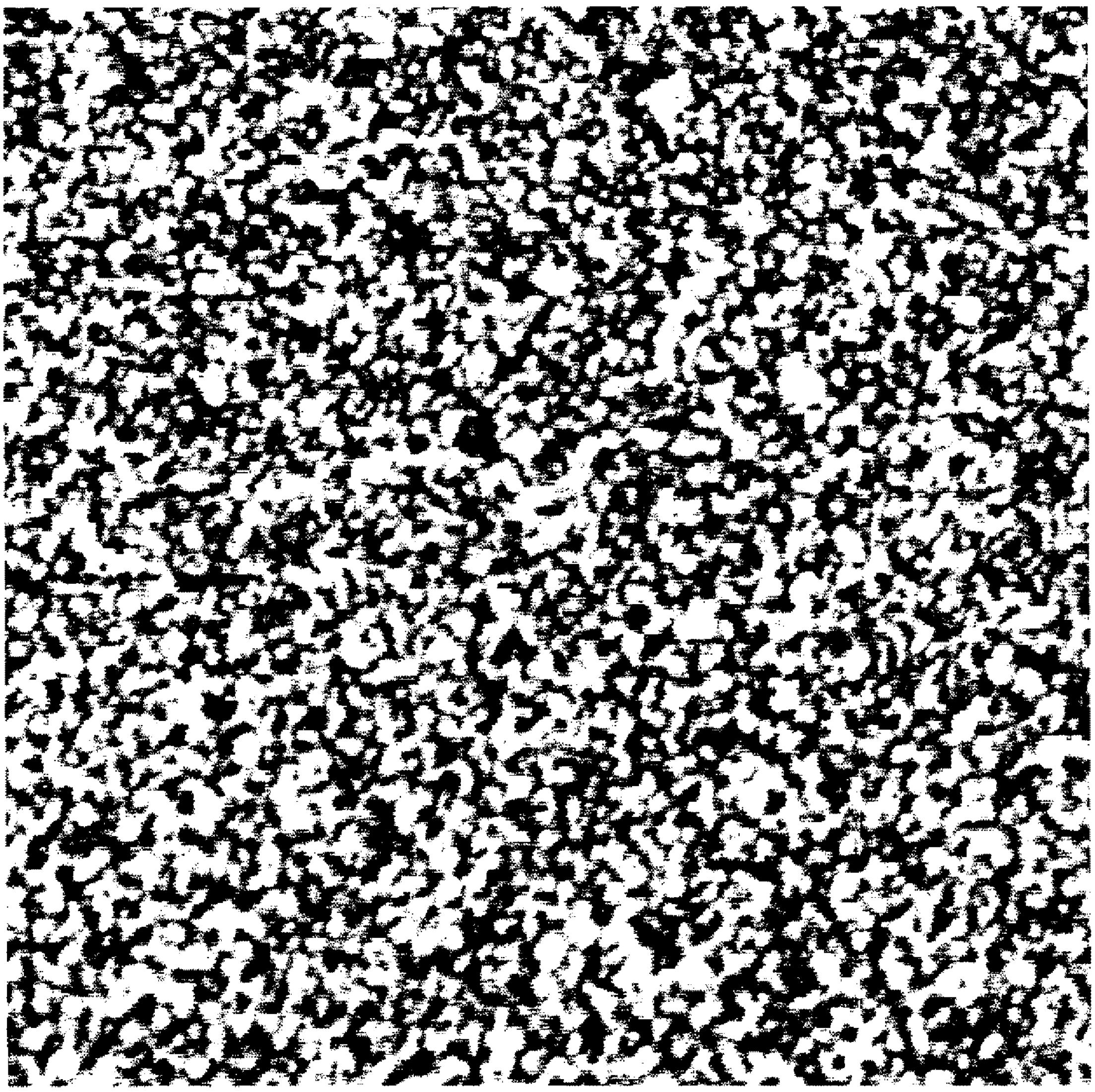

Fig. 30

EXAMPLE III-5

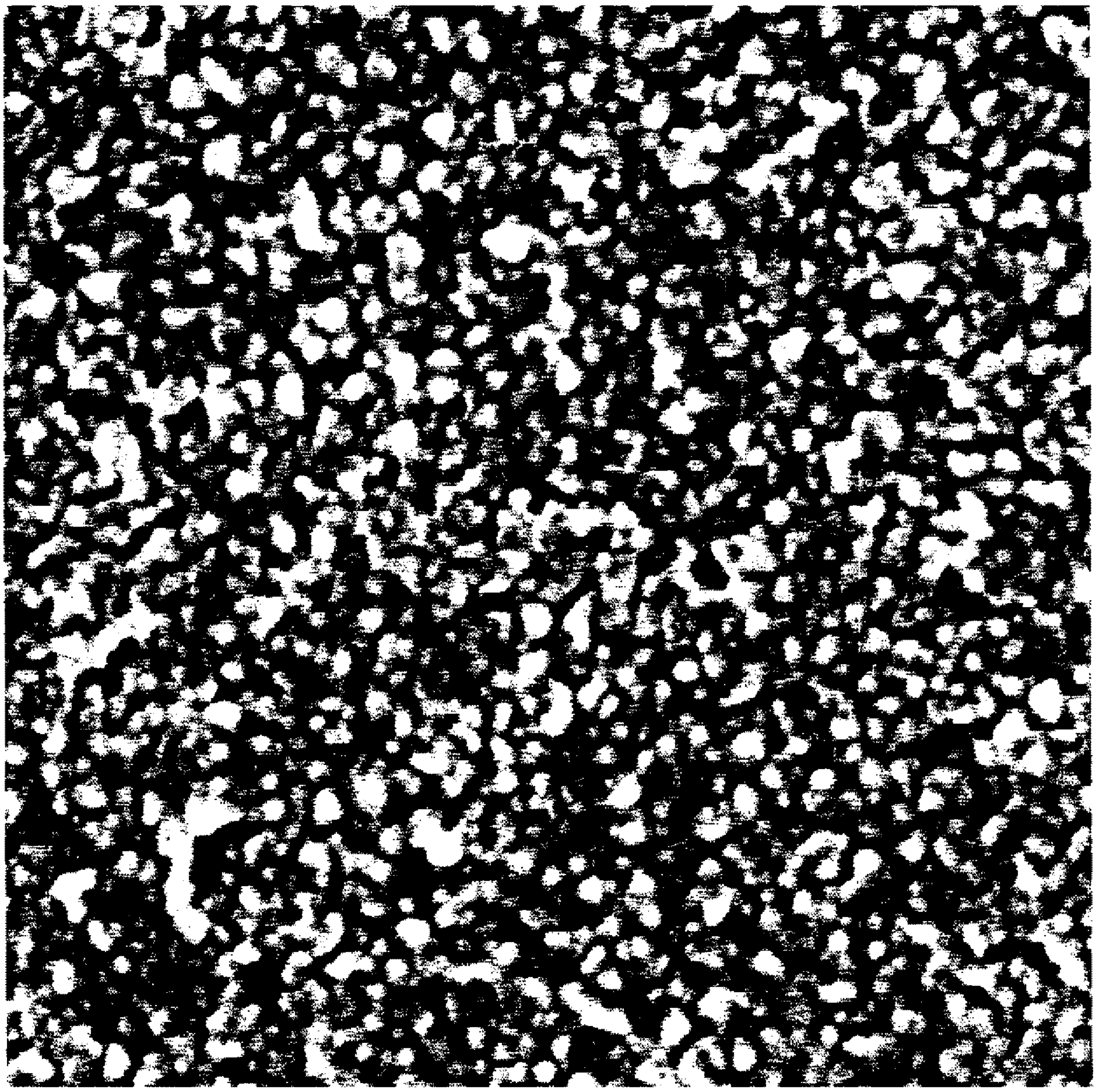

Fig. 31

EXAMPLE III-6

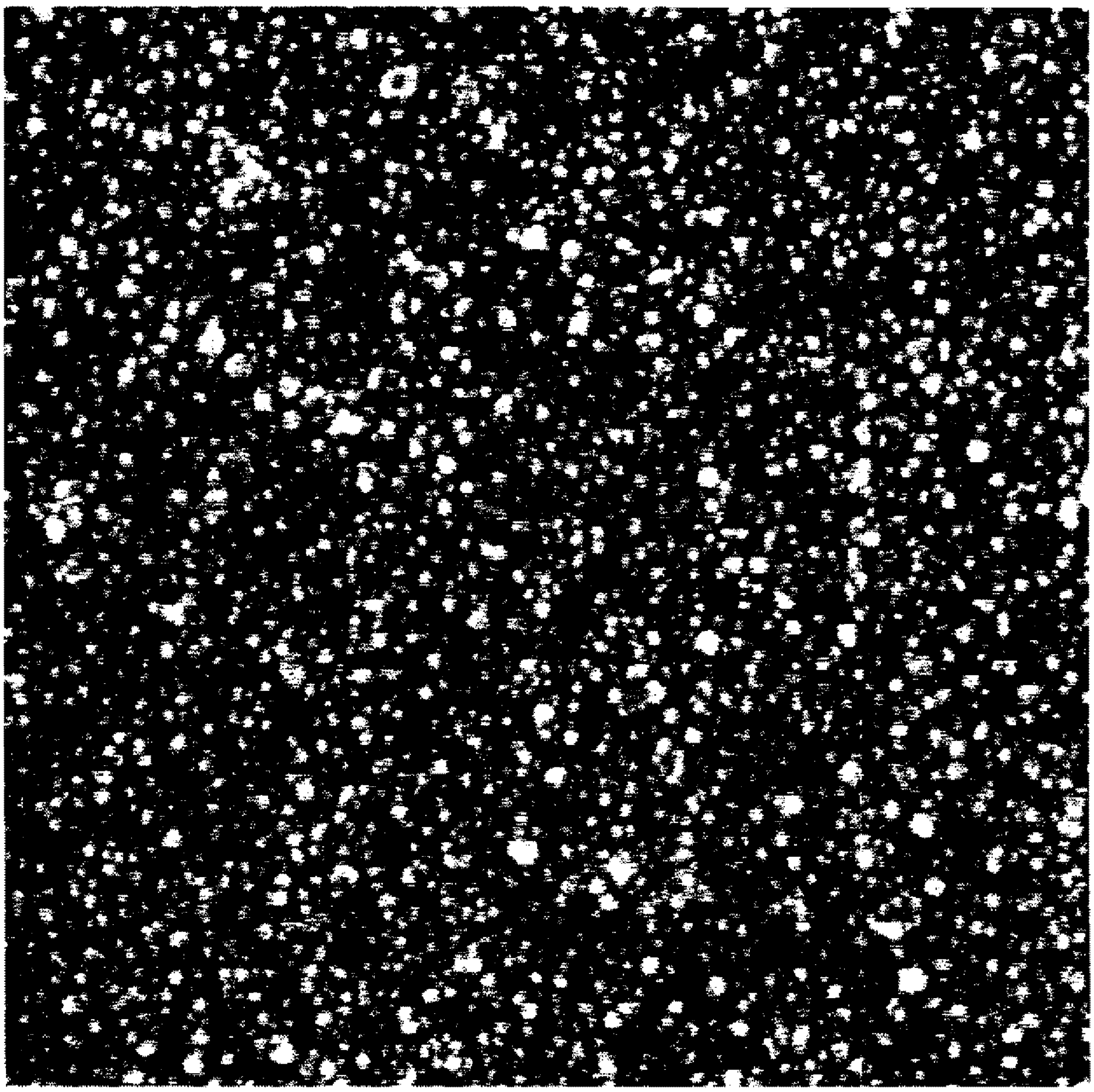

Fig. 32

EXAMPLE III-7

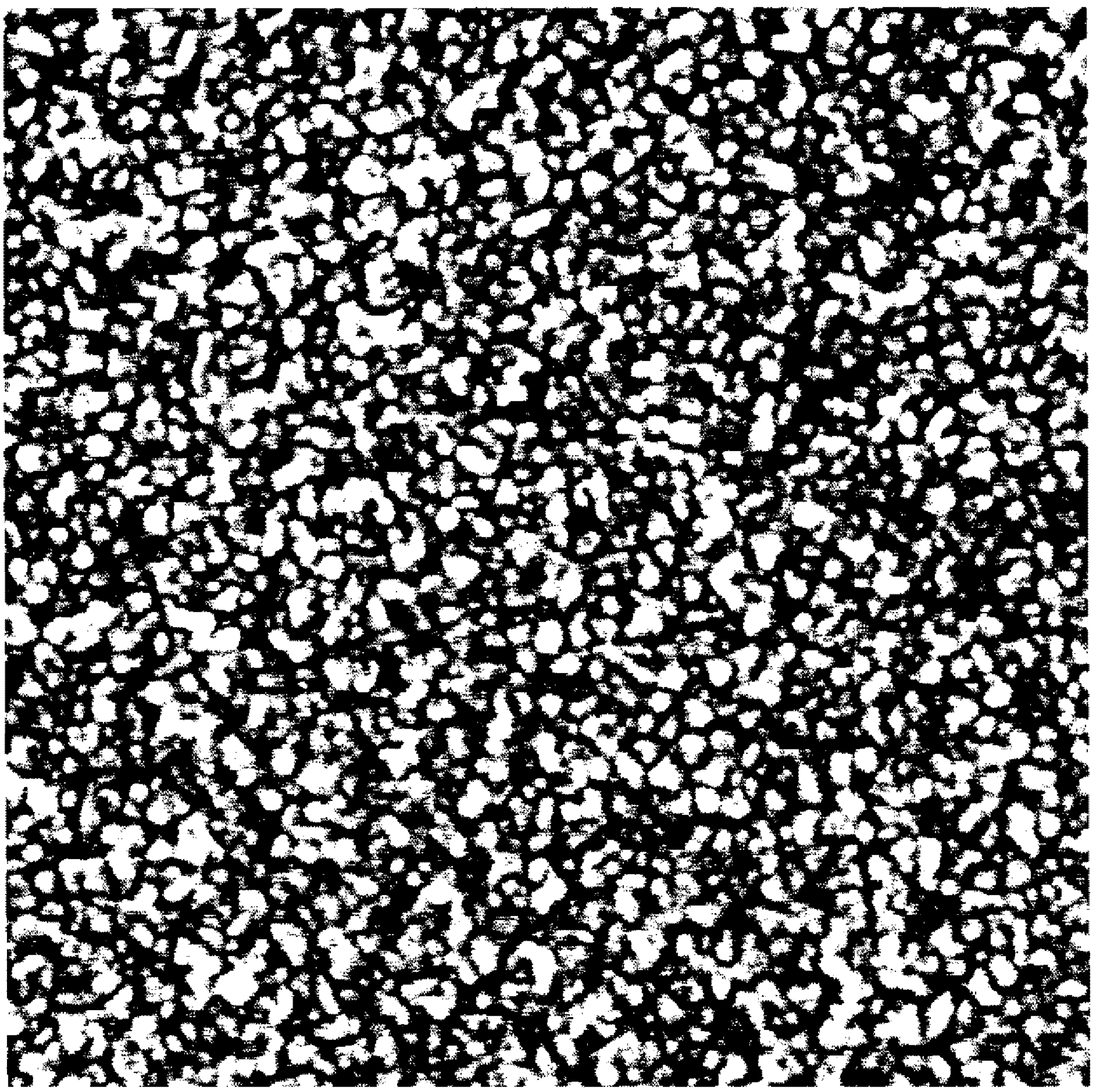

Fig. 33

EXAMPLE III-8A

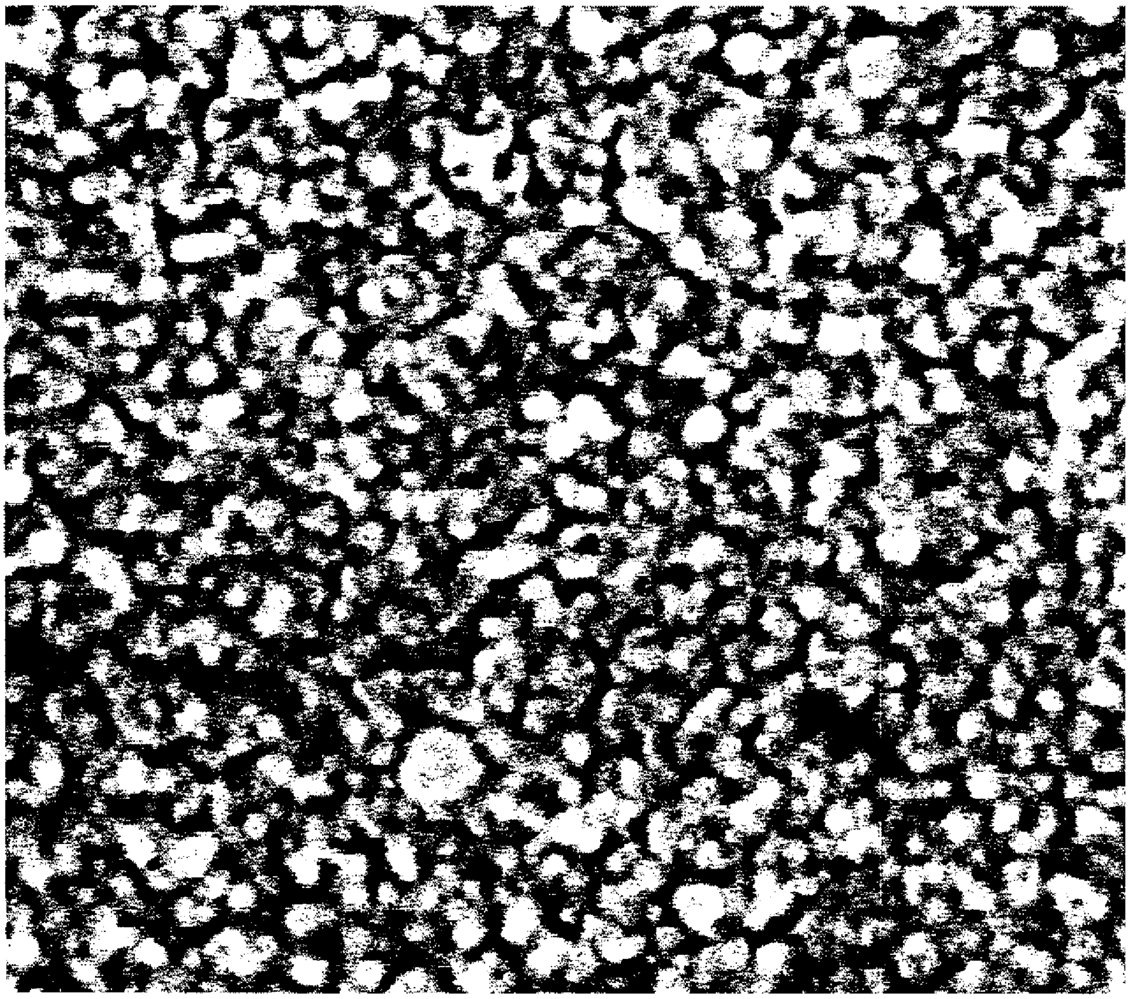

Fig. 34

EXAMPLE III-9

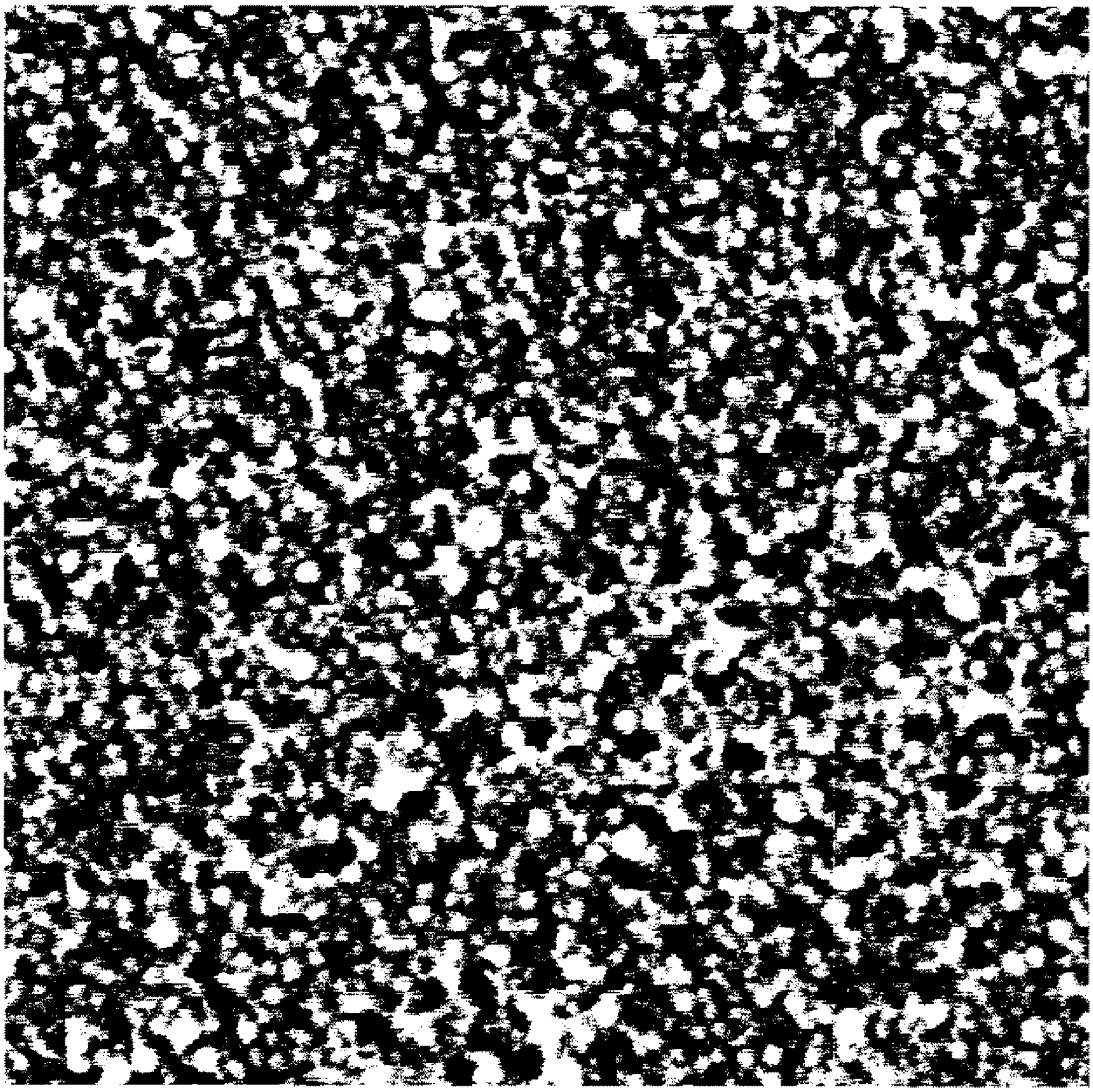

Fig. 35

COMPARATIVE EXAMPLE III-1

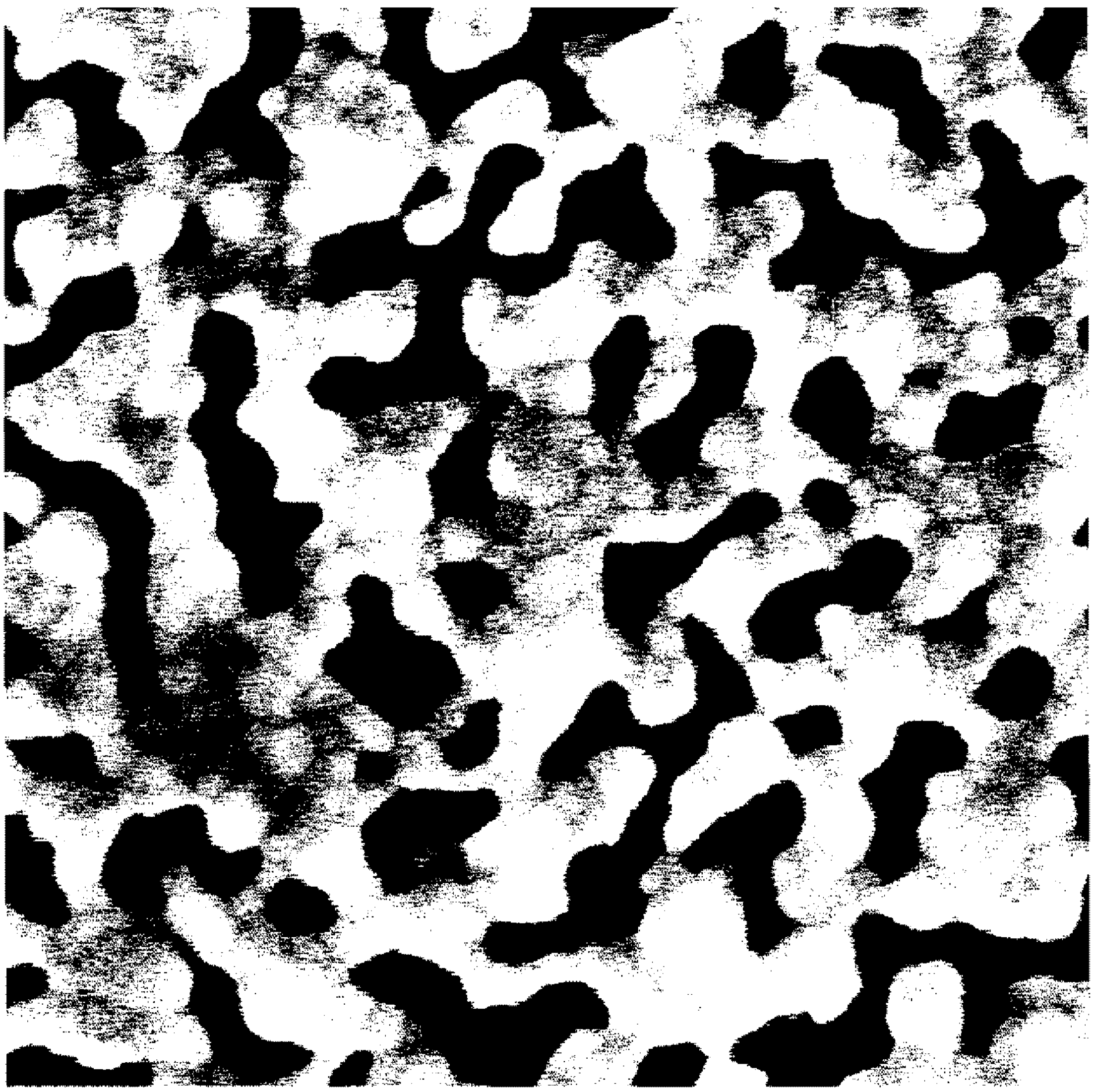

Fig. 36

COMPARATIVE EXAMPLE III-2

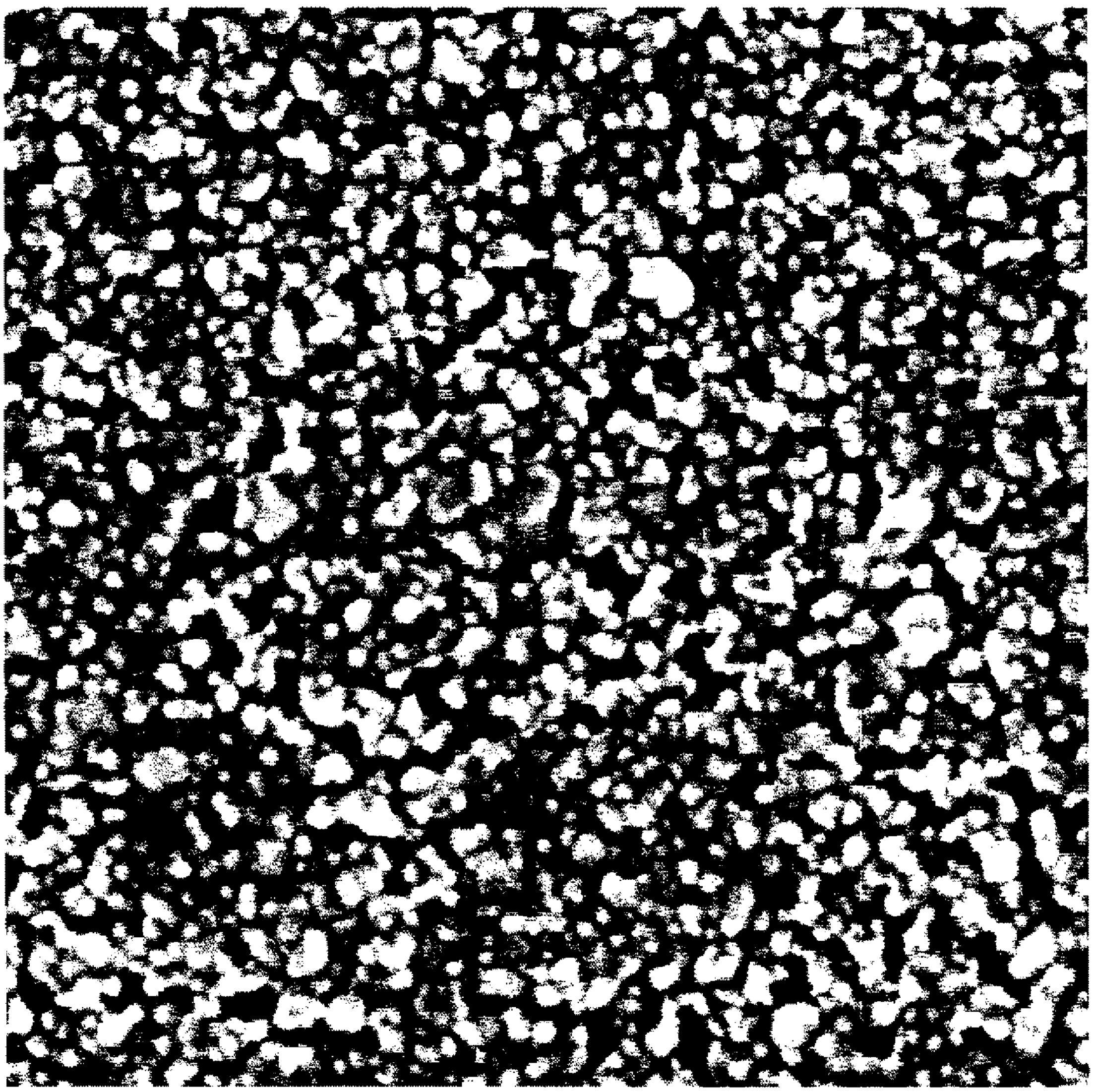

Fig. 37

COMPARATIVE EXAMPLE III-3

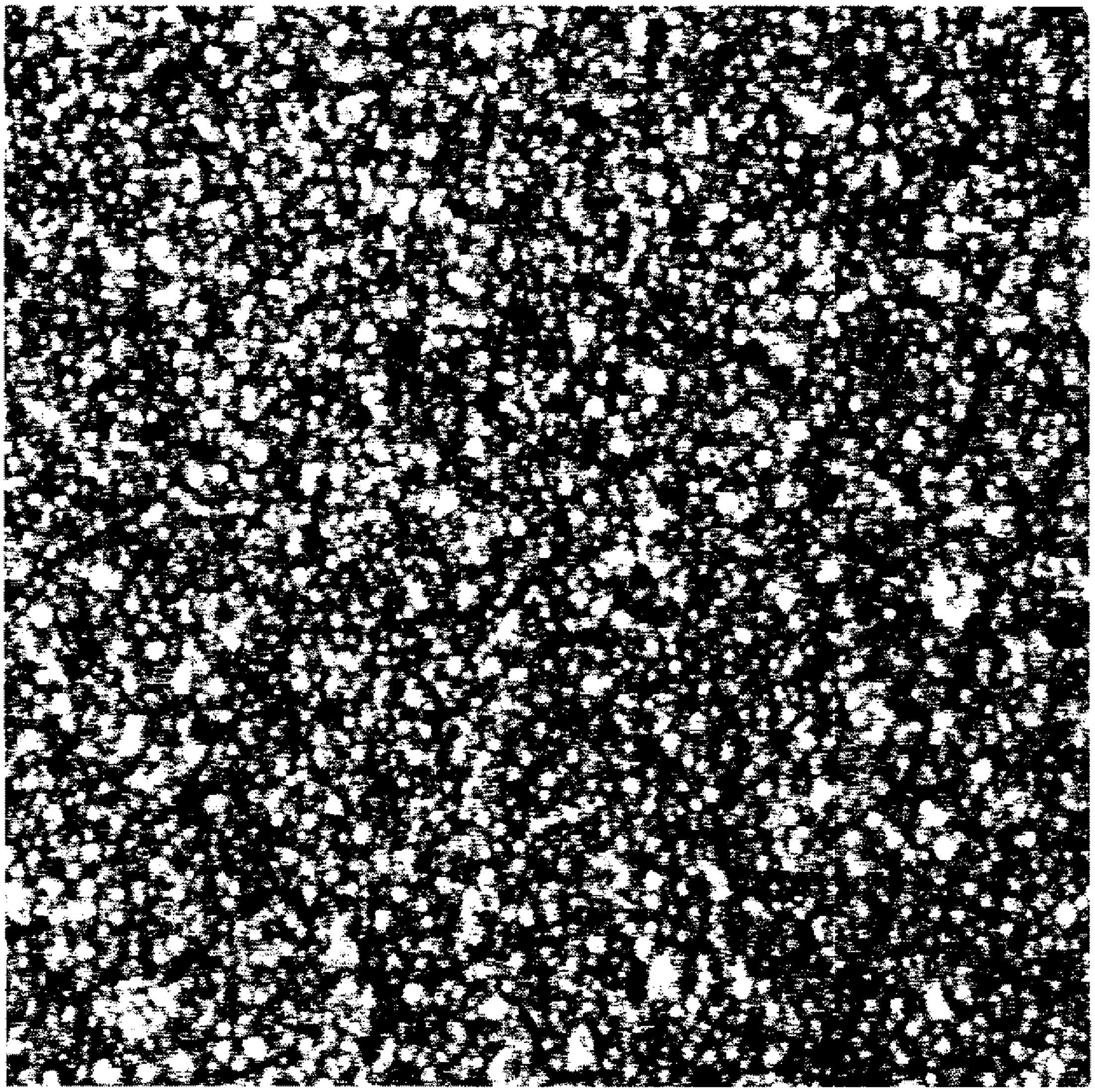

**INTERNATIONAL SEARCH REPORT**

International application No.
PCT/JP2009/068277

A. CLASSIFICATION OF SUBJECT MATTER
*C03C17/06*(2006.01)i, *B32B7/02*(2006.01)i, *B60J1/00*(2006.01)i, *C03C17/38*(2006.01)i, *C09D5/33*(2006.01)i, *C23C26/00*(2006.01)i

According to International Patent Classification (IPC) or to both national classification and IPC

B. FIELDS SEARCHED

Minimum documentation searched (classification system followed by classification symbols)
C03C17/06-17/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2007/043364 A1 (Fujifilm Corp.), 19 April 2007 (19.04.2007), paragraphs [0008] to [0011], [0061] to [0070], [0084] & JP 2007-108536 A & US 2009/0159858 A & CN 101288005 A | 1-11,25-26 |
| A | JP 2000-090737 A (Mitsubishi Materials Corp.), 31 March 2000 (31.03.2000), paragraphs [0044], [0045], [0049] to [0052], [0054] & US 6451433 B1 & TW 460554 B & KR 10-2000-0023097 A | 1-11,25-26 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January, 2010 (05.01.10) | 19 January, 2010 (19.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/068277

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The "heat ray reflective laminate" of claim 1 contains "a heat ray reflective layer" comprising "a binder resin" and "a metal". On the other hand, "a metal" is not specified in the "heat reflective films" of claim 17 and 18, and "a binder resin" is not specified in the "heat ray reflective layer" of claim 23.

Therefore, the same or corresponding technical feature of the inventions of claims 1-36 is only the "heat ray reflective film" or the "heat ray reflective layer". However, it is obvious that the technical feature cannot be regarded as a special technical feature.

(continued to extra sheet)

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
1-11 and 25-26

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2009/068277

Continuation of Box No.III of continuation of first sheet(2)

Consequently, the inventions of claims 1-36 do not comply with the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3724936 B
- JP 2696877 B
- JP 6316443 A
- JP 6316444 A
- JP 10217380 A
- JP 2002131531 A
- JP 10162646 A
- JP 2001064540 A
- JP 2008272825 A
- JP 2008272826 A
- JP 2008272827 A
- JP 2009114453 A
- JP 2009115297 A
- JP 2009117267 A
- JP 2009150064 A
- JP 2009160338 A